(19) Europäisches Patentamt
European Patent Office
Office européen des brevets

(11) EP 2 767 854 B1

(12) **EUROPEAN PATENT SPECIFICATION**

(45) Date of publication and mention of the grant of the patent:
**05.10.2016 Bulletin 2016/40**

(21) Application number: **12840733.5**

(22) Date of filing: **24.08.2012**

(51) Int Cl.:
***G02B 5/26*** (2006.01) ***B32B 7/02*** (2006.01)
***B32B 15/04*** (2006.01) ***C03C 17/36*** (2006.01)
***E06B 9/24*** (2006.01) ***G02B 1/11*** (2015.01)
***G02B 5/28*** (2006.01) ***G02B 5/02*** (2006.01)
***G02B 5/04*** (2006.01)

(86) International application number:
**PCT/JP2012/072085**

(87) International publication number:
**WO 2013/054605 (18.04.2013 Gazette 2013/16)**

(54) **OPTICAL ELEMENT, WINDOW MATERIAL, FITTING, AND SOLAR SHADING DEVICE**

OPTISCHES ELEMENT, FENSTERMATERIAL, BESCHLAG UND SONNENSCHUTZVORRICHTUNG

ELÉMENT OPTIQUE, MATIÈRE DE FENÊTRE, AJUSTEMENT ET DISPOSITIF D'OMBRAGE SOLAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.10.2011 JP 2011225389**

(43) Date of publication of application:
**20.08.2014 Bulletin 2014/34**

(73) Proprietor: **Dexerials Corporation**
**Tokyo 141-0032 (JP)**

(72) Inventors:
- **NAGAHAMA, Tsutomu**
  **Tokyo 141-0032 (JP)**
- **SUZUKI, Masaki**
  **Tokyo 108-0075 (JP)**
- **YOSHIDA, Hironori**
  **Tokyo 108-0075 (JP)**
- **ENOMOTO, Masashi**
  **Tokyo 108-0075 (JP)**
- **YATABE, Toru**
  **Tokyo 108-0075 (JP)**
- **KAGEYAMA, Masamitsu**
  **Tokyo 108-0075 (JP)**

(74) Representative: **Müller Hoffmann & Partner Patentanwälte mbB**
**St.-Martin-Strasse 58**
**81541 München (DE)**

(56) References cited:
**WO-A1-2010/067640**
**JP-A- 2004 058 592**
**JP-A- 2005 283 748**
**JP-A- 2009 078 458**
**JP-A- 2011 175 249**
**JP-A- 2011 180 449**
**JP-A- 2011 203 716**
**JP-A- 2011 502 285**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 767 854 B1

## Description

Field of the Invention

This invention relates to an optical element that can suppress a change in color tone, a window material, a fitting and a solar shading device.

Background of the Invention

In recent years, there have been increasing cases in which a layer for absorbing or reflecting one portion of solar light is attached to building-use glass and vehicle window glass of a high-rise building, a house or the like. This is one of energy-saving countermeasures to be carried out for preventing global warming, and its purpose is to reduce the load imposed on cooling facilities, caused by light energy that is applied from the sun and enters the inside of a housing through a window to cause a temperature rise of the inside of the housing. In the optical energy applied from the sun, a visible light region having wavelengths of 380 to 780 nm and a near infrared ray region having wavelengths of 780 to 2100 nm occupy a great ratio thereof. Of these, since the transmittance of the window in the wavelength region of the latter has nothing to do with the visibility of the human, it forms an essential factor by which functions of the window having high transparency and a high heat-shading function are determined.

As a method for shading near infrared rays while maintaining transparency in the visible light region, a method for attaching an optical element having a high transmittance in the near infrared ray region to window glass is proposed. With respect to this method, a technique has been disclosed in which an optical multi-layer film is used as a reflection layer (for example, see Patent Document 1). However, since such a reflection layer is formed on a flat-shaped film or a window glass, it is only possible to regularly reflect incident solar light. For this reason, light rays applied from the sky and regularly reflected therefrom are allowed to reach another building outside and the ground, and absorbed and converted to heat, thereby causing a rise in the ambient temperature. As a result, on the periphery of a building in which this reflection layer is bonded to the entire windows, a temperature rise is locally generated, with the result that such problems as to cause an increased heat island phenomenon in a city district and as to suppress lawn from growing only on an irradiated surface by the reflected light.

Prior-Art Documents

Patent Document

PTL 1: Japanese Patent Application Laid-Open No. 2007-152773
PTL 2 : Publication JP 2011 175249 A.

Summary of the Invention

However, conventionally, a heat-ray shading film has been designed by film-forming a multi-layer film on a flat plate. In the case when the multi-layer film is designed by using this conventional method, since the refractive index on the multi-layer film and the incident light angle on the interface of incident light rays are varied, a designed spectrum is deviated from an optimal value to cause a change in color tones, resulting in bluish or reddish light rays.

Therefore, an object of the present invention is to provide an optical element that can suppress a change in color tones due to a change in an incident angle, and a window material, a fitting and a solar shading device for such an optical element.

In order to solve the above-mentioned problems, a first aspect of the invention relates to an optical element that is provided with:

a first optical layer having a concave-convex surface;
a wavelength-selective reflection layer formed on the concave-convex surface; and
a second optical layer formed on the wavelength-selective reflection layer, and in this structure, the wavelength-selective reflection layer has a five-layer structure in which a high-refractive-index layer and a metal layer are alternately stacked, and in the case when the entire wavelength-selective reflection layer has a geometric film thickness L of 80 nm, a ratio $\alpha$ (= $d_b/d_a$) of an optical film thickness $d_b$ of the entire metal layer relative to an optical film thickness $d_a$ of the entire high-refractive-index layer and a ratio $\beta$ (= $d_3/d_1$) of an optical film thickness $d_3$ of a third high-refractive-index layer relative to an optical film thickness $d_1$ of a first high-refractive-index layer, when viewed from either the first optical layer side or the second optical layer side, are included in a first region surrounded by the following formulas (1) to (4), while in the case when the entire wavelength-selective reflection layer has a geometric film thickness L of 90 nm, the ratio $\alpha$ and the ratio $\beta$ are included in a second region surrounded by the following formulas (5) to (8), and in the case when the entire wavelength-selective reflection layer has a geometric film thickness L of 80 nm < L < 90 nm,
supposing that each of minute sides formed by dividing a periphery $C_1$ of the first region into n-equal portions, with an intersection between the formula (1) and formula (3) being set as a starting point, is represented as $\Delta$ C1i (where i represents a natural number of 0 to n), that each of minute sides formed by dividing a periphery C2 of the second region into n-equal portions, with an intersection between the formula (5) and formula (7) being set as a starting point, is represented as $\Delta$ C2i and that each of minute regions having a rectangular shape, with $\Delta$ C1i and $\Delta$ C2i being formed as the two short sides, is defined as $\Delta$ Si, the ratio $\alpha$ and the ratio $\beta$ are surrounded by a circumferential surface S composed of a group of minute regions $\Delta$ Si.

$$\alpha=-0.0004\beta^2+0.0053\beta+0.0065 \cdots(1)$$

$$\alpha=-1\times10^{-5}\beta^2+0.0007\beta+0.0066 \cdots(2)$$

$$\alpha=-1\times10^{-5}\beta^2+0.0005\beta+0.0119 \cdots(3)$$

$$\alpha=0.012114 \cdots(4)$$

$$\alpha=-0.0002\beta^2+0.0039\beta+0.0087 \cdots(5)$$

$$\alpha=-3\times10^{-5}\beta^2+0.0014\beta+0.0038 \cdots(6)$$

$$\alpha=-2\times10^{-5}\beta^2+0.0006\beta+0.0112 \cdots(7)$$

$$\alpha=0.010589 \cdots(8)$$

A second aspect of the invention relates to an optical element that is provided with:

a first optical layer having a concave-convex surface;
a wavelength-selective reflection layer formed on the concave-convex surface; and
a second optical layer formed on the wavelength-selective reflection layer, and in this structure, the wavelength-selective reflection layer has a five-layer structure in which a high-refractive-index layer and a metal layer are alternately stacked, and in the case when the entire wavelength-selective reflection layer has a geometric film thickness L of 90 nm, a ratio $\alpha$ (= $d_b/d_a$) of an optical film thickness $d_b$ of the entire metal layer relative to an optical film thickness $d_a$ of the entire high-refractive-index layer and a ratio $\beta$ (= $d_3/d_1$) of an optical film thickness $d_3$ of a third high-refractive-index layer relative to an optical film thickness $d_1$ of a first high-refractive-index layer, when viewed from either the first optical layer side or the second optical layer side, are included in a first region surrounded by values represented by the following formulas (5) to (8), while in the case when the entire wavelength-selective reflection layer has a geometric film thickness L of 100 nm, the ratio $\alpha$ and the ratio $\beta$ are included in a second region surrounded by values represented by the following formulas (9) to (12), and in the case when the entire wavelength-selective reflection layer has a geometric film thickness L of 90 nm < L < 100 nm,
supposing that each of minute sides formed by dividing a periphery C1 of the first region into n-equal portions, with an intersection between the formula (5) and formula (7) being set as a starting point, is represented as $\Delta$ C1i (where i represents a natural number of 0 to n), that each of minute sides formed by dividing the periphery C2 of the second region into n-equal portions, with an intersection between the formula (9) and formula (11) serving as a starting point, is represented as $\Delta$ C2i and that each of minute regions having a rectangular shape, with $\Delta$ C1i and $\Delta$ C2i

being formed as the two short sides, is defined as Δ Si, the optical element is designed such that the ratio α and the ratio β are surrounded by a circumferential surface S composed of a group of minute regions Δ Si.

$$\alpha=-0.0002\beta^2+0.0039\beta+0.0087 \quad \cdots(5)$$

$$\alpha=-3\times10^{-5}\beta^2+0.0014\beta+0.0038 \quad \cdots(6)$$

$$\alpha=-2\times10^{-5}\beta^2+0.0006\beta+0.0112 \quad \cdots(7)$$

$$\alpha=0.010589 \quad \cdots(8)$$

$$\alpha=-0.0002\beta^2+0.0055\beta+0.0057 \quad \cdots(9)$$

$$\alpha=-0.0002\beta^2+0.0045\beta-0.0067 \quad \cdots(10)$$

$$\alpha=-4\times10^{-5}\beta^2+0.001\beta+0.0099 \quad \cdots(11)$$

$$\alpha=0.009403 \quad \cdots(12)$$

A third aspect of the present invention relates to an optical element that is provided with:

a first optical layer having a concave-convex surface;
a wavelength-selective reflection layer formed on the concave-convex surface; and
a second optical layer formed on the wavelength-selective reflection layer, and in this structure, the wavelength-selective reflection layer has a five-layer structure in which a high-refractive-index layer and a metal layer are alternately stacked, and in the case when the entire wavelength-selective reflection layer has a geometric film thickness L of 100 nm, a ratio α (= $d_b/d_a$) of an optical film thickness $d_b$ of the entire metal layer relative to an optical film thickness $d_a$ of the entire high-refractive-index layer and a ratio β (= $d_3/d_1$) of an optical film thickness $d_3$ of a third high-refractive-index layer relative to an optical film thickness $d_1$ of a first high-refractive-index layer, when viewed from either the first optical layer side or the second optical layer side, are included in a first region surrounded by the following formulas (9) to (12), while in the case when the entire wavelength-selective reflection layer has a geometric film thickness L of 120 nm, the ratio α and the ratio β are included in a second region surrounded by the following formulas (13) to (16), and in the case when the entire wavelength-selective reflection layer has a geometric film thickness L of 100 nm < L < 120 nm,
supposing that each of minute sides formed by dividing a periphery C1 of the first region into n-equal portions, with an intersection between the formula (9) and formula (11) being set as a starting point, is represented as Δ C1i (where i represents a natural number of 0 to n), that each of minute sides formed by dividing the periphery C2 of the second region into n-equal portions, with an intersection between the formula (13) and formula (15) serving as a starting point, is represented as Δ C2i and that each of minute regions having a rectangular shape, with Δ C1i and Δ C2i being formed as the two short sides, is defined as Δ Si, the ratio α and the ratio β are surrounded by a circumferential surface S composed of a group of the minute regions Δ Si.

$$\alpha=-0.0002\beta^2+0.0055\beta+0.0057 \quad \cdots(9)$$

$$\alpha=-0.0002\beta^2+0.0045\beta-0.0067 \quad \cdots(10)$$

$$\alpha=-4\times10^{-5}\beta^2+0.001\beta+0.0099 \quad \cdots(11)$$

$$\alpha=0.009403 \quad \cdots(12)$$

$$\alpha=-0.0003\beta^2+0.0074\beta+0.0033 \quad \cdots(13)$$

$$\alpha=-0.0014\beta^2+0.0191\beta-0.0422 \quad \cdots(14)$$

$$\alpha=-9\times10^{-5}\beta^2+0.0015\beta+0.0084 \quad \cdots(15)$$

$$\alpha=0.007709 \quad \cdots(16)$$

A fourth aspect of the invention relates to an optical element that is provided with:

a first optical layer having a concave-convex surface;
a wavelength-selective reflection layer formed on the concave-convex surface; and
a second optical layer formed on the wavelength-selective reflection layer has a five-layer structure in which a high-refractive-index layer and a metal layer are alternately stacked, and in the case when the entire wavelength-selective reflection layer has a geometric film thickness L of 120 nm, a ratio $\alpha$ (= $d_b/d_a$) of an optical film thickness $d_b$ of the entire metal layer relative to an optical film thickness $d_a$ of the entire high-refractive-index layer and a ratio $\beta$ (= $d_3/d_1$) of an optical film thickness $d_3$ of a third high-refractive-index layer relative to an optical film thickness $d_1$ of a first high-refractive-index layer, when viewed from either the first optical layer side or the second optical layer side, are included in a first region surrounded by the following formulas (13) to (16), while in the case when the entire wavelength-selective reflection layer has a geometric film thickness L of 140 nm, the ratio $\alpha$ and the ratio $\beta$ are included in a second region surrounded by the following formulas (17) to (20), and in the case when the entire wavelength-selective reflection layer has a geometric film thickness L of 120 nm < L < 140 nm,
supposing that each of minute sides formed by dividing a periphery C1 of the first region into n-equal portions, with an intersection between the formula (13) and formula (15) being set as a starting point, is represented as $\Delta$ C1i (where i represents a natural number of 0 to n), that each of minute sides formed by dividing the periphery C2 of the second region into n-equal portions, with an intersection between the formula (17) and formula (19) serving as a starting point, is represented as $\Delta$ C2i and that each of minute regions having a rectangular shape, with $\Delta$ C1i and $\Delta$ C2i being formed as the two short sides, is defined as $\Delta$ Si, the ratio $\alpha$ and the ratio $\beta$ are surrounded by a circumferential surface S composed of a group of minute regions $\Delta$ Si.

$$\alpha=-0.0003\beta^2+0.0074\beta+0.0033 \quad \cdots(13)$$

$$\alpha=-0.0014\beta^2+0.0191\beta-0.0422 \quad \cdots(14)$$

$$\alpha=-9\times10^{-5}\beta^2+0.0015\beta+0.0084 \quad \cdots(15)$$

$$\alpha=0.007709 \quad \cdots(16)$$

$$\alpha=-0.0014\beta^2+0.0136\beta-0.0027 \quad \cdots(17)$$

$$\beta=10132\alpha^2-241.39\alpha+4.747 \quad \cdots(18)$$

$$\alpha=-0.0001\beta^2+0.002\beta+0.0074 \quad \cdots(19)$$

$$\alpha=0.006523 \quad \cdots(20)$$

A fifth aspect of the invention relates to an optical element that is provided with:

a first optical layer having a concave-convex surface;
a wavelength-selective reflection layer formed on the concave-convex surface; and
a second optical layer formed on the wavelength-selective reflection layer has a five-layer structure in which a high-refractive-index layer and a metal layer are alternately stacked, and in the case when the entire wavelength-selective reflection layer has a geometric film thickness L of 140 nm, a ratio $\alpha$ (= $d_b/d_a$) of an optical film thickness $d_b$ of the entire metal layer relative to an optical film thickness $d_a$ of the entire high-refractive-index layer and a ratio $\beta$ (= $d_3/d_1$) of an optical film thickness $d_3$ of a third high-refractive-index layer relative to an optical film thickness $d_1$ of a first high-refractive-index layer, when viewed from either the first optical layer side or the second optical layer side, are included in a first region surrounded by the following formulas (17) to (20), while in the case when the entire wavelength-selective reflection layer has a geometric film thickness L of 160 nm, the ratio $\alpha$ and the ratio $\beta$ are included in a second region surrounded by the following formulas (21) to (25), and in the case when the entire wavelength-selective reflection layer has a geometric film thickness L of 140 nm < L < 160 nm,
supposing that each of minute sides formed by dividing a periphery C1 of the first region into n-equal portions, with an intersection between the formula (17) and formula (19) being set as a starting point, is represented as $\Delta$ C1i (where i represents a natural number of 0 to n), that each of minute sides formed by dividing the periphery C2 of the second region into n-equal portions, with an intersection between the formula (21) and formula (24) serving as a starting point, is represented as $\Delta$ C2i and that each of minute regions having a rectangular shape, with $\Delta$ C1i and $\Delta$ C2i being formed as the two short sides, is defined as $\Delta$ Si, the ratio $\alpha$ and the ratio $\beta$ are surrounded by a circumferential surface S composed of a group of minute regions $\Delta$ Si.

$$\alpha=-0.0014\beta^2+0.0136\beta-0.0027 \quad \cdots(17)$$

$$\beta=10132\alpha^2-241.39\alpha+4.747 \quad \cdots(18)$$

$$\alpha=-0.0001\beta^2+0.002\beta+0.0074 \quad \cdots(19)$$

$$\alpha=0.006523 \quad \cdots(20)$$

$$\alpha=-0.005\beta^2+0.0273\beta-0.0145 \quad \cdots(21)$$

$$\alpha=0.0043\beta^2-0.0332\beta+0.07 \quad \cdots(22)$$

$$\beta=2.875 \quad \cdots(23)$$

$$\alpha=-0.0001\beta^2+0.0025\beta+0.0062 \quad \cdots(24)$$

$$\alpha = 0.005676 \quad \cdots (25)$$

A sixth aspect of the invention relates to an optical element that is provided with:

a first optical layer having a concave-convex surface;
a wavelength-selective reflection layer formed on the concave-convex surface; and
a second optical layer formed on the wavelength-selective reflection layer has a five-layer structure in which a high-refractive-index layer and a metal layer are alternately stacked, and in the case when the entire wavelength-selective reflection layer has a geometric film thickness L of 160 nm, a ratio $\alpha$ (= $d_b/d_a$) of an optical film thickness $d_b$ of the entire metal layer relative to an optical film thickness $d_a$ of the entire high-refractive-index layer and a ratio $\beta$ (= $d_3/d_1$) of an optical film thickness $d_3$ of a third high-refractive-index layer relative to an optical film thickness $d_1$ of a first high-refractive-index layer, when viewed from either the first optical layer side or the second optical layer side, are included in a first region surrounded by the following formulas (21) to (25), while in the case when the entire wavelength-selective reflection layer has a geometric film thickness L of 180 nm, the ratio $\alpha$ and the ratio $\beta$ are included in a second region surrounded by the following formulas (26) to (29), and in the case when the entire wavelength-selective reflection layer has a geometric film thickness L of 160 nm < L < 180 nm,
supposing that each of minute sides formed by dividing a periphery C1 of the first region into n-equal portions, with an intersection between the formula (21) and formula (24) being set as a starting point, is represented as $\Delta$ C1i (where i represents a natural number of 0 to n), that each of minute sides formed by dividing the periphery C2 of the second region into n-equal portions, with an intersection between the formula (26) and formula (28) serving as a starting point, is represented as $\Delta$ C2i and that each of minute regions having a rectangular shape, with $\Delta$ C1i and $\Delta$ C2i being formed as the two short sides, is defined as $\Delta$ Si, the ratio $\alpha$ and the ratio $\beta$ are surrounded by a circumferential surface S composed of a group of minute regions $\Delta$ Si.

$$\alpha = -0.005\beta^2 + 0.0273\beta - 0.0145 \quad \cdots (21)$$

$$\alpha = 0.0043\beta^2 - 0.0332\beta + 0.07 \quad \cdots (22)$$

$$\beta = 2.875 \quad \cdots (23)$$

$$\alpha = -0.0001\beta^2 + 0.0025\beta + 0.0062 \quad \cdots (24)$$

$$\alpha = 0.005676 \quad \cdots (25)$$

$$\alpha = -0.0103\beta^2 + 0.047\beta - 0.0322 \quad \cdots (26)$$

$$\alpha = 0.0093\beta^2 - 0.0677\beta + 0.1212 \quad \cdots (27)$$

$$\alpha = -0.0003\beta^2 + 0.0036\beta + 0.0046 \quad \cdots (28)$$

$$\alpha = 0.00498 \quad \cdots (29)$$

In the first to sixth aspects of the present invention, by determining the film thicknesses of the respective layers of the wavelength-selective reflection layer so as to allow the ratio $\alpha$ and the ratio $\beta$ to be included by a predetermined region, it becomes possible to suppress a change in color tones.

Effects of Invention

As described above, in accordance with the present invention, it is possible to suppress a color tone change caused by an incident angle.

Brief Description of Drawings

Figure 1A is a cross-sectional view showing one structural example of an optical film in accordance with a first embodiment of the present invention.
Figure 1B is a cross-sectional view showing an example in which the optical film in accordance with the first embodiment of the present invention is bonded to an adherent member.
Figure 2 is a perspective view showing a relationship between an incident light ray that is made incident on the optical film and a reflected light ray reflected by the optical film.
Figures 3A to 3C are perspective views showing shape examples of a structure formed in a first optical layer.
Figure 4A is a perspective view showing a shape example of the structure formed in the first optical layer. Figure 4B is a cross-sectional view showing one structural example of an optical film provided with the first optical layer in which the structure shown in Fig. 4A is formed.
Figure 5 is a schematic diagram showing one example of a layer structure of a wavelength-selective reflection layer.
Figure 6A is a schematic diagram showing one example of a wavelength-selective reflection layer in which each of third and fifth high-refractive-index layers is separated into two layers. Figure 6B is a schematic diagram showing one example of a wavelength-selective reflection layer in which the third high-refractive-index layer is separated into three layers and the fifth high-refractive-index layer is separated into two layers. Figure 6C is a schematic diagram showing one example of a wavelength-selective reflection layer in which the third high-refractive-index layer is separated into two layers and the fifth high-refractive-index layer is separated into three layers. Figure 6D is a schematic diagram showing one example of a wavelength-selective reflection layer in which each of the first, third and fifth high-refractive-index layers is separated into two layers. Figure 6E is a schematic diagram showing one example of a wavelength-selective reflection layer in which each of the first and fifth high-refractive-index layers is separated into two layers and the third high-refractive-index layer is separated into three layers. Figure 6F is a schematic diagram showing one example of a wavelength-selective reflection layer in which the first high-refractive-index layer is separated into two layers and each of the third and fifth high-refractive-index layers is separated into three layers.
Figure 7A and Figure 7B are cross-sectional views for use in explaining one example of a function of the optical film.
Figure 8A and Figure 8B are cross-sectional views for use in explaining one example of a function of the optical film.
Figure 9A is a cross-sectional view for use in explaining one example of a function of the optical film. Figure 9B is a plan view for use in explaining one example of a function of the optical film.
Figure 10 is a schematic view showing one structural example of a manufacturing device for manufacturing an optical film relating to a first embodiment of the present invention.
Figures 11A to 11C are process drawings for use in explaining one example of a manufacturing method of the optical film relating to the first embodiment of the present invention.
Figures 12A to 12C are process drawings for use in explaining one example of a manufacturing method of the optical film relating to the first embodiment of the present invention.
Figures 13A to 13C are process drawings for use in explaining one example of a manufacturing method of the optical film relating to the first embodiment of the present invention.
Figure 14 is a drawing for use in explaining a film thickness of a reflection layer.
Figure 15 is a flowchart showing one example of a flow of processes for determining a film thickness that satisfies respective parameter conditions.
Figure 16A is an $\alpha$-$\beta$ correlation diagram showing a distribution of a visible light-ray transmittance relative to a ratio $\alpha$ and a ratio $\beta$. Figure 16B is an $\alpha$-$\beta$ correlation diagram showing a distribution of a shading coefficient relative to a ratio $\alpha$ and a ratio $\beta$. Figure 16C is an $\alpha$-$\beta$ correlation diagram showing a distribution of a blue index relative to a ratio $\alpha$ and a ratio $\beta$. Figure 16D is an $\alpha$-$\beta$ correlation diagram showing a distribution of a red index relative to a ratio $\alpha$ and a ratio $\beta$. Figure 16E is a view that shows a state in which $\alpha$-$\beta$ correlation diagrams shown in Figures 16A to 16D are respectively overlapped with one another.
Figure 17A is an $\alpha$-$\beta$ correlation diagram obtained when in the case of a total film thickness L of 80 nm, the visible light-ray transmittance, the blue index and the red index are used as parameters. Figure 17B is an $\alpha$-$\beta$ correlation diagram obtained when in the case of a total film thickness L of 90 nm, the visible light-ray transmittance, the blue index and the red index are used as parameters.

Figure 18A is an α-β correlation diagram obtained when in the case of a total film thickness L of 100 nm, the visible light-ray transmittance, the blue index and the red index are used as parameters. Figure 18B is an α-β correlation diagram obtained when in the case of a total film thickness L of 120 nm, the visible light-ray transmittance, the blue index and the red index are used as parameters.

Figure 19A is an α-β correlation diagram obtained when in the case of a total film thickness L of 140 nm, the visible light-ray transmittance, the blue index and the red index are used as parameters. Figure 19B is an α-β correlation diagram obtained when in the case of a total film thickness L of 160 nm, the visible light-ray transmittance, the blue index and the red index are used as parameters.

Figure 20 is an α-β correlation diagram obtained when in the case of a total film thickness L of 180 nm, the visible light-ray transmittance, the blue index and the red index are used as parameters.

Figure 21A is an α-β correlation diagram obtained when in the case of a total film thickness L of 80 nm, the visible light-ray transmittance, the blue index, the red index and the shading coefficient are used as parameters. Figure 21B is an α-β correlation diagram obtained when in the case of a total film thickness L of 90 nm, the visible light-ray transmittance, the blue index, the red index and the shading coefficient are used as parameters.

Figure 22A is an α-β correlation diagram obtained when in the case of a total film thickness L of 100 nm, the visible light-ray transmittance, the blue index, the red index and the shading coefficient are used as parameters. Figure 22B is an α-β correlation diagram obtained when in the case of a total film thickness L of 120 nm, the visible light-ray transmittance, the blue index, the red index and the shading coefficient are used as parameters.

Figure 23A is an α-β correlation diagram obtained when in the case of a total film thickness L of 140 nm, the visible light-ray transmittance, the blue index, the red index and the shading coefficient are used as parameters. Figure 23B is an α-β correlation diagram obtained when in the case of a total film thickness L of 160 nm, the visible light-ray transmittance, the blue index, the red index and the shading coefficient are used as parameters.

Figure 24 is an α-β correlation diagram obtained when in the case of a total film thickness L of 180 nm, the visible light-ray transmittance, the blue index, the red index and the shading coefficient are used as parameters.

Figure 25 is a schematic diagram in which in the case when the visible light-ray transmittance, the blue index and the red index are used as parameters, a region satisfying the conditions of the respective parameters is mapped on three-dimensional planes.

Figure 26A is a schematic diagram in which in the case of total film thickness L = 80 nm < L < 90 mn, a region satisfying the conditions of the respective parameters is shown. Figure 26B is a schematic diagram in which in the case of total film thickness L = 90 nm < L < 100 nm, a region satisfying the conditions of the respective parameters is shown.

Figure 27A is a schematic diagram in which in the case of total film thickness L = 100 nm < L < 120 nm, a region satisfying the conditions of the respective parameters is shown. Figure 27B is a schematic diagram in which in the case of total film thickness L = 120 nm < L < 140 nm, a region satisfying the conditions of the respective parameters is shown.

Figure 28A is a schematic diagram in which in the case of total film thickness L = 140 nm < L < 160 nm, a region satisfying the conditions of the respective parameters is shown. Figure 28B is a schematic diagram in which in the case of total film thickness L = 160 nm < L < 180 nm, a region satisfying the conditions of the respective parameters is shown.

Figure 29 is a schematic diagram in which in the case when the visible light-ray transmittance, the blue index, the red index and the shading coefficient are used as parameters, a region satisfying the conditions of the respective parameters is mapped on three-dimensional planes.

Figure 30A is a schematic diagram in which in the case of total film thickness L = 80 nm < L < 90 nm, a region satisfying the conditions of the respective parameters is shown. Figure 30B is a schematic diagram in which in the case of total film thickness L = 90 nm < L < 100 nm, a region satisfying the conditions of the respective parameters is shown.

Figure 31A is a schematic diagram in which in the case of total film thickness L = 100 nm < L < 120 nm, a region satisfying the conditions of the respective parameters is shown. Figure 31B is a schematic diagram in which in the case of total film thickness L = 120 nm < L < 140 nm, a region satisfying the conditions of the respective parameters is shown.

Figure 32A is a schematic diagram in which in the case of total film thickness L = 140 nm < L < 160 nm, a region satisfying the conditions of the respective parameters is shown. Figure 32B is a schematic diagram in which in the case of total film thickness L = 160 nm < L < 180 nm, a region satisfying the conditions of the respective parameters is shown.

Figure 33A is a schematic diagram in which in the case when the visible light-ray transmittance, the blue index and the red index are used as parameters, a region satisfying the conditions of the respective parameters is mapped on the same plane. Figure 33B is a schematic diagram in which in the case when the visible light-ray transmittance, the blue index, the red index and the shading coefficient are used as parameters, regions satisfying the conditions of the respective parameters are mapped on the same plane.

Figure 34A is a cross-sectional view showing a first modified example of the first embodiment of the present invention.

Figure 34B is a cross-sectional view showing a second modified example of the first embodiment of the present invention.

Figure 35 is a schematic diagram for use in explaining a method for obtaining an approximation straight line from an approximation curve.

Figure 36A is an α-β correlation diagram obtained based upon conditions of the visible light-ray transmittance, the blue index and the red index in the case when a total film thickness L is 80 nm. Figure 36B is an α-β correlation diagram obtained based upon conditions of the visible light-ray transmittance, the blue index and the red index in the case when a total film thickness L is 90 nm.

Figure 37A is an α-β correlation diagram obtained based upon conditions of the visible light-ray transmittance, the blue index and the red index in the case when a total film thickness L is 100 nm. Figure 37B is an α-β correlation diagram obtained based upon conditions of the visible light-ray transmittance, the blue index and the red index in the case when a total film thickness L is 120 nm.

Figure 38A is an α-β correlation diagram obtained based upon conditions of the visible light-ray transmittance, the blue index and the red index in the case when a total film thickness L is 140 nm. Figure 38B is an α-β correlation diagram obtained based upon conditions of the visible light-ray transmittance, the blue index and the red index in the case when a total film thickness L is 160 nm.

Figure 39 is a schematic diagram in which in the case when the visible light-ray transmittance, the blue index and the red index are used as parameters, a region satisfying the conditions of the respective parameters is mapped on three-dimensional planes.

Figure 40A is an α-β correlation diagram obtained based upon the conditions of the visible light-ray transmittance, the blue index, the red index and the shading coefficient in the case of a total film thickness L of 80 nm. Figure 40B is an α-β correlation diagram obtained based upon the conditions of the visible light-ray transmittance, the blue index, the red index and the shading coefficient in the case of a total film thickness L of 90 nm.

Figure 41A is an α-β correlation diagram obtained based upon the conditions of the visible light-ray transmittance, the blue index, the red index and the shading coefficient in the case of a total film thickness L of 100 nm. Figure 41B is an α-β correlation diagram obtained based upon the conditions of the visible light-ray transmittances, the blue index, the red index and the shading coefficient in the case of a total film thickness L of 120 nm.

Figure 42A is an α-β correlation diagram obtained based upon the conditions of the visible light-ray transmittance, the blue index, the red index and the shading coefficient in the case of a total film thickness L of 140 nm. Figure 42B is an α-β correlation diagram obtained based upon the conditions of the visible light-ray transmittance, the blue index, the red index and the shading coefficient in the case of a total film thickness L of 160 nm.

Figure 43 is a schematic diagram in which in the case when the visible light-ray transmittance, the blue index and the red index are used as parameters, a region satisfying the conditions of the respective parameters is mapped on three-dimensional planes.

Figure 44A is a perspective view showing a first structural example of a first optical layer in an optical film in accordance with a third embodiment of the present invention. Figure 44B is a perspective view showing a second structural example of the first optical layer in the optical film in accordance with the third embodiment of the present invention. Figure 44C is a perspective view showing a third structural example of the first optical layer in the optical film in accordance with the third embodiment of the present invention.

Figure 45A is a plan view showing the third structural example of the first optical layer in the optical film in accordance with the third embodiment of the present invention. Figure 45B is a cross-sectional view taken along a B-B line of the first optical layer shown in Fig. 45A. Figure 45C is a cross-sectional view taken along a C-C line of the first optical layer shown in Fig. 45A.

Figure 46A is a plan view showing a fourth structural example of the first optical layer in the optical film in accordance with the third embodiment of the present invention. Figure 46B is a cross-sectional view taken along a B-B line of the first optical layer shown in Fig. 46A. Figure 46C is a cross-sectional view taken along a C-C line of the first optical layer shown in Fig. 46A.

Figure 47A is a plan view showing a fifth structural example of the first optical layer in the optical film in accordance with the third embodiment of the present invention. Figure 47B is a cross-sectional view taken along a B-B line of the first optical layer shown in Fig. 47A.

Figure 48A is a cross-sectional view showing one structural example of an optical film in accordance with a fourth embodiment of the present invention. Figure 48B is a perspective view showing one structural example of the first optical layer provided in the optical film in accordance with the fourth embodiment of the present invention.

Figure 49A is a cross-sectional view showing a first structural example of an optical film in accordance with a fifth embodiment of the present invention.

Figure 49B is a cross-sectional view showing a second structural example of the optical film in accordance with the fifth embodiment of the present invention. Figure 49C is a cross-sectional view showing a third structural example of the optical film in accordance with the fifth embodiment of the present invention.

Figure 50A is a cross-sectional view showing one structural example of an optical film in accordance with a sixth embodiment of the present invention.

Figure 50B is a cross-sectional view showing an example in which the optical film in accordance with the sixth embodiment of the present invention is bonded to an adherent member.

Figure 51 is a cross-sectional view showing one structural example of an optical film in accordance with a seventh embodiment of the present invention.

Figure 52 is a perspective view showing one structural example of a blind device in accordance with an eighth embodiment of the present invention.

Figure 53A is a cross-sectional view showing a first structural example of a slat. Figure 53B is a cross-sectional view showing a second structural example of the slat.

Figure 54A is a perspective view showing one structural example of a roll screen device in accordance with a ninth embodiment. Figure 54B is a cross-sectional view showing one structural example of a screen.

Figure 55A is a perspective view showing one structural example of a shoji screen in accordance with a tenth embodiment. Figure 55B is a cross-sectional view showing one structural example of the shoji screen.

Detailed Description of the Invention

Referring to Figures, the following description will discuss embodiments of the present invention in the following order.

1. First Embodiment (example in which structural elements are one-dimensionally arranged)
2. Second Embodiment (example in which a region is defined by an approximation straight line)
3. Third Embodiment (example in which structural elements are two-dimensionally arranged)
4. Fourth Embodiment (example of a reflection layer of a louver type)
5. Fifth Embodiment (example in which a light-scattering body is attached to an optical film)
6. Sixth Embodiment (example in which a reflection layer is exposed)
7. Seventh Embodiment (example in which a self-washing effect layer is installed)
8. Eighth Embodiment (example in which an optical film is applied to a blind device)
9. Ninth Embodiment (example in which an optical film is applied to a roll screen device)
10. Tenth Embodiment (example in which an optical film is applied to fittings)

<1. First Embodiment>

[Structure of Optical Film]

Fig. 1A is a cross-sectional view showing one structural example of an optical film in accordance with a first embodiment of the present invention. Fig. 1B is a cross-sectional view showing an example in which the optical film in accordance with the first embodiment of the present invention is bonded to an adherent member. The optical film 1 serving as an optical element is an optical film having a so-called directional reflection performance. As shown in Fig. 1A, the optical film 1 is provided with an optical layer 2 having an interface with a concave-convex shape inside thereof, and a reflection layer 3 formed on the interface of the optical layer 2. The optical layer 2 has a first optical layer 4 having a first face with a concave-convex shape and a second optical layer 5 having a second face with a concave-convex shape. The interface inside the optical layer is formed by the first face and the second face, each having the concave-convex shape, that are disposed to be made face to face with each other. More specifically, the optical film is provided with the first optical layer 4 having the concave-convex shape, the reflection layer 3 formed on the concave-convex face of the first optical layer, and the second optical layer 5 formed on the reflection layer 3 in a manner so as to bury the concave-convex face on which the reflection layer 3 is formed. The optical film 1 is provided with a light incident surface S1 on which light rays, such as solar light, are made incident, and a light-releasing surface S2 from which light rays of the incident light rays made incident on the incident surface S1, which have been transmitted through the optical film 1, are released. The optical film 1 is preferably applied to inner wall members, outer wall members, window materials, wall members, and the like. Moreover, the optical film 1 is also preferably applied to a slat (light-shielding member) of a blind device and a screen (incident light shielding member) of a roll screen device. Furthermore, the optical film 1 is preferably applied as an optical element to a lighting unit of fittings (interior member or exterior member), such as a shoji screen or the like.

The optical film 1 may be further provided with a first substrate 4a attached to the light-releasing surface S2 of the optical layer 2, if necessary. Moreover, the optical film 1 may be further provided with a second substrate 5a attached to the light incident surface S1 of the optical layer 2, if necessary. Additionally, in the case when the first substrate 4a and/or the second substrate 5a are attached to the optical film 1, optical characteristics, such as transparency and color transmittance, shown below, are preferably satisfied, with the first substrate 4a and/or the second substrate 5a being attached to the optical film 1.

The optical film 1 may be further provided with a bonding layer 6, if necessary. Of the light-incident surface S1 and the light-releasing surface S2 of the optical film 1, this bonding layer 6 is formed on the surface that is bonded to a window material 10. Through this bonding layer 6, the optical film 1 is bonded to the indoor side or the outdoor side of the window material 10 serving as an adherent member. As the bonding layer 6, for example, an adhesive layer (for example, a UV-setting resin, or a two-liquid mixing type resin) mainly composed of an adhesive, or a sticker layer (for example, Pressure Sensitive Adhesive (PSA)) mainly composed of a sticker may be used. In the case when the bonding layer 6 is a sticker layer, a separation layer 7 formed on the bonding layer 6 is further preferably provided thereon. With this structure, the optical film 1 is easily bonded onto the adherent member, such as the window material 10, with the bonding layer 6 interposed therebetween, by simply separating the separation layer 7.

From the viewpoint of improving the joining property of the second substrate 5a and the bonding layer 6 and/or the second optical layer 5, the optical film 1 may be further provided with a primer layer (not shown) between the second substrate 5a and the bonding layer 6 and/or the second optical layer 5. Moreover, from the viewpoint of improving the joining property of the same portion, in place of the primer layer, or together with the primer layer, a known physical preliminarily treatment is preferably carried out thereon. As the known physical preliminarily treatment, for example, a plasma process, a corona process, or the like is proposed.

The optical film 1 may be further provided with a barrier layer (not shown) on the light-incident surface S1 or the light-releasing surface S2, or between each of the surfaces and the reflection layer 3, to which the adherent member such as the window material 10 or the like is bonded. By installing the barrier layer in this manner, moisture dispersion from the light-incident surface S1 or the light-releasing surface S2 to the reflection layer 3 is reduced so that degradation of metal or the like contained in the reflection layer 3 is suppressed. Therefore, the durability of the optical film 1 can be improved.

From the viewpoint of providing a scratch resistance or the like to its surface, the optical film 1 may be further provided with a hard coat layer 8. The hard coat layer 8 is preferably formed on a face of the light-incident surface S1 and the light-releasing surface S2 on the side opposite to the face to be bonded to an adherent member such as the window material 10 or the like. From the viewpoint of providing an antifouling property or the like to the light-incident surface S1 of the optical film 1, a layer having a water-repellent property or a hydrophilic property may be further formed thereon. The layer having these functions may be directly formed, for example, on the optical layer 2, or may be formed on a functional layer of various kinds, such as the hard coat layer 8.

From the viewpoint of easily bonding the optical film 1 onto an adherent member such as the window material 10 or the like, the optical film 1 is preferably designed to have flexibility. In this case, the films may include sheets. That is, the optical film 1 includes an optical sheet.

The optical film 1 is provided with transparency. The transparency is preferably set within a range of degree of transmission image clearness, which will be described below. The difference of refractive indexes between the first optical layer 4 and the second optical layer 5 is preferably set to 0.010 or less, more preferably, to 0.008 or less, most preferably, to 0.005 or less. When the difference in refractive indexes exceeds 0.010, the transmission image tends to become a blurred image. In the case when it is in a range from 0.008 to 0.010 or less, no problems are raised for use in daily life although it also depends on external brightness. In the case when it is in a range from 0.005 to 0.008 or less, although a diffraction pattern tends to cause an adverse effect only when a very bright object, such as a light source, is viewed, outside scenes can be clearly viewed. In the case when it is 0.005 or less, the diffraction pattern no longer causes an adverse effect. Of the first optical layer 4 and the second optical layer 5, the optical layer forming the side which is bonded to the window material 10 or the like may be mainly composed of a sticker. By using this structure, the optical film 1 can be bonded to the window material 10 or the like by the first optical layer 4 or the second optical layer 5 mainly composed of the sticker. Additionally, in the case when this structure is used, the difference in the refractive indexes of the stickers is preferably set within the above-mentioned range.

The first optical layer 4 and the second optical layer 5 are preferably designed to have the same optical properties such as the refractive index or the like. More specifically, the first optical layer 4 and the second optical layer 5 are preferably made of the same material, for example, the same resin material, having transparency within a visible range. In the case when the first optical layer 4 and the second optical layer 5 are formed by using the same material, since the two layers have the same refractive index, it becomes possible to improve the transparency of visible light rays. However, even in the case of using the same material as the starting sources, the refractive indexes of the resulting generated layers sometimes differ from each other due to the curing condition or the like in the film-forming process; therefore, this point needs to be taken into consideration. In contrast, in the case when the first optical layer 4 and the second optical layer 5 are made of different materials, since the refractive indexes of the two members are different from each other, light is refracted, with the reflection layer 3 serving as the border, with the result that a blurred transmission image tends to be generated. In particular, when an object that is close to a point light source, such as a distant light bulb or the like, is observed, a diffraction pattern tends to be remarkably observed. Additionally, in order to adjust the value of a refractive index, an additive agent may be mixed in the first optical layer 4 and/or the second optical layer 5.

The first optical layer 4 and the second optical layer 5 are preferably designed to have transparency in a visible range. In this case, the definition of transparency has two kinds of meanings, that is, no light absorption is caused and no light scattering occurs. In the case when transparency is generally mentioned, it sometimes indicates only the former; however, the optical film 1 relating to the first embodiment is preferably provided with both of the properties. In case of the currently utilized retroreflection members, such as traffic signs and clothes for night-time workers, since their purposes are to visually recognize their reflected light display, even when they have, for example, a light scattering property, their reflected light can be visually recognized as long as they are tightly made in contact with a base reflective member. This is based upon the same principle as that even when an antiglare treatment having a scattering property is carried out on the front surface of an image display device so as to give an antiglare property thereto, its image can be visually recognized. However, since the optical film 1 relating to the first embodiment is characterized by the fact that it can transmit light rays other than light having a specific wavelength that is directionally reflected, and since it is bonded to a transmission member that mainly transmits this transmission wavelength so as to observe its transmitted light, it preferably has no scattering property. However, depending on its applications, the second optical layer 5 may be intentionally allowed to have a scattering property.

The optical film 1 is bonded to a rigid member that mainly has a transmitting property relative to light rays other than transmitted light having a specific wavelength, that is, for example, the window material 10, with a sticker or the like interposed therebetween, and utilized. As the window material 10, examples thereof include: window materials for use in buildings, such as high-rise buildings and houses, and window materials for use in vehicles. In the case when the optical film 1 is used for the window material for use in buildings, the optical film 1 is preferably applied to the window material 10 that is disposed in any of directions facing the east, south or west directions (for example, a south-east or south-west direction). By applying the optical film 1 to the window material 10 disposed at such a position, it becomes possible to more effectively reflect heat rays. The optical film 1 may be applied not only to a window glass of a single layer, but also to a special glass such as a multi-layered glass. Moreover, the window material 10 is not limited by those made of glass, and those made of a polymeric material having transparency may be used. The optical layer 2 preferably has transparency in a visible light range. By allowing it to have transparency in this manner, when the optical film 1 is bonded to the window material 10 such as window glass, visible light rays can be transmitted to properly ensure lighting by solar light. Moreover, with respect to the bonding surface, not only the inner surface of glass, but also the outer surface may be used.

Furthermore, the optical film 1 may be used in combination with another heat ray-cutting film, and for example, a light-absorption coat film may be formed on an interface (that is, the outermost surface of the optical film 1), for example, between air and the optical film 1. The optical film 1 may be used in combination with another layer, such as a hard coat layer, an ultraviolet-ray cutting layer, a surface reflection preventive layer, or the like. In the case when these functional layers are used in combination, these functional films are preferably formed on an interface between the optical film 1 and air. However, with respect to the ultraviolet-ray cutting layer, since this layer needs to be disposed on the sun side from the optical film 1, the ultraviolet-ray cutting layer is preferably placed between the window glass surface and the optical film 1, in particular, upon application of this for inside bonding use of an indoor window glass surface. In this case, an ultraviolet-ray absorbing agent may be kneaded into a bonding layer between the window glass face and the optical film 1.

Moreover, depending on the application of the optical film 1, a coloring process may be carried out on the optical film 1 so that a designing property may be given thereto. In the case when the designing property is applied in this manner, at least one of the first optical layer 4 and the second optical layer 5 is preferably designed so as to mainly absorb light having a specific wavelength band in a visible light range, within a region not impairing the transparency.

Fig.2 is a perspective view showing a relationship between an incident light ray that is made incident on the optical film 1 and a reflected light ray reflected by the optical film 1. The optical film 1 has an incident surface S1 on which light L is made incident. Of light rays L made incident on the incident surface S1 with an incident angle ($\theta$, (p), the optical film 1 directionally reflects a light ray $L_1$ having a specific wavelength band selectively in a direction other than a regular reflection ($-\theta$, $\varphi + 180°$) direction, while it preferably transmits a light ray $L_2$ with a wavelength band other than the specific wavelength band. Moreover, the optical film 1 exerts transparency on light rays having a wavelength band other than the specific wavelength band. With respect to the transparency, it is preferably set within a range of degree of transmission image clearness, which will be described later. In this case, $\theta$: an angle made by a perpendicular line $l_1$ relative to the incident-surface S1 and the incident light L or the reflected light $L_1$. $\varphi$: an angle made by a specific straight line $l_2$ within the incident surface S1 and a component formed by projecting the incident light L or the reflected light $L_1$ onto the incident surface S1. In this case, the specific straight line $l_2$ within the incident surface refers to an axis that makes the reflection intensity in a $\varphi$ direction highest, when the optical film 1 is rotated with the perpendicular line $l_1$ relative to the incident surface S1 of the optical film 1 serving as an axis, while the incident angle ($\theta$, $\varphi$) is fixed (see

Figs. 3 and 4). However, in the case when there are a plurality of axes (directions) that make the reflection intensity the highest, it is supposed that one of these is selected as the straight line $l_2$. Additionally, suppose that an angle θ obtained by rotating clockwise based upon the perpendicular line $l_1$ is defined as "+ θ", and that an angle θ obtained by rotating counter-clockwise based thereupon is defined as "- θ". Suppose that an angle φ obtained by rotating clockwise based upon the straight line $l_2$ is defined as "+ φ", and that an angle φ obtained by rotating counter-clockwise based thereupon is defined as "- φ".

The light ray having a specific wavelength band that is directionally reflected selectively and the specific light ray that is allowed to transmit are different depending on the application of the optical film 1. For example, in the case when the optical film 1 is applied to the window material 10, the light ray having a specific wavelength band that is directionally reflected selectively is preferably a near infrared light ray, and the specific light ray that is allowed to transmit is preferably a visible light ray. More specifically, the light ray having a specific wavelength band that is directionally reflected selectively is preferably a near infrared light ray mainly having a wavelength range from 780 nm to 2100 nm. By reflecting the near infrared light ray, the optical element is allowed to suppress a temperature rise inside a building when it is bonded to the window material such as a glass window. Therefore, the cooling load can be lowered so as to save energy. In this case, the directional reflection refers to a reflection in a certain specific direction other than a regular reflection, and indicates that it is sufficiently strong in comparison with a diffusion reflection intensity having no directivity. In this case, with respect to the reflection, a reflectance in a specific wavelength range, for example, in a near infrared light region, is preferably set to 30% or more, more preferably, to 50% or more, and most preferably, to 80% or more. With respect to the transmission, a transmittance in a specific wavelength range, for example, in a visible light region, is preferably set to 30% or more, more preferably, to 50% or more, and most preferably, to 70% or more.

In the optical film 1, a direction φo in which the reflection is directionally made is preferably set to - 90° or more to 90°or less. This is because in the case when the optical film 1 is bonded to the window material 10, of light rays mad incident thereon from the sky, the light ray having the specific wavelength band can be returned in the upward sky direction. In the case when there are no high-rise buildings on the periphery, the optical film 1 in this range is effectively used. Moreover, the direction in which the reflection is directionally made is preferably set in the vicinity of (θ, - φ). The vicinity means a deviation preferably set within 5 degrees from (θ, - cp), more preferably, within 3 degrees from (θ, - φ), and most preferably, within 2 degrees therefrom. This is because in the case when the optical film 1 is bonded to the window material 10, by setting this range, of light rays made incident thereon from the sky above buildings having about the same height that stand side by side, the light ray having the specific wavelength band can be effectively returned to the sky above the buildings. In order to achieve the directional reflection of this type, a three-dimensional structural element, for example, having a shape of one portion of a spherical face or a hyperboloid, a trigonal pyramid, a pyramid, a cone, or the like, is preferably used. A light ray made incident in the (θ, φ) direction (- 90°< φ < 90°) is reflected in the (θo, φo) direction (0°< θo < 90°, - 90°< φo < 90°) based upon the corresponding shape. Alternatively, a pillar shape extending in one direction is preferably used. A light ray made incident in the (θ, φ) direction (- 90°< φ < 90°) is reflected in the (θo, - φ) direction (0°< θo < 90°) based upon the inclination angle of the pillar shape.

In the optical film 1, the directional reflection of a light ray of a specific wavelength band is preferably set in a direction in the vicinity of retroreflection, that is, the reflection direction of the light ray of the specific wavelength band relative to a light ray made incident on the incident surface S1 at the incident angle (θ, φ) is preferably set to the vicinity of (θ, φ). Thus, in the case when the optical film 1 is bonded to the window material 10, of light rays made incident thereon from the sky, the light ray having the specific wavelength band can be returned in the upward sky direction. In this case, the vicinity refers to an angle range within 5 degrees, more preferably, within 3 degrees, and most preferably, within 2 degrees.

By setting this range, in the case when the optical film 1 is bonded to the window material 10, of light rays made incident thereon from the sky, the light ray having the specific wavelength band can be effectively returned to the sky. Moreover, as in the case of an infrared-ray sensor and an infrared-ray image pick-up process, when the infrared-ray irradiation unit and the light-receiving unit are adjacent to each other, the retroreflection direction has to be made equal to the incident direction; however, as in the case of the present invention, when it is not necessary to carry out a sensing process in a specific direction, it is not necessary to make the directions precisely equal to each other.

In the optical film 1, with respect to the degree of transmission image clearness relative to a wavelength band having a transmitting property, the value at the time of using an optical comb of 0.5 mm is preferably set to 50 or more, more preferably, to 60 or more, and most preferably, to 75 or more. In the case when the value of the degree of transmission image clearness is less than 50, the transmission image tends to become a blurred image. In the case when it is from 50 or more to less than 60, no problems are raised for use in daily life, although it also depends on external brightness. In the case when it is from 60 or more to less than 75, although a diffraction pattern tends to cause an adverse effect only when a very bright object, such as a light source, is viewed, outside scenes can be clearly viewed. In the case when it is 75 or more, the diffraction pattern no longer causes an adverse effect. Moreover, the total value of values obtained by measurements by the use of optical combs of 0.125 mm, 0.5 mm, 1.0 mm and 2.0 mm is preferably set to 230 or more, more preferably, to 270 or more, and most preferably, to 350 or more. In the case when the total value of the degree of transmission image clearness is less than 230, the transmission image tends to become a blurred image. In the case when it is from 230 or more to less than 270, no problems are raised for use in daily life, although it also depends on external brightness. In the case when it is from 270 or more to less than 350, although a diffraction pattern tends to cause an adverse effect only when a very bright object, such as a light source, is viewed, outside scenes can be clearly viewed. In the case when it is 350 or more, the diffraction pattern no longer causes an adverse effect. In this case, the value of the degree of transmission image clearness is measured by using an ICM-1T made by Suga Test Instruments Co., Ltd. in accordance with JIS K7105. However, in the case when the wavelength to be preferably transmitted is different from a D65 light source wavelength, measurements are preferably carried out after a calibration process has been carried out by using a filter for the wavelength to be preferably transmitted.

In the optical film 1, haze relative to the wavelength band having a transmitting property is preferably set to 6% or less, more preferably, to 4% or less, and most preferably, to 2% or less. When the haze exceeds 6%, the transmission light is diffused to cause a foggy view. In this case, the haze is measured by using an HM-150 made by Murakami Color Research Laboratory by using a measuring method defined by JIS K7136. However, in the case when the wavelength to be preferably transmitted is different from a D65 light source wavelength, measurements are preferably carried out after a calibration process has been carried out by using a filter for the wavelength to be preferably transmitted. An incident surface S1 of the optical film 1, preferably, the incident surface S1 and a light-releasing surface S2, have such a degree of smoothness as not to lower the degree of transmission image clearness. More specifically, an arithmetic mean roughness Ra of the incident surface S1 and the light-releasing surface S2 is preferably set to 0.08 μm or less, more preferably, 0.06 μm or less, and most preferably, to 0.04 μm or less. Additionally, the above-mentioned arithmetic mean roughness Ra is calculated as a roughness parameter through processes in which the surface roughness of the incident surface is measured, and a roughness curve is obtained from a two-dimensional cross-sectional curve. Additionally, the measuring conditions are based upon JIS B0601: 2001. The measuring device and the measuring conditions are shown below.

Measuring device: fully automatic micro-shape measuring device, Surf-Coder ET4000A (made by Kosaka Laboratory Ltd.)

$$\lambda c = 0.8 \text{ mm, Evaluation length 4 mm, cut-off} \times 5$$

Data sampling interval: 0.5 μm

The transmission color of the optical film 1 is preferably made as close to neutral color as possible, and even when colored, a faint color tone, such as blue, bluish green, green or the like, which gives a cool impression, is preferably used. From the viewpoint of obtaining such a color tone, chromaticity coordinates x, y of a transmission light ray released from the light-releasing surface S2 derived from an incident light ray on the incident surface S1 that is transmitted through the optical layer 2 and the reflection layer 3 are preferably set in a range of $0.20 < x < 0.35$ and $0.20 < y < 0.40$, more preferably in a range of $0.25 < x < 0.32$ and $0.25 < y < 0.37$, and most preferably in a range of $0.30 < x < 0.32$ and $0.30 < y < 0.35$, relative to irradiation from, for example, a D65 light source. Moreover, in order to prevent the color tone from becoming reddish, the relationship of $y > x - 0.02$ is preferably satisfied, and more preferably, the relationship of $y > x$ is satisfied. Moreover, in the case when a reflection color tone is varied depending on the incident angle, for example, in the case of the application as the window of a building, since the color tone becomes different depending on places or since the color looks differently when viewed while walking, these states are not preferable. From the viewpoint of suppressing these changes in color tone, the absolute value of a difference in the color coordinate x and the absolute value of a difference in the color coordinate y of an incident light ray that is made incident on the incident surface S1 or the light-releasing surface S2 at an incident angle $\theta$ in a range from 5° or more to 60° or less and that of a regular reflected light ray from the optical film 1 is preferably set to 0.05 or less, more preferably, to 0.03 or less, and most preferably, to 0.01 or less, in each of the two main surfaces of the optical film 1. These limitations in the numeric value range relative to the color coordinates x and y given to the reflected light ray are preferably satisfied on both of the surfaces of the incident surface S1 and the light-releasing surface S2.

The following description will successively discuss the first optical layer 4, the second optical layer 5 and the reflection layer 3 constituting the optical film 1.

(First Optical Layer, Second Optical Layer)

The first optical layer 4 is, for example, used for supporting and also protecting the reflection layer 3. From the viewpoint of applying flexibility to the optical film 1, the first optical layer 4 is, for example, made of a layer mainly composed of a resin. Of the two main surfaces of the first optical layer 4, for example, one of the surfaces is a smoothed surface and the other surface is a concave-convex surface (first surface). The reflection layer 3 is formed on the concave-convex surface.

The second optical layer 5 is allowed to enclose and bury the first surface (concave-convex surface) of the first optical layer 4 on which the reflection layer 3 is formed so that it is used for protecting the reflection layer 3. From the viewpoint of applying flexibility to the optical film 1, the second optical layer 5 is made of, for example, a layer mainly composed of a resin. Of the two main surfaces of the second optical layer 5, for example, one of the surfaces is a smoothed surface and the other surface is a concave-convex surface (second surface). The concave-convex surface of the first optical layer 4 and the concave-convex surface of the second optical layer 5 have such a relationship that their mutual concave-convex shapes are inverted to each other.

The concave-convex surface of the first optical layer 4 is made of, for example, a plurality of structural elements 4c that are one-dimensionally arranged. The concave-convex surface of the second optical layer 5 is made of, for example, a plurality of structural elements 5c that are one-dimensionally arranged (see Fig. 3 and Fig. 4). The structural elements 4c of the first optical layer 4 and the structural elements 5c of the second optical layer 5 are only different from each other in that their concave-convex shapes are inverted to each other; therefore, the following description will discuss the structural elements 4c of the first optical layer 4.

In the optical film 1, the pitch P of the structural elements 4c is preferably set to 5 μm or more to 5 mm or less, more preferably, to 5 μm or more to less than 250 μm, and most preferably, to 20 μm or more to 200 μm or less. In the case when the pitch of the structural elements 4c is less than 5 μm, since it becomes difficult to form the shape of the structural elements 4c into a desired shape, and since it is generally difficult to make the wavelength selection characteristic of the reflection layer 3 abruptly changed, one portion of the transmission wavelength tends to be reflected. In the case when such a reflection occurs, a diffraction is generated so that a reflection up to a high-order reflection is visually recognized, with the result that the transparency tends to be felt worse. On the other hand, in the case when the pitch of the structural elements 4c exceeds 5 mm, in an attempt to take into consideration the shape of the structural elements 4c required for directional reflection, the required film thickness becomes too thick, with the result that the flexibility is lost, thereby making it difficult to be bonded to a rigid member such as the window material 10. Moreover, by setting the pitch of the structural elements 4c to less than 250 μm, the flexibility is further increased so that a manufacturing process in roll-to-roll operations is easily carried out, with the necessity of a batch production being eliminated. In order to apply the optical film 1 of the present invention to fittings, such as a window or the like, a length of about several meters is required so that the roll-to-roll manufacturing operations rather than the batch process are suitable. Moreover, when the pitch is set to 20 μm or more to 200 μm or less, the productivity is further improved.

Moreover, the shape of the structural elements 4c to be formed on the surface of the first optical layer 4 is not limited to one kind, and the structural elements 4c having shapes of a plurality of kinds may be formed on the first optical layer 4. In the case when the structural elements 4c having shapes of a plurality of kinds are formed on the surface, a predetermined pattern composed of the shapes of the plural kinds of the structural elements 4c may be periodically repeated. Moreover, depending on a desired characteristic, the plural kinds of the structural elements 4c may be formed at random (non-periodically).

Figs. 3A to 3C are perspective views showing examples of the shapes of the structural elements formed on the first optical layer. The structural elements 4c are pillar-shaped concave portions that extend in one direction, and these pillar-shaped structural elements 4c are one-dimensionally arranged in the one direction. Since the reflection layer 3 is film-formed on these structural elements 4c, the shape of the reflection layer 3 has the same shape as that of the surface shape of the structural elements 4c.

The shapes of the structural elements 4c include, for example, a prism shape shown in Fig. 3A, a prism shape with their ridge line portions formed into round shapes shown in Fig. 3B, an inverted shape to a lenticular shape shown in Fig. 3C and inverted shapes to these shapes. In this case, the lenticular shape refers to any one of shapes in which its cross-sectional shape perpendicular to the ridge line portion of each convex portion is formed into an arch shape or a virtually arch shape, an elliptical arch shape or a virtually elliptical arch shape, or a parabolic shape or a virtually one portion of a parabolic shape. Therefore, a cylindrical shape is also included in the lenticular shape. Additionally, as shown in Fig. 3B, the ridge line portion may have an R-portion, and may preferably have a shape in which a ratio R/P between the curvature radius R and the pitch P of each structural element 4c is set to 7% or less, more preferably, to 5% or less, and most preferably, to 3% or less. Moreover, the shapes of the structural elements 4c are not intended to be limited by the shapes shown in Figs. 3A to 3C or inverted shapes of those shapes, and may be formed into a toroidal shape, a hyperbolic pillar shape, an elliptical pillar shape, a polygonal pillar shape, or a free curved face shape. Alternatively, the apex portion of the prism shape and the lenticular shape may be formed into a polygonal shape (for example, pentagonal shape). In the case when the structural elements 4c are formed into the prism shape, the inclination angle $\theta$ is, for example, set to 45°. From the viewpoint of reflecting more incident light rays from the sky and returning them to the sky in the case when the structural elements 4c are applied to the window material 10, a plane or a curved face having an inclination angle of 45° or more is preferably used. By using this shape, since the incident light rays are allowed to return to the sky by reflection of virtually one time, it becomes possible to reflect the incident light to the upward sky direction effectively even when the reflectance of the reflection layer 3 is not so high, and consequently to lower the absorption of light in the reflection layer 3.

Moreover, as shown in Fig. 4A, the shape of the structural elements 4c may be formed into an asymmetric shape relative to a perpendicular line $l_1$ that is perpendicular to the incident surface S1 or the light-releasing surface S2 of the optical film 1. In this case, a main axis $l_m$ of the structural elements 4c is tilted toward an arrangement direction a of the structural elements 4c based upon the perpendicular line $l_1$. Here, the main axis $l_m$ of the structural elements 4c refers to a straight line that passes through the middle point of the bottom side and the apex of each of the structural elements on the cross section of each of the structural elements. In the case when the optical film 1 is bonded to the window material 10 disposed virtually perpendicularly to the ground, as shown in Fig. 4B, it is preferable to allow the main axis $l_m$ of the structural elements 4c to tilt downward (on the ground side) of the window material 10 based upon the perpendicular line $l_1$.

In general, a heat flow through the window is highly exerted in the time zone after noon at which the altitude of the sun is higher than 45° ; therefore, by using the above-mentioned shape, light rays that are made incident at high angles can be reflected upward effectively. Figs. 4A and 4B show examples in which the structural elements 4c, each having a prism shape, are formed into an asymmetric shape relative to the perpendicular line $l_1$. Additionally, the structural elements 4c having a shape other than the prism shape may be formed into an asymmetric shape relative to the perpendicular line $l_1$. For example, corner cubed bodies may be formed into an asymmetric shape relative to the perpendicular line $l_1$.

Preferably, the first optical layer 4 is mainly composed of a resin which is less susceptible to reduction in the storage elastic modulus at 100°C and in which the storage elastic modulus is not varied so much between that at 25°C and that at 100°C. More specifically, a resin in which the storage elastic modulus at 25°C is set to $3 \times 10^9$ Pa or less and the storage elastic modulus at 100°C is set to $3 \times 10^7$ Pa or more is preferably contained therein. Additionally, although the first optical layer 4 is preferably made of one kind of a resin, it may contain two or more kinds of resins. Moreover, an additive agent may be mixed therein, if necessary.

When the first optical layer 4 is mainly composed of a resin which is less susceptible to reduction in the storage elastic modulus at 100°C and in which the storage elastic modulus is not varied so much between that at 25°C and that at 100°C, even in the case of carrying out processes applying heat or heat and pressure after the formation of the concave-convex surface (first surface) of the first optical layer 4, a designed interface shape can be virtually maintained. In contrast, in the case when it is mainly composed of a resin that has a great reduction in the storage elastic modulus at 100°C and in which the storage elastic modulus is varied greatly between that at 25°C and that at 100°C, the interface shape is greatly deformed from the designed shape, with the result that a curling or the like tends to occur in the optical film 1.

In this case, those processes applying heat include not only a process such as an annealing process or the like in which heat is directly applied to the optical film 1 or its constituent member, but also a process in which upon film-forming a thin film and upon curing a resin composition, or the like, a temperature-rise occurs locally on the film-forming surface and the resulting heat is indirectly applied to those members, and a process in which the temperature of a metal mold is raised by irradiation with an energy ray so that heat is indirectly applied to the optical film. Moreover, the effects to be obtained by limiting the numeric value range of the above-mentioned storage elastic modulus are not particularly limited by the kinds of resins, and can be obtained by any of thermoplastic resins, thermosetting resins and energy-ray irradiation-type resins.

The storage elastic modulus of the first optical layer 4 can be confirmed, for example, by using the following method. In the case when the surface of the first optical layer 4 is exposed, the storage elastic modulus of the exposed surface can be confirmed by using a minute hardness meter. Moreover, in the case when the first substrate 4a or the like is formed on the surface of the optical layer 4, after separating the first substrate 4a or the like therefrom so that the surface of the first optical layer 4 is exposed, the storage elastic modulus of the exposed surface can be confirmed by measurements by the use of a minute hardness meter.

As a method for suppressing a reduction of the elastic modulus under high temperatures, for example, in the case of the thermoplastic resin, a method for adjusting the length, kind or the like of a side chain is proposed, and in the case of the thermosetting resin and energy-ray irradiation-type resin, a method for adjusting the amount of cross-linking points and the molecule structure of the cross-linking member is proposed. In this case, however, it is preferable to prevent the characteristic required for the resin material itself from being impaired by this structural change. For example, depending on the kinds of cross-linking agents, the elastic modulus becomes higher in the vicinity of room temperature to sometimes cause the resin to become brittle, or the shrinkage becomes greater to sometimes cause the resulting film to be curved or curled so that the kind of the cross-linking agent needs to be preferably selected on demand in accordance with desired characteristics.

In the case when the first optical layer 4 contains a crystalline polymeric material as its main component, it is also mainly composed of a resin which has a glass transition point higher than the maximum temperature within manufacturing processes and is less susceptible to a reduction of the storage elastic modulus under the maximum temperature in the manufacturing processes. On the other hand, in the case of using a resin which has a glass transition point that is higher than room temperature 25°C and within a range lower than the maximum temperature in the manufacturing processes, and is susceptible to a great reduction of the storage elastic modulus under the maximum temperature in the manufacturing processes, it becomes difficult to maintain an optimally designed interface shape during the manufacturing processes.

In the case when the first optical layer 4 contains an amorphous polymeric material as its main component, it is also mainly composed of a resin which has a melting point higher than the maximum temperature within manufacturing processes and is less susceptible to a reduction of the storage elastic modulus under the maximum temperature in the manufacturing processes. In contrast, in the case of using a resin which has a glass transition point that is higher than room temperature 25°C and is located within a range lower than the maximum temperature in the manufacturing processes, and is susceptible to a great reduction of the storage elastic modulus under the maximum temperature in the manufacturing processes, it becomes difficult to maintain an optimally designed interface shape during the manufacturing processes.

In this case, the maximum temperature in the manufacturing processes refers to the maximum temperature of the concave-convex surface (first surface) of the first optical layer 4 in the manufacturing processes. It is preferable for the second optical layer 5 to also satisfy the above-mentioned numeric value range of the storage elastic modulus and the temperature range of the glass transition point.

That is, at least one of the first optical layer 4 and the second optical layer 5 preferably contains a resin that has a storage elastic modulus at 25°C of 3 x $10^9$ Pa or less. Since it becomes possible to give flexibility to the optical film 1 at 25°C, the manufacturing process of the optical film 1 by using the roll-to-roll operation is achieved.

The first substrate 4a and the second substrate 5a have, for example, transparency. From the viewpoint of giving flexibility to the optical film 1, the shape of the substrate is preferably formed into a film shape; however, it is not limited only by this shape. As the material for the first substrate 4a and the second substrate 5a, for example, known polymeric materials may be used, and examples of the known polymeric materials include: triacetyl cellulose (TAC), polyester (TPEE), polyethylene terephthalate (PET), polyimide (PI), polyamide (PA), aramid, polyethylene (PE), polyacrylate, polyether sulfone, polysulfone, polypropylene (PP), diacetyl cellulose, polyvinyl chloride, acrylic resin (PMMA), polycarbonate (PC), epoxy resin, urea resin, urethane resin, melamine resin, and the like; however, the materials are not particularly limited by these. From the viewpoint of productivity, the thickness of the first substrate 4a and the second substrate 5a is preferably set to 38 to 100 μm; however, it is not particularly limited by this range. The first substrate 4a and the second substrate 5a are preferably provided with an energy-ray transmitting property. With this arrangement, as will be described later, an energy-ray is applied to an energy-ray setting-type resin interposed between the first substrate 4a or the second substrate 5a and the reflection layer 3 from the first substrate 4a or second substrate 5a side so that the energy-ray setting-type resin can be cured.

The first optical layer 4 and the second optical layer 5 has, for example, transparency. The first optical layer 4 and the second optical layer 5 are obtained, for example, by curing a resin composition. As the resin composition, from the viewpoint of easiness in production, an energy-ray setting-type resin that is cured by light, an electron beam, or the like, and a thermosetting type resin that is cured by heat are preferably used. With respect to the energy-ray setting-type resin, a photosensitive resin composition that is cured by light is preferably used, and an ultraviolet-ray setting resin composition that is cured by ultraviolet rays is most preferably used. From the viewpoint of improving the adhesion between the first optical layer 4 or the second optical layer 5 and the reflection layer 3, the resin composition preferably further contains a compound containing a phosphoric acid, a compound containing a succinic acid and a compound containing butyrolactone. As the compound containing a phosphoric acid, for example, (meth)acrylate containing a phosphoric acid, more preferably, (meth)acrylic monomer or oligomer having a phosphoric acid in its functional group may be used. As the compound containing a succinic acid, for example, (meth)acrylate containing a succinic acid, more preferably, (meth)acrylic monomer or oligomer containing a succinic acid in its functional group may be used. As the compound containing butyrolactone, for example, (meth)acrylate containing butyrolactone, more preferably, (meth)acrylic monomer or oligomer containing butyrolactone in its functional group may be used.

The ultraviolet-ray setting-type resin composition contains, for example, (meth)acrylate and a photo-polymerization initiator. Moreover, the ultraviolet-ray setting-type resin composition may further contains a photo-stabilizer, a flame retardant, a leveling agent, an antioxidant or the like, if necessary.

With respect to the acrylate, a monomer and/or an oligomer containing two or more (meth)acryloyl groups may be preferably used. As this monomer and/or oligomer, for example, urethane (meth)acrylate, epoxy(meth)acrylate, polyester(meth)acrylate, polyol(meth)acrylate, polyether(meth)acrylate, melamine(meth)acrylate, or the like may be used. In this case, the (meth)acryloyl group refers to either one of an acryloyl group and a methacryloyl group. In this case, the oligomer refers to a molecule having a molecular weight in a range from 500 or more to 60000 or less.

As the photo-polymerization initiator, one selected from known materials on demand can be used. As the known materials, for example, a benzophenone derivative, an acetophenone derivative, an anthraquinone derivative, and the like may be used alone, or in combination. The compounding amount of the polymerization initiator is preferably set in a range from 0.1 mass% or more to 10 mass% or less in solid components. When the amount is less than 0.1 mass%, the photo-setting property deteriorates, failing to be actually applied to the industrial production. In contrast, when the amount exceeds 10 mass%, odor tends to remain in the coated film in the case when the quantity of light irradiation is small. In this case, the solid components mean all the components constituting a hard coat layer 12 after its curing process. More specifically, for example, acrylate and the photo-polymerization initiator, etc. are referred to as solid components.

With respect to the resin, one that is capable of transferring a structure by irradiation with an energy ray, heat, or the like is preferably used, and any kind of resins, such as a vinyl-based resin, an epoxy-based resin, a thermoplastic resin or the like, may be used as long as it satisfies the requirement for the aforementioned refractive index.

In order to reduce the curing shrinkage, an oligomer may be added thereto. As the curing agent, polyisocyanate or the like may be contained therein. Moreover, when the adhesion between the first optical layer 4 and the second optical layer 5 is taken into consideration, a monomer having a hydroxyl group, a carboxylic group, or a phosphoric acid group, a coupling agent, such as polyhydric alcohols, carboxylic acid, silane, aluminum, titanium or the like, and various kinds of chelate agents may be added thereto.

The resin composition preferably further contains a cross-linking agent. As this cross-linking agent, a cyclic cross-linking agent is in particular preferably used.

By using the cross-linking agent, it is possible to make the resin heat resistant without changing the storage elastic modulus greatly at room temperature. Additionally, in the case when the storage elastic modulus at room temperature is greatly varied, the optical film 1 tends to become brittle, making it difficult to manufacture the optical film 1 by the use of the roll-to-roll process, or the like. As the cyclic cross-linking agent, for example, dioxane glycol diacrylate, tricyclodecane dimethanol diacrylate, tricyclodecane dimethanol dimethacrylate, ethylene oxide modified isocyanurate diacrylate, ethylene oxide modified isocyanurate triacrylate, caprolactone modified tris(acryloxyethyl) isocyanurate, or the like are proposed.

The first substrate 4a or the second substrate 5a is preferably designed to have a water vapor permeability that is lower than that of the first optical layer 4 or the second optical layer 5. For example, in the case when the first optical layer 4 is formed by using an energy-ray setting-type resin, such as urethane acrylate, it is preferable to form the first substrate 4a by using a resin, such as polyethylene terephthalate (PET) or the like, which has a water vapor permeability that is lower than that of the first optical layer 4, and also has an energy-ray transmitting property. With this arrangement, moisture diffusion from the light-incident surface S1 or the light-releasing surface S2 toward the reflection layer 3 is reduced so that metal or the like contained in the reflection layer 3 is prevented from deteriorating. Therefore, the durability of the optical film 1 can be improved. Additionally, the water vapor permeability of the PET having a thickness of 75 $\mu$m is about 10 g/m$^2$/day (40°C, 90% RH).

It is preferable to allow at least one of the first optical layer 4 and the second optical layer 5 to contain a functional group having a high polarity, with its contents being preferably different between the first optical layer 4 and the second optical layer 5. Both of the first optical layer 4 and the second optical layer 5 contain a phosphoric acid compound (for example, phosphate), and the contents of the phosphoric acid compound are preferably made different between the first optical layer 4 and the second optical layer 5. The contents of the phosphoric acid compound between the first optical layer 4 and the second optical layer 5 are preferably made different by two times or more, more preferably by five times or more, and most preferably by 10 times or more.

In the case when at least one of the first optical layer 4 and the second optical layer 5 contains a phosphoric acid compound, the reflection layer 3 preferably contains an oxide, a nitride or an oxynitride on its surface that is made in contact with the first optical layer 4 or the second optical layer 5 that contains the phosphoric acid compound. The reflection layer 3 is, in particular, preferably provided with a layer containing zinc oxide (ZnO) or niobium oxide on the surface that is made in contact with the first optical layer 4 or the second optical layer 5 containing the phosphoric acid compound. With this structure, the adhesion between these optical layer and the reflection layer 3 can be improved. Moreover, in the case when the reflection layer 3 contains metal, such as Ag or the like, its corrosion preventive effect can be improved. Furthermore, the reflection layer 3 may contain a dopant such as Al, Ga or the like. This structure makes it possible to improve the film quality and smoothness when a metal oxide layer is formed by sputtering or the like.

From the viewpoint of allowing at least one of the first optical layer 4 and the second optical layer 5 to give a designing property to the optical film 1, the window material 10, and the like, the layer preferably has a characteristic for absorbing light having a specific wavelength band within a visible light range. A pigment to be dispersed in a resin may be either an organic-based pigment or an inorganic-based pigment; however, an inorganic-based pigment that particularly has high weatherabillity in the pigment itself is preferably used. More specifically, inorganic pigments, such as Zircon Gray (Co, Ni doped $ZrSiO_4$), Praseodymium Yellow (Pr doped $ZrSiO_4$), Chromium Titanium Yellow (Cr, Sb doped $TiO_2$ or Cr, W doped $TiO_2$), Chromium Green ($Cr_2O_3$ or the like), Peacock Blue ($(CoZn)O(AlCr)_2O_3$), Victoria Green ($(Al,Cr)_2O_3$), Prussian Blue ($CoO$-$Al_2O_3$-$SiO_2$), Vanadium Zirconium Blue (V doped $ZrSiO_4$), Chrome Tin Pink (Cr doped $CaO$-$SnO_2$-$SiO_2$), Manganese Pink (Mn doped $Al_2O_3$) and Salmon Pink (Fe doped $ZrSiO_4$ and organic-based pigments, such as azo-based pigments and phthalocyanine-based pigments, are proposed.

(Reflection Layer)

The reflection layer 3 is a wavelength-selective reflection layer of a laminated film in which of light rays made incident-on the incident surface, for example, at an incident angle (θ, φ), a light ray having a specific wavelength band is directionally reflected, while light rays other than the light ray having the specific wavelength band are transmitted. The average layer thickness of the reflection layer 3 is preferably set to 20 μm, more preferably, to 5 μm or less, and most preferably, to 1 μm or less. When the average layer thickness of the reflection layer 3 exceeds 20 μm, a light path in which a transmitted light ray is refracted becomes longer, and a transmission image tends to be viewed in a distorted state. The formation method of the reflection layer may be carried out, for example, by using a sputtering method, a vapor deposition method, a dip coating method, a die-coating method, or the like.

The laminated film has a configuration of at least five layers in which, for example, metal layers, each having a high reflectance in an infrared light region, and high-refractive-index layers, each having a high refractive index relative to the metal layer in a visible light region and functioning as an antireflection layer, are alternately stacked. As the high-refractive-index layers, optical transparent layers or transparent conductive layers may be used.

The metal layers having a high reflectance in an infrared light region are mainly composed of a simple substance, for example, selected from the group consisting of Au, Ag, Cu, Al, Ni, Cr, Ti, Pd, Co, Si, Ta, W, Mo and Ge, or an alloy containing two or more kinds of these simple substances. From the viewpoint of practical use, among these, an Ag-based, Cu-based, Al-based, Si-based or Ge-based material is preferably used. Moreover, in the case of using an alloy as the metal layer, the metal layer is preferably mainly composed of AlCu, AlTi, AlCr, AlCo, AlNdCu, AlMgSi, AgBi, AgNdCu, AgPdCu, AgPdTi, AgCuTi, AgPdCa, AgPdMg, AgPdFe, Ag or SiB. Moreover, in order to suppress corrosion in the metal layer, another material, such as Ti, Nd or the like, is preferably added to the metal layer. In particular, in the case when Ag is used for the material of the metal layer, the above-mentioned material is preferably added thereto.

The optical transparent layer is an optical transparent layer having a high refractive index in the visible light region and serving as an antireflection layer. The optical transparent layer is mainly composed of a high dielectric material, such as, for example, niobium oxide, tantalum oxide, titanium oxide, or the like. The transparent conductive layer is mainly composed of, for example, a ZnO-based oxide, an indium-doped tin oxide, or the like. Additionally, as the ZnO-based oxide, for example, at least one kind of materials selected from the group consisting of zinc oxide (ZnO), gallium (Ga), zinc oxide (AZO) doped with aluminum (Al), zinc oxide (GZO) doped with aluminum (Al) and zinc oxide (GZO) doped with gallium (Ga) may be used.

Moreover, the refractive index of the high-refractive-index layer contained in the laminated film is preferably set in a range from 1.7 or more to 2.6 or less.

More preferably, it is set in a range from 1.8 or more to 2.6 or less, and most preferably, it is set in a range from 1.9 or more to 2.6 or less. With this structure, it is possible to realize an antireflection property in the visible light region by using a thin film in such a degree as not to cause cracks. In this case, the refractive index is taken at a wavelength of 550 nm. The high-refractive-index layer is a layer mainly composed of, for example, a metal oxide. As the metal oxide, for example, at least one kind of materials selected from the group consisting of niobium oxide, zinc oxide, titanium oxide and tantalum oxide may be used, and from the viewpoint of alleviating the stress of the layer and suppressing the occurrence of cracks, in some cases, a metal oxide other than zinc oxide is more preferably used. In particular, at least one kind of materials selected from the group consisting of niobium oxide (for example, niobium pentoxide), tantalum oxide (for example, tantalum pentoxide) and titanium oxide is preferably used. The film thickness of the high-refractive-index layer is preferably set in a range from 10 nm or more to 120 nm or less, more preferably, from 10 nm or more to 100 nm or less, and most preferably, from 10 nm or more to 80 nm or less. In the case when the film thickness is less than 10 nm, the visible light tends to be easily reflected. In contrast, when the film thickness exceeds 120 nm, the transmittance tends to be lowered, and cracks tend to be generated.

Fig. 5 shows one example of the layer structure of the reflection layer 3. In the following description, those layers are referred on demand to as the first layer, the second layer, the third layer, the fourth layer and the fifth layer in succession from the light-releasing surface side of the reflection layer 3. Each of the first, third and fifth layers is a high-refractive-index layer mainly composed of, for example, GAZO, and the film thicknesses of the first layer and the fifth layer are set to virtually the same thickness. A finite difference of the film thicknesses between the first and the fifth layers is preferably set within 10%, more preferably, within 5%, and most preferably, within 3%, relative to the film thickness of either one of the two layers. Moreover, each of the second and fourth layers is a metal layer mainly composed of, for example, AgNdCu, and the film thicknesses thereof are set to virtually the same thickness. A finite difference of the film thicknesses between the second and the fourth layers is preferably set within 10%, more preferably, within 5%, and most preferably, within 3%, relative to the film thickness of either one of the two layers.

The layer structure of the reflection layer 3 is not limited to this, and for example, each of the high-refractive-index layers may be separated into a plurality of layers so that each of them forms a single layer. Figs. 6A to 6F show one example of the layer structure of the reflection layer 3, with the high-refractive-index layer being separated into a plurality of layers. In the example shown in Fig. 6A, each of the third and fifth high-refractive-index layers is separated into two layers mainly composed of ZnO and $Nb_2O_5$. In the example shown in Fig. 6B, the third high-refractive-index layer is separated into three layers mainly composed of GAZO, $Nb_2O_5$ and GAZO, and the fifth high-refractive-index layer is separated into two layers mainly composed of GAZO and $Nb_2O_5$. In the example shown in Fig. 6C, the third high-refractive-index layer is separated into two layers mainly composed of ZnO and $Nb_2O_5$, and the fifth high-refractive-index layer is separated into three layers mainly composed of ZnO, $Nb_2O_5$ and ZnO.

Moreover, in the example shown in Fig. 6D, each of the first, third and fifth high-refractive-index layers is separated into two layers mainly composed of GAZO and $Nb_2O_5$. In the example shown in Fig. 6E, each of the first and fifth high-refractive-index layers is separated into two layers mainly composed of GAZO and $Nb_2O_5$, and the third high-refractive-index layer is separated into three layers mainly composed of GAZO, $Nb_2O_5$ and GAZO. In the example shown in Fig. 6F, the first high-refractive-index layer is separated into two layers mainly composed of GAZO and $Nb_2O_5$, and each of the third and fifth high-refractive-index layers is separated into three layers mainly composed of GAZO, $Nb_2O_5$ and GAZO.

Additionally, the laminated film is not limited to a thin film made of an inorganic material, and may be formed as a thin film made of a polymeric material, or may be formed by stacking layers in which fine particles or the like are dispersed in a polymer. Moreover, in order to prevent degradation by oxidation of lower layer metal during a film-forming process of the optical transparent layer, a thin buffer layer made of Ti or the like having a thickness of about several nms may be formed on the interface of the optical transparent layer to be film-formed. In this case, the buffer layer refers to a layer which suppresses oxidation of a metal layer or the like serving as the lower layer by being oxidized itself at the time of film-forming an upper layer.

(Suppression of Color Tone Change)

In the embodiment of the present invention, by determining an index value indicating a color tone such as a blue tone and a red tone and by forming a laminated film in a manner so as to satisfy the index value, a change in the color tone is suppressed. In this example, as the index value for color tones, a blue index and a red index are determined.

The blue index is an index value for use in determining whether or not transmission light is viewed with a blue tone. The blue index value is calculated through processes in which in a wavelength range from 620 nm to 750 nm, a light-source spectrum is respectively multiplied by a reflectance and a degree of visual sense, and the resulting products are integrated and the value thus obtained is divided by a value obtained by integrating the product of the light-source spectrum and the degree of visual sense.

The blue index value is preferably set to less than 0.152, and more preferably, to less than 0.111. This is because in the case when the blue index value is from 0 or more to less than 0.111, a blue tone hardly causes any adverse effect to feeling, and in the case when it is from 0.111 or more to less than 0.152, the blue tone is in such a degree as not to cause any adverse effect to feeling although it depends on external brightness. In contrast, in the case when the blue index value is from 0.152 or more to less than 0.2, transmission light tends to be viewed with a slightly blue tone when seen in a specific angle direction, while in the case when it is 0.2 or more, the transmission light tends to be viewed with a deep blue tone when seen in a specific angle direction.

The red index is an index value for use in determining whether or not transmission light is viewed with a red tone. In the same manner as in the blue index value, the red index value is calculated through processes in which in a wavelength range from 620 nm to 750 nm, a light-source spectrum is respectively multiplied by a reflectance and a degree of visual sense, and the resulting products are integrated and the value thus obtained is divided by a value obtained by integrating the product of the light-source spectrum and the degree of visual sense.

The red index value is preferably set to less than 0.258, and more preferably, to less than 0.175. This is because in the case when the red index value is from 0 or more to less than 0.175, a red tone hardly causes any adverse effect to feeling, and in the case when it is from 0.175 or more to less than 0.258, the red tone is in such a degree as not to cause any adverse effect to feeling although it depends on external brightness. In contrast, in the case when the red index value is from 0.258 or more to less than 0.3, transmission light tends to be viewed with a slightly red tone when seen in a specific angle, while in the case when it is 0.3 or more, the transmission light tends to be viewed with a deep red tone when seen in a specific angle direction.

(Function of Optical Film)

Fig. 7A and Fig. 7B are cross-sectional views for use in explaining one example of functions of an optical film. In this case, for exa0mple, explanations will be given by exemplifying the shape of the structural elements, each having a prism shape with an inclination angle of 45°. As shown in Fig. 7A, of solar light rays made incident on the optical film 1, one portion of near infrared rays $L_1$ is directionally reflected in an upward sky direction in the same degree as in the incident direction, while visible light $L_2$ is allowed to transmit through the optical film 1.

Moreover, as shown in Fig. 7B, light rays, made incident on the optical film 1, and reflected by the reflection layer surface of the reflection layer 3, are separated into a component $L_A$ to be reflected toward the sky and a component $L_B$ not to be reflected toward the sky, at a ratio depending on incident angles. Moreover, the component $L_B$ not to be reflected toward the sky is totally reflected by the interface between the second optical layer 4 and air, and then finally reflected in a direction different from the incident direction.

Supposing that the light incident angle is $\delta$, the refractive index of the first optical layer 4 is n and the reflectance of the reflection layer 3 is R, the ratio x of component $L_A$ to be reflected toward the sky relative to the entire incident light components is represented by the following formula (1).

$$x=(\sin(45-\delta')+\cos(45-\delta')/\tan(45+\delta'))/(\sin(45-\delta')+\cos(45-\delta'))\times R^2 \quad \cdots (1)$$

In this case, however, $\sigma' = \sin^{-1}(\sin \sigma/n)$ is satisfied.

In the case when the ratio of the component $L_B$ that is not reflected toward the sky is increased, the ratio of the incident light to be reflected toward the sky is reduced. In order to increase the ratio of the reflection toward the sky, the shape of the reflection layer 3 is changed, that is, it is effective to devise the shape of the structural element 4c of the first optical layer 4. For example, in order to increase the ratio of the reflection toward the sky, the shape of the structural element 4c is preferably formed into a lenticular shape shown in Fig. 3C or an asymmetric shape shown in Fig. 4. By providing this shape, even when the light is not reflected in the completely same direction as the direction of the incident light, it is possible to increase the ratio of incident light from an upward direction of the building-use window material of being reflected in the upward direction can be increased. Two shapes shown in Fig. 3C and Fig. 4 make it possible to reduce the number of reflections of the incident light by the reflection layer 3 to only one time, as shown in Fig. 8A and Fig. 8B; therefore, in comparison with a shape shown in Fig. 7 in which reflections of the incident light need to be carried out twice (or three times or more), it is possible to increase the final reflection components. For example, in the case when the reflections of two times are utilized, supposing that the reflectance relative to a certain wavelength of the reflection layer 3 is 80%, the upward sky reflectance is set to 64% theoretically; however, when the reflection of only once is required, the upward sky reflectance becomes 80%.

Fig. 9 shows a relationship between the ridge line $l_3$ of the pillar-shaped structural element 4c and the incident light L and the reflected light $L_1$. Of the incident light rays L onto the incident-surface S1 at an incident angle ($\theta$, $\varphi$), the optical film 1 selectively reflects a light ray $L_1$ having a specific wavelength band directionally in a direction of ($\theta$o, - $\varphi$), that is, in a direction of (0°< $\theta$o < 90°), while light rays $L_2$ other than that having the specific wavelength band are preferably transmitted therethrough. By satisfying this relationship, it is possible to reflect the light ray having the specific wavelength band in the upward sky direction. In this case, $\theta$ represents an angle made by the perpendicular line $l_1$ relative to the incident surface S1 and the incident light L or the reflected light $L_1$. On the other hand, $\varphi$ represents an angle formed by a straight line $l_2$ that is orthogonal to the ridge line $l_3$ of the pillar-shaped structural element 4c within the incident surface S1 and a component of the incident light L or the reflected light $L_1$ projected onto the incident surface S1. Additionally, an angle $\theta$ obtained by rotating clockwise based upon the perpendicular line $l_1$ is defined as "+ $\theta$", and an angle $\theta$ obtained by rotating counter-clockwise based upon the perpendicular line $l_1$ is defined as "- $\theta$". An angle $\varphi$ obtained by rotating clockwise based upon the straight line $l_2$ is defined as "+ $\varphi$", and an angle $\varphi$ obtained by rotating counter-clockwise based thereupon is defined as "- $\varphi$".

[Manufacturing Device of Optical Film]

Fig. 10 is a schematic view showing one structural example of a manufacturing device for manufacturing the optical film relating to the first embodiment of the present invention. As shown in Fig. 10, this manufacturing device is provided with laminate rolls 41 and 42, guide rolls 43, a coating device 45 and an irradiation device 46.

The laminate rolls 41 and 42 are designed so as to nip the optical layer 9 with a reflection layer and a second substrate 5a. In this case, the optical layer 9 with the reflection layer has a structure in which the reflection layer 3 is film-formed on one of the main surfaces of the first optical layer 4. Additionally, as the optical layer 9 with the reflection layer, a first substrate 4a may be formed on the other main surface on the side opposite to the surface on which the reflection layer 3 of the first optical layer 4 is formed. In this example, the reflection layer 3 is film-formed on the one of the main surfaces of the first optical layer 4, and the first substrate 4a is formed on the other main surface. The guide rolls 43 are disposed on a transporting path inside the manufacturing device so as to transport a band-shaped optical film 1. The materials for the laminate rolls 41 and 42 and the guide rolls 43 are not particularly limited, and in accordance with desired roll characteristics, metal such as stainless steel, rubber, silicone and the like are selected on demand and may be used.

As the coating device 45, for example, a device provided with a coating means such as a coater or the like may be used. As the coater, for example, by taking into consideration physical properties or the like of the resin composition to be coated, a desired coater, such as a gravure coater, a wire bar coater or a die coater, may be selected and used on demand. The irradiation device 46 is an irradiation device that applies an ionizing ray, such as, for example, an electron beam, an ultraviolet ray, a visible ray or a gamma ray. In this example, as the irradiation device 46, a UV lamp for applying an ultraviolet ray is illustrated.

[Manufacturing Method for Optical Film]

Referring to Figs. 10 to 13, the following description will discuss one example of a method for manufacturing an optical film relating to the first embodiment of the present invention. Additionally, one portion or the entire portion of the manufacturing process shown below is preferably carried out by a roll-to-roll process as shown in Fig. 10 from the viewpoint of productivity. However, a manufacturing process for metal molds is omitted.

First, as shown in Fig. 11A, a metal mold having the same concave-convex shape as the shape of the structural element 4c or a metal mold (replica) having an inverted shape to the metal mold.is formed by using, for example, a bite machining process or a laser machining process. Next, as shown in Fig. 11B, by using, for example, a melt extrusion method, a transferring method, or the like, the concave-convex shape of the metal mold is transferred onto a film-shaped resin material. As the transferring method, a method in which an energy-ray setting-type resin is poured into a mold and cured by applying an energy ray thereto, a method in which heat and pressure are applied to a resin so as to transfer the shape, or a method (laminate transferring method) in which a resin film is supplied from a roll and the shape of a mold is transferred thereon while applying heat thereto is proposed. Thus, as shown in Fig. 11C, a first optical layer 4 having structural elements 4c on one of the main surfaces is formed.

Moreover, as shown in Fig. 11C, the first optical layer 4 may be formed on the first substrate 4a. In this case, for example, a method is used in which a film-shaped first substrate 4a is supplied from a roll, and after an energy-ray setting-type resin has been applied onto the substrate, a mold is pressed thereon so as to transfer the shape of the mold, while the resin is cured by applying an energy ray thereto. Additionally, the resin preferably further contains a cross-linking agent. Thus, it becomes possible to provide heat resistance to the resin without causing a great change in the storage elastic modulus at room temperature.

Next, as shown in Fig. 12A, the reflection layer 3 is film-formed on one of the main surfaces of the first optical layer 4. As the film-forming method of the reflection layer 3, for example, a sputtering method, a vapor deposition method, a CVD (Chemical Vapor Deposition) method, a dip coating method, a die coating method, a wet coating method, a spray coating method, and the like are proposed, and from these film-forming methods, an appropriate method is selected on demand in accordance with the shape or the like of the structural element 4c. Next, as shown in Fig. 12B, an annealing process 31 is applied to the reflection layer 3, if necessary. The temperature of the annealing process is, for example, set in a range from 100°C or more to 250°C or less.

Next, as shown in Fig. 12C, a resin 22 in an uncured state is applied onto the reflection layer 3. As the resin 22, for example, an energy-ray setting-type resin, a thermosetting resin, or the like may be used. As the energy-ray setting-type resin, an ultraviolet-ray setting resin is preferably used. Next, as shown in Fig. 13A, by covering the second substrate 5a on the resin 22, a laminated body is formed. Then, as shown in Fig. 13B, the resin 22 is cured by using, for example, an energy ray 32 or a heating process 32, while applying pressure 33 onto the laminated body.

As the energy ray, for example, an electron beam, an ultraviolet ray, a visible light ray, a gamma ray, an electron beam, or the like may be used, and from the viewpoint of productivity, the ultraviolet ray is preferably used. The integrated irradiation amount is preferably selected on demand by taking into consideration the curing characteristic of the resin, yellowing suppression of the resin and the substrate, or the like. The pressure to be applied to the laminated body is preferably set in a range from 0.01 MPa or more to 1 MPa or less. In the case of less than 0.01 MPa, a problem is raised in a film running property. On the other hand, in the case when 1 MPa is exceeded, it becomes necessary to use metal rolls as the nip rolls, and this is undesirable because uneven pressure tends to be generated. As described above, the second optical layer 5 is formed on the reflection layer 3 as shown in Fig. 13C, and the optical film 1 is obtained.

The following description will discuss a formation method of the optical film 1 by the use of the manufacturing device shown in Fig. 10 more specifically. First, from a substrate supply roll, not shown, the second substrate 5a is sent, and the second substrate 5a thus sent passes below the coating device 45. Next, onto the second substrate 5a passing below the coating device 45, an ionizing ray setting resin 44 is applied by the coating device 45. Next, the second substrate 5a to which the ionizing ray setting resin 44 has been applied is transported toward the laminate rolls. On the other hand, the optical layer 9 with a reflection layer attached thereto is sent from an optical layer supply roll, not shown, and transported toward the laminate rolls 41 and 42.

Next, the second substrate 5a thus transported and the optical layer 9 with the reflection layer are sandwiched by the laminate rolls 41 and 42 in a manner so as not to allow bubbles to be mingled between the second substrate 5a thus transported and the optical layer 9 with the reflection layer, so that the optical layer 9 with the reflection layer is laminated onto the second substrate 5a. Next, the second substrate 5a laminated with the optical layer 9 with the reflection layer is transported along the outer circumferential face of the laminate roll 41, with an ionizing ray being applied onto the ionizing ray setting resin 44 from the second substrate 5a side by the irradiation device 46 so that the ionizing ray setting resin 44 is cured. Thus, the second substrate 5a and the optical layer 9 with the reflection layer are bonded to each other, with the ionizing ray setting resin 44 being interposed therebetween, so that a target elongated optical film 1 is produced. Next, the band-shaped optical film 1 thus produced is wound around a winding roll, not shown. Thus, a material roll formed by winding the band-shaped optical film 1 therearound is obtained.

The cured first optical layer 4 is preferably set so as to have a storage elastic modulus of 3 x $10^7$ Pa or more at (t - 20) °C supposing that a process temperature at the time of the above-mentioned second optical layer formation is t °C. In this case, for example, the process temperature t refers to a heating temperature of the laminate roll 41. The first optical layer 4 is formed, for example, on the first substrate 4a, and transported along the laminate roll 41 with the first substrate 4a interposed therebetween; therefore, it has been known from experience that the temperature to be actually applied onto the first optical layer 4 is about (t - 20) °C. For this reason, by setting the storage elastic modulus of the first optical layer 4 at 3 x $10^7$ Pa or more at (t - 20) °C, it is possible to prevent the concave-convex shape on the interface inside the optical layer from being deformed by heat or heat and pressure.

Moreover, in the first optical layer 4, its storage elastic modulus at 25°C is preferably set to 3 x $10^9$ Pa or less. Thus, it is possible to impart flexibility at room temperature to the optical film. Therefore, the optical film 1 can be manufactured by using a manufacturing process such as a roll-to-roll process, or the like.

Additionally, the process temperature t is preferably set to 200°C or less when the heat resistance of a resin for use in the optical layer or the substrate is taken into consideration. However, by using a resin having a high heat resistance, the process temperature t may be set to 200°C or more.

[Settings of Film Thickness of Reflection Layer]

As described earlier, the blue index value and the red index value indicating blue and red color tones are varied depending on the film thickness of each layer of the laminated film of the reflection layer 3. Therefore, in the embodiment of the present invention, by using the blue index value and the red index value as parameters, the film thickness of the laminated film is set so as to satisfy the conditions of these parameters.

Moreover, in this example, in addition to the blue index and the red index, a visible light-ray transmittance and a shading coefficient are used as parameters so as to set the film thickness of the laminated film. The visible light-ray transmittance is a parameter indicating transmittance of light, and preferably set to 70% or more. The shading coefficient is a parameter indicating an efficiency for shading heat, and preferably set to 0.6 or less. The visible light-ray transmittance and the shading coefficient are also varied in accordance with the film thickness of the laminated film in the same manner as in the blue index and the red index.

The film thickness of each of layers in the laminated film, which satisfies the conditions of the respective parameters, can be calculated, for example, by simulation. For example, by finding the distribution of each of the parameters by simulation, the film thickness that satisfies conditions of the respective parameters can be determined.

Upon carrying out a simulation, a ratio $\alpha$ and a ratio $\beta$ that are determined in accordance with the film thickness of each of the layers of the laminated film of the reflection layer 3 are utilized. The ratio $\alpha$ indicates a ratio of the optical film thickness of the entire metal layer relative to the optical film thickness of the entire high-refractive-index layer. The ratio $\beta$ indicates a ratio of an optical film thickness of the third high-refractive-index layer relative to an optical film thickness of the first high-refractive-index layer, when viewed on either one of the first optical layer side and the second optical layer side. Additionally, the optical film thickness indicates a film thickness obtained by multiplying the geometric film thickness by a refractive index.

In this case, the following explanation will be given by exemplifying a case in which the film thicknesses of the first and fifth high-refractive-index layers are virtually the same and the film thicknesses of the second and fourth metal layers are virtually the same when viewed on either one of the first optical layer side and the second optical layer side. In this case, the high-refractive-index layer is supposed to have a high refractive index relative to the metal layer. Supposing that the optical film thickness of the first and fifth high-refractive-index layers is X1, that the optical film thickness of the third high-refractive-index layer is X2, and that the optical film thickness of the second and fourth metal layers is Y, the total film thickness (geometric film thickness) L in the optical film thickness, the ratio $\alpha$ and the ratio $\beta$ are calculated by the following formulas (2) to (4).

$$L = X1 + Y + X2 + Y + X1 \quad \cdots (2)$$

$$\alpha = 2Y/(2X1 + X2) \quad \cdots (3)$$

$$\beta = X2/X1 \quad \cdots (4)$$

By finding the total film thickness L, the ratio $\alpha$ and the ratio $\beta$, based upon the above-mentioned formulas (2) to (4), the film thicknesses of the respective layers in the laminated film of the reflection layer 3 that satisfy the conditions of the respective parameters can be set.

In the embodiment of the present invention, as shown in Fig. 14, a perpendicular direction relative to the inclination surface of the structural element 4c formed on the first optical layer 4 is defined as a thickness direction of the laminated film of the reflection layer 3. Supposing that the angle of the inclination surface of the structural element 4c relative to the main surface of the first optical layer 4 is $\theta$, between a film thickness A in a perpendicular direction relative to the main surface of the first optical layer 4 and a film thickness B in a perpendicular direction relative to the inclination surface of the structural element 4c, a relationship "A = B/cos$\theta$" is satisfied. For example, the angle $\theta$ of the inclination surface of the structural element 4c is 54°, "A = N 1.7B" is satisfied.

Referring to a flowchart shown in Fig. 15, the following description will discuss one example of a flow of processes for determining film thicknesses that satisfy the conditions of respective parameters. First, in order to carry out a simulation in the case when the film thicknesses of the respective layers in the laminated film of the reflection layer 3, conditions shown in Step S1 to S5 are determined. In step S1, the total film thickness L of the laminated film is determined. In step S2, the inclination angle of a shape formed in the laminated film is determined. In step S3, the film thickness distributions of the respective layers of the laminated film are determined. In step S4, refractive indexes of the first optical layer (shaping layer) and the second optical layer (enclosure buried layer) are determined. In step S5, a ratio $\alpha$ and a ratio $\beta$ are inputted.

In step S6, a simulation is carried out based upon the conditions determined in steps S1 to S5, respective parameter values at the determined ratio $\alpha$ and ratio $\beta$ are calculated. In step S7, visible light-ray transmittances at the determined ratio $\alpha$ and ratio $\beta$ are calculated. In step S8, shading coefficients at the determined ratio $\alpha$ and ratio $\beta$ are calculated. In step S9, a blue index at the determined ratio $\alpha$ and ratio P is calculated. In step S10, a red index at the determined ratio $\alpha$ and ratio $\beta$ is calculated.

In step S11, by changing the ratio $\alpha$ and ratio $\beta$, the film thicknesses of the respective layers are changed, and the simulations of step S6 to step S10 are repeatedly carried out so that the respective parameter values are calculated.

In step S12, the respective parameter values calculated in steps S7 to S10 are mapped on an $\alpha$-$\beta$ plane, and as shown in Figs. 16A to 16D, an $\alpha$-$\beta$ correlation diagram indicating the distributions of the respective parameters relative to the ratio $\alpha$ and ratio $\beta$ is formed. Fig. 16A shows a distribution of visible light-ray transmittances relative to the ratio $\alpha$ and ratio $\beta$. Fig. 16B shows a distribution of shading coefficients relative to the ratio $\alpha$ and ratio $\beta$. Fig. 16C shows a distribution of the blue indexes relative to the ratio $\alpha$ and ratio $\beta$. Fig. 16D shows a distribution of the red indexes relative to the ratio $\alpha$ and ratio $\beta$.

Next, in step S 13, based upon the $\alpha$-$\beta$ correlation diagram relative to the respective parameters shown in Figs. 16A to 16D, regions that satisfy the conditions of the respective parameters are extracted. In Fig. 16B, a region indicated by half-tone dot meshing indicates a region that does not satisfy the conditions of the shading coefficient. In Fig. 16C, a region indicated by half-tone dot meshing indicates a region that does not satisfy the conditions of the blue index. In Fig. 16C, a region indicated by half-tone dot meshing indicates a region that does not satisfy the conditions of the red index. Additionally, in these simulations, the conditions of the respective parameters are determined as shown below.

Blue index: less than 0.152, Red index: less than 0.258, Shading coefficient: 0.6 or less, Visible light-ray transmittance: 70% or more.

By overlapping the $\alpha$-$\beta$ correlation diagrams shown in Figs. 16A to 16D with one after another, a region that satisfies the conditions of the respective parameters is extracted. Fig. 16E shows a state in which the $\alpha$-$\beta$ correlation diagrams shown in Figs. 16A to 16D are overlapped with one after another. In Fig. 16E, a region other than the regions indicated by half-tone dot meshing is extracted. This region corresponds to a region that satisfies all the conditions of the respective parameters.

That is, the region that satisfies the conditions of the respective parameters is a region surrounded by border lines between regions that satisfy the conditions of the respective parameters and regions that do not satisfy the conditions of the respective parameters.

In step S14, these border lines are represented by mathematical formulas. For example, a specific value on a border line is extracted, and an approximation line of the border line between regions that satisfy the conditions of the respective parameters and regions that do not satisfy those conditions thereof is obtained based upon the value so that the border line is represented by a mathematical formula. Thus, the region that satisfies the conditions of the respective parameters is determined.

The following description will specifically explain the region that satisfies the conditions of the respective parameters relative to the ratio α and ratio β. First, with respect to a case in which the visible light-ray transmittance, the blue index and the red index are used as parameters, an explanation will be given for each of the total film thicknesses L of the reflection layer 3.

(L = 80 nm)

Fig. 17A is an α-β correlation diagram based upon the conditions of the visible light-ray transmittance, the blue index and the red index, in the case of the total film thickness L of 80 nm. In Fig. 17A, each of points "●" and "▲" represents a predetermined point on a border line between a region that satisfies the conditions of the blue index and a region that does not satisfy the conditions thereof. Moreover, a point "■" represents a predetermined point on a border line between a region that satisfies the conditions of the red index and a region that does not satisfy the conditions thereof. In Fig. 17A, since a predetermined point (α, β) on a border line between a region that satisfies the conditions of the visible light-ray transmittance and a region that does not satisfy the conditions thereof is located outside the region indicated by half-tone dot meshing, the illustration in the Fig. is omitted. Additionally in Fig. 17B to Fig. 20 to be used in the following explanations, the same notation method is used.

Based upon the points on the border line of the respective parameters plotted on the α-β correlation diagram, approximation curves of the border line based upon the respective parameters as indicated by the following formulas (5) to (7) are obtained.

$$\alpha=-0.0004\beta^2+0.0053\beta+0.0065 \quad \cdots(5)$$

$$\alpha=-1\times10^{-5}\beta^2+0.0007\beta+0.0066 \quad \cdots(6)$$

$$\alpha=-1\times10^{-5}\beta^2+0.0005\beta+0.0119 \quad \cdots(7)$$

In this case, a region, which is indicated by half-tone dot meshing (hereinafter, referred to as "first region R1") surrounded by the approximation curves indicated by formulas (5) to (7) and a straight line indicated by the following formula (8), corresponds to a region satisfying the conditions of the respective parameters. That is, by allowing the ratio α and ratio β to be included in the first region R1, the conditions of the respective parameters can be satisfied. In this case, it is supposed that the first region R1 includes the above-mentioned approximation lines and the straight line. Formula (8) is determined so as to prevent the film thickness of the metal layer from becoming 5 nm or less. This is because the film thickness of the metal layer of 5 nm or less causes physical values of the material for use in the metal layer to change, resulting in an increased possibility of deviation from the simulation value.

$$\alpha=0.012114 \quad \cdots(8)$$

In the following description, of the plane of L = 80 nm, a portion defined by the first region R1 is referred to as "first plane Sp1" on demand.

(L = 90 nm)

Fig. 17B is an α-β correlation diagram based upon the conditions of the visible light-ray transmittance, the blue index and the red index, in the case of the total film thickness of 90 nm. In Fig. 17B, since a predetermined point (α, β) on a border line between a region that satisfies the conditions of the visible light-ray transmittance and a region that does not satisfy the conditions thereof is located outside the region indicated by half-tone dot meshing, the illustration in the Fig. is omitted. Based upon the points on the border line of the respective parameters plotted on the α-β correlation diagram, approximation curves of the border line based upon the respective parameters as indicated by the following formulas (9) to (11) are obtained.

$$\alpha=-0.0002\beta^2+0.0039\beta+0.0087 \quad \cdots(9)$$

$$\alpha=-3\times10^{-5}\beta^2+0.0014\beta+0.0038 \quad \cdots(10)$$

$$\alpha=-2\times10^{-5}\beta^2+0.0006\beta+0.0112 \quad \cdots(11)$$

In this case, a region, which is indicated by half-tone dot meshing (hereinafter, referred to as "second region R2") surrounded by the approximation curves indicated by formulas (9) to (11) and a straight line indicated by the following formula (12), corresponds to a region satisfying the conditions of the respective parameters. That is, by allowing the ratio $\alpha$ and ratio $\beta$ to be included in the second region R2, the conditions of the respective parameters can be satisfied.

In this case, it is supposed that the second region R2 includes the above-mentioned approximation lines and the straight line. Formula (12) is determined so as to prevent the film thickness of the metal layer from becoming 5 nm or less.

$$\alpha=0.010589 \quad \cdots(12)$$

In the following description, of the plane of L = 90 nm, a portion defined by the second region R2 is referred to as "second plane Sp2" on demand.

(L = 100 nm)

Fig. 18A is an $\alpha$-$\beta$ correlation diagram based upon the conditions of the visible light-ray transmittance, the blue index and the red index, in the case of the total film thickness of 100 nm. In Fig. 18A, since a predetermined point ($\alpha$, $\beta$) on a border line between a region that satisfies the conditions of the visible light-ray transmittance and a region that does not satisfy the conditions thereof is located outside the region indicated by half-tone dot meshing, the illustration in the Fig. is omitted. Based upon the points on the border line of the respective parameters plotted on the $\alpha$-$\beta$ correlation diagram, approximation curves of the border line based upon the respective parameters as indicated by the following formulas (13) to (15) are obtained.

$$\alpha=-0.0002\beta^2+0.0055\beta+0.0057 \quad \cdots(13)$$

$$\alpha=-0.0002\beta^2+0.0045\beta-0.0067 \quad \cdots(14)$$

$$\alpha=-4\times10^{-5}\beta^2+0.001\beta+0.0099 \quad \cdots(15)$$

In this case, a region, which is indicated by half-tone dot meshing (hereinafter, referred to as "third region R3") surrounded by the approximation curves indicated by formulas (13) to (15) and a straight line indicated by the following formula (16), corresponds to a region satisfying the conditions of the respective parameters. That is, by allowing the ratio $\alpha$ and ratio $\alpha$-$\beta$ to be included in the third region R3, the conditions of the respective parameters can be satisfied. In this case, it is supposed that the third region R3 includes the above-mentioned approximation lines and the straight line. Formula (16) is determined so as to prevent the film thickness of the metal layer from becoming 5 nm or less.

$$\alpha=0.009403 \quad \cdots(16)$$

In the following description, of the plane of L = 100 nm, a portion defined by the third region R3 is referred to as "third plane Sp3" on demand.

(L = 120 nm)

Fig. 18B is an $\alpha$-$\beta$ correlation diagram based upon the conditions of the visible light-ray transmittance, the blue index and the red index, in the case of the total film thickness of 120 nm. In Fig. 18B, since a predetermined point ($\alpha$, $\beta$) on a border line between a region that satisfies the conditions of the visible light-ray transmittance and a region that does not satisfy the conditions thereof is located outside the region indicated by half-tone dot meshing, the illustration in the Fig. is omitted. Based upon the points on the border line of the respective parameters plotted on the $\alpha$-$\beta$ correlation diagram, approximation curves of the border line based upon the respective parameters as indicated by the following formulas (17) to (19) are obtained.

$$\alpha=-0.0003\beta^2+0.0074\beta+0.0033 \quad \cdots(17)$$

$$\alpha=-0.0014\beta^2+0.0191\beta-0.0422 \quad \cdots(18)$$

$$\alpha=-9\times10^{-5}\beta^2+0.0015\beta+0.0084 \quad \cdots(19)$$

In this case, a region, which is indicated by half-tone dot meshing (hereinafter, referred to as "fourth region R4") surrounded by the approximation curves indicated by formulas (17) to (19) and a straight line indicated by the following formula (20), corresponds to a region satisfying the conditions of the respective parameters. That is, by allowing the ratio $\alpha$ and ratio $\beta$ to be included in the fourth region R4, the conditions of the respective parameters can be satisfied. In this case, it is supposed that the fourth region R4 includes the above-mentioned approximation lines and the straight line. Formula (20) is determined so as to prevent the film thickness of the metal layer from becoming 5 nm or less.

$$\alpha=0.007709 \quad \cdots(20)$$

In the following description, of the plane of L = 120 nm, a portion defined by the fourth region R4 is referred to as "fourth plane Sp4" on demand.

(L = 140 nm)

Fig. 19A is an $\alpha$-$\beta$ correlation diagram based upon the conditions of the visible light-ray transmittance, the blue index and the red index, in the case of the total film thickness of 140 nm. Additionally, in Fig. 19A, since a predetermined point ($\alpha$, $\beta$) on a border line between a region that satisfies the conditions of the visible light-ray transmittance and a region that does not satisfy the conditions thereof is located outside the region indicated by half-tone dot meshing, the illustration in the Fig. is omitted. Based upon the points on the border line of the respective parameters plotted on the $\alpha$-$\beta$ correlation diagram, approximation curves of the border line based upon the respective parameters as indicated by the following formulas (21) to (23) are obtained.

$$\alpha=-0.0014\beta^2+0.0136\beta-0.0027 \quad \cdots(21)$$

$$\beta=10132\alpha^2-241.39\alpha+4.747 \quad \cdots(22)$$

$$\alpha=-0.0001\beta^2+0.002\beta+0.0074 \quad \cdots(23)$$

In this case, a region, which is indicated by half-tone dot meshing (hereinafter, referred to as "fifth region R5") surrounded by the approximation curves indicated by formulas (21) to (23) and a straight line indicated by the following formula (24), corresponds to a region satisfying the conditions of the respective parameters. That is, by allowing the ratio α and ratio β to be included in the fifth region R5, the conditions of the respective parameters can be satisfied. In this case, it is supposed that the fifth region R5 includes the above-mentioned approximation lines and the straight line. Formula (24) is determined so as to prevent the film thickness of the metal layer from becoming 5 nm or less.

$$\alpha=0.006523 \quad \cdots(24)$$

In the following description, of the plane of L = 140 nm, a portion defined by the fifth region R5 is referred to as "fifth plane Sp5" on demand.

(L = 160 nm)

Fig. 19B is an α-β correlation diagram based upon the conditions of the visible light-ray transmittance, the blue index and the red index, in the case of the total film thickness of 160 nm. Additionally, in Fig. 19B, since a predetermined point (α, β) on a border line between a region that satisfies the conditions of the visible light-ray transmittance and a region that does not satisfy the conditions thereof is located outside the region indicated by half-tone dot meshing, the illustration in the Fig. is omitted. Based upon the points on the border line of the respective parameters plotted on the α-β correlation diagram, approximation curves of the border line based upon the respective parameters as indicated by the following formulas (25) to (28) are obtained.

$$\alpha=-0.005\beta^2+0.0273\beta-0.0145 \quad \cdots(25)$$

$$\alpha=0.0043\beta^2-0.0332\beta+0.07 \quad \cdots(26)$$

$$\beta=2.875 \quad \cdots(27)$$

$$\alpha=-0.0001\beta^2+0.0025\beta+0.0062 \quad \cdots(28)$$

In this case, a region, which is indicated by half-tone dot meshing (hereinafter, referred to as "sixth region R6") surrounded by the approximation curves indicated by formulas (25) to (28) and a straight line indicated by the following formula (29), corresponds to a region satisfying the conditions of the respective parameters. That is, by allowing the ratio α and ratio β to be included in the sixth region R6, the conditions of the respective parameters can be satisfied. In this case, it is supposed that the sixth region R6 includes the above-mentioned approximation lines and the straight line. Formula (29) is determined so as to prevent the film thickness of the metal layer from becoming 5 nm or less.

$$\alpha=0.005676 \quad \cdots(29)$$

In the following description, of the plane of L = 160 nm, a portion defined by the sixth region R6 is referred to as "sixth plane Sp6" on demand.

(L = 180 nm)

Fig. 20 is an α-β correlation diagram based upon the conditions of the visible light-ray transmittance, the blue index and the red index, in the case of the total film thickness of 180 nm. Additionally, in Fig. 20, since a predetermined point (α, β) on a border line between a region that satisfies the conditions of the visible light-ray transmittance and a region that does not satisfy the conditions thereof is located outside the region indicated by half-tone dot meshing, the illustration in the Fig. is omitted. Based upon the points on the border line of the respective parameters plotted on the α-β correlation diagram, approximation curves of the border line based upon the respective parameters as indicated by the following formulas (30) to (32) are obtained.

$$\alpha=-0.0103\beta^2+0.047\beta-0.0322 \quad \cdots(30)$$

$$\alpha=0.0093\beta^2-0.0677\beta+0.1212 \quad \cdots(31)$$

$$\alpha=-0.0003\beta^2+0.0036\beta+0.0046 \quad \cdots(32)$$

In this case, a region, which is indicated by half-tone dot meshing (hereinafter, referred to as "seventh region R7") surrounded by the approximation curves indicated by formulas (30) to (32) and a straight line indicated by the following formula (33), corresponds to a region satisfying the conditions of the respective parameters. That is, by allowing the ratio $\alpha$ and ratio $\beta$ to be included in the seventh region R7, the conditions of the respective parameters can be satisfied. In this case, it is supposed that the seventh region R7 includes the above-mentioned approximation lines and the straight line. Formula (33) is determined so as to prevent the film thickness of the metal layer from becoming 5 nm or less.

$$\alpha=0.00498 \quad \cdots(33)$$

In the following description, of the plane of L = 180 nm, a portion defined by the seventh region R7 is referred to as "seventh plane Sp7" on demand.

With respect to a case in which in addition to the above-mentioned visible light-ray transmittance, blue index and red index, a shading coefficient is also used as parameters, an explanation will be given for each of the total film thicknesses L of the reflection layer 3.

(L = 80 nm)

Fig. 21A is an $\alpha$-$\beta$ correlation diagram based upon the conditions of the visible light-ray transmittance, the blue index, the red index and the shading coefficient, in the case of the total film thickness L of 80 nm. In Fig. 21A, each of points "X" represents a predetermined point on a border line between a region that satisfies the conditions of the shading coefficient and a region that does not satisfy the conditions thereof. In Fig. 21A, since a predetermined point ($\alpha$, $\beta$) on a border line between a region that satisfies the conditions of the visible light-ray transmittance and a region that does not satisfy the conditions thereof is located outside the region indicated by half-tone dot meshing, the illustration in the Fig. is omitted. Additionally in Fig. 21B to Fig. 24 to be used in the following explanations, the same notation method is used.

In addition to the approximation curves of the border line indicated by the aforementioned formulas (5) to (7), based upon the points on the border line of the shading coefficient plotted on the $\alpha$-$\beta$ correlation diagram, an approximation curve of the border line indicated by the following formula (34) is obtained.

$$\alpha=-6\times10^{-6}\beta^2+0.0002\beta+0.0141 \quad \cdots(34)$$

In this case, a region, which is indicated by half-tone dot meshing (hereinafter, referred to as "first region R11") surrounded by the approximation curves indicated by the formulas (6), (7) and (34), corresponds to a region satisfying the conditions of all the parameters. That is, by allowing the ratio $\alpha$ and ratio $\beta$ to be included in the first region R11, the conditions of the respective parameters can be satisfied. In this case, it is supposed that the first region R11 includes the above-mentioned approximation curves. Additionally, of the plane of L = 80 nm, a portion defined by the first region R11 is referred to as "first plane Sp11" on demand.

(L = 90 nm)

Fig. 21B is an $\alpha$-$\beta$ correlation diagram based upon the conditions of the visible light-ray transmittance, the blue index, the red index and the shading coefficient, in the case of the total film thickness L of 90 nm. In Fig. 21B, since a predetermined point ($\alpha$, $\beta$) on a border line between a region that satisfies the conditions of the visible light-ray transmittance and a region that does not satisfy the conditions thereof is located outside the region indicated by half-tone dot meshing, the illustration in the Fig. is omitted. Based upon the points on the border line of the shading coefficient plotted on the α-β correlation diagram in addition to the approximation curves of the border line indicated by the aforementioned formulas (9) to (11), an approximation curve of the border line indicated by the following formula (35) is obtained.

$$\alpha=-1\times10^{-5}\beta^2+0.0002\beta+0.0125 \quad \cdots(35)$$

In this case, a region, which is indicated by half-tone dot meshing (hereinafter, referred to as "second region R12") surrounded by the approximation curves indicated by the formulas (10), (11) and (35), corresponds to a region satisfying the conditions of all the parameters. That is, by allowing the ratio α and ratio β to be included in the second region R12, the conditions of the respective parameters can be satisfied. In this case, it is supposed that the second region R12 includes the above mentioned approximation curves. Additionally, of the plane of L = 90 nm, a portion defined by the second region R12 is referred to as "second plane Sp12" on demand.

(L = 100 nm)

Fig. 22A is an α-β correlation diagram based upon the conditions of the visible light-ray transmittance, the blue index, the red index and the shading coefficient, in the case of the total film thickness L of 100 nm. In Fig. 22A, since a predetermined point (α, β) on a border line between a region that satisfies the conditions of the visible light-ray transmittance and a region that does not satisfy the conditions thereof is located outside the region indicated by half-tone dot meshing, the illustration in the Fig. is omitted. Based upon the points on the border line of the shading coefficient plotted on the α-β correlation diagram in addition to the approximation curves of the border line indicated by the aforementioned formulas (13) to (15), an approximation curve of the border line indicated by the following formula (36) is obtained.

$$\alpha=-3\times10^{-5}\beta^2+0.0004\beta+0.0113 \quad \cdots(36)$$

In this case, a region, which is indicated by half-tone dot meshing (hereinafter, referred to as "third region R13") surrounded by the approximation curves indicated by the formulas (14), (15) and (36), corresponds to a region satisfying the conditions of all the parameters. That is, by allowing the ratio α and ratio β to be included in the third region R13, the conditions of the respective parameters can be satisfied. In this case, it is supposed that the third region R13 includes the above-mentioned approximation curves. Additionally, of the plane of L = 100 nm, a portion defined by the third region R13 is referred to as "third plane Sp13" on demand.

(L = 120 nm)

Fig. 22B is an α-β correlation diagram based upon the conditions of the visible light-ray transmittance, the blue index, the red index and the shading coefficient, in the case of the total film thickness L of 120 nm. In Fig. 22B, since a predetermined point (α, β) on a border line between a region that satisfies the conditions of the visible light-ray transmittance and a region that does not satisfy the conditions thereof is located outside the region indicated by half-tone dot meshing, the illustration in the Fig. is omitted. Based upon the points on the border line of the shading coefficient plotted on the α-β correlation diagram in addition to the approximation curves of the border line indicated by the aforementioned formulas (17) to (19), an approximation curve of the border line indicated by the following formula (37) is obtained.

$$\alpha=-7\times10^{-5}\beta^2+0.0007\beta+0.0097 \quad \cdots(37)$$

In this case, a region, which is indicated by half-tone dot meshing (hereinafter, referred to as "fourth region R14") surrounded by the approximation curves indicated by the formulas (18), (19) and (37), corresponds to a region satisfying the conditions of all the parameters. That is, by allowing the ratio α and ratio β to be included in the fourth region R14, the conditions of the respective parameters can be satisfied. In this case, it is supposed that the fourth region R14 includes the above-mentioned approximation curves. Additionally, of the plane of L = 120 nm, a portion defined by the fourth region R14 is referred to as "fourth plane Sp14" on demand.

(L = 140 nm)

Fig. 23A is an α-β correlation diagram based upon the conditions of the visible light-ray transmittance, the blue index, the red index and the shading coefficient, in the case of the total film thickness L of 140 nm. In Fig. 23A, since a predetermined point (α, β) on a border line between a region that satisfies the conditions of the visible light-ray transmittance and a region that does not satisfy the conditions thereof is located outside the region indicated by half-tone dot meshing, the illustration in the Fig. is omitted. Based upon the points on the border line of the shading coefficient plotted on the α-β correlation diagram in addition to the approximation curves of the border line indicated by the aforementioned formulas (21) to (23), an approximation curve of the border line indicated by the following formula (38) is obtained.

$$\alpha=-0.0001\beta^2+0.0011\beta+0.0083 \quad \cdots(38)$$

In this case, a region, which is indicated by half-tone dot meshing (hereinafter, referred to as "fifth region R15") surrounded by the approximation curves indicated by the formulas (22), (23) and (38), corresponds to a region satisfying the conditions of all the parameters. That is, by allowing the ratio α and ratio β to be included in the third region R15, the conditions of the respective parameters can be satisfied. In this case, it is supposed that the fifth region R15 includes the above-mentioned approximation curves. Additionally, of the plane of L = 140 nm, a portion defined by the fifth region R15 is referred to as "fifth plane Sp15" on demand.

(L = 160 nm)

Fig. 23B is an α-β correlation diagram based upon the conditions of the visible light-ray transmittance, the blue index, the red index and the shading coefficient, in the case of the total film thickness L of 160 mn. In Fig. 23B, since a predetermined point (α, β) on a border line between a region that satisfies the conditions of the visible light-ray transmittance and a region that does not satisfy the conditions thereof is located outside the region indicated by half-tone dot meshing, the illustration in the Fig. is omitted. Based upon the points on the border line of the shading coefficient plotted on the α-β correlation diagram in addition to the approximation curves of the border line indicated by the aforementioned formulas (25) to (28), an approximation curve of the border line indicated by the following formula (39) is obtained.

$$\alpha=-0.0002\beta^2+0.0016\beta+0.0067 \quad \cdots(39)$$

In this case, a region, which is indicated by half-tone dot meshing (hereinafter, referred to as "sixth region R16") surrounded by the approximation curves indicated by the formulas (25) to (28), and (39), corresponds to a region satisfying the conditions of all the parameters. That is, by allowing the ratio α and ratio β to be included in the sixth region R16, the conditions of the respective parameters can be satisfied. In this case, it is supposed that the third region R16 includes the above-mentioned approximation curves. Additionally, of the plane of L = 160 nm, a portion defined by the sixth region R16 is referred to as "sixth plane Sp16" on demand.

(L = 180 nm)

Fig. 24 is an α-β correlation diagram based upon the conditions of the visible light-ray transmittance, the blue index, the red index and the shading coefficient, in the case of the total film thickness L of 180 nm. In Fig. 24, since a predetermined point (α, β) on a border line between a region that satisfies the conditions of the visible light-ray transmittance and a region that does not satisfy the conditions thereof is located outside the region indicated by half-tone dot meshing, the illustration in the Fig. is omitted. Based upon the points on the border line of the shading coefficient plotted on the α-β correlation diagram in addition to the approximation curves of the border line indicated by the aforementioned formulas (30) to (32), an approximation curve of the border line indicated by the following formula (40) is obtained.

$$\alpha=-0.0003\beta^2+0.0021\beta+0.0055 \quad \cdots(40)$$

In this case, a region, which is indicated by half-tone dot meshing (hereinafter, referred to as "seventh region R17") surrounded by the approximation curves indicated by the formulas (30) to (32) and (40), corresponds to a region satisfying the conditions of all the parameters. That is, by allowing the ratio $\alpha$ and ratio $\beta$ to be included in the seventh region R17, the conditions of the respective parameters can be satisfied. In this case, it is supposed that the seventh region R17 includes the above-mentioned approximation curves. Additionally, of the plane of L = 180 nm, a portion defined by the seventh region R17 is referred to as "seventh plane Sp17" on demand.

Next, the following description will discuss a method for determining a region that satisfies the conditions of the respective parameters in the case when the total film thickness L is other than a specific film thickness. Fig. 25 shows a diagram in which a region that satisfies the conditions of the respective parameters determined based upon the $\alpha$-$\beta$ correlation diagrams shown in Figs. 17A to 20 is mapped on three-dimensional planes, with the ratio $\alpha$, the ratio $\beta$ and the total film thickness L being defined as the axes. In this example, a region that satisfies the conditions of the respective parameters in the case when the visible light-ray transmittance, the blue index and the red index are used as the parameters. Additionally, in the values of the respective total film thicknesses L, a predetermined point ($\alpha$, $\beta$) on a border line between a region that satisfies the conditions of the visible light-ray transmittance and a region that does not satisfy the conditions thereof and approximation curves derived from a group of these points are located outside the regions indicated by half-tone dot meshing with respect to the respective total film thicknesses L shown in Fig. 25; therefore, the illustration thereof is omitted from the Figure.

As shown in Fig. 25, it is considered that a region that satisfies the conditions of the respective parameters is continuously formed relative to the total film thickness L. Therefore, in the case of a total film thickness other than the predetermined total film thicknesses L = 80 nm, 90 nm, ..., 180 nm, a region, which is surrounded by a circumferential surface S, with the regions of the predetermined total film thicknesses L serving as two end faces, is defined as a region that satisfies the conditions of the respective parameters.

First, the following description will discuss a case in which by using the visible light-ray transmittance, the blue index and the red index as the parameters, the total film thickness L is set to a value between predetermined total film thicknesses L (= 80 nm, 90 nm, ..., 180 nm) so as to satisfy the conditions of the parameters.

$$(80\ \text{nm} < L < 90\ \text{nm})$$

In the case when the total film thickness L is represented by 80 nm < L < 90 nm, as shown in Fig. 26A, a region surrounded by a circumferential surface S1, with two end faces being formed by a first plane Sp1 defined by the first region R1 and a second plane Sp2 defined by the second region R2, forms a region that satisfies the conditions of the respective parameters. That is, by allowing the ratio $\alpha$ and ratio $\beta$ to be included in the region surrounded by the circumferential surface S1, the conditions of the respective parameters can be satisfied. In this case, it is supposed that the region surrounded by the circumferential surface S1 includes the circumferential surface S1 itself.

As shown in Fig. 26A, the circumferential surface S1 is a region defined in the following manner.

Supposing that each of minute sides formed by dividing a periphery C1 of the first region R1 into n-equal portions, with an intersection P between formula (5) and formula (7) being set as a starting point, is represented as $\Delta$ C1i and that each of minute sides formed by dividing a periphery C2 of the second region R2 into n-equal portions, with an intersection P between formula (9) and formula (11) being set as a starting point, is represented as $\Delta$ C2i, each of minute regions having a rectangular shape, with $\Delta$ C1i and $\Delta$ C2i being defined as the two short sides, is defined as $\Delta$ Si. In this case, i represents a natural number from 0 to n, with $n \to \infty$ being preferably set. Moreover, suppose that i increases in a clockwise direction when the first region R1 and the second region R2 are viewed from the L axis direction (that is, in an increasing direction of the total film thickness L). A circumferential surface, which is composed of a group of minute regions $\Delta$ Si defined in this manner, is defined as the circumferential surface S1.

$$\alpha = -0.0004\beta^2 + 0.0053\beta + 0.0065 \quad \cdots (5)$$

$$\alpha = -1\times10^{-5}\beta^2 + 0.0005\beta + 0.0119 \quad \cdots (7)$$

$$\alpha = -0.0002\beta^2 + 0.0039\beta + 0.0087 \quad \cdots (9)$$

$$\alpha = -2\times10^{-5}\beta^2 + 0.0006\beta + 0.0112 \quad \cdots (11)$$

$$(90\ nm < L < 100\ nm)$$

In the case when the total film thickness L is represented by 90 nm < L < 100 nm, as shown in Fig. 26B, a region surrounded by a circumferential surface S2, with two end faces being formed by a second plane Sp2 defined by the second region R2 and a third plane Sp3 defined by the third region R3, forms a region that satisfies the conditions of the respective parameters. That is, by allowing the ratio $\alpha$ and ratio $\beta$ to be included in the region surrounded by the circumferential surface S2, the conditions of the respective parameters can be satisfied. In this case, it is supposed that the region surrounded by the circumferential surface S2 includes the circumferential surface S2 itself.

As shown in Fig. 26B, the circumferential surface S2 is a region defined in the following manner.

Supposing that each of minute sides formed by dividing a periphery C2 of the second region R2 into n-equal portions, with an intersection P between formula (9) and formula (11) being set as a starting point, is represented as $\Delta$ C2i and that each of minute sides formed by dividing a periphery C3 of the third region R3 into n-equal portions, with an intersection P between formula (13) and formula (15) being set as a starting point, is represented as $\Delta$ C3i, each of minute regions having a rectangular shape, with $\Delta$ C2i and $\Delta$ C3i being defined as the two short sides, is defined as $\Delta$ Si. In this case, i represents a natural number from 0 to n, with $n \to \infty$ being preferably set. Moreover, suppose that i increases in a clockwise direction when the second region R2 and the third region R3 are viewed from the L axis direction (that is, in an increasing direction of the total film thickness L). A circumferential surface, which is composed of a group of minute regions $\Delta$ Si defined in this manner, is defined as the circumferential surface S2.

$$\alpha=-0.0002\beta^2+0.0039\beta+0.0087 \quad \cdots(9)$$

$$\alpha=-2\times10^{-5}\beta^2+0.0006\beta+0.0112 \quad \cdots(11)$$

$$\alpha=-0.0002\beta^2+0.0055\beta+0.0057 \quad \cdots(13)$$

$$\alpha=-4\times10^{-5}\beta^2+0.001\beta+0.0099 \quad \cdots(15)$$

$$(100\ nm < L < 120\ nm)$$

In the case when the total film thickness L is represented by 100 nm < L < 120 nm, as shown in Fig. 27A, a region surrounded by a circumferential surface S3, with two end faces being formed by a third plane Sp3 defined by the third region R3 and a fourth plane Sp4 defined by the fourth region R4, forms a region that satisfies the conditions of the respective parameters. That is, by allowing the ratio $\alpha$ and ratio $\beta$ to be included in the region surrounded by the circumferential surface S3, the conditions of the respective parameters can be satisfied. In this case, it is supposed that the region surrounded by the circumferential surface S3 includes the circumferential surface S3 itself.

As shown in Fig. 27A, the circumferential surface S3 is a region defined in the following manner.

Supposing that each of minute sides formed by dividing a periphery C3 of the third region R3 into n-equal portions, with an intersection P between formula (13) and formula (15) being set as a starting point, is represented as $\Delta$ C3i and that each of minute sides formed by dividing a periphery C4 of the fourth region R4 into n-equal portions, with an intersection P between formula (17) and formula (19) being set as a starting point, is represented as $\Delta$ C4i, each of minute regions having a rectangular shape, with $\Delta$ C3i and $\Delta$ C4i being defined as the two short sides, is defined as $\Delta$ Si. In this case, i represents a natural number from 0 to n, with $n \to \infty$ being preferably set. Moreover, suppose that i increases in a clockwise direction when the third region R3 and the fourth region R4 are viewed from the L axis direction (that is, in an increasing direction of the total film thickness L). A circumferential surface, which is composed of a group of minute regions $\Delta$ Si defined in this manner, is defined as the circumferential surface S3.

$$\alpha=-0.0002\beta^2+0.0055\beta+0.0057 \quad \cdots(13)$$

$$\alpha=-4\times10^{-5}\beta^2+0.001\beta+0.0099 \quad \cdots(15)$$

$$\alpha=-0.0003\beta^2+0.0074\beta+0.0033 \quad \cdots(17)$$

$$\alpha=-9\times10^{-5}\beta^2+0.0015\beta+0.0084 \quad \cdots(19)$$

$$(120\ \text{nm} < L < 140\ \text{nm})$$

In the case when the total film thickness L is represented by 120 nm < L < 140 nm, as shown in Fig. 27B, a region surrounded by a circumferential surface S4, with two end faces being formed by a fourth plane Sp4 defined by the fourth region R4 and a fifth plane Sp5 defined by the fifth region R5, forms a region that satisfies the conditions of the respective parameters. That is, by allowing the ratio $\alpha$ and ratio $\beta$ to be included in the region surrounded by the circumferential surface S4, the conditions of the respective parameters can be satisfied. In this case, it is supposed that the region surrounded by the circumferential surface S4 includes the circumferential surface S4 itself.

As shown in Fig. 27B, the circumferential surface S4 is a region defined in the following manner.

Supposing that each of minute sides formed by dividing a periphery C4 of the fourth region R4 into n-equal portions, with an intersection P between formula (17) and formula (19) being set as a starting point, is represented as $\Delta$ C4i and that each of minute sides formed by dividing a periphery C5 of the fifth region R5 into n-equal portions, with an intersection P between formula (21) and formula (23) being set as a starting point, is represented as $\Delta$ C5i, each of minute regions having a rectangular shape, with $\Delta$ C4i and $\Delta$ C5i being defined as the two short sides, is defined as $\Delta$ Si. In this case, i represents a natural number from 0 to n, with $n\rightarrow\infty$ being preferably set. Moreover, suppose that i increases in a clockwise direction when the fourth region R4 and the fifth region R5 are viewed from the L axis direction (that is, in an increasing direction of the total film thickness L). A circumferential surface, which is composed of a group of minute regions $\Delta$ Si defined in this manner, is defined as the circumferential surface S4.

$$\alpha=-0.0003\beta^2+0.0074\beta+0.0033 \quad \cdots(17)$$

$$\alpha=-9\times10^{-5}\beta^2+0.0015\beta+0.0084 \quad \cdots(19)$$

$$\alpha=-0.0014\beta^2+0.0136\beta-0.0027 \quad \cdots(21)$$

$$\alpha=-0.0001\beta^2+0.002\beta+0.0074 \quad \cdots(23)$$

$$(140\ \text{nm} < L < 160\ \text{nm})$$

In the case when the total film thickness L is represented by 140 nm < L < 160 nm, as shown in Fig. 28A, a region surrounded by a circumferential surface S5, with two end faces being formed by a fifth plane Sp5 defined by the fifth region R5 and a sixth plane Sp6 defined by the sixth region R6, forms a region that satisfies the conditions of the respective parameters. That is, by allowing the ratio $\alpha$ and ratio $\beta$ to be included in the region surrounded by the circumferential surface S5, the conditions of the respective parameters can be satisfied. In this case, it is supposed that the region surrounded by the circumferential surface S5 includes the circumferential surface S5 itself.

As shown in Fig. 28A, the circumferential surface S5 is a region defined in the following manner.

Supposing that each of minute sides formed by dividing a periphery C5 of the fifth region R5 into n-equal portions, with an intersection P between formula (21) and formula (23) being set as a starting point, is represented as $\Delta$ C5i and that each of minute sides formed by dividing a periphery C6 of the sixth region R6 into n-equal portions, with an intersection P between formula (25) and formula (28) being set as a starting point, is represented as $\Delta$ C6i, each of minute regions having a rectangular shape, with $\Delta$ C5i and $\Delta$ C6i being defined as the two short sides, is defined as $\Delta$ Si. In this case, i represents a natural number from 0 to n, with $n\rightarrow\infty$ being preferably set. Moreover, suppose that i increases in a clockwise direction when the fifth region R5 and the sixth region R6 are viewed from the L axis direction (that is, in an increasing direction of the total film thickness L). A circumferential surface, which is composed of a group of minute regions $\Delta$ Si defined in this manner, is defined as the circumferential surface S5.

$$\alpha=-0.0014\beta^2+0.0136\beta-0.0027 \quad \cdots(21)$$

$$\alpha=-0.0001\beta^2+0.002\beta+0.0074 \quad \cdots(23)$$

$$\alpha=-0.005\beta^2+0.0273\beta-0.0145 \quad \cdots(25)$$

$$\alpha=-0.0001\beta^2+0.0025\beta+0.0062 \quad \cdots(28)$$

$$(160\ \mathrm{nm} < L < 180\ \mathrm{nm})$$

In the case when the total film thickness L is represented by 160 nm < L < 180 nm, as shown in Fig. 28B, a region surrounded by a circumferential surface S6, with two end faces being formed by a sixth plane Sp6 defined by the sixth region R6 and a seventh plane Sp7 defined by the seventh region R7, forms a region that satisfies the conditions of the respective parameters. That is, by allowing the ratio $\alpha$ and ratio $\beta$ to be included in the region surrounded by the circumferential surface S7, the conditions of the respective parameters can be satisfied. In this case, it is supposed that the region surrounded by the circumferential surface S7 includes the circumferential surface S7 itself.

As shown in Fig. 28B, the circumferential surface S6 is a region defined in the following manner.

Supposing that each of minute sides formed by dividing a periphery C6 of the sixth region R6 into n-equal portions, with an intersection P between formula (25) and formula (28) being set as a starting point, is represented as $\Delta$ C6i and that each of minute sides formed by dividing a periphery C7 of the seventh region R7 into n-equal portions, with an intersection P between formula (30) and formula (32) being set as a starting point, is represented as $\Delta$ C7i, each of minute regions having a rectangular shape, with $\Delta$ C6i and $\Delta$ C7i being defined as the two short sides, is defined as $\Delta$ Si. In this case, i represents a natural number from 0 to n, with $n\to\infty$ being preferably set. Moreover, suppose that i increases in a clockwise direction when the sixth region R6 and the seventh region R7 are viewed from the L axis direction (that is, in an increasing direction of the total film thickness L). A circumferential surface, which is composed of a group of minute regions $\Delta$ Si defined in this manner, is defined as the circumferential surface S6.

$$\alpha=-0.005\beta^2+0.0273\beta-0.0145 \quad \cdots(25)$$

$$\alpha=-0.0001\beta^2+0.0025\beta+0.0062 \quad \cdots(28)$$

$$\alpha=-0.0103\beta^2+0.047\beta-0.0322 \quad \cdots(30)$$

$$\alpha=-0.0003\beta^2+0.0036\beta+0.0046 \quad \cdots(32)$$

Therefore, a region that satisfies the conditions of the parameters of the visible light-ray transmittance, the blue index and the red index is determined in the following manner for each of ranges of the respective total film thicknesses L.

$$(80\ \mathrm{nm} \le L \le 90\ \mathrm{nm})$$

In the case when the total film thickness L is represented by 80 nm $\le$ L $\le$ 90 nm, a region (space) V1, which is surrounded by the first plane Sp1 defined by the first region R1, the second plane Sp2 defined by the second region R2 and a circumferential surface S1, with these planes serving as two end faces thereof, forms a region that satisfies the conditions of the respective parameters. That is, by allowing the ratio $\alpha$ and ratio $\beta$ to be included in the region (space) V1 surrounded by the plane Sp1, the plane Sp2 and the circumferential surface S1 having these two planes as its two end faces, the conditions of the respective parameters can be satisfied. In this case, it is supposed that the region (space) V1 includes the plane Sp1, the plane Sp2 and the circumferential surface S1.

$$(90\ nm \leq L \leq 100\ nm)$$

In the case when the total film thickness L is represented by 90 nm ≤ L ≤ 100 nm, a region (space) V2, which is surrounded by the second plane Sp2 defined by the second region R2, the third plane Sp3 defined by the third region R3 and a circumferential surface S2, with these planes serving as two end faces thereof, forms a region that satisfies the conditions of the respective parameters. That is, by allowing the ratio $\alpha$ and ratio $\beta$ to be included in the region (space) V2 surrounded by the plane Sp2, the plane Sp3 and the circumferential surface S2 having these two planes as its two end faces, the conditions of the respective parameters can be satisfied. In this case, it is supposed that the region (space) V2 includes the plane Sp2, the plane Sp3 and the circumferential surface S2.

$$(100\ nm \leq L \leq 120\ nm)$$

In the case when the total film thickness L is represented by 100 nm ≤ L ≤ 120 nm, a region (space) V3, which is surrounded by the third plane Sp3 defined by the third region R3, the fourth plane Sp4 defined by the fourth region R4 and a circumferential surface S3, with these planes serving as two end faces thereof, forms a region that satisfies the conditions of the respective parameters. That is, by allowing the ratio $\alpha$ and ratio $\beta$ to be included in the region (space) V3 surrounded by the plane Sp3, the plane Sp4 and the circumferential surface S3 having these two planes as its two end faces, the conditions of the respective parameters can be satisfied. In this case, it is supposed that the region (space) V3 includes the plane Sp3, the plane Sp4 and the circumferential surface S3.

$$(120\ nm \leq L \leq 140\ nm)$$

In the case when the total film thickness L is represented by 120 nm ≤ L ≤ 140 nm, a region (space) V4, which is surrounded by the fourth plane Sp4 defined by the fourth region R4, the fifth plane Sp5 defined by the fifth region R5 and a circumferential surface S4, with these planes serving as two end faces thereof, forms a region that satisfies the conditions of the respective parameters. That is, by allowing the ratio $\alpha$ and ratio $\beta$ to be included in the region (space) V4 surrounded by the plane Sp4, the plane Sp5 and the circumferential surface S4 having these two planes as its two end faces, the conditions of the respective parameters can be satisfied. In this case, it is supposed that the region (space) V4 includes the plane Sp4, the plane Sp5 and the circumferential surface S4.

$$(140\ nm \leq L \leq 160\ nm)$$

In the case when the total film thickness L is represented by 140 nm ≤ L ≤ 160 nm, a region (space) V5, which is surrounded by the fifth plane Sp5 defined by the fifth region R5, the sixth plane Sp6 defined by the sixth region R6 and a circumferential surface S5, with these planes serving as two end faces thereof, forms a region that satisfies the conditions of the respective parameters. That is, by allowing the ratio $\alpha$ and ratio to be included in the region (space) V5 surrounded by the plane Sp5, the plane Sp6 and the circumferential surface S5 having these two planes as its two end faces, the conditions of the respective parameters can be satisfied. In this case, it is supposed that the region (space) V5 includes the plane Sp5, the plane Sp6 and the circumferential surface S5.

$$(160\ nm \leq L \leq 180\ nm)$$

In the case when the total film thickness L is represented by 160 nm ≤ L ≤ 180 nm, a region (space) V6, which is surrounded by the sixth plane Sp6 defined by the sixth region R6, the seventh plane Sp7 defined by the seventh region R7 and a circumferential surface S6, with these planes serving as two end faces thereof, forms a region that satisfies the conditions of the respective parameters. That is, by allowing the ratio $\alpha$ and ratio to be included in the region (space) V6 surrounded by the plane Sp6, the plane Sp7 and the circumferential surface S6 having these two planes as its two end faces, the conditions of the respective parameters can be satisfied. In this case, it is supposed that the region (space) V6 includes the plane Sp6, the plane Sp7 and the circumferential surface S6.

Next, the following description will discuss a case in which by also using a shading coefficient as the parameters in addition to the visible light-ray transmittance, the blue index and the red index, the total film thickness L is set to a value between predetermined total film thicknesses L (= 80 nm, 90 nm, ..., 180 nm).

Fig. 29 shows a diagram in which a region that satisfies the conditions of the respective parameters determined based upon the α-β correlation diagrams shown in Figs. 21A to 24 is mapped on three-dimensional planes, with the ratio α, the ratio β and the total film thickness L being defined as the axes. In this example, a region that satisfies the conditions of the respective parameters in the case when the visible light-ray transmittance, the blue index, the red index and the shading coefficient are used as the parameters. Additionally, in the values of the respective total film thicknesses L, a predetermined point (α, β) on a border line between a region that satisfies the conditions of the visible light-ray transmittance and a region that does not satisfy the conditions thereof and approximation curves derived from a group of these points are located outside the regions indicated by half-tone dot meshing with respect to the respective total film thicknesses L shown in Fig. 29; therefore, the illustration thereof is omitted from the Figure.

In the case when as shown in Fig. 29, the visible light-ray transmittance, the blue index, the red index and the shading coefficient are used as the parameters, as well, it is considered that a region that satisfies the conditions of the respective parameters is continuously formed relative to the total film thickness L. Therefore, in the case of a total film thickness other than the predetermined total film thicknesses L = 80 nm, 90 nm, ..., 180 nm, a region, which is surrounded by a circumferential surface S, with the regions of the adjacent predetermined total film thicknesses L serving as two end faces, is defined as a region that satisfies the conditions of the respective parameters.

## (80 nm < L < 90 nm)

In the case when the total film thickness L is represented by 80 nm < L < 90 nm, as shown in Fig. 30A, a region surrounded by a circumferential surface S11, with two end faces being formed by a first plane Sp11 defined by a first region R11 and a second plane Sp12 defined by a second region R12, forms a region that satisfies the conditions of the respective parameters. That is, by allowing the ratio α and ratio β to be included in the region surrounded by the circumferential surface S11, the conditions of the respective parameters can be satisfied. In this case, it is supposed that the region surrounded by the circumferential surface S11 includes the circumferential surface S11 itself.

As shown in Fig. 30A, the circumferential surface S11 is a region defined in the following manner.

Supposing that each of minute sides formed by dividing a periphery C11 of the first region R11 into n-equal portions, with an intersection P between formula (7) and formula (34) being set as a starting point, is represented as Δ C11i and that each of minute sides formed by dividing a periphery C12 of the second region R12 into n-equal portions, with an intersection P between formula (11) and formula (35) being set as a starting point, is represented as Δ C12i, each of minute regions having a rectangular shape, with Δ C11i and Δ C 12i being defined as the two short sides, is defined as Δ Si. In this case, i represents a natural number from 0 to n, with $n \to \infty$ being preferably set. Moreover, suppose that i increases in a clockwise direction when the first region R11 and the second region R12 are viewed from the L axis direction (that is, in an increasing direction of the total film thickness L). A circumferential surface, which is composed of a group of minute regions Δ Si defined in this manner, is defined as the circumferential surface S11.

$$\alpha=-1\times10^{-5}\beta^2+0.0005\beta+0.0119 \quad \cdots(7)$$

$$\alpha=-6\times10^{-6}\beta^2+0.0002\beta+0.0141 \quad \cdots(34)$$

$$\alpha=-2\times10^{-5}\beta^2+0.0006\beta+0.0112 \quad \cdots(11)$$

$$\alpha=-1\times10^{-5}\beta^2+0.0002\beta+0.0125 \quad \cdots(35)$$

## (90 nm < L < 100 nm)

In the case when the total film thickness L is represented by 90 nm < L < 100 nm, as shown in Fig. 30B, a region surrounded by a circumferential surface S12, with two end faces being formed by a second plane Sp12 defined by the second region R12 and a third plane Sp13 defined by the third region R3, forms a region that satisfies the conditions of the respective parameters. That is, by allowing the ratio α and ratio β to be included in the region surrounded by the circumferential surface S12, the conditions of the respective parameters can be satisfied. In this case, it is supposed that the region surrounded by the circumferential surface S12 includes the circumferential surface S12 itself.

As shown in Fig. 30B, the circumferential surface S12 is a region defined in the following manner.

Supposing that each of minute sides formed by dividing a periphery C12 of the second region R12 into n-equal portions, with an intersection P between formula (11) and formula (35) being set as a starting point, is represented as Δ C12i and that each of minute sides formed by dividing a periphery C 13 of the third region R13 into n-equal portions, with an intersection P between formula (15) and formula (36) being set as a starting point, is represented as Δ C13i, each of minute regions having a rectangular shape, with Δ C12i and Δ C13i being defined as the two short sides, is defined as Δ Si. In this case, i represents a natural number from 0 to n, with n→∞ being preferably set. Moreover, suppose that i increases in a clockwise direction when the second region R12 and the third region R13 are viewed from the L axis direction (that is, in an increasing direction of the total film thickness L). A circumferential surface, which is composed of a group of minute regions Δ Si defined in this manner, is defined as the circumferential surface S12.

$$\alpha=-2\times10^{-5}\beta^2+0.0006\beta+0.0112 \quad \cdots(11)$$

$$\alpha=-1\times10^{-5}\beta^2+0.0002\beta+0.0125 \quad \cdots(35)$$

$$\alpha=-4\times10^{-5}\beta^2+0.001\beta+0.0099 \quad \cdots(15)$$

$$\alpha=-3\times10^{-5}\beta^2+0.0004\beta+0.0113 \quad \cdots(36)$$

$$(100\ \text{nm} < L < 120\ \text{nm})$$

In the case when the total film thickness L is represented by 100 nm < L < 120 nm, as shown in Fig. 31A, a region surrounded by a circumferential surface S13, with two end faces being formed by a third plane Sp13 defined by the third region R13 and a fourth plane Sp14 defined by the fourth region R14, forms a region that satisfies the conditions of the respective parameters. That is, by allowing the ratio α and ratio β to be included in the region surrounded by the circumferential surface S13, the conditions of the respective parameters can be satisfied. In this case, it is supposed that the region surrounded by the circumferential surface S13 includes the circumferential surface S 13 itself.

As shown in Fig. 31A, the circumferential surface S13 is a region defined in the following manner.

Supposing that each of minute sides formed by dividing a periphery C 13 of the third region R13 into n-equal portions, with an intersection P between formula (15) and formula (36) being set as a starting point, is represented as Δ C13i and that each of minute sides formed by dividing a periphery C14 of the fourth region R14 into n-equal portions, with an intersection P between formula (19) and formula (37) being set as a starting point, is represented as Δ C14i, each of minute regions having a rectangular shape, with Δ C13i and Δ C14i being formed as the two short sides, is defined as Δ Si. In this case, i represents a natural number from 0 to n, with n→∞ being preferably set. Moreover, suppose that i increases in a clockwise direction when the third region R13 and the fourth region R14 are viewed from the L axis direction (that is, in an increasing direction of the total film thickness L). A circumferential surface, which is composed of a group of minute regions Δ Si defined in this manner, is defined as the circumferential surface S13.

$$\alpha=-4\times10^{-5}\beta^2+0.001\beta+0.0099 \quad \cdots(15)$$

$$\alpha=-3\times10^{-5}\beta^2+0.0004\beta+0.0113 \quad \cdots(36)$$

$$\alpha=-9\times10^{-5}\beta^2+0.0015\beta+0.0084 \quad \cdots(19)$$

$$\alpha=-7\times10^{-5}\beta^2+0.0007\beta+0.0097 \quad \cdots(37)$$

$$(120\ \text{nm} < L < 140\ \text{nm})$$

In the case when the total film thickness L is represented by 120 nm < L < 140 nm, as shown in Fig. 31B, a region surrounded by a circumferential surface S14, with two end faces being formed by a fourth plane Sp14 defined by the fourth region R14 and a fifth plane Sp15 defined by the fifth region R15, forms a region that satisfies the conditions of the respective parameters. That is, by allowing the ratio $\alpha$ and ratio $\beta$ to be included in the region surrounded by the circumferential surface S14, the conditions of the respective parameters can be satisfied. In this case, it is supposed that the region surrounded by the circumferential surface S14 includes the circumferential surface S 14 itself.

As shown in Fig. 31B, the circumferential surface S14 is a region defined in the following manner.

Supposing that each of minute sides formed by dividing a periphery C 14 of the fourth region R14 into n-equal portions, with an intersection P between formula (19) and formula (37) being set as a starting point, is represented as $\Delta$ C14i and that each of minute sides formed by dividing a periphery C15 of the fifth region R15 into n-equal portions, with an intersection P between formula (23) and formula (38) being set as a starting point, is represented as $\Delta$ C15i, each of minute regions having a rectangular shape, with $\Delta$ C14i and $\Delta$ C15i being defined as the two short sides, is defined as $\Delta$ Si. In this case, i represents a natural number from 0 to n, with $n \to \infty$ being preferably set. Moreover, suppose that i increases in a clockwise direction when the fourth region R14 and the fifth region R15 are viewed from the L axis direction (that is, in an increasing direction of the total film thickness L). A circumferential surface, which is composed of a group of minute regions $\Delta$ Si defined in this manner, is defined as the circumferential surface S14.

$$\alpha = -9\times10^{-5}\beta^2 + 0.0015\beta + 0.0084 \quad \cdots (19)$$

$$\alpha = -7\times10^{-5}\beta^2 + 0.0007\beta + 0.0097 \quad \cdots (37)$$

$$\alpha = -0.0001\beta^2 + 0.002\beta + 0.0074 \quad \cdots (23)$$

$$\alpha = -0.0001\beta^2 + 0.0011\beta + 0.0083 \quad \cdots (38)$$

(140 nm < L < 160 nm)

In the case when the total film thickness L is represented by 140 nm < L < 160 nm, as shown in Fig. 32A, a region surrounded by a circumferential surface S15, with two end faces being formed by a fifth plane Sp15 defined by the fifth region R15 and a sixth plane Sp16 defined by the sixth region R16, forms a region that satisfies the conditions of the respective parameters. That is, by allowing the ratio $\alpha$ and ratio $\beta$ to be included in the region surrounded by the circumferential surface S15, the conditions of the respective parameters can be satisfied. In this case, it is supposed that the region surrounded by the circumferential surface S 15 includes the circumferential surface S 15 itself.

As shown in Fig. 32A, the circumferential surface S15 is a region defined in the following manner.

Supposing that each of minute sides formed by dividing a periphery C 15 of the fifth region R15 into n-equal portions, with an intersection P between formula (23) and formula (38) being set as a starting point, is represented as $\Delta$ C15i and that each of minute sides formed by dividing a periphery C16 of the sixth region R16 into n-equal portions, with an intersection P between formula (28) and formula (39) being set as a starting point, is represented as $\Delta$ C16i, each of minute regions having a rectangular shape, with $\Delta$ C15i and $\Delta$ C16i being defined as the two short sides, is defined as $\Delta$ Si. In this case, i represents a natural number from 0 to n, with $n \to \infty$ being preferably set. Moreover, suppose that i increases in a clockwise direction when the fifth region R15 and the sixth region R16 are viewed from the L axis direction (that is, in an increasing direction of the total film thickness L). A circumferential surface, which is composed of a group of minute regions $\Delta$ Si defined in this manner, is defined as the circumferential surface S15.

$$\alpha = -0.0001\beta^2 + 0.002\beta + 0.0074 \quad \cdots (23)$$

$$\alpha = -0.0001\beta^2 + 0.0011\beta + 0.0083 \quad \cdots (38)$$

$$\alpha = -0.005\beta^2 + 0.0273\beta - 0.0145 \quad \cdots (28)$$

$$\alpha=-0.0002\beta^2+0.0016\beta+0.0067 \quad \cdots(39)$$

$$(160\ nm < L < 180\ nm)$$

In the case when the total film thickness L is represented by 160 nm < L < 180 nm, as shown in Fig. 32B, a region surrounded by a circumferential surface S16, with two end faces being formed by a sixth plane Sp16 defined by the sixth region R16 and a seventh plane Sp17 defined by the seventh region R17, forms a region that satisfies the conditions of the respective parameters. That is, by allowing the ratio $\alpha$ and ratio $\beta$ to be included in the region surrounded by the circumferential surface S16, the conditions of the respective parameters can be satisfied. In this case, it is supposed that the region surrounded by the circumferential surface S16 includes the circumferential surface S16 itself.

As shown in Fig. 32B, the circumferential surface S16 is a region defined in the following manner.

Supposing that each of minute sides formed by dividing a periphery C16 of the sixth region R16 into n-equal portions, with an intersection P between formula (28) and formula (39) being set as a starting point, is represented as $\Delta$ C16i and that each of minute sides formed by dividing a periphery C 17 of the seventh region R17 into n-equal portions, with an intersection P between formula (32) and formula (40) being set as a starting point, is represented as $\Delta$ C17i, each of minute regions having a rectangular shape, with $\Delta$ C16i and $\Delta$ C17i being defined as the two short sides, is defined as $\Delta$ Si. In this case, i represents a natural number from 0 to n, with $n\rightarrow\infty$ being preferably set. Moreover, suppose that i increases in a clockwise direction when the sixth region R16 and the seventh region R17 are viewed from the L axis direction (that is, in an increasing direction of the total film thickness L).

A circumferential surface, which is composed of a group of minute regions $\Delta$ Si defined in this manner, is defined as the circumferential surface S16.

$$\alpha=-0.005\beta^2+0.0273\beta-0.0145 \quad \cdots(28)$$

$$\alpha=-0.0002\beta^2+0.0016\beta+0.0067 \quad \cdots(39)$$

$$\alpha=-0.0103\beta^2+0.047\beta-0.0322 \quad \cdots(32)$$

$$\alpha=-0.0003\beta^2+0.0021\beta+0.0055 \quad \cdots(40)$$

Therefore, a region that satisfies the conditions of the parameters of the visible light-ray transmittance, the blue index, the red index and the shading coefficient is determined in the following manner for each of ranges of the respective total film thicknesses L.

$$(80\ nm \leq L \leq 90\ nm)$$

In the case when the total film thickness L is represented by 80 nm ≤ L ≤ 90 nm, a region (space) V11, which is surrounded by the first plane Sp11 defined by the first region R11, the second plane Sp12 defined by the second region R12 and a circumferential surface S11, with these planes serving as two end faces thereof, forms a region that satisfies the conditions of the respective parameters. That is, by allowing the ratio $\alpha$ and ratio $\beta$ to be included in the region (space) V11 surrounded by the plane Sp11, the plane Sp12 and the circumferential surface S11 having these two planes as its two end faces, the conditions of the respective parameters can be satisfied. In this case, it is supposed that the region (space) V11 includes the plane Sp11, the plane Sp12 and the circumferential surface S11.

$$(90\ nm \leq L \leq 100\ nm)$$

In the case when the total film thickness L is represented by 90 nm ≤ L ≤ 100 nm, a region (space) V12, which is surrounded by the second plane Sp12 defined by the second region R12, the third plane Sp13 defined by the third region R13 and a circumferential surface S12, with these planes serving as two end faces thereof, forms a region that satisfies the conditions of the respective parameters. That is, by allowing the ratio α and ratio β to be included in the region (space) V12 surrounded by the plane Sp12, the plane Sp13 and the circumferential surface S12 having these two planes as its two end faces, the conditions of the respective parameters can be satisfied. In this case, it is supposed that the region (space) V12 includes the plane Sp12, the plane Sp13 and the circumferential surface S12.

$$(100\ \text{nm} \leq L \leq 120\ \text{nm})$$

In the case when the total film thickness L is represented by 100 nm ≤ L ≤ 120 nm, a region (space) V 13, which is surrounded by the third plane Sp13 defined by the third region R13, the fourth plane Sp14 defined by the fourth region R14 and a circumferential surface S 13, with these planes serving as two end faces thereof, forms a region that satisfies the conditions of the respective parameters. That is, by allowing the ratio α and ratio β to be included in the region (space) V13 surrounded by the plane Sp13, the plane Sp14 and the circumferential surface S 13 having these two planes as its two end faces, the conditions of the respective parameters can be satisfied. In this case, it is supposed that the region (space) V13 includes the plane Sp13, the plane Sp14 and the circumferential surface S13.

$$(120\ \text{nm} \leq L \leq 140\ \text{nm})$$

In the case when the total film thickness L is represented by 120 nm ≤ L ≤ 140 nm, a region (space) V14, which is surrounded by the fourth plane Sp14 defined by the fourth region R14, the fifth plane Sp15 defined by the fifth region R15 and a circumferential surface S14, with these planes serving as two end faces thereof, forms a region that satisfies the conditions of the respective parameters. That is, by allowing the ratio α and ratio β to be included in the region (space) V14 surrounded by the plane Sp14, the plane Sp15 and the circumferential surface S14 having these two planes as its two end faces, the conditions of the respective parameters can be satisfied. In this case, it is supposed that the region (space) V14 includes the plane Sp14, the plane Sp15 and the circumferential surface S14.

$$(140\ \text{nm} \leq L \leq 160\ \text{nm})$$

In the case when the total film thickness L is represented by 140 nm ≤ L ≤ 160 nm, a region (space) V15, which is surrounded by the fifth plane Sp15 defined by the fifth region R15, the sixth plane Sp16 defined by the sixth region R16 and a circumferential surface S 15, with these planes serving as two end faces thereof, forms a region that satisfies the conditions of the respective parameters. That is, by allowing the ratio α and ratio β to be included in the region (space) V15 surrounded by the plane Sp15, the plane Sp16 and the circumferential surface S15 having these two planes as its two end faces, the conditions of the respective parameters can be satisfied. In this case, it is supposed that the region (space) V15 includes the plane Sp15, the plane Sp16 and the circumferential surface S 15.

$$(160\ \text{nm} \leq L \leq 180\ \text{nm})$$

In the case when the total film thickness L is represented by 160 nm ≤ L ≤ 180 nm, a region (space) V16, which is surrounded by the sixth plane Sp 16 defined by the sixth region R16, the seventh plane Sp17 defined by the seventh region R17 and a circumferential surface S16, with these planes serving as two end faces thereof, forms a region that satisfies the conditions of the respective parameters. That is, by allowing the ratio α and ratio β to be included in the region (space) V16 surrounded by the plane Sp16, the plane Sp17 and the circumferential surface S16 having these two planes as its two end faces, the conditions of the respective parameters can be satisfied. In this case, it is supposed that the region (space) V16 includes the plane Sp16, the plane Sp17 and the circumferential surface S16.

In this manner, the total film thickness L is determined, and by setting the film thicknesses of the respective layers within a region indicated by half-tone dot meshing so as to satisfy the ratio α and the ratio β, a laminated film that satisfies the conditions of the respective parameters can be manufactured.

In the above-mentioned description, a region that satisfies the conditions of respective parameters in a structure other than the structure having a specific total film thickness L is prepared as a region surrounded by a circumferential surface S with adjacent regions having specific total film thicknesses L being allowed to form two end faces thereof; however, the region that satisfies the conditions of the respective parameters is not limited to this example. For example, a region that satisfies the conditions of respective parameters in a case other than the case in which the total film thickness L has a specific value may be prepared as a region in which regions of adjacent specific film thicknesses L are overlapped with each other with respect to the values.

First, an explanation will be given by exemplifying a case in which the visible light-ray transmittance, the blue index and the red index are used as the parameters. In Fig. 33A, by using the visible light-ray transmittance, the blue index and the red index as the parameters, regions that satisfy the conditions of the respective parameters are mapped on the same plane. In this example, regions are shown in the case of the total film thickness L of 160 nm and 180 nm.

As shown in Fig. 33A, by mapping regions of adjacent specific total film thicknesses L on the same plane, a region where the two regions are overlapped with each other is formed. At this time, the overlapped region is defined as a region that satisfies the conditions of the respective parameters. The mutually overlapped regions can be determined based upon approximation curves that form the respective regions.

$$(80\ \text{nm} < L < 90\ \text{nm})$$

In the case when the total film thickness L exceeds 80 nm and is less than 90 nm, based upon regions that satisfy the conditions of the respective parameters shown in Fig. 17A and Fig. 17B, a region that is surrounded by the following formula (8), formula (10) and formula (11) corresponds to a region that satisfies the conditions of the respective parameters.

$$\alpha=0.012114 \quad \cdots(8)$$

$$\alpha=-3\times10^{-5}\beta^2+0.0014\beta+0.0038 \quad \cdots(10)$$

$$\alpha=-2\times10^{-5}\beta^2+0.0006\beta+0.0112 \quad \cdots(11)$$

$$(90\ \text{nm} < L < 100\ \text{nm})$$

In the case when the total film thickness L exceeds 90 nm and is less than 100 nm, based upon regions that satisfy the conditions of the respective parameters shown in Fig. 17B and Fig. 18A, a region that is surrounded by the following formulas (11) to (15) corresponds to a region that satisfies the conditions of the respective parameters.

$$\alpha=-2\times10^{-5}\beta^2+0.0006\beta+0.0112 \quad \cdots(11)$$

$$\alpha=0.010589 \quad \cdots(12)$$

$$\alpha=-0.0002\beta^2+0.0055\beta+0.0057 \quad \cdots(13)$$

$$\alpha=-0.0002\beta^2+0.0045\beta-0.0067 \quad \cdots(14)$$

$$\alpha=-4\times10^{-5}\beta^2+0.001\beta+0.0099 \quad \cdots(15)$$

$$(100\ \text{nm} < L < 120\ \text{nm})$$

In the case when the total film thickness L exceeds 100 nm and is less than 120 nm, based upon regions that satisfy the conditions of the respective parameters shown in Fig. 18A and Fig. 18B, a region that is surrounded by the following formulas (15) to (19) corresponds to a region that satisfies the conditions of the respective parameters.

$$\alpha=-4\times10^{-5}\beta^2+0.001\beta+0.0099 \quad \cdots(15)$$

$$\alpha=0.009403 \quad \cdots(16)$$

$$\alpha=-0.0003\beta^2+0.0074\beta+0.0033 \quad \cdots(17)$$

$$\alpha=-0.0014\beta^2+0.0191\beta-0.0422 \quad \cdots(18)$$

$$\alpha=-9\times10^{-5}\beta^2+0.0015\beta+0.0084 \quad \cdots(19)$$

(120 nm < L < 140 nm)

In the case when the total film thickness L exceeds 120 nm and is less than 140 nm, based upon regions that satisfy the conditions of the respective parameters shown in Fig. 18B and Fig. 19A, a region that is surrounded by the following formulas (20) to (23) corresponds to a region that satisfies the conditions of the respective parameters.

$$\alpha=0.007709 \quad \cdots(20)$$

$$\alpha=-0.0014\beta^2+0.0136\beta-0.0027 \quad \cdots(21)$$

$$\beta=10132\alpha^2-241.39\alpha+4.747 \quad \cdots(22)$$

$$\alpha=-0.0001\beta^2+0.002\beta+0.0074 \quad \cdots(23)$$

(140 nm < L < 160 nm)

In the case when the total film thickness L exceeds 140 nm and is less than 160 nm, based upon regions that satisfy the conditions of the respective parameters shown in Fig. 19A and Fig. 19B, a region that is surrounded by the following formulas (23) to (28) corresponds to a region that satisfies the conditions of the respective parameters.

$$\alpha=-0.0001\beta^2+0.002\beta+0.0074 \quad \cdots(23)$$

$$\alpha=0.006523 \quad \cdots(24)$$

$$\alpha=-0.005\beta^2+0.0273\beta-0.0145 \quad \cdots(25)$$

$$\alpha=0.0043\beta^2-0.0332\beta+0.07 \quad \cdots(26)$$

$$\beta=2.875 \quad \cdots(27)$$

$$\alpha=-0.0001\beta^2+0.0025\beta+0.0062 \quad \cdots(28)$$

(160 nm < L < 180 nm)

In the case when the total film thickness L exceeds 160 nm and is less than 180 nm, based upon regions that satisfy the conditions of the respective parameters shown in Fig. 19B and Fig. 20, a region that is surrounded by the following formulas (28) to (32) corresponds to a region that satisfies the conditions of the respective parameters.

$$\alpha=-0.0001\beta^2+0.0025\beta+0.0062 \quad \cdots(28)$$

$$\alpha=0.005676 \quad \cdots(29)$$

$$\alpha=-0.0103\beta^2+0.047\beta-0.0322 \quad \cdots(30)$$

$$\alpha=0.0093\beta^2-0.0677\beta+0.1212 \quad \cdots(31)$$

$$\alpha=-0.0003\beta^2+0.0036\beta+0.0046 \quad \cdots(32)$$

First, an explanation will be given by exemplifying a case in which in addition to the visible light-ray transmittance, the blue index and the red index, a shading coefficient is also included as the parameters. In Fig. 33B, by using the visible light-ray transmittance, the blue index, the red index and the shading coefficient as the parameters, regions that satisfy the conditions of the respective parameters are mapped on the same plane. In this example, regions are shown in the case of the total film thickness L of 160 nm and 180 nm.

As shown in Fig. 33B, by mapping regions of adjacent specific total film thicknesses L on the same plane, a region where the two regions are overlapped with each other is formed. At this time, the overlapped region is defined as a region that satisfies the conditions of the respective parameters. The mutually overlapped regions can be determined based upon approximation curves that form the respective regions.

Additionally, in the case when the total film thickness L exceeds 80 nm and is less than 90 nm, even when regions that satisfy the conditions of the respective parameters shown in Fig. 21A and Fig. 21B are mapped on the same plane, no mutually overlapped regions exist; therefore, the mutually overlapped regions are not determined by this method.

(90 nm < L < 100 nm)

In the case when the total film thickness L exceeds 90 nm and is less than 100 nm, based upon regions that satisfy the conditions of the respective parameters shown in Fig. 21B and Fig. 22A, a region that is surrounded by the following formula (11), formula (14), formula (15) and formula (35) corresponds to a region that satisfies the conditions of the respective parameters.

$$\alpha=-2\times10^{-5}\beta^2+0.0006\beta+0.0112 \quad \cdots(11)$$

$$\alpha=-0.0002\beta^2+0.0045\beta-0.0067 \quad \cdots(14)$$

$$\alpha=-4\times10^{-5}\beta^2+0.001\beta+0.0099 \quad \cdots(15)$$

$$\alpha=-1\times10^{-5}\beta^2+0.0002\beta+0.0125 \quad \cdots(35)$$

$$(100\ \text{nm} < L < 120\ \text{nm})$$

In the case when the total film thickness L exceeds 100 nm and is less than 120 nm, based upon regions that satisfy the conditions of the respective parameters shown in Fig. 22A and Fig. 22B, a region that is surrounded by the following formula (15), formula (18), formula (19) and formula (36) corresponds to a region that satisfies the conditions of the respective parameters.

$$\alpha=-4\times10^{-5}\beta^2+0.001\beta+0.0099 \quad \cdots(15)$$

$$\alpha=-0.0014\beta^2+0.0191\beta-0.0422 \quad \cdots(18)$$

$$\alpha=-9\times10^{-5}\beta^2+0.0015\beta+0.0084 \quad \cdots(19)$$

$$\alpha=-3\times10^{-5}\beta^2+0.0004\beta+0.0113 \quad \cdots(36)$$

$$(120\ \text{nm} < L < 140\ \text{nm})$$

In the case when the total film thickness L exceeds 120 nm and is less than 140 nm, based upon regions that satisfy the conditions of the respective parameters shown in Fig. 22B and Fig. 23A, a region that is surrounded by the following formula (19), formula (22), formula (23) and formula (37) corresponds to a region that satisfies the conditions of the respective parameters.

$$\alpha=-9\times10^{-5}\beta^2+0.0015\beta+0.0084 \quad \cdots(19)$$

$$\beta=10132\alpha^2-241.39\alpha+4.747 \quad \cdots(22)$$

$$\alpha=-0.0001\beta^2+0.002\beta+0.0074 \quad \cdots(23)$$

$$\alpha=-7\times10^{-5}\beta^2+0.0007\beta+0.0097 \quad \cdots(37)$$

$$(140\ \text{nm} < L < 160\ \text{nm})$$

In the case when the total film thickness L exceeds 140 nm and is less than 160 nm, based upon regions that satisfy the conditions of the respective parameters shown in Fig. 23A and Fig. 23B, a region that is surrounded by the following formula (23), formula (26), formula (28), formula (27) and formula (38) corresponds to a region that satisfies the conditions of the respective parameters.

$$\alpha=-0.0001\beta^2+0.002\beta+0.0074 \quad \cdots(23)$$

$$\alpha=0.0043\beta^2-0.0332\beta+0.07 \cdots(26)$$

$$\alpha=-0.0001\beta^2+0.0025\beta+0.0062 \cdots(28)$$

$$\beta=2.875 \cdots(27)$$

$$\alpha=-0.0001\beta^2+0.0011\beta+0.0083 \cdots(38)$$

$$(160\text{ nm} < L < 180\text{ nm})$$

In the case when the total film thickness L exceeds 160 nm and is less than 180 nm, based upon regions that satisfy the conditions of the respective parameters shown in Fig. 23B and Fig. 24, a region that is surrounded by the following formula (28), formula (30), formula (32), formula (39) and formula (31) corresponds to a region that satisfies the conditions of the respective parameters.

$$\alpha=-0.0001\beta^2+0.0025\beta+0.0062 \cdots(28)$$

$$\alpha=-0.0103\beta^2+0.047\beta-0.0322 \cdots(30)$$

$$\alpha=-0.0003\beta^2+0.0036\beta+0.0046 \cdots(32)$$

$$\alpha=-0.0002\beta^2+0.0016\beta+0.0067 \cdots(39)$$

$$\alpha=0.0093\beta^2-0.0677\beta+0.1212 \cdots(31)$$

In accordance with the first embodiment, by determining a region that satisfies the conditions of respective parameters relative to the ratio $\alpha$ and ratio $\beta$ that are determined in accordance with the film thicknesses of the respective layers of the reflection layer 3, the film thicknesses of the reflection layer 3 are set so as to allow the ratio $\alpha$ and ratio $\beta$ to be included within this region so that a change in color tone can be suppressed.

<Modified Examples>

The following description will discuss modified examples of the above-mentioned embodiment.

[First Modified Example]

Fig. 34A is a cross-sectional view showing a first modified example of the first embodiment of the present invention. As shown in Fig. 34A, an optical film 1 relating to the first modified example has an incident surface S1 having a concave-convex shape. The concave-convex shape of this incident surface S1 and the concave-convex shape of the first optical layer 4 are, for example, made in association with each other, and the apex portion of the convex portion and the lowermost portion of the concave portion are coincident with each other at their positions. The concave-convex shape of the incident surface S1 is preferably made smoother than the concave-convex shape of the first optical layer 4.

.

[Second Modified Example]

Fig. 34B is a cross-sectional view showing a second modified example of the first embodiment of the present invention. As shown in Fig. 34B, an optical film 1 relating to the second modified example is designed such that the position of the apex portion of the convex shape of the concave-convex surface of the first optical layer 4 with the reflection layer 3 formed thereon is made to have virtually the same height as that of the incident surface S1 of the first optical layer 4.

<2. Second Embodiment>

The second embodiment differs from the first embodiment in that in place of regions that are defined by approximation curves, the regions that are required to be satisfied by the respective parameters are determined by using regions that are defined by approximation straight lines. The approximation straight lines are obtained from the approximation curves found in the first embodiment.

(Derivation Method of Approximation Straight Lines)

First, referring to Fig. 35, the following description will discuss a derivation method of the approximation straight lines from the approximation curves. In this case, an explanation will be given by exemplifying a method in which in the case of L = 140 nm, the approximation straight lines are derived from the approximation curves; however, in the cases of L = 80 nm, L = 90 nm, L = 100 nm, L = 120 nm and L = 160 nm also, the approximation straight lines can be derived by using the same method.

As shown in Fig. 35, approximation curves are curved lines, and with respect to the curved directions, there are two curved directions, that is, (a) a direction opposite to the center of gravity G of the region R5 and (b) a direction toward the center of gravity G of the region R5. More specifically, in the case of L = 140 nm, the curved directions of approximation curves indicated by formula (21) and formula (23) correspond to (a) the directions opposite to the center of gravity G of the region R5, while the curved direction of an approximation curve indicated by formula (22) corresponds to (b) the direction toward the center of gravity G of the region R5. Since the derivation method of approximation straight lines is different depending on the curved directions of these approximation curves, the following description will explain the derivation methods of the approximation curves in divided manners in (a) the curved direction in a direction opposite to the center of gravity G of the region R5 and in (b) the direction toward the center of gravity G of the region R5.

(a) Curved Direction in a direction opposite to Center of Gravity of Region R5

From an approximation curve indicated by formula (21), an approximation straight line indicated by formula (21a) can be found, for example, in the following manner. For example, coordinates of intersections A and B between a straight line (24) that intersects with an approximation curve indicated by formula (21) and an approximation curve (23) are found. Next, a straight line that passes through the coordinates of these two intersections A and B is found, and this straight line is defined as an approximation straight line (21a).

From the approximation curve indicated by formula (23), the approximation straight line indicated by formula (23a) is found, for example, in the following manner. First, coordinates of intersections B and C between a curved line (21) that intersects with an approximation curved line indicated by formula (23) and an approximation curved line (22) are found. Next, a straight line that passes through the coordinates of these two intersections B and C is found, and this straight line is defined as an approximation straight line (23a).

(b) Curved Direction in a Direction toward Center of Gravity of Region R5

From an approximation curve indicated by formula (22), an approximation straight line indicated by formula (22a) can be found, for example, in the following manner. First, coordinates of intersections C and D between a curved line (23) that intersects with an approximation curved line indicated by formula (22) and a straight line (24) are found. Next, a straight line 22m that passes through the coordinates of these two intersections C and D is found. Next, a straight line (tangential line) that is in parallel with this straight line 22m and is also inscribed in the approximation curve 22 is found, and this straight line is defined as an approximation straight line (22a).

(Regions satisfying Conditions of Three Parameters)

First, with respect to a case in which the visible light-ray transmittance, the blue index and the red index are used as parameters, an explanation will be given on regions satisfying the conditions of these parameters for each of the total film thicknesses L of the reflection layer 3.

$$(L = 80\ nm)$$

Fig. 36A is an $\alpha$-$\beta$ correlation diagram based upon the conditions of the visible light-ray transmittance, the blue index and the red index in the case of the total film thickness L of 80 nm. In Fig. 36A, since a border line between a region that satisfies the conditions of the visible light-ray transmittance and a region that does not satisfy the conditions thereof is located outside the region indicated by half-tone dot meshing, the illustration in the Fig. is omitted. Additionally in Fig. 36B to Fig. 38B to be used in the following explanations, the illustration of the border line is omitted in the same manner.

From formulas (5) to (7) of the approximation curves that define the region R1 (Fig. 17A), formulas (5a) to (7a) of the following approximation straight lines are derived. Additionally, since formula (8) of the following straight line that defines the region R1 (Fig. 17A) is set so as to prevent the film thickness of the metal layer from becoming 5 nm or less, as has been described in the first embodiment, the formula is also used in the second embodiment, without being particularly modified.

$$ab:\alpha=0.004236\beta+0.007158 \quad \cdots(5a)$$

$$bd:\alpha=0.000172\beta+0.012238 \quad \cdots(7a)$$

$$dc:\alpha=0.000317\beta+0.009179 \quad \cdots(6a)$$

$$ca:\alpha=0.012114 \quad \cdots(8)$$

In this case, a region (hereinafter, referred to as "first region R1a"), which is defined by the approximation straight lines indicated by these formulas (5a) to (7a) and the straight line indicated by formula (8), corresponds to a region satisfying the conditions of the respective parameters of the visible light-ray transmittance, the blue index and the red index. That is, by allowing the ratio $\alpha$ and ratio $\beta$ to be included in the first region R1a, the conditions of the respective parameters can be satisfied. In this case, it is supposed that the first region R1a includes the approximation straight lines indicated by formulas (5a) to (7a) and the straight line indicated by formula (8). Additionally, in the following description, of the plane of L = 80 nm, a portion defined by the first region R1 a is referred to as "first plane Sp1a" on demand.

$$(L = 90\ nm)$$

Fig. 36B is an $\alpha$-$\beta$ correlation diagram based upon the conditions of the visible light-ray transmittance, the blue index and the red index in the case of the total film thickness of 90 nm. From formulas (9) to (11) of the approximation curves that define the region R2 (Fig. 17B), formulas (9a) to (11a) of the following approximation straight lines are derived. Additionally, since formula (12) of the following straight line that defines the region R2 (Fig. 17B) is set so as to prevent the film thickness of the metal layer from becoming 5 nm or less, as has been described in the first embodiment, the formula is also used in the second embodiment, without being particularly modified.

$$ab:\alpha=0.003388\beta+0.008895 \quad \cdots(9a)$$

$$bd:\alpha=0.000371\beta+0.011309 \quad \cdots(11a)$$

$$dc:\alpha=0.000934\beta+0.005454 \quad \cdots(10a)$$

$$ca:\alpha=0.010589 \cdots(12)$$

A region (hereinafter, referred to as "second region R2a"), which is defined by the approximation straight lines indicated by these formulas (9a) to (11a) and the straight line indicated by formula (12), corresponds to a region satisfying the conditions of the respective parameters of the visible light-ray transmittance, the blue index and the red index. That is, by allowing the ratio $\alpha$ and ratio $\beta$ to be included in the second region R2a, the above-mentioned conditions of the respective parameters can be satisfied. In this case, it is supposed that the second region R2a includes the approximation straight lines indicated by formulas (9a) to (11a) and the straight line indicated by formula (12). Additionally, in the following description, of the plane of L = 90 nm, a portion defined by the second region R2a is referred to as "second plane Sp2a" on demand.

(L = 100 nm)

Fig. 37A is an $\alpha$-$\beta$ correlation diagram based upon the conditions of the visible light-ray transmittance, the blue index and the red index in the case of the total film thickness of 100 nm. From formulas (13) to (15) of the approximation curves that define the region R3 (Fig. 18A), formulas (13a) to (15a) of the following approximation straight lines are derived. Additionally, since formula (16) of the following straight line that defines the region R3 (Fig. 18A) is set so as to prevent the film thickness of the metal layer from becoming 5 nm or less, as has been described in the first embodiment, the formula is also used in the second embodiment, without being particularly modified.

$$ab:\alpha=0.005083\beta+0.005845 \cdots(13a)$$

$$bc:\alpha=0.000616\beta+0.010312 \cdots(15a)$$

$$cd:\alpha=0.00234\beta-0.00089 \cdots(14a)$$

$$da:\alpha=0.009403 \cdots(16)$$

A region (hereinafter, referred to as "third region R3a"), which is defined by the approximation straight lines indicated by these formulas (13a) to (15a) and the straight line indicated by formula (16), corresponds to a region satisfying the conditions of the respective parameters of the visible light-ray transmittance, the blue index and the red index. That is, by allowing the ratio $\alpha$ and ratio $\beta$ to be included in the third region R3a, the above-mentioned conditions of the respective parameters can be satisfied. In this case, it is supposed that the third region R3a includes the approximation straight lines indicated by formulas (13a) to (15a) and the straight line indicated by formula (16). Additionally, in the following description, of the plane of L = 100 nm, a portion defined by the third region R3a is referred to as "third plane Sp3a" on demand.

(L = 120 nm)

Fig. 37B is an $\alpha$-$\beta$ correlation diagram based upon the conditions of the visible light-ray transmittance, the blue index and the red index in the case of the total film thickness of 120 nm. From formulas (17) to (19) of the approximation curves that define the region R4 (Fig. 18B), formulas (17a) to (19a) of the following approximation straight lines are derived. Additionally, since formula (20) of the following straight line that defines the region R4 (Fig. 18B) is set so as to prevent the film thickness of the metal layer from becoming 5 nm or less, as has been described in the first embodiment, the formula is also used in the second embodiment, without being particularly modified.

$$ab:\alpha=0.006777\beta+0.003643 \cdots(17a)$$

$$bc:\alpha=0.001062\beta+0.008786 \quad \cdots(19a)$$

$$cd:\alpha=0.008601\beta-0.02326 \quad \cdots(18a)$$

$$da:\alpha=0.007709 \quad \cdots(20)$$

A region (hereinafter, referred to as "fourth region R4a"), which is defined by the approximation straight lines indicated by these formulas (17a) to (19a) and the straight line indicated by formula (20), corresponds to a region satisfying the conditions of the respective parameters of the visible light-ray transmittance, the blue index and the red index. That is, by allowing the ratio α and ratio β to be included in the fourth region R4a, the above-mentioned conditions of the respective parameters can be satisfied. In this case, it is supposed that the fourth region R4a includes the approximation straight lines indicated by formulas (17a) to (19a) and the straight line indicated by formula (20). Additionally, in the following description, of the plane of L = 120 nm, a portion defined by the fourth region R4a is referred to as "fourth plane Sp4a" on demand.

(L = 140)

Fig. 38A is an α-β correlation diagram based upon the conditions of the visible light-ray transmittance, the blue index and the red index in the case of the total film thickness of 140 nm. From formulas (21) to (23) of the approximation curves that define the region R5 (Fig. 19A), formulas (21a) to (23a) of the following approximation straight lines are derived. Additionally, since formula (24) of the following straight line that defines the region R5 (Fig. 19A) is set so as to prevent the film thickness of the metal layer from becoming 5 nm or less, as has been described in the first embodiment, the formula is also used in the second embodiment, without being particularly modified.

$$ab:\alpha=0.010843\beta-0.00161 \quad \cdots(21a)$$

$$bc:\alpha=0.001603\beta+0.00763 \quad \cdots(23a)$$

$$cd:\alpha=-0.01414\beta+0.056433 \quad \cdots(22a)$$

$$da:\alpha=0.006523 \quad \cdots(24)$$

A region (hereinafter, referred to as "fifth region R5a"), which is defined by the approximation straight lines indicated by these formulas (21a) to (23a) and the straight line indicated by formula (24), corresponds to a region satisfying the conditions of the respective parameters of the visible light-ray transmittance, the blue index and the red index. That is, by allowing the ratio α and ratio β to be included in the fifth region R5a, the above-mentioned conditions of the respective parameters can be satisfied. In this case, it is supposed that the fifth region R5a includes the approximation straight lines indicated by formulas (21a) to (23a) and the straight line indicated by formula (24). Additionally, in the following description, of the plane of L = 140 nm, a portion defined by the fifth region R5a is referred to as "fifth plane Sp5a" on demand.

(L = 160 nm)

Fig. 38B is an α-β correlation diagram based upon the conditions of the visible light-ray transmittance, the blue index and the red index in the case of the total film thickness of 160 nm. From formulas (25), (26) and (28) of the approximation curves that define the region R6 (Fig. 19B), formulas (25a), (26a) and (28a) of the following approximation straight lines are derived. In this case, a side composed of two approximation curves of formula (26) and formula (27) shown in Fig. 19B is determined by finding a straight line inscribed in the approximation curve of formula (26) and given as an approximation straight line (26a). Additionally, since formula (29) of the following straight line that defines the region R6 (Fig. 19B) is set so as to prevent the film thickness of the metal layer from becoming 5 nm or less, as has been described in the first embodiment, the formula is also used in the second embodiment, without being particularly modified.

$$ab: \alpha=0.019766\beta-0.01211 \quad \cdots(25a)$$

$$bc: \alpha=0.002186\beta+0.006345 \quad \cdots(28a)$$

$$cd: \alpha=-0.00691\beta+0.029828 \quad \cdots(26a)$$

$$da: \alpha=0.005676 \quad \cdots(29)$$

A region (hereinafter, referred to as "sixth region R6a"), which is defined by the approximation straight lines indicated by these formulas (25a), (26a) and (28a) and, the straight line indicated by formula (29), corresponds to a region satisfying the conditions of the respective parameters of the visible light-ray transmittance, the blue index and the red index. That is, by allowing the ratio $\alpha$ and ratio $\beta$ to be included in the sixth region R6a, the above-mentioned conditions of the respective parameters can be satisfied. In this case, it is supposed that the sixth region R6a includes the approximation straight lines indicated by formulas (25a), (26a) and (28a) and the straight line indicated by formula (29). Additionally, in the following description, of the plane of L = 160 nm, a portion defined by the sixth region R6a is referred to as "sixth plane Sp6a" on demand.

As shown in Fig. 39, it is considered that a region that satisfies the conditions of the respective parameters is continuously formed relative to the total film thickness L. Therefore, in the case of a total film thickness other than the predetermined total film thicknesses L = 80 nm, 90 nm, ..., 160 nm, a region, which is surrounded by a circumferential surface S, with the adjacent regions of the predetermined total film thicknesses L serving as two end faces, is defined as a region that satisfies the conditions of the respective parameters.

The following description will discuss a case in which by using the visible light-ray transmittance, the blue index and the red index as the parameters, the total film thickness L is set to a value between predetermined total film thicknesses L (= 80 nm, 90 nm, ..., 160 nm) so as to satisfy the conditions of the parameters.

(80 nm < L < 90 nm)

Based upon the positions of the respective apexes in the regions that satisfy the conditions of the respective parameters shown in Fig. 36A and Fig. 36B, the following formulas (41) to (44) are obtained.

$$aa: (\beta-0.5)/0.67=(\alpha-0.01059)/0.001524=(L-90)/(-10) \quad \cdots(41)$$

$$bb: (\beta-0.8)/0.45=(\alpha-0.01161)/0.000847=(L-90)/(-10) \quad \cdots(42)$$

$$dd: (\beta-10.4)/10.6=(\alpha-0.01516)/0.0006776=(L-90)/(-10) \quad \cdots(43)$$

$$cc: (\beta-5.5)/3.75=(\alpha-0.01059)/0.0015247=(L-90)/(-10) \quad \cdots(44)$$

In the case when the total film thickness L is represented by 80 nm < L < 90 nm, a region (space) V1a that is surrounded by the following four surfaces forms a region that satisfies the conditions of the respective parameters. That is, by allowing the ratio $\alpha$ and ratio $\beta$ to be included in the region (space) V1a, the conditions of the respective parameters can be satisfied.

Surface in which the approximation straight lines of formula (41) and formula (42) form two opposed sides ...s1

Surface in which the approximation straight lines of formula (42) and formula (43) form two opposed sides ...s2

Surface in which the approximation straight lines of formula (43) and formula (44) form two opposed sides ...s3

Surface in which the approximation straight lines of formula (44) and formula (41) form two opposed sides ...s4

In this case, it is supposed that the region (space) V1a includes the approximation straight lines of formulas (41) to (44) themselves.

The surface in which the approximation straight lines of formula (41) and formula (42) form two opposed sides corresponds to a surface formed in the following manner. That is, the surface is formed by moving a line segment ab in an L-axis direction (direction in which the total film thickness L increases), while its positional relationship is kept in parallel with the first plane Sp1a, with its two end points being shifted along a line segment aa (line segment represented by formula (41)) and a line segment bb (line segment represented by formula (42)). In this case, the moving range of the line segment ab is in a range of 80 nm < L < 90 nm.

The surface in which the approximation straight lines of formula (42) and formula (43) form two opposed sides corresponds to a surface formed in the following manner. That is, the surface is formed by moving a line segment bd in the L-axis direction (direction in which the total film thickness L increases), while its positional relationship is kept in parallel with the first plane Sp1a, with its two end points being shifted along a line segment bb (line segment represented by formula (42)) and a line segment dd (line segment represented by formula (43)). In this case, the moving range of the line segment bd is in a range of 80 nm < L < 90 nm.

The surface in which the approximation straight lines of formula (43) and formula (44) form two opposed sides corresponds to a surface formed in the following manner. That is, the surface is formed by moving a line segment dc in the L-axis direction (direction in which the total film thickness L increases), while its positional relationship is kept in parallel with the first plane Sp1a, with its two end points being shifted along a line segment dd (line segment represented by formula (43)) and a line segment cc (line segment represented by formula (44)). In this case, the moving range of the line segment dc is in a range of 80 nm < L < 90 nm.

The surface in which the approximation straight lines of formula (44) and formula (41) form two opposed sides corresponds to a surface formed in the following manner. That is, the surface is formed by moving a line segment ca in the L-axis direction (direction in which the total film thickness L increases), while its positional relationship is kept in parallel with the first plane Sp1a, with its two end points being shifted along a line segment cc (line segment represented by formula (44)) and a line segment aa (line segment represented by formula (41)). In this case, the moving range of the line segment ca is in a range of 80 nm < L < 90 nm.

$$(90\ \mathrm{nm} < L < 100\ \mathrm{nm})$$

Based upon the positions of the respective apexes in the regions that satisfy the conditions of the respective parameters shown in Fig. 36B and Fig. 37A, the following formulas (51) to (54) are obtained.

$$\mathrm{aa}:(\beta-0.7)/(-0.2)=(\alpha-0.0094)/0.001185=(L-100)/(-10) \quad \cdots(51)$$

$$\mathrm{bb}:(\beta-1)/(-0.2)=(\alpha-0.01093)/0.0006776=(L-100)/(-10) \quad \cdots(52)$$

$$\mathrm{dc}:(\beta-6.5)/3.9=(\alpha-0.01432)/0.000847=(L-100)/(-10) \quad \cdots(53)$$

$$\mathrm{cd}:(\beta-4.4)/1.1=(\alpha-0.0094)/0.001186=(L-100)/(-10) \quad \cdots(54)$$

In the case when the total film thickness L is represented by 90 nm < L < 100 nm, a region (space) V2a that is surrounded by the following four surfaces forms a region that satisfies the conditions of the respective parameters. That is, by allowing the ratio $\alpha$ and ratio $\beta$ to be included in the region (space) V2a, the conditions of the respective parameters can be satisfied.

Surface in which the approximation straight lines of formula (S1) and formula (52) form two opposed sides ...s1
Surface in which the approximation straight lines of formula (52) and formula (53) form two opposed sides ...s2
Surface in which the approximation straight lines of formula (53) and formula (54) form two opposed sides ...s3
Surface in which the approximation straight lines of formula (54) and formula (51) form two opposed sides ...s4

In this case, it is supposed that the region (space) V2a includes the approximation straight lines of formulas (51) to (54) themselves.

The surface in which the approximation straight lines of formula (51) and formula (52) form two opposed sides corresponds to a surface formed in the following manner. That is, the surface is formed by moving a line segment ab in an L-axis direction (direction in which the total film thickness L increases), while its positional relationship-is kept in parallel with the second plane Sp2a, with its two end points being shifted along a line segment aa (line segment represented by formula (51)) and a line segment bb (line segment represented by formula (52)). In this case, the moving range of the line segment ab is in a range of 90 nm < L < 100 nm.

The surface in which the approximation straight lines of formula (52) and formula (53) form two opposed sides corresponds to a surface formed in the following manner. That is, the surface is formed by moving a line segment bd in the L-axis direction (direction in which the total film thickness L increases), while its positional relationship is kept in parallel with the second plane Sp2a, with its two end points being shifted along a line segment bb (line segment represented by formula (52)) and a line segment dc (line segment represented by formula (53)). In this case, the moving range of the line segment bd is in a range of 90 nm < L < 100 nm.

The surface in which the approximation straight lines of formula (53) and formula (54) form two opposed sides corresponds to a surface formed in the following manner. That is, the surface is formed by moving a line segment dc in the L-axis direction (direction in which the total film thickness L increases), while its positional relationship is kept in parallel with the second plane Sp2a, with its two end points being shifted along a line segment dc (line segment represented by formula (53)) and a line segment cd (line segment represented by formula (54)). In this case, the moving range of the line segment dc is in a range of 90 nm < L < 100 nm.

The surface in which the approximation straight lines of formula (54) and formula (51) form two opposed sides corresponds to a surface formed in the following manner. That is, the surface is formed by moving a line segment ca in the L-axis direction (direction in which the total film thickness L increases), while its positional relationship is kept in parallel with the second plane Sp2a, with its two end points being shifted along a line segment cd (line segment represented by formula (54)) and a line segment aa (line segment represented by formula (51)). In this case, the moving range of the line segment ca is in a range of 90 nm < L < 100 nm.

$$(100\ \mathrm{nm} < L < 120\ \mathrm{nm})$$

Based upon the positions of the respective apexes in the regions that satisfy the conditions of the respective parameters shown in Fig. 37A and Fig. 37B, the following formulas (61) to (64) are obtained.

$$aa:(\beta-0.6)/0.1=(\alpha-0.00771)/0.001694=(L-120)/(-20)\quad\cdots(61)$$

$$bb:(\beta-0.9)/0.1=(\alpha-0.00974)/0.001185=(L-120)/(-20)\quad\cdots(62)$$

$$cc:(\beta-4.25)/2.25=(\alpha-0.0133)/0.0010165=(L-120)/(-20)\quad\cdots(63)$$

$$dd:(\beta-3.6)/0.8=(\alpha-0.00771)/0.0016942=(L-120)/(-20)\quad\cdots(64)$$

In the case when the total film thickness L is represented by 100 nm < L < 120 nm, a region (space) V3a that is surrounded by the following four surfaces forms a region that satisfies the conditions of the respective parameters. That is, by allowing the ratio $\alpha$ and ratio $\beta$ to be included in the region (space) V3a, the conditions of the respective parameters can be satisfied.

Surface in which the approximation straight lines of formula (61) and formula (62) form two opposed sides ...s1
Surface in which the approximation straight lines of formula (62) and formula (63) form two opposed sides ...s2
Surface in which the approximation straight lines of formula (63) and formula (64) form two opposed sides ...s3
Surface in which the approximation straight lines of formula (64) and formula (61) form two opposed sides ...s4

In this case, it is supposed that the region (space) V3a includes the approximation straight lines of formulas (61) to (64) themselves.

The surface in which the approximation straight lines of formula (61) and formula (62) form two opposed sides corresponds to a surface formed in the following manner. That is, the surface is formed by moving a line segment ab in an L-axis direction (direction in which the total film thickness L increases), while its positional relationship is kept in parallel with the third plane Sp3a, with its two end points being shifted along a line segment aa (line segment represented by formula (61)) and a line segment bb (line segment represented by formula (62)). In this case, the moving range of the line segment ab is in a range of 100 nm < L < 120 nm.

The surface in which the approximation straight lines of formula (62) and formula (63) form two opposed sides corresponds to a surface formed in the following manner. That is, the surface is formed by moving a line segment be in the L-axis direction (direction in which the total film thickness L increases), while its positional relationship is kept in parallel with the third plane Sp3a, with its two end points being shifted along a line segment bb (line segment represented by formula (62)) and a line segment cc (line segment represented by formula (63)). In this case, the moving range of the line segment bc is in a range of 100 nm < L < 120 nm.

The surface in which the approximation straight lines of formula (63) and formula (64) form two opposed sides corresponds to a surface formed in the following manner. That is, the surface is formed by moving a line segment cd in the L-axis direction (direction in which the total film thickness L increases), while its positional relationship is kept in parallel with the third plane Sp3a, with its two end points being shifted along a line segment cc (line segment represented by formula (63)) and a line segment dd (line segment represented by formula (64)). In this case, the moving range of the line segment cd is in a range of 100 nm < L < 120 nm.

The surface in which the approximation straight lines of formula (64) and formula (61) form two opposed sides corresponds to a surface formed in the following manner. That is, the surface is formed by moving a line segment da in the L-axis direction (direction in which the total film thickness L increases), while its positional relationship is kept in parallel with the third plane Sp3a, with its two end points being shifted along a line segment dd (line segment represented by formula (64)) and a line segment aa (line segment represented by formula (61)). In this case, the moving range of the line segment da is in a range of 100 nm < L < 120 nm.

$$(120\ \text{nm} < L < 140\ \text{nm})$$

Based upon the positions of the respective apexes in the regions that satisfy the conditions of the respective parameters shown in Fig. 37B and Fig. 38A, the following formulas (71) to (74) are obtained.

$$aa:(\beta-0.75)/(-0.15)=(\alpha-0.00652)/0.001185=(L-140)/(-20) \quad \cdots(71)$$

$$bb:(\beta-1)/(-0.1)=(\alpha-0.00923)/0.0005082=(L-140)/(-20) \quad \cdots(72)$$

$$cc:(\beta-3.1)/1.15=(\alpha-0.0216)/0.0006994=(L-140)/(-20) \quad \cdots(73)$$

$$dd:(\beta-3.53)/0.07=(\alpha-0.00652)/0.0011859=(L-140)/(-20) \quad \cdots(74)$$

In the case when the total film thickness L is represented by 120 nm < L < 140 nm, a region (space) V4a that is surrounded by the following four surfaces forms a region that satisfies the conditions of the respective parameters. That is, by allowing the ratio $\alpha$ and ratio $\beta$ to be included in the region (space) V4a, the conditions of the respective parameters can be satisfied.

Surface in which the approximation straight lines of formula (71) and formula (72) form two opposed sides ...s1
Surface in which the approximation straight lines of formula (72) and formula (73) form two opposed sides ...s2
Surface in which the approximation straight lines of formula (73) and formula (74) form two opposed sides ...s3
Surface in which the approximation straight lines of formula (74) and formula (71) form two opposed sides ...s4

In this case, it is supposed that the region (space) V4a includes the approximation straight lines of formulas (71) to (74) themselves.

The surface in which the approximation straight lines of formula (71) and formula (72) form two opposed sides corresponds to a surface formed in the following manner. That is, the surface is formed by moving a line segment ab in an L-axis direction (direction in which the total film thickness L increases), while its positional relationship is kept in parallel with the fourth plane Sp4a, with its two end points being shifted along a line segment aa (line segment represented by formula (71)) and a line segment bb (line segment represented by formula (72)). In this case, the moving range of the line segment ab is in a range of 120 nm < L < 140 nm.

The surface in which the approximation straight lines of formula (72) and formula (73) form two opposed sides corresponds to a surface formed in the following manner. That is, the surface is formed by moving a line segment bc in the L-axis direction (direction in which the total film thickness L increases), while its positional relationship is kept in parallel with the fourth plane Sp4a, with its two end points being shifted along a line segment bb (line segment represented by formula (72)) and a line segment cc (line segment represented by formula (73)). In this case, the moving range of the line segment bc is in a range of 120 nm < L < 140 nm.

The surface in which the approximation straight lines of formula (73) and formula (74) form two opposed sides corresponds to a surface formed in the following manner. That is, the surface is formed by moving a line segment cd in the L-axis direction (direction in which the total film thickness L increases), while its positional relationship is kept in parallel with the fourth plane Sp4a, with its two end points being shifted along a line segment cc (line segment represented by formula (73)) and a line segment dd (line segment represented by formula (74)). In this case, the moving range of the line segment cd is in a range of 120 nm < L < 140 nm.

The surface in which the approximation straight lines of formula (74) and formula (71) form two opposed sides corresponds to a surface formed in the following manner. That is, the surface is formed by moving a line segment da in the L-axis direction (direction in which the total film thickness L increases), while its positional relationship is kept in parallel with the fourth plane Sp4a, with its two end points being shifted along a line segment dd (line segment represented by formula (74)) and a line segment aa (line segment represented by formula (71)). In this case, the moving range of the line segment da is in a range of 120 nm < L < 140 nm.

$$(140\ \text{nm} < L < 160\ \text{nm})$$

Based upon the positions of the respective apexes in the regions that satisfy the conditions of the respective parameters shown in Fig. 38A and Fig. 38B, the following formulas (81) to (84) are obtained.

$$aa:(\beta-0.9)/(-0.15)=(\alpha-0.00568)/0.0008471=(L-160)/(-20) \quad \cdots(81)$$

$$bb:(\beta-1.05)/(-0.05)=(\alpha-0.00864)/0.00059297=(L-160)/(-20) \quad \cdots(82)$$

$$cc:(\beta-2.582)/0.518=(\alpha-0.01199)/0.00061=(L-160)/(-20) \quad \cdots(83)$$

$$dd:(\beta-3.496)/0.034=(\alpha-0.00568)/0.0008471=(L-160)/(-20) \quad \cdots(84)$$

In the case when the total film thickness L is represented by 140 nm < L < 160 nm, a region (space) V5a that is surrounded by the following four surfaces forms a region that satisfies the conditions of the respective parameters. That is, by allowing the ratio $\alpha$ and ratio $\beta$ to be included in the region (space) V5a, the conditions of the respective parameters can be satisfied.

Surface in which the approximation straight lines of formula (81) and formula (82) form two opposed sides ...s1
Surface in which the approximation straight lines of formula (82) and formula (83) form two opposed sides ...s2
Surface in which the approximation straight lines of formula (83) and formula (84) form two opposed sides ...s3
Surface in which the approximation straight lines of formula (84) and formula (81) form two opposed sides ...s4

In this case, it is supposed that the region (space) V5a includes the approximation straight lines of formulas (81) to (84) themselves.

The surface in which the approximation straight lines of formula (81) and formula (82) form two opposed sides corresponds to a surface formed in the following manner. That is, the surface is formed by moving a line segment ab in an L-axis direction (direction in which the total film thickness L increases), while its positional relationship is kept in parallel with the fifth plane Sp5a, with its two end points being shifted along a line segment aa (line segment represented by formula (81)) and a line segment bb (line segment represented by formula (82)). In this case, the moving range of the line segment ab is in a range of 140 nm < L < 160 nm.

The surface in which the approximation straight lines of formula (82) and formula (83) form two opposed sides corresponds to a surface formed in the following manner. That is, the surface is formed by moving a line segment bc in the L-axis direction (direction in which the total film thickness L increases), while its positional relationship is kept in parallel with the fifth plane Sp5a, with its two end points being shifted along a line segment bb (line segment represented by formula (82)) and a line segment cc (line segment represented by formula (83)). In this case, the moving range of the line segment bc is in a range of 140 nm < L < 160 nm.

The surface in which the approximation straight lines of formula (83) and formula (84) form two opposed sides corresponds to a surface formed in the following manner. That is, the surface is formed by moving a line segment cd in the L-axis direction (direction in which the total film thickness L increases), while its positional relationship is kept in parallel with the fifth plane Sp5a, with its two end points being shifted along a line segment cc (line segment represented by formula (83)) and a line segment dd (line segment represented by formula (84)). In this case, the moving range of the line segment cd is in a range of 140 nm < L < 160 nm.

The surface in which the approximation straight lines of formula (84) and formula (81) form two opposed sides corresponds to a surface formed in the following manner. That is, the surface is formed by moving a line segment da in the L-axis direction (direction in which the total film thickness L increases), while its positional relationship is kept in parallel with the fifth plane Sp5a, with its two end points being shifted along a line segment dd (line segment represented by formula (84)) and a line segment aa (line segment represented by formula (81)). In this case, the moving range of the line segment da is in a range of 140 nm < L < 160 nm.

Therefore, a region that satisfies the conditions of the parameters of the visible light-ray transmittance, the blue index and the red index is determined in the following manner for each of ranges of the respective total film thicknesses L.

$$(80\ \text{nm} \leq L \leq 90\ \text{nm})$$

In the case when the total film thickness L is represented by 80 nm ≤ L ≤ 90 nm, a region (space) V1b, which is surrounded by the following six planes, forms a region that satisfies the conditions of the respective parameters. That is, by allowing the ratio α and ratio β to be included in the region (space) V1b, the conditions of the respective parameters can be satisfied.

Plane in which the approximation straight lines and straight line of formula (5a), formula (7a), formula (6a) and formula (8) form four sides ...sp1a

Plane in which the approximation straight lines and straight line of formula (9a), formula (11a), formula (10a) and formula (12) form four sides ...Sp2a

Surface in which the approximation straight lines of formula (5a), formula (9a), formula (41) and formula (42) form four sides ...s1a

Surface in which the approximation straight lines of formula (7a), formula (11a), formula (42) and formula (43) form four sides ...s2a

Surface in which the approximation straight lines of formula (6a), formula (10a), formula (43) and formula (44) form four sides ...s3a

Surface in which the approximation straight lines of formula (8), formula (12), formula (44) and formula (41) form four sides ...s4a

In this case, it is supposed that the region (space) V1b includes the respective approximation straight lines themselves that define the respective surfaces. Moreover, the surfaces s1a to s4a are surfaces that are formed in the same manner as in surfaces s1 to s4 within the range of 80 nm < L < 90 nm in the total film thickness L, except that the moving ranges of the respective line segments are set within the range of 80 nm ≤ L ≤ 90 nm.

$$(90\ \text{nm} \leq L \leq 100\ \text{nm})$$

In the case when the total film thickness L is represented by 90 nm ≤ L ≤ 100 nm, a region (space) V2b, which is surrounded by the following six planes, forms a region that satisfies the conditions of the respective parameters. That is, by allowing the ratio α and ratio β to be included in the region (space) V2b, the conditions of the respective parameters can be satisfied.

Plane in which the approximation straight lines and straight line of formula (9a), formula (11a), formula (0a) and formula (12) form four sides ...Sp2a

Plane in which the approximation straight lines and straight line of formula (13a), formula (15a), formula (14a) and formula (16) form four sides ...Sp3a

Surface in which the approximation straight lines of formula (9a), formula (13a), formula (51) and formula (52) form four sides ...s1a

Surface in which the approximation straight lines of formula (11a), formula (15a), formula (52) and formula (53) form four sides ...s2a

Surface in which the approximation straight lines of formula (10a), formula (14a), formula (53) and formula (54) form four sides ...s3a

Surface in which the approximation straight lines of formula (12), formula (16), formula (54) and formula (51) form four sides ...s4a

In this case, it is supposed that the region (space) V2b includes the respective approximation straight lines and straight lines themselves that define the respective surfaces. Moreover, the surfaces s1a to s4a are surfaces that are formed in the same manner as in surfaces s1 to s4 within the range of 90 nm < L < 100 nm in the total film thickness L, except that the moving ranges of the respective line segments are set within the range of 90 nm ≤ L ≤ 100 nm.

$$(100 \text{ nm} \leq L \leq 120 \text{ nm})$$

In the case when the total film thickness L is represented by 100 nm ≤ L ≤ 120 nm, a region (space) V3b, which is surrounded by the following six planes, forms a region that satisfies the conditions of the respective parameters. That is, by allowing the ratio α and ratio β to be included in the region (space) V3b, the conditions of the respective parameters can be satisfied.

Plane in which the approximation straight lines and straight line of formula (13a), formula (15a), formula (14a) and formula (16) form four sides ...Sp3a

Plane in which the approximation straight lines and straight line of formula (17a), formula (19a), formula (18a) and formula (20) form four sides ...Sp4a

Surface in which the approximation straight lines of formula (13a), formula (17a), formula (61) and formula (62) form four sides ...s1a

Surface in which the approximation straight lines of formula (15a), formula (19a), formula (62) and formula (63) form four sides ...s2a

Surface in which the approximation straight lines of formula (14a), formula (18a), formula (63) and formula (64) form four sides ...s3a

Surface in which the approximation straight lines of formula (16), formula (20), formula (64) and formula (61) form four sides ...s4a

In this case, it is supposed that the region (space) V3b includes the respective approximation straight lines and straight lines themselves that define the above-mentioned respective surfaces. Moreover, the surfaces s1 a to s4a are surfaces that are formed in the same manner as in surfaces s1 to s4 within the range of 100 nm < L < 120 nm in the total film thickness L, except that the moving ranges of the respective line segments are set within the range of 100 nm ≤ L ≤ 120 nm.

$$(120 \text{ nm} \leq L \leq 140 \text{ nm})$$

In the case when the total film thickness L is represented by 120 nm ≤ L ≤ 140 nm, a region (space) V4b, which is surrounded by the following six planes, forms a region that satisfies the conditions of the respective parameters. That is, by allowing the ratio α and ratio β to be included in the region (space) V4b, the conditions of the respective parameters can be satisfied.

Plane in which the approximation straight lines and straight line of formula (17a), formula (19a), formula (18a) and formula (20) form four sides ...Sp4a

Plane in which the approximation straight lines and straight line of formula (21a), formula (23a), formula (22a) and formula (24) form four sides ...Sp5a

Surface in which the approximation straight lines of formula (17a), formula (21a), formula (71) and formula (72) form four sides ...s1a

Surface in which the approximation straight lines of formula (19a), formula (23a), formula (72) and formula (73) form four sides ...s2a

Surface in which the approximation straight lines of formula (18a), formula (22a), formula (73) and formula (74) form four sides ...s3a

Surface in which the approximation straight lines of formula (20), formula (24), formula (74) and formula (71) form four sides ...s4a

In this case, it is supposed that the region (space) V4b includes the respective approximation straight lines and straight lines themselves that define the above-mentioned respective surfaces. Moreover, the surfaces s1a to s4a are surfaces that are formed in the same manner as in surfaces s1 to s4 within the range of 120 nm < L < 140 nm in the total film thickness L, except that the moving ranges of the respective line segments are set within the range of 120 nm ≤ L ≤ 140 nm.

$$(140\ \text{nm} \leq L \leq 160\ \text{nm})$$

In the case when the total film thickness L is represented by 140 nm ≤ L ≤ 160 nm, a region (space) V5b, which is surrounded by the following six planes, forms a region that satisfies the conditions of the respective parameters. That is, by allowing the ratio α and ratio β to be included in the region (space) V5b, the conditions of the respective parameters can be satisfied.

Plane in which the approximation straight lines and straight line of formula (21 a), formula (23a), formula (22a) and formula (24) form four sides ...Sp5a

Plane in which the approximation straight lines and straight line of formula (25a), formula (28a), formula (26a) and formula (29) form four sides ...Sp6a

Surface in which the approximation straight lines of formula (21a), formula (25a), formula (81) and formula (82) form four sides ...s1a

Surface in which the approximation straight lines of formula (23a), formula (28a), formula (82) and formula (83) form four sides ...s2a

Surface in which the approximation straight lines of formula (22a), formula (26a), formula (83) and formula (84) form four sides ...s3a

Surface in which the approximation straight lines of formula (24), formula (29), formula (84) and formula (81) form four sides ...s4a

In this case, it is supposed that the region (space) V5b includes the respective approximation straight lines and straight lines themselves that define the above-mentioned respective surfaces. Moreover, the surfaces s1a to s4a are surfaces that are formed in the same manner as in surfaces s1 to s4 within the range of 140 nm < L < 160 nm in the total film thickness L, except that the moving ranges of the respective line segments are set within the range of 140 nm ≤ L ≤ 160 nm.

(Regions satisfying Conditions of Four Parameters)

Next, with respect to a case in which in addition to the above-mentioned visible light-ray transmittance, blue index and red index, the shading coefficient is also used as parameters, an explanation will be given thereto for each of the total film thicknesses L of the reflection layer 3.

$$(L = 80\ \text{nm})$$

Fig. 40A is an α-β correlation diagram based upon the conditions of the visible light-ray transmittance, the blue index, the red index and the shading coefficient in the case of the total film thickness L of 80 nm. From formulas (6), (7) and (34) of approximation curves that define the region R11 (Fig. 21 A), the following formulas (6b), (7b) and (34b) of approximation straight lines are obtained.

$$\text{ed:}\alpha=2.95\times10^{-5}\beta+0.01522 \quad \cdots(7b)$$

$$\text{df:}\alpha=0.000199\beta+0.011655 \quad \cdots(6b)$$

$$\text{ef:}\alpha= -1.2\times10^{-5}\beta+0.015739 \quad \cdots(34b)$$

A region (hereinafter, referred to as "first region R11a"), which is defined by the approximation straight lines indicated by these formulas (6b), (7b) and (34b), corresponds to a region satisfying the conditions of the respective parameters of the visible light-ray transmittance, the blue index, the red index and the shading coeffcient. That is, by

allowing the ratio $\alpha$ and ratio $\beta$ to be included in the first region R11a, the above-mentioned conditions of the respective parameters can be satisfied. In this case, it is supposed that the first region R11a includes the approximation straight lines indicated by formulas (6b), (7b) and (34b). Additionally, in the following description, of the plane of L = 80 nm, a portion defined by the first region R11a is referred to as "first plane Sp11a" on demand.

$$(L = 90nm)$$

Fig. 40B is an $\alpha$-$\beta$ correlation diagram based upon the conditions of the visible light-ray transmittance, the blue index, the red index and the shading coefficient in the case of the total film thickness L of 90 nm. From formulas (10), (11) and (35) of approximation curves that define the region R12 (Fig. 21B), the following formulas (10b), (11b) and (35b) of approximation straight lines are obtained.

$$ed{:}\alpha=0.000308\beta+0.01196 \quad \cdots(11b)$$

$$df{:}\alpha=0.000791\beta+0.006941 \quad \cdots(10b)$$

$$ef{:}\alpha=0.000127\beta+0.012846 \quad \cdots(35b)$$

A region (hereinafter, referred to as "second region R12a"), which is defined by the approximation straight lines indicated by these formulas (10b), (11b) and (35b), corresponds to a region satisfying the conditions of the respective parameters of the visible light-ray transmittance, the blue index, the red index and the shading coefficient. That is, by allowing the ratio $\alpha$ and ratio $\beta$ to be included in the second region R12a, the above-mentioned conditions of the respective parameters can be satisfied. In this case, it is supposed that the second region R12a includes the approximation straight lines indicated by formulas (10b), (11b) and (35b). Additionally, in the following description, of the plane of L = 90 nm, a portion defined by the second region R12a is referred to as "second plane Sp12a" on demand.

$$(L = 100 nm)$$

Fig. 41A is an $\alpha$-$\beta$ correlation diagram based upon the conditions of the visible light-ray transmittance, the blue index, the red index and the shading coefficient in the case of the total film thickness L of 100 nm. From formulas (14), (15) and (36) of approximation curves that define the region R13 (Fig. 22A), the following formulas (14b), (15b) and (36b) of approximation straight lines are obtained.

$$ec{:}\alpha=0.000572\beta+0.010596 \quad \cdots(15b)$$

$$cf{:}\alpha=0.00242\beta-0.00142 \quad \cdots(14b)$$

$$ef{:}\alpha=0.000141\beta+0.011803 \quad \cdots(36b)$$

A region (hereinafter, referred to as "third region R13a"), which is defined by the approximation straight lines indicated by these formulas (14b), (15b) and (36b), corresponds to a region satisfying the conditions of the respective parameters of the visible light-ray transmittance, the blue index, the red index and the shading coefficient. That is, by allowing the ratio $\alpha$ and ratio $\beta$ to be included in the third region R13a, the above-mentioned conditions of the respective parameters can be satisfied. In this case, it is supposed that the third region R13a includes the approximation straight lines indicated by formulas (14b), (15b) and (36b). Additionally, in the following description, of the plane of L = 100 nm, a portion defined by the third region R13a is referred to as "third plane Sp13a" on demand.

$$(L = 120 nm)$$

Fig. 41B is an α-β correlation diagram based upon the conditions of the visible light-ray transmittance, the blue index, the red index and the shading coefficient in the case of the total film thickness L of 120 nm. From formulas (18), (19) and (37) of approximation curves that define the region R14 (Fig. 22B), the following formulas (18b), (19b) and (37b) of approximation straight lines are obtained.

$$ec:\alpha=0.000997\beta+0.009064 \quad \cdots(19b)$$

$$cf:\alpha=0.007454\beta-0.01838 \quad \cdots(18b)$$

$$ef:\alpha=0.000295\beta+0.010257 \quad \cdots(37b)$$

A region (hereinafter, referred to as "fourth region R14a"), which is defined by the approximation straight lines indicated by these formulas (18b), (19b) and (37b), corresponds to a region satisfying the conditions of the respective parameters of the visible light-ray transmittance, the blue index, the red index and the shading coefficient. That is, by allowing the ratio α and ratio β to be included in the fourth region R14a, the above-mentioned conditions of the respective parameters can be satisfied. In this case, it is supposed that the fourth region R14a includes the approximation straight lines indicated by formulas (18b), (19b) and (37b). Additionally, in the following description, of the plane of L = 120 nm, a portion defined by the fourth region R14a is referred to as "fourth plane Sp14a" on demand.

(L = 140 nm)

Fig. 42A is an α-β correlation diagram based upon the conditions of the visible light-ray transmittance, the blue index, the red index and the shading coefficient in the case of the total film thickness L of 140 nm. From formulas (22), (23) and (38) of approximation curves that define the region R15 (Fig. 23A), the following formulas (22b), (23b) and (38b) of approximation straight lines are obtained.

$$ec:\alpha=0.001599\beta+0.007644 \quad \cdots(23b)$$

$$cf:\alpha= -0.0109\beta+0.0464 \quad \cdots(22b)$$

$$ef:\alpha=0.000462\beta+0.008895 \quad \cdots(38b)$$

A region (hereinafter, referred to as "fifth region R15a"), which is defined by the approximation straight lines indicated by these formulas (22b), (23b) and (38b), corresponds to a region satisfying the conditions of the respective parameters of the visible light-ray transmittance, the blue index, the red index and the shading coefficient. That is, by allowing the ratio α and ratio β to be included in the fifth region R15a, the above-mentioned conditions of the respective parameters can be satisfied. In this case, it is supposed that the fifth region R15a includes the approximation straight lines indicated by formulas (22b), (23b) and (38b). Additionally, in the following description, of the plane of L = 140 nm, a portion defined by the fifth region R15a is referred to as "fifth plane Sp15a" on demand.

(L = 160 nm)

Fig. 42B is an α-β correlation diagram based upon the conditions of the visible light-ray transmittance, the blue index, the red index and the shading coefficient in the case of the total film thickness L of 160 nm. From formulas (26), (28) and (39) of approximation curves that define the region R16 (Fig. 23B), the following formulas (26b), (28b) and (39b) of approximation straight lines are obtained.

$$ec{:}\alpha=0.002463\beta+0.005631 \quad \cdots (28b)$$

$$cf{:}\alpha=-0.00693\beta+0.029895 \quad \cdots (26b)$$

$$ef{:}\alpha=0.000773\beta+0.007406 \quad \cdots (39b)$$

A region (hereinafter, referred to as "sixth region R16a"), which is defined by the approximation straight lines indicated by these formulas (26b), (28b) and (39b), corresponds to a region satisfying the conditions of the respective parameters of the visible light-ray transmittance, the blue index, the red index and the shading coefficient. That is, by allowing the ratio $\alpha$ and ratio $\beta$ to be included in the sixth region R16a, the above-mentioned conditions of the respective parameters can be satisfied. In this case, it is supposed that the sixth region R16a includes the approximation straight lines indicated by formulas (26b), (28b) and (39b). Additionally, in the following description, of the plane of L = 160 nm, a portion defined by the sixth region R16a is referred to as "sixth plane Sp16a" on demand.

As shown in Fig. 43, it is considered that a region that satisfies the conditions of the respective parameters is continuously formed relative to the total film thickness L. Therefore, in the case of a total film thickness other than the predetermined total film thicknesses L = 80 nm, 90 nm, ..., 160 nm, a region, which is surrounded by a circumferential surface S, with the adjacent regions of the predetermined total film thicknesses L serving as two end faces, is defined as a region that satisfies the conditions of the respective parameters.

The following description will discuss a case in which by using the visible light-ray transmittance, the blue index, the red index and the shading coefficient as the parameters, the total film thickness L is set to a value between predetermined total film thicknesses L (= 80 nm, 90 nm, ..., 160 nm) so as to satisfy the conditions of the parameters.

$$(80\ \text{nm} < L < 90\ \text{nm})$$

Based upon the positions of the respective apexes in the regions that satisfy the conditions of the respective parameters shown in Fig. 40A and Fig. 40B, the following formulas (43), (45) and (46) are obtained.

$$dd{:}(\alpha-10.4)/10.6=(\beta-0.01516)/0.0006776=(L-90)/(-10) \quad \cdots (43)$$

$$ee{:}(\alpha-4.9)/7.5=(\beta-0.01347)/0.00211775=(L-90)/(-10) \quad \cdots (45)$$

$$ff{:}(\alpha-8.9)/10.4=(\beta-0.01398)/0.0015247=(L-90)/(-10) \quad \cdots (46)$$

In the case when the total film thickness L is represented by 80 nm < L < 90 nm, a region (space) V11a that is surrounded by the following three surfaces forms a region that satisfies the conditions of the respective parameters. That is, by allowing the ratio $\alpha$ and ratio $\beta$ to be included in the region (space) V11a, the conditions of the respective parameters can be satisfied.

Surface in which the approximation straight lines of formula (43) and formula (45) form two opposed sides ...s5
Surface in which the approximation straight lines of formula (45) and formula (46) form two opposed sides ...s6
Surface in which the approximation straight lines of formula (46) and formula (43) form two opposed sides ...s7

In this case, it is supposed that the region (space) V11a includes the approximation straight lines of formulas (43), (45) and (46) themselves.

The surface in which the approximation straight lines of formula (43) and formula (45) form two opposed sides corresponds to a surface formed in the following manner. That is, the surface is formed by moving a line segment de in an L-axis direction (direction in which the total film thickness L increases), while its positional relationship is kept in parallel with the first plane Sp11a, with its two end points being shifted along a line segment dd (line segment represented by formula (43)) and a line segment ee (line segment represented by formula (45)). In this case, the moving range of the line segment de is in a range of 80 nm < L < 90 nm.

The surface in which the approximation straight lines of formula (45) and formula (46) form two opposed sides corresponds to a surface formed in the following manner. That is, the surface is formed by moving a line segment ef in the L-axis direction (direction in which the total film thickness L increases), while its positional relationship is kept in parallel with the first plane Sp11a, with its two end points being shifted along a line segment ee (line segment represented by formula (45)) and a line segment ff (line segment represented by formula (46)). In this case, the moving range of the line segment ef is in a range of 80 nm < L < 90 nm.

The surface in which the approximation straight lines of formula (46) and formula (43) form two opposed sides corresponds to a surface formed in the following manner. That is, the surface is formed by moving a line segment fd in the L-axis direction (direction in which the total film thickness L increases), while its positional relationship is kept in parallel with the first plane Sp11a, with its two end points being shifted along a line segment ff (line segment represented by formula (46) and a line segment dd (line segment represented by formula (43)). In this case, the moving range of the line segment fd is in a range of 80 nm < L < 90 nm.

$$(90\ \mathrm{nm} < L < 100\ \mathrm{nm})$$

Based upon the positions of the respective apexes in the regions that satisfy the conditions of the respective parameters shown in Fig. 40B and Fig. 41A, the following formulas (53), (55) and (56) are obtained.

$$dc:(\alpha-6.5)/3.9=(\beta-0.01432)/0.000847=(L-100)/(-10) \quad \cdots(53)$$

$$ee:(\alpha-2.8)/2.1=(\beta-0.0122)/0.00127=(L-100)/(-10) \quad \cdots(55)$$

$$ff:(\alpha-5.8)/3.1=(\beta-0.01262)/0.00135536=(L-100)/(-10) \quad \cdots(56)$$

In the case when the total film thickness L is represented by 80 nm < L < 90 nm, a region (space) V12a that is surrounded by the following three surfaces forms a region that satisfies the conditions of the respective parameters. That is, by allowing the ratio $\alpha$ and ratio $\beta$ to be included in the region (space) V12a, the conditions of the respective parameters can be satisfied.

Surface in which the approximation straight lines of formula (53) and formula (55) form two opposed sides ...s5
Surface in which the approximation straight lines of formula (55) and formula (56) form two opposed sides ...s6
Surface in which the approximation straight lines of formula (56) and formula (53) form two opposed sides ...s7

In this case, it is supposed that the region (space) V12a includes the approximation straight lines of formulas (53), (55) and (56) themselves.

The surface in which the approximation straight lines of formula (53) and formula (55) form two opposed sides corresponds to a surface formed in the following manner. That is, the surface is formed by moving a line segment de in an L-axis direction (direction in which the total film thickness L increases), while its positional relationship is kept in parallel with the second plane Sp12a, with its two end points being shifted along a line segment dc (line segment represented by formula (53)) and a line segment ee (line segment represented by formula (55)). In this case, the moving range of the line segment de is in a range of 90 nm < L < 100 nm.

The surface in which the approximation straight lines of formula (55) and formula (56) form two opposed sides corresponds to a surface formed in the following manner. That is, the surface is formed by moving a line segment ef in the L-axis direction (direction in which the total film thickness L increases), while its positional relationship is kept in parallel with the second plane Sp12a, with its two end points being shifted along a line segment ee (line segment represented by formula (55)) and a line segment ff (line segment represented by formula (56)). In this case, the moving range of the line segment ef is in a range of 90 nm < L < 100 nm.

The surface in which the approximation straight lines of formula (56) and formula (53) form two opposed sides corresponds to a surface formed in the following manner. That is, the surface is formed by moving a line segment fd in the L-axis direction (direction in which the total film thickness L increases), while its positional relationship is kept in parallel with the second plane Sp12a, with its two end points being shifted along a line segment ff (line segment represented by formula (56)) and a line segment dc (line segment represented by formula (53)). In this case, the moving range of the line segment fd is in a range of 90 nm < L < 100 nm.

$$(100\ \mathrm{nm} < L < 120\ \mathrm{nm})$$

Based upon the positions of the respective apexes in the regions that satisfy the conditions of the respective parameters shown in Fig. 41A and Fig. 41B, the following formulas (63), (65) and (66) are obtained.

$$cc:(\alpha-4.25)/2.25=(\beta-0.0133)/0.0010165=(L-120)/(-20) \quad \cdots(63)$$

$$ee:(\alpha-1.7)/1.1=(\beta-0.01076)/0.00144=(L-120)/(-20) \quad \cdots(65)$$

$$ff:(\alpha-4)/1.8=(\beta-0.01144)/0.001186=(L-120)/(-20) \quad \cdots(66)$$

In the case when the total film thickness L is represented by 100 nm < L < 120 nm, a region (space) V13a that is surrounded by the following three surfaces forms a region that satisfies the conditions of the respective parameters. That is, by allowing the ratio $\alpha$ and ratio $\beta$ to be included in the region (space) V13a, the conditions of the respective parameters can be satisfied.

Surface in which the approximation straight lines of formula (63) and formula (65) form two opposed sides ...s5
Surface in which the approximation straight lines of formula (65) and formula (66) form two opposed sides ...s6
Surface in which the approximation straight lines of formula (66) and formula (63) form two opposed sides ...s7

In this case, it is supposed that the region (space) V13a includes the approximation straight lines of formulas (63), (65) and (66) themselves.

The surface in which the approximation straight lines of formula (63) and formula (65) form two opposed sides corresponds to a surface formed in the following manner. That is, the surface is formed by moving a line segment ce in an L-axis direction (direction in which the total film thickness L increases), while its positional relationship is kept in parallel with the third plane Sp13a, with its two end points being shifted along a line segment cc (line segment represented by formula (63)) and a line segment ee (line segment represented by formula (65)). In this case, the moving range of the line segment ce is in a range of 100 nm < L < 120 nm.

The surface in which the approximation straight lines of formula (65) and formula (66) form two opposed sides corresponds to a surface formed in the following manner. That is, the surface is formed by moving a line segment ef in the L-axis direction (direction in which the total film thickness L increases), while its positional relationship is kept in parallel with the third plane Sp13a, with its two end points being shifted along a line segment ee (line segment represented by formula (65)) and a line segment ff (line segment represented by formula (66)). In this case, the moving range of the line segment ef is in a range of 100 nm < L < 120 nm.

The surface in which the approximation straight lines of formula (66) and formula (63) form two opposed sides corresponds to a surface formed in the following manner. That is, the surface is formed by moving a line segment fc in the L-axis direction (direction in which the total film thickness L increases), while its positional relationship is kept in parallel with the third plane Sp13a, with its two end points being shifted along a line segment ff (line segment represented by formula (66)) and a line segment cc (line segment represented by formula (63)). In this case, the moving range of the line segment fc is in a range of 100 nm < L < 120 nm.

$$(120\ nm < L < 140\ nm)$$

Based upon the positions of the respective apexes in the regions that satisfy the conditions of the respective parameters shown in Fig. 41B and Fig. 42A, the following formulas (73), (75) and (76) are obtained.

$$cc:(\alpha-3.1)/1.15=(\beta-0.0216)/0.0006994=(L-140)/(-20) \quad \cdots(73)$$

$$ee:(\alpha-1.1)/0.6=(\beta-0.0094)/0.0013553=(L-140)/(-20) \quad \cdots(75)$$

$$ff:(\alpha-3.3)/0.7=(\beta-0.01042)/0.001016=(L-140)/(-20) \quad \cdots(76)$$

In the case when the total film thickness L is represented by 120 nm < L < 140 nm, a region (space) V14a that is surrounded by the following three surfaces forms a region that satisfies the conditions of the respective parameters.

That is, by allowing the ratio $\alpha$ and ratio $\beta$ to be included in the region (space) V14a, the conditions of the respective parameters can be satisfied.

Surface in which the approximation straight lines of formula (73) and formula (75) form two opposed sides ...s5
Surface in which the approximation straight lines of formula (75) and formula (76) form two opposed sides ...s6
Surface in which the approximation straight lines of formula (76) and formula (73) form two opposed sides ...s7

In this case, it is supposed that the region (space) V14a includes the approximation straight lines of formulas (73), (75) and (76) themselves.

The surface in which the approximation straight lines of formula (73) and formula (75) form two opposed sides corresponds to a surface formed in the following manner. That is, the surface is formed by moving a line segment ce in an L-axis direction (direction in which the total film thickness L increases), while its positional relationship is kept in parallel with the fourth plane Sp14a, with its two end points being shifted along a line segment cc (line segment represented by formula (73)) and a line segment ee (line segment represented by formula (75)). In this case, the moving range of the line segment ce is in a range of 120 nm < L < 140 nm.

The surface in which the approximation straight lines of formula (75) and formula (76) form two opposed sides corresponds to a surface formed in the following manner. That is, the surface is formed by moving a line segment ef in the L-axis direction (direction in which the total film thickness L increases), while its positional relationship is kept in parallel with the fourth plane Sp14a, with its two end points being shifted along a line segment ee (line segment represented by formula (75)) and a line segment ff (line segment represented by formula (76)). In this case, the moving range of the line segment ef is in a range of 120 nm < L < 140 nm.

The surface in which the approximation straight lines of formula (76) and formula (73) form two opposed sides corresponds to a surface formed in the following manner. That is, the surface is formed by moving a line segment fc in the L-axis direction (direction in which the total film thickness L increases), while its positional relationship is kept in parallel with the fourth plane Sp14a, with its two end points being shifted along a line segment ff (line segment represented by formula (76)) and a line segment cc (line segment represented by formula (73)). In this case, the moving range of the line segment fc is in a range of 120 nm < L < 140 nm.

## (140 nm < L < 160 nm)

Based upon the positions of the respective apexes in the regions that satisfy the conditions of the respective parameters shown in Fig. 42A and Fig. 42B, the following formulas (83), (85) and (86) are obtained.

$$cc:(\alpha-2.582)/0.518=(\beta-0.01199)/0.00061=(L-160)/(-20) \quad \cdots(83)$$

$$ee:(\alpha-1.05)/0.05=(\beta-0.00822)/0.0011859=(L-160)/(-20) \quad \cdots(85)$$

$$ff:(\alpha-2.918)/0.382=(\beta-0.00966)/0.0007593=(L-160)/(-20) \quad \cdots(86)$$

In the case when the total film thickness L is represented by 140 nm < L < 160 nm, a region (space) V15a that is surrounded by the following three surfaces forms a region that satisfies the conditions of the respective parameters. That is, by allowing the ratio $\alpha$ and ratio $\beta$ to be included in the region (space) V15a, the conditions of the respective parameters can be satisfied.

Surface in which the approximation straight lines of formula (83) and formula (85) form two opposed sides ...s5
Surface in which the approximation straight lines of formula (85) and formula (86) form two opposed sides ...s6
Surface in which the approximation straight lines of formula (86) and formula (83) form two opposed sides ...s7

In this case, it is supposed that the region (space) V15a includes the approximation straight lines of formulas (83), (85) and (86) themselves.

The surface in which the approximation straight lines of formula (83) and formula (85) form two opposed sides corresponds to a surface formed in the following manner. That is, the surface is formed by moving a line segment ce in an L-axis direction (direction in which the total film thickness L increases), while its positional relationship is kept in parallel with the fifth plane Sp15a, with its two end points being shifted along a line segment cc (line segment represented by formula (83)) and a line segment ee (line segment represented by formula (85)). In this case, the moving range of the line segment ce is in a range of 140 nm < L < 160 nm.

The surface in which the approximation straight lines of formula (85) and formula (86) form two opposed sides corresponds to a surface formed in the following manner. That is, the surface is formed by moving a line segment ef in the L-axis direction (direction in which the total film thickness L increases), while its positional relationship is kept in parallel with the fifth plane Sp15a, with its two end points being shifted along a line segment ee (line segment represented by formula (85)) and a line segment ff (line segment represented by formula (86)). In this case, the moving range of the line segment ef is in a range of 140 nm < L < 160 nm.

The surface in which the approximation straight lines of formula (86) and formula (83) form two opposed sides corresponds to a surface formed in the following manner. That is, the surface is formed by moving a line segment fc in the L-axis direction (direction in which the total film thickness L increases), while its positional relationship is kept in parallel with the fifth plane Sp15a, with its two end points being shifted along a line segment ff (line segment represented by formula (86)) and a line segment cc (line segment represented by formula (83)). In this case, the moving range of the line segment fc is in a range of 140 nm < L < 160 nm.

Therefore, a region that satisfies the conditions of the parameters of the visible light-ray transmittance, the blue index, the red index and the shading coefficient is determined in the following manner for each of ranges of the respective total film thicknesses L.

$$(80\ \text{nm} \leq L \leq 90\ \text{nm})$$

In the case when the total film thickness L is represented by 80 nm ≤ L ≤ 90 nm, a region (space) V11b, which is surrounded by the following five planes, forms a region that satisfies the conditions of the respective parameters. That is, by allowing the ratio α and ratio β to be included in the region (space) V11b, the conditions of the respective parameters can be satisfied.

Plane in which the approximation straight lines of formula (6b), formula (7b), and formula (34b) form three sides ...Sp11a

Plane in which the approximation straight lines of formula (10b), formula (11b) and formula (35b) form three sides ...Sp12a

Surface in which the approximation straight lines of formula (7b), formula (11b), formula (43) and formula (45) form four sides ...s5a

Surface in which the approximation straight lines of formula (6b), formula (10b), formula (43) and formula (46) form four sides ...s7a

Surface in which the approximation straight lines of formula (34b), formula (35b), formula (45) and formula (46) form four sides ...s6a

In this case, it is supposed that the region (space) V11b includes the respective approximation straight lines themselves that define the respective surfaces. Moreover, the surfaces s5a to s7a are surfaces that are formed in the same manner as in surfaces s5 to s7 within the range of 80 nm < L < 90 nm in the total film thickness L, except that the moving ranges of the respective line segments are set within the range of 80 nm ≤ L ≤ 90 nm.

$$(90\ \text{nm} \leq L \leq 100\ \text{nm})$$

In the case when the total film thickness L is represented by 90 nm ≤ L ≤ 100 nm, a region (space) V12b, which is surrounded by the following five planes, forms a region that satisfies the conditions of the respective parameters. That is, by allowing the ratio α and ratio β to be included in the region (space) V12b, the conditions of the respective parameters can be satisfied.

Plane in which the approximation straight lines of formula (10b), formula (11b) and formula (35b) form three sides ...Sp12a

Plane in which the approximation straight lines of formula (14b), formula (15b) and formula (36b) form three sides ...Sp13a

Surface in which the approximation straight lines of formula (11b), formula (15b), formula (53) and formula (55) form four sides ...s5a

Surface in which the approximation straight lines of formula (10b), formula (14b), formula (53) and formula (56) form four sides ...s7a

Surface in which the approximation straight lines of formula (35b), formula (36b), formula (55) and formula (56) form four sides ...s6a

In this case, it is supposed that the region (space) V12b includes the respective approximation straight lines themselves that define the respective surfaces. Moreover, the surfaces s5a to s7a are surfaces that are formed in the same manner as in surfaces s5 to s7 within the range of 90 nm < L < 100 nm in the total film thickness L, except that the moving ranges of the respective line segments are set within the range of 90 nm ≤ L ≤ 100 nm.

## $(100\ nm \leq L \leq 120\ nm)$

In the case when the total film thickness L is represented by 100 nm ≤ L ≤ 120 nm, a region (space) V13b, which is surrounded by the following five planes, forms a region that satisfies the conditions of the respective parameters. That is, by allowing the ratio $\alpha$ and ratio $\beta$ to be included in the region (space) V13b, the conditions of the respective parameters can be satisfied.

Plane in which the approximation straight lines of formula (14b), formula (15b) and formula (36b) form three sides ...Sp13a

Plane in which the approximation straight lines of formula (18b), formula (19b), and formula (37b) form three sides ...Sp14a

Surface in which the approximation straight lines of formula (15b), formula (19b), formula (63) and formula (65) form four sides ...s5a

Surface in which the approximation straight lines of formula (14b), formula (18b), formula (63) and formula (66) form four sides ...s7a

Surface in which the approximation straight lines of formula (36b), formula (37b), formula (65) and formula (66) form four sides ...s6a

In this case, it is supposed that the region (space) V13b includes the respective approximation straight lines themselves that define the above-mentioned respective surfaces. Moreover, the surfaces s5a to s7a are surfaces that are formed in the same manner as in surfaces s5 to s7 within the range of 100 nm < L < 120 nm in the total film thickness L, except that the moving ranges of the respective line segments are set within the range of 100 nm ≤ L ≤ 120 nm.

## $(120\ nm \leq L \leq 140\ nm)$

In the case when the total film thickness L is represented by 120 nm ≤ L ≤ 140 nm, a region (space) V14b, which is surrounded by the following five planes, forms a region that satisfies the conditions of the respective parameters. That is, by allowing the ratio $\alpha$ and ratio $\beta$ to be included in the region (space) V14b, the conditions of the respective parameters can be satisfied.

Plane in which the approximation straight lines of formula (18b), formula (19b) and formula (37b) form three sides ...Sp14a

Plane in which the approximation straight lines of formula (22b), formula (23b) and formula (38b) form three sides ...Sp15a

Surface in which the approximation straight lines of formula (19b), formula (23b), formula (73) and formula (75) form four sides ...s5a

Surface in which the approximation straight lines of formula (18b), formula (22b), formula (73) and formula (76) form four sides ...s7a

Surface in which the approximation straight lines of formula (37b), formula (38b), formula (75) and formula (76) form four sides ...s6a

In this case, it is supposed that the region (space) V14b includes the respective approximation straight lines themselves that define the above-mentioned respective surfaces. Moreover, the surfaces s5a to s7a are surfaces that are formed in the same manner as in surfaces s5 to s7 within the range of 120 nm < L < 140 nm in the total film thickness L, except that the moving ranges of the respective line segments are set within the range of 120 nm ≤ L ≤ 140 nm.

## $(140\ nm \leq L \leq 160\ nm)$

In the case when the total film thickness L is represented by 140 nm ≤ L ≤ 160 nm, a region (space) V15b, which is surrounded by the following five planes, forms a region that satisfies the conditions of the respective parameters. That is, by allowing the ratio $\alpha$ and ratio $\beta$ to be included in the region (space) V15b, the conditions of the respective parameters can be satisfied.

Plane in which the approximation straight lines of formula (22b), formula (23 b) and formula (38b) form three sides ...Sp15a

Plane in which the approximation straight lines of formula (26b), formula (28b) and formula (39b) form three sides ...Sp16a

Surface in which the approximation straight lines of formula (23b), formula (28b), formula (83) and formula (85) form four sides ...s5a

Surface in which the approximation straight lines of formula (22b), formula (26b), formula (83) and formula (86) form four sides ...s7a

Surface in which the approximation straight lines of formula (38b), formula (39b), formula (85) and formula (86) form four sides ...s6a

In this case, it is supposed that the region (space) V15b includes the respective approximation straight lines themselves that define the above-mentioned respective surfaces. Moreover, the surfaces s5a to s7a are surfaces that are formed in the same manner as in surfaces s5 to s7 within the range of 140 nm < L < 160 nm in the total film thickness L, except that the moving ranges of the respective line segments are set within the range of 140 nm ≤ L ≤ 160 nm.

<3. Third Embodiment>

Figs. 44A to 47B show structural examples of structural elements of an optical film in accordance with a third embodiment of the present invention. In the third embodiment, those members that correspond to those of the first embodiment are indicated by the same reference numerals. The third embodiment differs from the first embodiment in that structural elements 4c are two-dimensionally arranged on one of main surfaces of the first optical layer 4. The two-dimensional arrangement is preferably formed as a two-dimensional arrangement in the most closely packed filling state. Thus, it becomes possible to improve the directional reflectance.

As shown in Figs. 44A to 44C, on the one main surface of the first optical layer 4, for example, pillar-shaped structural elements (pillar-shaped bodies) 4c are formed so as to be orthogonally arranged. More specifically, first structural elements 4c that are arranged in a first direction and second structural elements 4c that are arranged in a second direction orthogonal to the first direction are designed to mutually penetrate side faces with each other. Each of the pillar-shaped structural elements 4c has, for example, a pillar shape, such as a prism shape (Fig. 44A), a lenticular shape (Fig. 44B), or the like, or is formed as a convex portion or a concave portion having a shape (Fig. 44C), with an apex portion of each of these pillar shapes being formed into a polygonal shape (for example, a pentagonal shape).

Moreover, by two-dimensionally arranging the structural elements 4c having, for example, a spherical shape or a corner cubic shape, on the one main surface of the first optical layer 4, in the most closely packed filling state, a close-packed array, such as a square close-packed array, a delta close-packed array and a hexagonal close-packed array, may be formed thereon. For example, as shown in Figs. 45A to 45C, the square close-packed array is formed by arranging structural elements 4c with a bottom face having a quadrilateral shape (for example, square shape) in a square close-packed state, that is, in a matrix state (lattice state). For example, as shown in Figs. 46A to 46C, the hexagonal close-packed array is formed by arranging structural elements 4c with a bottom face having a hexagonal shape in a hexagonal close-packed state. For example, as shown in Figs. 47A to 47B, the delta close-packed array is formed by arranging structural elements 4c (for example, having a pyramid shape) with a bottom face having a triangular shape in the most closely packed filling state.

Each of the structural elements 4c is formed as a convex portion or a concave portion having, for example, a corner cubic shape, a hemispherical shape, a semi-elliptical shape, a prism shape, a cylindrical shape, a free-curved face shape, a polygonal shape, a cone shape, a polygonal pyramid-like shape, a truncated cone shape, a paraboloidical surface shape, or the like. The bottom face of each structural element 4c has, for example, a round shape, an elliptical shape, or a polygonal shape, such as a triangular shape, a quadrangular shape, a hexagonal shape, an octagonal shape or the like. Moreover, the pitches P1 and P2 of the structural elements 4c are preferably selected on demand in accordance with desired optical characteristics. Furthermore, in the case when the main axis of the structural element 4c is tilted relative to a perpendicular line that is perpendicular to the incident surface of the optical film 1, the main axis of the structural element 4c is preferably tilted in at least one of the arrangement directions of the two-dimensional arrangement of the structural elements 4c. In the case when the optical film 1 is bonded to a window material that is disposed virtually perpendicularly to the ground, the main axis of the structural elements 4c is preferably tilted downward (ground side) from the window material based upon the perpendicular line.

In the case of the structural elements 4c having the comer cubic shape, when the ridge line portion R is great, the main axis thereof is preferably tilted in the upward sky direction and from the viewpoint of suppressing downward reflection, it is preferably tilted toward the ground side. Since solar light rays are diagonally made incident on the film, light rays are hardly made incident onto the inside of the structure so that the shape on the incident side becomes very important. That is, in the case when the R of the ridge line portion is large, since retroreflection light is reduced, by tilting the main axis thereof in the upward sky direction, this phenomenon can be suppressed. Moreover, in the corner cubic body, the retroreflection is realized by being reflected on the reflection surface three times; however, one portion of light rays is leaked in directions other than the retroreflection direction because of reflections of two times. By tilting the corner cube toward the ground side, most of this leakage light can be returned to the upward sky direction. In this manner, depending on the shape and object, the tilted angle may be made in any direction.

<4. Fourth Embodiment>

Fig. 48A is a cross-sectional view showing one structural example of an optical film in accordance with a fourth embodiment of the present invention. In the fourth embodiment, those members that correspond to those of the first embodiment are indicated by the same reference numerals, and explanations thereof will be omitted. The fourth embodiment differs from the first embodiment in that a plurality of reflection layers 3 that are tilted relative to the incident surface of light rays are installed inside an optical layer 2 and in that these reflection layers 3 are arranged in parallel with one another.

Fig. 48B is a perspective view showing one structural example of structural elements of the optical film in accordance with the fourth embodiment of the present invention. Each of the structural elements 4c is formed into a convex portion having a triangular pillar shape extending in one direction, and these pillar-shaped structural elements 4c are one-dimensionally arranged in the one direction. The cross section of each structural element 4c perpendicular to the extending direction has, for example, a right triangle shape. On the tilted surface on the acute angle side of the structural element 4c, the reflection layer 3 is formed by using a thin-film forming method having a directive characteristic, such as a vapor deposition method, a sputtering method or the like.

In accordance with the fourth embodiment, the plural reflection layers 3 are arranged in parallel with one another inside an optical layer 5. Thus, the number of reflections by the reflection layers 3 can be reduced in comparison with that of the structure in which the structural element 4c having the corner cubic shape or the prism shape is formed. Therefore, it is possible to increase the reflectance and also to reduce the light absorption by the reflection layers 3.

<5. Fifth Embodiment>

The fifth embodiment differs from the first embodiment in that while a light ray having a predetermined wavelength is directively reflected, light rays having wavelengths other than the predetermined wavelength are scattered. The optical film 1 is provided with a light scattering body for scattering incident light rays. This scattering body is installed on at least one portion of, for example, the surface of the optical layer 2, the inside of the optical layer 2 and a portion between the reflection layer 3 and the optical layer 2. The light scatting body is preferably installed on at least one portion of a portion between the reflection layer 3 and the first optical layer 4, the inside of the first optical layer 4 and the surface of the first optical layer 4. In the case when the optical film 1 is bonded to a support body such as the window material or the like, the light scattering body may be applied to either the indoor side or the outdoor side. In the case when the optical film 1 is bonded to the outdoor side, the light scattering body for scattering light rays having wavelengths other than the predetermined wavelength is preferably installed only between the reflection layer 3 and the support body such as the window material or the like. This is because when the light scattering body exists between the reflection layer 3 and the incident surface, the directive reflection property tends to be lost. Moreover, in the case when the optical film 1 is bonded to the indoor side, the light scattering body is preferably installed between the light-releasing surface on the side opposite to the bonding surface and the reflection layer 3.

Fig. 49A is a cross-sectional view showing a first structural example of the optical film 1 in accordance with the fifth embodiment of the present invention.

As shown in Fig. 49A, the first optical layer 4 includes a resin and fine particles 11.

The fine particles 11 have a refractive index different from that of the resin serving as a main constituent material of the first optical layer 4. As the fine particles 11, for example, at least one kind of organic fine particles and inorganic fine particles. Moreover, as the fine particles 11, hollow fine particles may be used. Examples of the fine particles 11 include inorganic fine particles, such as silica, alumina, or the like, or organic fine particles, such as styrene or acrylic materials, copolymers thereof, or the like; and in particular, silica fine particles are preferably used.

Fig. 49B is a cross-sectional view showing a second structural example of the optical film 1 in accordance with the fifth embodiment of the present invention. As shown in Fig. 49B, the optical film 1 is further provided with a light diffusion layer 12 on the surface of the first optical layer 4. The light diffusion layer 12 contains, for example, a resin and fine particles. As the fine particles, the same fine particles as those of the first example may be used.

Fig. 49C is a cross-sectional view showing a third structural example of the optical film 1 in accordance with the fifth embodiment of the present invention. As shown in Fig. 49C, the optical film 1 is further provided with a light diffusion layer 12 between the reflection layer 3 and the first optical layer 4. The light diffusion layer 12 contains, for example, a resin and fine particles. As the fine particles, the same fine particles as those of the first example may be used.

In accordance with the fifth embodiment, a light ray having a predetermined wavelength such as an infrared ray or the like can be directively reflected, while light rays having wavelengths other than the predetermined wavelength, such as visible light-rays or the like, can be scattered. Therefore, the optical film 1 is allowed to become foggy so that it is possible to impart a designing property to the optical film 1.

<6. Sixth Embodiment>

Fig. 50A is a cross-sectional view showing one structural example of an optical film in accordance with a sixth embodiment of the present invention. In the sixth embodiment, those members that correspond to those of the first embodiment are indicated by the same reference numerals, and explanations thereof will be omitted. As shown in Fig.

50A, the optical film 1 in accordance with the sixth embodiment differs from that of the first embodiment in that a concave-convex surface of an optical layer 2a is not enclosed and buried by a resin material or the like, and in that the reflection layer 3 formed on the concave-convex surface of the optical layer 2a is exposed. The optical film 1 is provided with an incident surface S1 having a concave-convex shape on which light rays, such as solar light, are made incident and a light-releasing surface S2 from which some of light rays that have been made incident on the incident surface S1 and have transmitted through the optical film 1 are released.

The optical film 1 may be further provided with a substrate 2b on the light-releasing surface S2 of the optical layer 2a, if necessary. Moreover, the optical film 1 may be further provided with a bonding layer 6 and a separation layer 7 on the light-releasing surface S2 of the optical layer 2a or on the substrate 2b, if necessary. As the optical layer 2a and the substrate 2b, those that are the same as those of the first optical layer 4 and the substrate 4a of the aforementioned first embodiment may be used.

Fig. 50B is a cross-sectional view showing an example in which the optical film relating to the sixth embodiment of the present invention is bonded to an adherent member. As shown in Fig. 50B, the incident surface S2 of the optical film 1 is bonded to an adherent member 10a, for example, with the bonding layer 6 interposed therebetween. As the adherent member 10a, for example, a window material, a blind, a roll screen, a pleated screen, and the like are preferably used.

In accordance with the sixth embodiment, since the concave-convex surface of the optical layer 2a with the reflection layer 3 formed thereon is used as the incident surface S1, one portion of incident light rays is scattered by the incident surface S1, while one portion of light rays that have not been scattered is transmitted through the optical film 1. Therefore, it is possible to obtain an optical film 1 that allows brightness of light to be felt by the incident light rays, although it is opaque. The optical film 1 having such a characteristic is preferably applicable to interior members, exterior members, solar shading members, or the like for use in such places where privacy is required, that is, more specifically, to window materials, blinds, roll screens, pleated screens, and the like.

<7. Seventh Embodiment>

Fig. 51 is a cross-sectional view showing one structural example of an optical film in accordance with a seventh embodiment of the present invention. The seventh embodiment differs from the first embodiment in that a self-washing effect layer 51 that exerts a washing effect is further placed on an exposed surface on the side opposite to the surface to be bonded to the adherent member of the incident surface S1 and the light-releasing surface S2 of the optical film 1. The self-washing effect layer 51 contains, for example, a photo-catalyst. As the photo-catalyst, for example, $TiO_2$ may be used.

As described above, the optical film 1 has such a characteristic as to semi-transmit the incident light rays. In the case when the optical film 1 is used outdoors, or in a room or the like with lots of contaminants, since light is scattered by contaminants adhering to the surface to cause reduction in transmitting and reflecting properties, the surface is preferably always kept transparent optically. For this reason, the surface is preferably provided with superior water repellency, hydrophilicity, or the like, with the surface being preferably allowed to exert a washing effect automatically.

In accordance with the seventh embodiment, since the optical film 1 is provided with the self-washing effect layer 51, it is possible to impart water repellency, hydrophilicity, or the like to the incident surface. Therefore, it is possible to suppress contaminants or the like from adhering to the incident surface, and consequently to suppress a reduction of directive reflecting property.

<8. Eighth Embodiment>

The aforementioned first embodiment has been explained by exemplifying a case in which the present invention is applied to the window material or the like; however, the present invention is not intended to be limited by this example, and may be applied to members other than the window material, such as interior members and exterior members. Moreover, not limited only to immovable fixed interior members and exterior members, such as walls, roofs, or the like, the present invention can be applied to a device that can be taken into an indoor space, by moving the interior member or the exterior member so as to adjust the transmission amount and/or reflection amount of solar light in accordance with a change in the amount of solar light caused by seasons and time variations. In the eighth embodiment, as one example of such a device, a solar shading device (blind device), which is capable of adjusting the shading amount of incident light rays by the use of a group of solar shading members by altering the angle of the group of solar shading members composed of a plurality of solar shading members, will be explained.

Fig. 52 is a perspective view showing one structural example of a blind device in accordance with the eighth embodiment of the present invention. As shown in Fig. 52, a blind device 201 serving as the solar shading device is constituted by a head box 203, a group of slats (group of solar shading members) 202 composed of a plurality of slats (blades) 202a and a bottom rail 204. The head box 203 is installed above the group of slats 202 composed of the plural slats 202a.

From the head box 203, a ladder code 206 and a lifting code 205 are extended downward, and the bottom rail 204 is suspended at the lower ends of these codes. The slats 202a, each serving as the solar shading member with, for example, a thin elongated rectangular shape, are suspended and supported by the ladder codes 206 that extend downward from the head box 203, with predetermined intervals. Moreover, an operation means (not shown), such as a rod, for use in adjusting the angle of the group of the slats 202 composed of the plural slats 202a is attached to the head box 203.

The head box 203 serves as a driving means that adjusts the amount of light to be taken into a space such as the inside of a room, by rotation-driving the group of slats 202 composed of the plural slats 202a in response to an operation by the operation means such as the rod. Moreover, the head box 203 also functions as a driving means (raising and lowering means) that raises and lowers the group of slats 202 on demand in accordance with the operation of the operation means such as raising and lowering operation codes 207 or the like.

Fig. 53A is a cross-sectional view showing a first structural example of the slats. As shown in Fig. 53A, each slat 202a is provided with a base member 211 and an optical film 1. Of the two main surfaces of the base member 211, the optical film 1 is preferably formed on the incident surface side (for example, surface side opposed to the window material) on which external light is made incident in a state where the group of slats 202 are closed. The optical film 1 and the base member 211 are bonded to each other, for example, by using a bonding layer such as an adhesive layer or a sticker layer.

As the shape of the base member 211, for example, a sheet shape, a film shape, a plate shape or the like may be used. As the material for the base member 211, for example, glass, a resin material, a paper material, a cloth material or the like may be used, and from the viewpoint of taking visible light into a predetermined space such as the inside of a room, a resin material having a transparent property is preferably used. As the glass, resin material, paper material and cloth material, known materials as the conventional roll screen may be used. As the optical film 1, one kind of the optical films 1 relating to the aforementioned first to seventh embodiments may be used, or two or more kinds of them may be used in combination.

Fig. 53B is a cross-sectional view showing a second structural example of the slat. As shown in Fig. 53B, in the second structural example, the optical film 1 is used as the slats 202a. The optical film 1 is preferably designed to be supported by the ladder codes 205 and have such a degree of rigidity as to maintain its shape in the supported state.

## <9. Ninth Embodiment>

In the ninth embodiment, explanations will be given to a roll screen device that is one example of a solar shading device capable of adjusting the shading amount of incident light rays by the use of a solar shading member by winding-up or feeding the solar shading member.

Fig. 54A is a perspective view showing one structural example of the roll screen device in accordance with the ninth embodiment of the present invention. As shown in Fig. 54A, a roll screen device 301 serving as the solar shading device is provided with a screen 302, a head box 303 and a core member 304. The head box 303 is designed so as to raise or lower the screen 302 by operating the operation unit such as a chain 305 or the like. The head box 303 is provided with a winding shaft on which the screen is wound or from which the screen is fed, and one of the ends of the screen 302 is joined to the winding shaft. The core member 304 is joined to the other end of the screen 302. The screen 302 has flexibility, and its shape is not particularly limited, and is preferably selected depending on the shape of a window material to which the roll screen device 301 is applied, and is, for example, formed into a rectangular shape.

Fig. 54B is a cross-sectional view showing one structural example of the screen 302. As shown in Fig. 54B, the screen 302 is provided with a base member 311 and the optical film 1, and preferably designed so as to have flexibility. Of two main surfaces of the base member 211, the optical film 1 is preferably formed on the incident surface side (for example, surface side opposed to the window material) on which external light is made incident. The optical film 1 and the base member 311 are bonded to each other, for example, by using a bonding layer, such as an adhesive layer or a sticker layer. Additionally, the structure of the screen 302 is not limited only by this example, and the optical film 1 may be used as the screen 302.

As the shape of the base member 311, for example, a sheet shape, a film shape, a plate shape or the like may be used. As the material for the base member 311, for example, glass, a resin material, a paper material, a cloth material or the like may be used, and from the viewpoint of taking visible light into a predetermined space such as the inside of a room, a resin material having a transparent property is preferably used. As the glass, resin material, paper material and cloth material, known materials as the conventional roll screen may be used. As the optical film 1, one kind of the optical films 1 relating to the aforementioned first to seventh embodiments may be used, or two or more kinds of them may be used in combination.

<10. Tenth Embodiment>

In the tenth embodiment, explanations will be given to an example in which the present invention is applied to a fitting (interior member or exterior member) in which an optical element having a directional reflection performance is used as a lighting unit.

Fig. 55A is a perspective view showing one structural example of the fitting in accordance with the tenth embodiment of the present invention. As shown in Fig. 55A, the fitting 401 has a structure in which an optical element 402 is installed in a lighting unit 404. More specifically, the fitting 401 is provided with the optical element 402 and a frame member 403 that is formed on the peripheral edge of the optical element 402. The optical element 402 is secured by the frame member 403, and the optical element 402 can be removed by disassembling the frame member 403, if necessary. As the fitting 401, for example, a shoji screen is proposed; however, the present invention is not intended to be limited by this example, and may be applicable to various fittings having a lighting unit.

Fig. 55B is a cross-sectional view showing one structural example of the optical element. As shown in Fig. 55B, the optical element 402 is provided with a base member 411 and the optical film 1. Of two main surfaces of the base member 411, the optical film 1 is preferably formed on the incident surface side (for example, surface side opposed to the window material) on which external light is made incident. The optical film 1 and the base member 311 are bonded to each other, for example, by using a bonding layer, such as an adhesive layer or a sticker layer. Additionally, the structure of the shoji screen 402 is not limited only by this example, and the optical film 1 may be used as the optical element 402.

The base member 411 may be formed as, for example, a sheet, a film, a substrate having flexibility. As the material for the base member 411, for example, glass, a resin material, a paper material, a cloth material or the like may be used, and from the viewpoint of taking visible light into a predetermined space such as the inside of a room, a resin material having a transparent property is preferably used. As the glass, resin material, paper material and cloth material, known materials as the conventional optical element for use as fittings may be used. As the optical film 1, one kind of the optical films 1 relating to the aforementioned first to seventh embodiments may be used, or two or more kinds of them may be used in combination.

[Examples]

The present invention is described in greater detail below by referring to the examples, however, the present invention should not be construed as being limited only to these examples.

In the following examples, optical characteristics of a laminated film in the case of changing the film thicknesses of the respective layers of a reflection layer 3 are found by simulation. The simulation is carried out on the laminated film shown in each of the following sample 1-1 to sample 7-5, by using optical simulation software (Light Tools) made by ORA (Optical Research Associates), so that values of the visible light-ray transmittance, shading coefficient, blue index and red index are obtained in the case when the ratio $\alpha$ and ratio $\beta$ are changed.

(Sample 1-1)

First, it is assumed that high-refractive-index layers and metal layers are stacked to form a laminated film having a five-layer structure. The configuration of this laminated film is shown below.

Layer configuration: high-refractive-index layer/metal layer/ high-refractive-index layer/metal layer/high-refractive-index layer

Total film thickness L: 80 nm

High-refractive-index layer:

Material: GAZO

Refractive index: 1.936

Geometric film thickness of first and fifth layers: 6.73 nm

Film thickness of third layer: 56.53nm

Metal layer:

Material: AgNdCu

Refractive index: 0.164

Geometric film thickness of second and fourth layers: 5.0 nm

Ratio $\alpha$ : 0.0121

Ratio β : 8.4

(Sample 1-2) It is assumed that a laminated film is formed by using the same conditions as those of sample 1-1 except that the film thicknesses of the respective layers are changed so as to satisfy the ratio α : 0.0138 and the ratio β : 12.4.

(Sample 1-3) It is assumed that a laminated film is formed by using the same conditions as those of sample 1-1 except that the film thicknesses of the respective layers are changed so as to satisfy the ratio α : 0.0138 and the ratio β : 17.9.

(Sample 1-4) It is assumed that a laminated film is formed by using the same conditions as those of sample 1-1 except that the film thicknesses of the respective layers are changed so as to satisfy the ratio α : 0.0155 and the ratio β : 17.4.

(Sample 1-5) It is assumed that a laminated film is formed by using the same conditions as those of sample 1-1 except that the film thicknesses of the respective layers are changed so as to satisfy the ratio α : 0.0172 and the ratio β : 14.6.

(Sample 2-1) It is assumed that a laminated film is formed by using the same conditions as those of sample 1-1 except that the total film thickness of the laminated film L : 90 nm is satisfied and that the film thicknesses of the respective layers are changed so as to satisfy the ratio α : 0.0106 and the ratio β : 4.

(Sample 2-2) It is assumed that a laminated film is formed by using the same conditions as those of sample 2-1 except that the film thicknesses of the respective layers are changed so as to satisfy the ratio α : 0.0123 and the ratio β : 10.6.

(Sample 2-3) It is assumed that a laminated film is formed by using the same conditions as those of sample 2-1 except that the film thicknesses of the respective layers are changed so as to satisfy the ratio α : 0.014 and the ratio β : 7.6.

(Sample 2-4) It is assumed that a laminated film is formed by using the same conditions as those of sample 2-1 except that the film thicknesses of the respective layers are changed so as to satisfy the ratio α : 0.0157 and the ratio β : 1.6.

(Sample 2-5) It is assumed that a laminated film is formed by using the same conditions as those of sample 2-1 except that the film thicknesses of the respective layers are changed so as to satisfy the ratio α : 0.0157 and the ratio β : 9.

(Sample 3-1) It is assumed that a laminated film is formed by using the same conditions as those of sample 1-1 except that the total film thickness of the laminated film L : 100 nm is satisfied and that the film thicknesses of the respective layers are changed so as to satisfy the ratio α : 0.0095 and the ratio β : 4.2.

(Sample 3-2) It is assumed that a laminated film is formed by using the same conditions as those of sample 3-1 except that the film thicknesses of the respective layers are changed so as to satisfy the ratio α : 0.0122 and the ratio β : 6.6.

(Sample 3-3) It is assumed that a laminated film is formed by using the same conditions as those of sample 3-1 except that the film thicknesses of the respective layers are changed so as to satisfy the ratio α : 0.0129 and the ratio β : 4.8.

(Sample 3-4) It is assumed that a laminated film is formed by using the same conditions as those of sample 3-1 except that the film thicknesses of the respective layers are changed so as to satisfy the ratio α : 0.0129 and the ratio β : 7.4.

(Sample 3-5) It is assumed that a laminated film is formed by using the same conditions as those of sample 3-1 except that the film thicknesses of the respective layers are changed so as to satisfy the ratio α : 0.0146 and the ratio β : 4.8.

(Sample 4-1) It is assumed that a laminated film is formed by using the same conditions as those of sample 1-1 except that the total film thickness of the laminated film L : 120 nm is satisfied and that the film thicknesses of the respective layers are changed so as to satisfy the ratio α : 0.0094 and the ratio β : 3.

(Sample 4-2) It is assumed that a laminated film is formed by using the same conditions as those of sample 4-1 except that the film thicknesses of the respective layers are changed so as to satisfy the ratio α : 0.0111 and the ratio β : 4.6.

(Sample 4-3) It is assumed that a laminated film is formed by using the same conditions as those of sample 4-1 except that the film thicknesses of the respective layers are changed so as to satisfy the ratio α : 0.0128 and the ratio β : 4.

(Sample 4-4) It is assumed that a laminated film is formed by using the same conditions as those of sample 4-1 except that the film thicknesses of the respective layers are changed so as to satisfy the ratio α : 0.0128 and the ratio β : 5.8.

(Sample 4-5) It is assumed that a laminated film is formed by using the same conditions as those of sample 4-1 except that the film thicknesses of the respective layers are changed so as to satisfy the ratio α : 0.0145 and the ratio β : 3.
(Sample 5-1) It is assumed that a laminated film is formed by using the same conditions as those of sample 1-1 except that the total film thickness of the laminated film L : 140 nm is satisfied and that the film thicknesses of the respective layers are changed so as to satisfy the ratio α : 0.0065 and the ratio β : 2.4.
(Sample 5-2) It is assumed that a laminated film is formed by using the same conditions as those of sample 5-1 except that the film thicknesses of the respective layers are changed so as to satisfy the ratio α : 0.0082 and the ratio β : 3.8.
(Sample 5-3) It is assumed that a laminated film is formed by using the same conditions as those of sample 5-1 except that the film thicknesses of the respective layers are changed so as to satisfy the ratio α : 0.0099 and the ratio β : 1.6.
(Sample 5-4) It is assumed that a laminated film is formed by using the same conditions as those of sample 5-1 except that the film thicknesses of the respective layers are changed so as to satisfy the ratio α : 0.0099 and the ratio β : 4.2.
(Sample 5-5) It is assumed that a laminated film is formed by using the same conditions as those of sample 5-1 except that the film thicknesses of the respective layers are changed so as to satisfy the ratio α : 0.0116 and the ratio β : 1.6.
(Sample 6-1) It is assumed that a laminated film is formed by using the same conditions as those of sample 1-1 except that the total film thickness of the laminated film L : 160 nm is satisfied and that the film thicknesses of the respective layers are changed so as to satisfy the ratio α : 0.0057 and the ratio β : 2.2.
(Sample 6-2) It is assumed that a laminated film is formed by using the same conditions as those of sample 6-1 except that the film thicknesses of the respective layers are changed so as to satisfy the ratio α : 0.0074 and the ratio β : 3.6.
(Sample 6-3) It is assumed that a laminated film is formed by using the same conditions as those of sample 6-1 except that the film thicknesses of the respective layers are changed so as to satisfy the ratio α : 0.0091 and the ratio β : 1.6.
(Sample 6-4) It is assumed that a laminated film is formed by using the same conditions as those of sample 6-1 except that the film thicknesses of the respective layers are changed so as to satisfy the ratio α : 0.0108 and the ratio β : 1.2.
(Sample 6-5) It is assumed that a laminated film is formed by using the same conditions as those of sample 6-1 except that the film thicknesses of the respective layers are changed so as to satisfy the ratio α : 0.0125 and the ratio β : 3.2.
(Sample 7-1) It is assumed that a laminated film is formed by using the same conditions as those of sample 1-1 except that the total film thickness of the laminated film L : 180 nm is satisfied and that the film thicknesses of the respective layers are changed so as to satisfy the ratio α : 0.005 and the ratio β : 1.8.
(Sample 7-2) It is assumed that a laminated film is formed by using the same conditions as those of sample 7-1 except that the film thicknesses of the respective layers are changed so as to satisfy the ratio α : 0.0067 and the ratio β : 3.4.
(Sample 7-3) It is assumed that a laminated film is formed by using the same conditions as those of sample 7-1 except that the film thicknesses of the respective layers are changed so as to satisfy the ratio α : 0.0101 and the ratio β : 2.
(Sample 7-4) It is assumed that a laminated film is formed by using the same conditions as those of sample 7-1 except that the film thicknesses of the respective layers are changed so as to satisfy the ratio α : 0.0118 and the ratio β : 1.6.
(Sample 7-5) It is assumed that a laminated film is formed by using the same conditions as those of sample 7-1 except that the film thicknesses of the respective layers are changed so as to satisfy the ratio α : 0.0135 and the ratio β : 2.

[Simulation Results]

Table 1 and Table 2 show the results of simulation processes carried out on the laminated films shown in sample 1-1 to sample 7-5.

[Table 1]

| Sample | Layer configuration (1/2/3/4/5 layer) | Total film thickness L [nm] | α | β | Geometric film thickness (1/2/3/4/5 layer) [nm] | Optical film thickness (1/3/5 layer) [nm] |
|---|---|---|---|---|---|---|
| 1-1 | GAZO/AgNdCu / GAZO / AgNdCu /GAZO | 80 | 0.0121 | 8.4 | 6.73 / 5.0 / 56.53 / 5.0 / 6.73 | 13.03 / 109.44 / 13.03 |
| 1-2 | | | 0.0138 | 12.4 | 4.78 / 5.61 / 59.23 / 5.61 / 4.78 | 9.25 / 114.68 / 9.25 |
| 1-3 | | | 0.0138 | 17.9 | 3.46 / 5.61 / 61.87 / 5.61 / 3.46 | 6.69 / 119.79 / 6.69 |
| 1-4 | | | 0.0155 | 17.4 | 3.49 / 6.19 / 60.65 / 6.19 / 3.49 | 6.75 / 117.42 / 6.75 |
| 1-5 | | | 0.0172 | 14.6 | 4.01 / 6.75 / 58.49 / 6.75 / 4.01 | 7.76 / 113.23 / 7.76 |
| 2-1 | GAZO / AgNdCu / GAZO / AgNdCu /GAZO | 90 | 0.0106 | 4 | 13.33 / 5.00 / 53.33 / 5.00/ 13.33 | 25.81 / 103.25 / 25.81 |
| 2-2 | | | 0.0123 | 10.6 | 6.24 / 5.70 / 66.13 / 5.70/ 6.24 | 12.08 / 128.02 / 12.08 |
| 2-3 | | | 0.014 | 7.6 | 8.05 / 6.37 / 61.16 / 6.37 / 8.05 | 15.58 / 118.40 / 15.58 |
| 2-4 | | | 0.0157 | 1.6 | 21.10 / 7.03 / 33.76 / 7.03 / 21.10 | 40.84 / 65.35 / 40.84 |
| 2-5 | | | 0.0157 | 9 | 6.90 / 7.03 / 62.14 / 7.03 / 6.90 | 13.37 / 120.30 / 13.37 |
| 3-1 | GAZO/AgNdCu / GAZO / AgNdCu /GAZO | 100 | 0.0095 | 4.2 | 14.50 / 5.05 / 60.92 / 5.04 / 14.50 | 2.08 / 117.94 / 28.08 |
| 3-2 | | | 0.0112 | 6.6 | 10.27 / 5.83 / 67.80 / 5.83 / 10.27 | 19.89 / 131.25 / 19.89 |
| 3-3 | | | 0.0129 | 4.8 | 12.77 / 6.60 / 61.27 / 6.60 / 12.77 | 24.71 / 118.63 / 24.71 |
| 3-4 | | | 0.0129 | 7.4 | 9.23 / 6.60 / 68.34 / 6.60 / 9.23 | 17.88 / 132.30 / 17.88 |
| 3-5 | | | 0.0146 | 4.8 | 12.55 / 7.34 / 60.23 / 7.34 / 12.55 | 24.29 / 116.60 / 24.29 |
| 4-1 | GAZO / AgNdCu / GAZO / AgNdCu /GAZO | 120 | 0.0094 | 3 | 21.60 / 5.99 / 64.8 / 5.99 / 21.60 | 41.82 / 125.47 / 41.82 |
| 4-2 | | | 0.0111 | 4.6 | 16.08 / 6.95 / 73.95 / 6.95 / 16.08 | 31.12 / 143.17 / 31.12 |
| 4-3 | | | 0.0128 | 4 | 17.38 / 7.87 / 69.50 / 7.87 / 17.38 | 33.64 / 134.56 / 33.64 |
| 4-4 | | | 0.0128 | 5.8 | 13.37 / 7.87 / 77.52 / 7.87 / 13.37 | 25.88 / 150.09 / 25.88 |
| 4-5 | | | 0.0145 | 3 | 20.50 / 8.76 / 61.49 / 8.76 / 20.50 | 39.68 / 119.04 / 39.68 |

(continued)

| Sample | Layer configuration (1/2/3/4/5 layer) | Total film thickness L [nm] | α | β | Geometric film thickness (1/2/3/4/5 layer) [nm] | Optical film thickness (1/3/5 layer) [nm] |
|---|---|---|---|---|---|---|
| 5-1 | GAZO / AgNdCu / GAZO / AgNdCu / GAZO | 140 | 0.0065 | 2.4 | 29.54 / 5.00 / 70.90 / 5.00 / 29.54 | 57.20 / 137.27 / 57.20 |
| 5-2 | | | 0.0082 | 3.8 | 22.00 / 6.19 / 83.61 / 6.19 / 22.00 | 42.60 / 161.88 / 42.60 |
| 5-3 | | | 0.0099 | 1.6 | 34.82 / 7.33 / 55.70 / 7.33 / 34.82 | 67.40 / 107.84 / 67.40 |
| 5-4 | | | 0.0099 | 4.2 | 20.22 / 7.33 / 84.90 / 7.33 / 20.22 | 39.14 / 164.38 / 39.14 |
| 5-5 | | | 0.0116 | 1.6 | 34.20 / 8.43 / 54.72 / 8.43 / 34.20 | 66.22 / 105.95 / 66.22 |
| 6-1 | GAZO / AgNdCu / GAZO / AgNdCu / GAZO | 160 | 0.0057 | 2.2 | 35.70 / 5.02 / 78.55 / 5.02 / 35.70 | 69.12 / 152.07 / 69.12 |
| 6-2 | | | 0.0074 | 3.6 | 26.28 / 6.40 / 94.62 / 6.40 / 26.28 | 50.89 / 183.19 / 50.89 |
| 6-3 | | | 0.0091 | 1.6 | 40.15 / 7.73 / 64.24 / 7.73 / 40.15 | 77.73 / 124.36 / 77.73 |
| 6-4 | | | 0.0108 | 1.2 | 44.37 / 9.02 / 53.24 / 9.02 / 44.37 | 85.89 / 103.07 / 85.89 |
| 6-5 | | | 0.0125 | 3.2 | 26.83 / 10.25 / 85.84 / 10.25 / 26.83 | 51.93 / 166.19 / 51.93 |
| 7-1 | GAZO / AgNdCu / GAZO / AgNdCu / GAZO | 180 | 0.005 | 1.8 | 44.73 / 5.01 / 80.51 / 5.01 / 44.73 | 86.60 / 155.87 / 86.60 |
| 7-2 | | | 0.0067 | 3.4 | 30.89 / 6.59 / 105.04 / 6.59 / 30.89 | 59.81 / 203.35 / 59.81 |
| 7-3 | | | 0.0101 | 2 | 40.21 / 9.57 / 80.43 / 9.57 / 40.21 | 77.86 / 155.71 / 77.86 |
| 7-4 | | | 0.0118 | 1.6 | 43.90 / 10.98 / 70.24 / 10.98 / 43.90 | 84.99 / 135.98 / 84.99 |
| 7-5 | | | 0.0135 | 2 | 38.83 / 12.35 / 77.65 / 12.35 / 38.83 | 75.17 / 150.34 / 75.17 |

[Table 2]

| Sample | Visible light-ray transmittance (%) | Shading coefficient | Blue index | Red index |
|---|---|---|---|---|
| 1-1 | 77 | 0.66 | 0.147 | 0.175 |
| 1-2 | 75.2 | 0.63 | 0.148 | 0.206 |
| 1-3 | 75.6 | 0.63 | 0.159 | 0.194 |
| 1-4 | 73 | 0.59 | 0.149 | 0.244 |
| 1-5 | 69.4 | 0.56 | 0.133 | 0.302 |
| 2-1 | 77 | 0.67 | 0.138 | 0.171 |
| 2-2 | 76 | 0.64 | 0.173 | 0.167 |

(continued)

| Sample | Visible light-ray transmittance (%) | Shading coefficient | Blue index | Red index |
|---|---|---|---|---|
| 2-3 | 73 | 0.59 | 0.145 | 0.236 |
| 2-4 | 60.7 | 0.53 | 0.165 | 0.39 |
| 2-5 | 70.4 | 0.56 | 0.143 | 0.283 |
| 3-1 | 78 | 0.69 | 0.149 | 0.143 |
| 3-2 | 76.4 | 0.64 | 0.171 | 0.156 |
| 3-3 | 73 | 0.59 | 0.138 | 0.233 |
| 3-4 | 74.3 | 0.6 | 0.171 | 0.198 |
| 3-5 | 69.4 | 0.55 | 0.129 | 0.296 |
| 4-1 | 77 | 0.66 | 0.131 | 0.158 |
| 4-2 | 75 | 0.61 | 0.171 | 0.167 |
| 4-3 | 71.7 | 0.56 | 0.146 | 0.247 |
| 4-4 | 72.7 | 0.56 | 0.2 | 0.2 |
| 4-5 | 65 | 0.51 | 0.113 | 0.358 |
| 5-1 | 80.3 | 0.74 | 0.112 | 0.119 |
| 5-2 | 77 | 0.67 | 0.169 | 0.112 |
| 5-3 | 71.7 | 0.59 | 0.106 | 0.247 |
| 5-4 | 75 | 0.61 | 0.196 | 0.127 |
| 5-5 | 66 | 0.53 | 0.113 | 0.327 |
| 6-1 | 81.5 | 0.75 | 0.102 | 0.112 |
| 6-2 | 76.6 | 0.68 | 0.174 | 0.108 |
| 6-3 | 73.4 | 0.59 | 0.099 | 0.219 |
| 6-4 | 62.8 | 0.51 | 0.149 | 0.346 |
| 6-5 | 70 | 0.51 | 0.194 | 0.234 |
| 7-1 | 82.5 | 0.76 | 0.108 | 0.107 |
| 7-2 | 75.8 | 0.69 | 0.176 | 0.115 |
| 7-3 | 73 | 0.55 | 0.114 | 0.216 |
| 7-4 | 63 | 0.47 | 0.112 | 0.365 |
| 7-5 | 61.6 | 0.44 | 0.119 | 0.398 |

From Table 1 and Table 2, the following facts are confirmed.

**(L = 80 nm)**

In the case when the visible light-ray transmittance, the blue index and the red index are used as the parameters, since sample 1-1, sample 1-2 and sample 1-4 satisfy the conditions of the respective parameters, the set ratio $\alpha$ and ratio $\beta$ are located within a region shown in Fig. 17A. Since sample 1-3 does not satisfy the condition of the blue index, they are located out of the region shown in Fig. 17A. Since sample 1-5 does not satisfy the conditions of the visible light-ray transmittance and the red index, they are located out of the region shown in Fig. 17A.

Moreover, in the case when the shading coefficient is further used as parameters in addition to the visible light-ray transmittance, the blue index and the red index, since sample 1-4 also satisfies the condition of the shading coefficient, the set ratio $\alpha$ and ratio $\beta$ are located within a region shown in Fig. 21A. Since sample 1-1 and sample 1-2 do not satisfy the condition of the shading coefficient, they are located out of the region shown in Fig. 21A.

(L = 90 nm)

In the case when the visible light-ray transmittance, the blue index and the red index are used as the parameters, since sample 2-1 and sample 2-3 satisfy the conditions of the respective parameters, the set ratio $\alpha$ and ratio $\beta$ are located within a region shown in Fig. 17B. Since sample 2-2 does not satisfy the condition of the blue index, they are located out of the region shown in Fig. 17B. Since sample 2-4 does not satisfy the conditions of the visible light-ray transmittance, the blue index and the red index, they are located out of the region shown in Fig. 17B. Since sample 2-5 does not satisfy the condition of the red index, they are located out of the region shown in Fig. 17B.

Moreover, in the case when the shading coefficient is further used as parameters in addition to the visible light-ray transmittance, the blue index and the red index, since sample 2-3 also satisfies the condition of the shading coefficient, the set ratio $\alpha$ and ratio $\beta$ are located within a region shown in Fig. 21B. Since sample 2-1 does not satisfy the condition of the shading coefficient, they are located out of the region shown in Fig. 21B.

(L = 100 nm)

In the case when the visible light-ray transmittance, the blue index and the red index are used as the parameters, since sample 3-1 and sample 3-3 satisfy the conditions of the respective parameters, the set ratio $\alpha$ and ratio $\beta$ are located within a region shown in Fig. 18A. Since sample 3-2 and sample 3-4 do not satisfy the condition of the blue index, they are located out of the region shown in Fig. 18A. Since sample 3-5 does not satisfy the conditions of the visible light-ray transmittance and the red index, they are located out of the region shown in Fig. 18A.

Moreover, in the case when the shading coefficient is further used as parameters in addition to the visible light-ray transmittance, the blue index and the red index, since sample 3-3 also satisfies the condition of the shading coefficient, the set ratio $\alpha$ and ratio $\beta$ are located within a region shown in Fig. 22A. Since sample 3-1 does not satisfy the condition of the shading coefficient, they are located out of the region shown in Fig. 22A.

(L = 120 nm)

In the case when the visible light-ray transmittance, the blue index and the red index are used as the parameters, since sample 4-1 and sample 4-3 satisfy the conditions of the respective parameters, the set ratio $\alpha$ and ratio $\beta$ are located within a region shown in Fig. 18B. Since sample 4-2 and sample 4-4 do not satisfy the condition of the blue index, they are located out of the region shown in Fig. 18B. Since sample 4-5 does not satisfy the conditions of the visible light-ray transmittance and the red index, they are located out of the region shown in Fig. 18B.

Moreover, in the case when the shading coefficient is further used as parameters in addition to the visible light-ray transmittance, the blue index and the red index, since sample 4-3 also satisfies the condition of the shading coefficient, the set ratio $\alpha$ and ratio $\beta$ are located within a region shown in Fig. 22B. Since sample 4-1 does not satisfy the condition of the shading coefficient, they are located out of the region shown in Fig. 22B.

(L = 140 nm)

In the case when the visible light-ray transmittance, the blue index and the red index are used as the parameters, since sample 5-1 and sample 5-3 satisfy the conditions of the respective parameters, the set ratio $\alpha$ and ratio $\beta$ are located within a region shown in Fig. 19A. Since sample 5-2 and sample 5-4 do not satisfy the condition of the blue index, they are located out of the region shown in Fig. 19A. Since sample 5-5 does not satisfy the conditions of the visible light-ray transmittance and the red index, they are located out of the region shown in Fig. 19A.

Moreover, in the case when the shading coefficient is further used as parameters in addition to the visible light-ray transmittance, the blue index and the red index, since sample 5-3 also satisfies the condition of the shading coefficient, the set ratio $\alpha$ and ratio $\beta$ are located within a region shown in Fig. 23A. Since sample 5-1 does not satisfy the condition of the shading coefficient, they are located out of the region shown in Fig. 23A.

(L = 160 nm)

In the case when the visible light-ray transmittance, the blue index and the red index are used as the parameters, since sample 6-1 and sample 6-3 satisfy the conditions of the respective parameters, the set ratio α and ratio β are located within a region shown in Fig. 19B. Since sample 6-2 and sample 6-5 do not satisfy the condition of the blue index, they are located out of the region shown in Fig. 19B. Since sample 6-4 does not satisfy the conditions of the visible light-ray transmittance and the red index, they are located out of the region shown in Fig. 19B.

Moreover, in the case when the shading coefficient is further used as parameters in addition to the visible light-ray transmittance, the blue index and the red index, since sample 6-3 also satisfies the condition of the shading coefficient, the set ratio α and ratio β are located within a region shown in Fig. 23B. Since sample 6-1 does not satisfy the condition of the shading coefficient, they are located out of the region shown in Fig. 23B.

## (L = 180 nm)

In the case when the visible light-ray transmittance, the blue index and the red index are used as the parameters, since sample 7-1 and sample 7-3 satisfy the conditions of the respective parameters, the set ratio α and ratio β are located within a region shown in Fig. 20. Since sample 7-2 does not satisfy the condition of the blue index, they are located out of the region shown in Fig. 20. Since sample 7-4 and sample 7-5 do not satisfy the conditions of the visible light-ray transmittance and the red index, they are located out of the region shown in Fig. 20.

Moreover, in the case when the shading coefficient is further used as parameters in addition to the visible light-ray transmittance, the blue index and the red index, since sample 7-3 also satisfies the condition of the shading coefficient, the set ratio α and ratio β are located within a region shown in Fig. 24. Since sample 7-1 does not satisfy the condition of the shading coefficient, they are located out of the region shown in Fig. 24.

Explanation has been given specifically to embodiments of the present invention; however, the present invention is not intended to be limited by the above-mentioned embodiments, and various modifications may be made therein based upon technical ideas of the present invention.

For example, although the configurations, methods, shapes, materials and numeric values are used in the above-mentioned embodiments, they are exemplary only, and configurations, methods, shapes, materials, numeric values and the like, different from those may be used, on demand.

Moreover, the respective configurations of the above-mentioned embodiments may be combined with one another on demand within the scope not departing from the gist of the present invention.

In the above-mentioned embodiments, explanations have been given by exemplifying the driving system of the blind device and the roll screen device as a manual driving system; however, an electric driving system may be used as the driving system of the blind device and the roll screen device.

Moreover, in the above-mentioned embodiment, explanations have been given by exemplifying a configuration in which an optical film is bonded to an adherent member such as a window material or the like; however, another configuration may be adopted in which the adherent member such as the window material or the like is prepared as a first optical layer or a second optical layer itself of the optical film. Thus, the optical element such as the window material or the like may be preliminarily prepared with a function for a directional reflection.

Moreover, in the above-mentioned embodiments, explanations have been given by exemplifying a configuration in which the optical element is prepared as an optical film; however, the shape of the optical element is not intended to be limited by a film shape, and a plate shape, a block shape or the like may be used.

In the above-mentioned embodiments, explanation have been given by exemplifying a structure in which the present invention is applied to an interior member or an exterior member, such as a window material, fittings, slats of a blind device, and a screen or the like of a roll screen device; however, the present invention is not intended to be limited by these, and may be applicable to an interior member and an exterior member other than those described above.

As the interior member or the exterior member to which the optical element relating to the present invention is applied, for example, an interior member or an exterior member constituted by an optical element itself, an interior member or an exterior member constituted by a transparent substrate to which a directional reflection body is bonded, or the like, is proposed. By installing such an interior member or exterior member in the vicinity of a window inside a room, for example, only infrared rays can be directionally reflected outside the room, while visible light rays can be taken into the room. Therefore, in the case when the interior member or the exterior member is installed, it becomes possible to reduce the necessity of indoor illumination. Moreover, since there is hardly any diffused reflection into the indoor side by the interior member or the exterior member, it is possible to suppress an ambient temperature rise. Furthermore, in accordance with required purposes, such as visibility control, intensity improvement and the like, the present invention may be applied to a bonding member other than the transparent substrate.

In the above-mentioned embodiments, explanations have been given by exemplifying a case in which the present invention is applied to a blind device and a roll screen device; however, the present invention is not intended to be limited by these, and may be applicable to various solar shading devices to be installed indoors or outdoors.

Moreover, in the above-mentioned embodiments, explanations have been given by exemplifying a case in which the present invention is applied to a solar shading device (for example, roll screen device) capable of adjusting the shading amount of incident light rays by the use of a solar shading member by winding a solar shading member up or by feeding the solar shading member out; however, the present invention is not intended to be limited by this example. For example, the present invention may be applied to a solar shading device capable of adjusting the shading amount of incident light rays by folding the shading member up. As the solar shading device of this type, for example, a pleated screen device which is capable of adjusting the shading amount of incident light rays by folding up a screen serving as the shading member like bellows is proposed.

Furthermore, in the above-mentioned embodiments, explanations have been given by exemplifying a case in which the present invention is applied to a horizontal blind device (Venetian blind device); however, the present invention may also be applicable to a longitudinal blind device (vertical blind device).

In the above-mentioned second embodiment, by defining a minute region Δ Si between the respective adjacent regions in the same manner as in the first embodiment, the ratio α and the ratio β may be set within a region surrounded by a circumferential surface S composed of a group of the minute regions Δ Si.

The present technique may have the following configurations.

(1) An optical element including: a first optical layer having a concave-convex surface;
a wavelength-selective reflection layer formed on the concave-convex surface; and
a second optical layer formed on the wavelength-selective reflection layer, and in this structure, the wavelength-selective reflection layer has a five-layer structure in which a high-refractive-index layer and a metal layer are alternately stacked, and in the case when the entire wavelength-selective reflection layer has a geometric film thickness L of 80 nm, a ratio α (= $d_b/d_a$) of an optical film thickness $d_b$ of the entire metal layer relative to an optical film thickness $d_a$ of the entire high-refractive-index layer and a ratio β (= $d_3/d_1$) of an optical film thickness $d_3$ of the third high-refractive-index layer relative to an optical film thickness $d_1$ of the first high-refractive-index layer, when viewed from either the first optical layer side or the second optical layer side, are included in a first region surrounded by the following formulas (1) to (4), while in the case when the entire wavelength-selective reflection layer has a geometric film thickness L of 90 nm, the ratio α and the ratio β are included in a second region surrounded by the following formulas (5) to (8), and in the case when the entire wavelength-selective reflection layer has a geometric film thickness L of 80 nm < L < 90 nm,
supposing that each of minute sides formed by dividing a periphery C1 of the first region into n-equal portions, with an intersection between the formula (1) and formula (3) being set as a starting point, is represented as Δ C1i (where i represents a natural number from 0 to n) and that each of minute sides formed by dividing a periphery C2 of the second region into n-equal portions, with an intersection between the formula (5) and formula (7) being set as a starting point, is represented as Δ C2i, and that each of minute regions having a rectangular shape, with Δ C1i and Δ C2i being formed as the two short sides, is defined as Δ Si, the optical element is designed such that the ratio α and the ratio β are surrounded by a circumferential surface S composed of a group of minute regions Δ Si.

$$\alpha=-0.0004\beta^2+0.0053\beta+0.0065 \quad \cdots(1)$$

$$\alpha=-1\times10^{-5}\beta^2+0.0007\beta+0.0066 \quad \cdots(2)$$

$$\alpha=-1\times10^{-5}\beta^2+0.0005\beta+0.0119 \quad \cdots(3)$$

$$\alpha=0.012114 \quad \cdots(4)$$

$$\alpha=-0.0002\beta^2+0.0039\beta+0.0087 \quad \cdots(5)$$

$$\alpha=-3\times10^{-5}\beta^2+0.0014\beta+0.0038 \quad \cdots(6)$$

$$\alpha=-2\times10^{-5}\beta^2+0.0006\beta+0.0112 \cdots(7)$$

$$\alpha=0.010589 \cdots(8)$$

(2) An optical element including: a first optical layer having a concave-convex surface;
a wavelength-selective reflection layer formed on the concave-convex surface; and
a second optical layer formed on the wavelength-selective reflection layer, and in this structure, the wavelength-selective reflection layer has a five-layer structure in which a high-refractive-index layer and a metal layer are alternately stacked, and in the case when the entire wavelength-selective reflection layer has a geometric film thickness L of 90 nm, a ratio $\alpha$ (= $d_b/d_a$) of an optical film thickness $d_b$ of the entire metal layer relative to an optical film thickness $d_a$ of the entire high-refractive-index layer and a ratio $\beta$ (= $d_3/d_1$) of an optical film thickness $d_3$ of the third high-refractive-index layer relative to an optical film thickness $d_1$ of the first high-refractive-index layer, when viewed from either the first optical layer side or the second optical layer side, are included in a first region surrounded by the following formulas (5) to (8), while in the case when the entire wavelength-selective reflection layer has a geometric film thickness L of 100 nm, the ratio $\alpha$ and the ratio $\beta$ are included in a second region surrounded by the following formulas (9) to (12), and in the case when the entire wavelength-selective reflection layer has a geometric film thickness L of 90 nm < L < 100 nm,
supposing that each of minute sides formed by dividing a periphery C1 of the first region into n-equal portions, with an intersection between the formula (5) and formula (7) being set as a starting point, is represented as $\Delta$ C1i (where i represents a natural number of 0 to n), that each of minute sides formed by dividing a periphery C2 of the second region into n-equal portions, with an intersection between the formula (9) and formula (11) being set as a starting point, is represented as $\Delta$ C2i and that each of minute regions having a rectangular shape, with A C1i and $\Delta$ C2i being formed as the two short sides, is defined as $\Delta$ Si, the optical element is designed such that the ratio $\alpha$ and the ratio $\beta$ are surrounded by a circumferential surface S composed of a group of minute regions $\Delta$ Si.

$$\alpha=-0.0002\beta^2+0.0039\beta+0.0087 \cdots(5)$$

$$\alpha=-3\times10^{-5}\beta^2+0.0014\beta+0.0038 \cdots(6)$$

$$\alpha=-2\times10^{-5}\beta^2+0.0006\beta+0.0112 \cdots(7)$$

$$\alpha=0.010589 \cdots(8)$$

$$\alpha=-0.0002\beta^2+0.0055\beta+0.0057 \cdots(9)$$

$$\alpha=-0.0002\beta^2+0.0045\beta-0.0067 \cdots(10)$$

$$\alpha=-4\times10^{-5}\beta^2+0.001\beta+0.0099 \cdots(11)$$

$$\alpha=0.009403 \cdots(12)$$

(3) An optical element including: a first optical layer having a concave-convex surface;
a wavelength-selective reflection layer formed on the concave-convex surface; and
a second optical layer formed on the wavelength-selective reflection layer, and in this structure, the wavelength-selective reflection layer has a five-layer structure in which a high-refractive-index layer and a metal layer are alternately stacked, and in the case when the entire wavelength-selective reflection layer has a geometric film thickness L of 100 nm, a ratio $\alpha$ (= $d_b/d_a$) of an optical film thickness $d_b$ of the entire metal layer relative to an optical film thickness $d_a$ of the entire high-refractive-index layer and a ratio $\beta$ (= $d_3/d_1$) of an optical film thickness $d_3$ of the third high-refractive-index layer relative to an optical film thickness $d_1$ of the first high-refractive-index layer, when viewed from either the first optical layer side or the second optical layer side, are included in a first region surrounded by the following formulas (9) to (12), while in the case when the entire wavelength-selective reflection layer has a geometric film thickness L of 120 nm, the ratio $\alpha$ and the ratio $\beta$ are included in a second region surrounded by the following formulas (13) to (16), and in the case when the entire wavelength-selective reflection layer has a geometric film thickness L of 100 nm < L < 120 nm,
supposing that each of minute sides formed by dividing a periphery C1 of the first region into n-equal portions, with an intersection between the formula (9) and formula (11) being set as a starting point, is represented as $\Delta$ C1i (where i represents a natural number of 0 to n), that each of minute sides formed by dividing the periphery C2 of the second region into n-equal portions, with an intersection between formula (13) and formula (15) serving as a starting point, is represented as $\Delta$ C2i and that each of minute regions having a rectangular shape, with $\Delta$ C1i and $\Delta$ C2i being formed as the two short sides, is defined as $\Delta$ Si, the optical element is designed such that the ratio $\alpha$ and the ratio $\beta$ are surrounded by a circumferential surface S composed of a group of the minute regions $\Delta$ Si.

$$\alpha=-0.0002\beta^2+0.0055\beta+0.0057 \quad \cdots(9)$$

$$\alpha=-0.0002\beta^2+0.0045\beta-0.0067 \quad \cdots(10)$$

$$\alpha=-4\times10^{-5}\beta^2+0.001\beta+0.0099 \quad \cdots(11)$$

$$\alpha=0.009403 \quad \cdots(12)$$

$$\alpha=-0.0003\beta^2+0.0074\beta+0.0033 \quad \cdots(13)$$

$$\alpha=-0.0014\beta^2+0.0191\beta-0.0422 \quad \cdots(14)$$

$$\alpha=-9\times10^{-5}\beta^2+0.0015\beta+0.0084 \quad \cdots(15)$$

$$\alpha=0.007709 \quad \cdots(16)$$

(4) An optical element including: a first optical layer having a concave-convex surface;
a wavelength-selective reflection layer formed on the concave-convex surface; and
a second optical layer formed on the wavelength-selective reflection layer, and in this structure, the wavelength-selective reflection layer has a five-layer structure in which a high-refractive-index layer and a metal layer are alternately stacked, and in the case when the entire wavelength-selective reflection layer has a geometric film thickness L of 120 nm, a ratio $\alpha$ (= $d_b/d_a$) of an optical film thickness $d_b$ of the entire metal layer relative to an optical film thickness $d_a$ of the entire high-refractive-index layer and a ratio $\beta$ (=$d_3/d_1$) of an optical film thickness $d_3$ of the third high-refractive-index layer relative to an optical film thickness $d_1$ of the first high-refractive-index layer, when viewed from either the first optical layer side or the second optical layer side, are included in a first region surrounded by the following formulas (13) to (16), while in the case when the entire wavelength-selective reflection layer has a geometric film thickness L of 140 nm, the ratio $\alpha$ and the ratio $\beta$ are included in a second region surrounded by the following formulas (17) to (20), and in the case when the entire wavelength-selective reflection layer has a geometric film thickness L of 120 nm < L < 140 nm,
supposing that each of minute sides formed by dividing a periphery C1 of the first region into n-equal portions, with an intersection between the formula (13) and formula (15) being set as a starting point, is represented as Δ C1i (where i represents a natural number of 0 to n), that each of minute sides formed by dividing the periphery C2 of the second region into n-equal portions, with an intersection between formula (17) and formula (19) serving as a starting point, is represented as Δ C2i and that each of minute regions having a rectangular shape, with Δ C1i and Δ C2i being formed as the two short sides, is defined as Δ Si, the optical element is designed such that the ratio α and the ratio β are surrounded by a circumferential surface S composed of a group of minute regions Δ Si.

$$\alpha=-0.0003\beta^2+0.0074\beta+0.0033 \cdots(13)$$

$$\alpha=-0.0014\beta^2+0.0191\beta-0.0422 \cdots(14)$$

$$\alpha=-9\times10^{-5}\beta^2+0.0015\beta+0.0084 \cdots(15)$$

$$\alpha=0.007709 \cdots(16)$$

$$\alpha=-0.0014\beta^2+0.0136\beta-0.0027 \cdots(17)$$

$$\beta=10132\alpha^2-241.39\alpha+4.747 \cdots(18)$$

$$\alpha=-0.0001\beta^2+0.002\beta+0.0074 \cdots(19)$$

$$\alpha=0.006523 \cdots(20)$$

(5) An optical element including: a first optical layer having a concave-convex surface;
a wavelength-selective reflection layer formed on the concave-convex surface; and
a second optical layer formed on the wavelength-selective reflection layer, and in this structure, the wavelength-selective reflection layer has a five-layer structure in which a high-refractive-index layer and a metal layer are alternately stacked, and in the case when the entire wavelength-selective reflection layer has a geometric film thickness L of 140 nm, a ratio α (= $d_b/d_a$) of an optical film thickness $d_b$ of the entire metal layer relative to an optical film thickness $d_a$ of the entire high-refractive-index layer and a ratio β (= $d_3/d_1$) of an optical film thickness $d_3$ of the third high-refractive-index layer relative to an optical film thickness $d_1$ of the first high-refractive-index layer, when viewed from either the first optical layer side or the second optical layer side, are included in a first region surrounded by the following formulas (17) to (20), while in the case when the entire wavelength-selective reflection layer has a geometric film thickness L of 160 nm, the ratio α and the ratio β are included in a second region surrounded by the following formulas (21) to (25), and in the case when the entire wavelength-selective reflection layer has a geometric film thickness L of 140 nm < L < 160 nm,
supposing that each of minute sides formed by dividing a periphery C1 of the first region into n-equal portions, with an intersection between the formula (17) and formula (19) being set as a starting point, is represented as Δ C1i (where i represents a natural number of 0 to n), that each of minute sides formed by dividing the periphery C2 of the second region into n-equal portions, with an intersection between the formula (21) and formula (24) serving as a starting point, is represented as Δ C2i and that each of minute regions having a rectangular shape, with Δ C1i and Δ C2i being formed as the two short sides, is defined as Δ Si, the optical element is designed such that the ratio α and the ratio β are surrounded by a circumferential surface S composed of a group of minute regions Δ Si.

$$\alpha=-0.0014\beta^2+0.0136\beta-0.0027 \cdots(17)$$

$$\beta=10132\alpha^2-241.39\alpha+4.747 \quad \cdots(18)$$

$$\alpha=-0.0001\beta^2+0.002\beta+0.0074 \quad \cdots(19)$$

$$\alpha=0.006523 \quad \cdots(20)$$

$$\alpha=-0.005\beta^2+0.0273\beta-0.0145 \quad \cdots(21)$$

$$\alpha=0.0043\beta^2-0.0332\beta+0.07 \quad \cdots(22)$$

$$\beta=2.875 \quad \cdots(23)$$

$$\alpha=-0.0001\beta^2+0.0025\beta+0.0062 \quad \cdots(24)$$

$$\alpha=0.005676 \quad \cdots(25)$$

(6) An optical element including: a first optical layer having a concave-convex surface;
a wavelength-selective reflection layer formed on the concave-convex surface; and
a second optical layer formed on the wavelength-selective reflection layer, and in this structure, the wavelength-selective reflection layer has a five-layer structure in which a high-refractive-index layer and a metal layer are alternately stacked, and in the case when the entire wavelength-selective reflection layer has a geometric film thickness L of 160 nm, a ratio $\alpha$ (= $d_b/d_a$) of an optical film thickness $d_b$ of the entire metal layer relative to an optical film thickness $d_a$ of the entire high-refractive-index layer and a ratio $\beta$ (= $d_3/d_1$) of an optical film thickness $d_3$ of the third high-refractive-index layer relative to an optical film thickness $d_1$ of the first high-refractive-index layer, when viewed from either the first optical layer side or the second optical layer side, are included in a first region surrounded by the following formulas (21) to (25), while in the case when the entire wavelength-selective reflection layer has a geometric film thickness L of 180 nm, the ratio $\alpha$ and the ratio $\beta$ are included in a second region surrounded by the following formulas (26) to (29), and in the case when the entire wavelength-selective reflection layer has a geometric film thickness L of 160 nm < L < 180 nm,
supposing that each of minute sides formed by dividing a periphery C1 of the first region into n-equal portions, with an intersection between the formula (21) and formula (24) being set as a starting point, is represented as $\Delta$ C1i (where i represents a natural number of 0 to n), that each of minute sides formed by dividing the periphery C2 of the second region into n-equal portions, with an intersection between the formula (26) and formula (28) serving as a starting point, is represented as $\Delta$ C2i and that each of minute regions having a rectangular shape, with $\Delta$ C1i and $\Delta$ C2i being formed as the two short sides, is defined as $\Delta$ Si, the optical element is designed such that the ratio $\alpha$ and the ratio $\beta$ are surrounded by a circumferential surface S composed of a group of minute regions $\Delta$ Si.

$$\alpha=-0.005\beta^2+0.0273\beta-0.0145 \quad \cdots(21)$$

$$\alpha=0.0043\beta^2-0.0332\beta+0.07 \quad \cdots(22)$$

$$\beta=2.875 \quad \cdots(23)$$

$$\alpha=-0.0001\beta^2+0.0025\beta+0.0062 \quad \cdots(24)$$

$$\alpha=0.005676 \quad \cdots(25)$$

$$\alpha=-0.0103\beta^2+0.047\beta-0.0322 \quad \cdots(26)$$

$$\alpha=0.0093\beta^2-0.0677\beta+0.1212 \quad \cdots(27)$$

$$\alpha=-0.0003\beta^2+0.0036\beta+0.0046 \quad \cdots(28)$$

$$\alpha=0.00498 \quad \cdots(29)$$

(7) The optical element according to (1) in which in the case when the entire wavelength-selective reflection layer has a geometric film thickness L of 80 nm, the ratio α and the ratio β are included in a third region surrounded by the above-mentioned formulas (2) and (3) as well as the following formula (30), in the case when the entire wavelength-selective reflection layer has a geometric film thickness L of 90 nm, the ratio α and the ratio β are included in a fourth region surrounded by the above-mentioned formulas (6) and (7) as well as the following formula (31), and in the case when the entire wavelength-selective reflection layer has a geometric film thickness L of 80 nm < L < 90 nm,
supposing that each of minute sides formed by dividing a periphery C3 of the third region into n-equal portions, with an intersection between the above-mentioned formula (3) and the following formula (30) being set as a starting point, is represented as Δ C3i (where i represents a natural number of 0 to n), that each of minute sides formed by dividing a periphery C4 of the fourth region into n-equal portions, with an intersection between the above-mentioned formula (7) and the following formula (31) serving as a starting point, is represented as Δ C4i and that each of minute regions having a rectangular shape, with Δ C3i and Δ C4i being formed as the two short sides, is defined as Δ Si, the optical element is designed such that the ratio α and the ratio β are surrounded by a circumferential surface S composed of a group of the minute regions Δ Si.

$$\alpha=-6\times10^{-6}\beta^2+0.0002\beta+0.0141 \quad \cdots(30)$$

$$\alpha=-1\times10^{-5}\beta^2+0.0002\beta+0.0125 \quad \cdots(31)$$

(8) The optical element according to (2) in which in the case when the entire wavelength-selective reflection layer has a geometric film thickness L of 90 nm, the ratio α and the ratio β are included in a third region surrounded by the above-mentioned formulas (6) and (7) as well as the following formula (31), in the case when the entire wavelength-selective reflection layer has a geometric film thickness L of 100 nm, the ratio α and the ratio β are included in a fourth region surrounded by the above-mentioned formulas (10) and (11) as well as the following formula (32), and in the case when the entire wavelength-selective reflection layer has a geometric film thickness L of 90 nm < L < 100 nm,
supposing that each of minute sides formed by dividing a periphery C3 of the third region into n-equal portions, with an intersection between the above-mentioned formula (7) and the following formula (31) being set as a starting point, is represented as Δ C3i (where i represents a natural number of 0 to n), that each of minute sides formed by dividing a periphery C4 of the fourth region into n-equal portions, with an intersection between the above-mentioned formula (11) and the following formula (32) serving as a starting point, is represented as Δ C4i and that each of minute regions having a rectangular shape, with Δ C3i and Δ C4i being formed as the two short sides, is defined as Δ Si, the optical element is designed such that the ratio α and the ratio β are surrounded by a circumferential surface S composed of a group of the minute regions $\Delta$ Si.

$$\alpha=-1\times10^{-5}\beta^{2}+0.0002\beta+0.0125 \quad \cdots(31)$$

$$\alpha=-3\times10^{-5}\beta^{2}+0.0004\beta+0.0113 \quad \cdots(32)$$

(9) The optical element according to (3) in which in the case when the entire wavelength-selective reflection layer has a geometric film thickness L of 100 nm, the ratio $\alpha$ and the ratio $\beta$ are included in a third region surrounded by the above-mentioned formulas (10) and (11) as well as the following formula (32), in the case when the entire wavelength-selective reflection layer has a geometric film thickness L of 120 nm, the ratio $\alpha$ and the ratio $\beta$ are included in a fourth region surrounded by the above-mentioned formulas (14) and (15) as well as the following formula (33), and in the case when the entire wavelength-selective reflection layer has a geometric film thickness L of 100 nm < L < 120 nm,
supposing that each of minute sides formed by dividing a periphery C3 of the third region into n-equal portions, with an intersection between the above-mentioned formula (11) and the following formula (32) being set as a starting point, is represented as $\Delta$ C3i (where i represents a natural number of 0 to n), that each of minute sides formed by dividing a periphery C4 of the fourth region into n-equal portions, with an intersection between the above-mentioned formula (15) and the following formula (33) serving as a starting point, is represented as $\Delta$ C4i and that each of minute regions having a rectangular shape, with $\Delta$ C3i and $\Delta$ C4i being formed as the two short sides, is defined as $\Delta$ Si, the optical element is designed such that the ratio $\alpha$ and the ratio $\beta$ are surrounded by a circumferential surface S composed of a group of the minute regions $\Delta$ Si.

$$\alpha=-3\times10^{-5}\beta^{2}+0.0004\beta+0.0113 \quad \cdots(32)$$

$$\alpha=-7\times10^{-5}\beta^{2}+0.0007\beta+0.0097 \quad \cdots(33)$$

(10) The optical element according to (4) in which in the case when the entire wavelength-selective reflection layer has a geometric film thickness L of 120 nm, the ratio $\alpha$ and the ratio are included in a third region surrounded by the above-mentioned formulas (14) and (15) as well as the following formula (33), in the case when the entire wavelength-selective reflection layer has a geometric film thickness L of 140 nm, the ratio $\alpha$ and the ratio are included in a fourth region surrounded by the above-mentioned formulas (18) and (19) as well as the following formula (34), and in the case when the entire wavelength-selective reflection layer has a geometric film thickness L of 120 nm < L < 140 nm,
supposing that each of minute sides formed by dividing a periphery C3 of the third region into n-equal portions, with an intersection between the above-mentioned formula (15) and the following formula (33) being set as a starting point, is represented as $\Delta$ C3i (where i represents a natural number of 0 to n), that each of minute sides formed by dividing a periphery C4 of the fourth region into n-equal portions, with an intersection between the above-mentioned formula (19) and the following formula (34) serving as a starting point, is represented as $\Delta$ C4i and that each of minute regions having a rectangular shape, with $\Delta$ C3i and $\Delta$ C4i being formed as the two short sides, is defined as $\Delta$ Si, the optical element is designed such that the ratio $\alpha$ and the ratio $\beta$ are surrounded by a circumferential surface S composed of a group of the minute regions $\Delta$ Si.

$$\alpha=-7\times10^{-5}\beta^{2}+0.0007\beta+0.0097 \quad \cdots(33)$$

$$\alpha=-0.0001\beta^{2}+0.0011\beta+0.0083 \quad \cdots(34)$$

(11) The optical element according to (5) in which in the case when the entire wavelength-selective reflection layer has a geometric film thickness L of 140 nm, the ratio $\alpha$ and the ratio $\beta$ are included in a third region surrounded by the above-mentioned formulas (18) and (19) as well as the following formula (34), in the case when the entire wavelength-selective reflection layer has a geometric film thickness L of 160 nm, the ratio α and the ratio β are included in a fourth region surrounded by the above-mentioned formulas (21) to (24) as well as the following formula (35), and in the case when the entire wavelength-selective reflection layer has a geometric film thickness L of 140 nm < L < 160 nm,

supposing that each of minute sides formed by dividing a periphery C3 of the third region into n-equal portions, with an intersection between the above-mentioned formula (19) and the following formula (34) being set as a starting point, is represented as Δ C3i (where i represents a natural number of 0 to n), that each of minute sides formed by dividing a periphery C4 of the fourth region into n-equal portions, with an intersection between the above-mentioned formula (21) and the following formula (35) serving as a starting point, is represented as Δ C4i and that each of minute regions having a rectangular shape, with Δ C3i and Δ C4i being formed as the two short sides, is defined as Δ Si, the optical element is designed such that the ratio α and the ratio β are surrounded by a circumferential surface S composed of a group of the minute regions Δ Si.

$$\alpha=-0.0001\beta^2+0.0011\beta+0.0083 \quad \cdots(34)$$

$$\alpha=-0.0002\beta^2+0.0016\beta+0.0067 \quad \cdots(35)$$

(12) The optical element according to (6) in which in the case when the entire wavelength-selective reflection layer has a geometric film thickness L of 160 nm, the ratio α and the ratio β are included in a third region surrounded by the above-mentioned formulas (21) to (24) as well as the following formula (35), in the case when the entire wavelength-selective reflection layer has a geometric film thickness L of 180 nm, the ratio α and the ratio β are included in a fourth region surrounded by the above-mentioned formulas (26) to (28) as well as the following formula (36), and in the case when the entire wavelength-selective reflection layer has a geometric film thickness L of 160 nm < L < 180 nm,

supposing that each of minute sides formed by dividing a periphery C3 of the third region into n-equal portions, with an intersection between the above-mentioned formula (21) and the following formula (35) being set as a starting point, is represented as Δ C3i (where i represents a natural number of 0 to n), that each of minute sides formed by dividing a periphery C4 of the fourth region into n-equal portions, with an intersection between the above-mentioned formula (26) and the following formula (36) serving as a starting point, is represented as Δ C4i and that each of minute regions having a rectangular shape, with Δ C3i and Δ C4i being formed as the two short sides, is defined as Δ Si, the optical element is designed such that the ratio α and the ratio β are surrounded by a circumferential surface S composed of a group of the minute regions Δ Si.

$$\alpha=-0.0002\beta^2+0.0016\beta+0.0067 \quad \cdots(35)$$

$$\alpha=-0.0003\beta^2+0.0021\beta+0.0055 \quad \cdots(36)$$

(13) The optical element according to any one of (1) to (12) in which, when viewed from either the first optical layer side or the second optical layer side, the film thicknesses of the first and fifth high-refractive-index layers are virtually the same, and the film thicknesses of the second and fourth metal layers are virtually the same.
(14) The optical element according to any one of (1) to (12) in which the high-refractive-index layer has a refractive index higher than that of the metal layer.
(15) The optical element according to any one of (1) to (12) in which the high-refractive-index layer has a refractive index of 1.7 or more to 2.6 or less.
(16) The optical element according to any one of (1) to (12) in which the high-refractive-index layer contains at least one element selected from the group consisting of niobium oxide, zinc oxide, titanium oxide and tantalum oxide, and the metal layer contains an Ag alloy.
(17) A window material including an optical element according to any one of (1) to (16).
(18) A fitting provided with an optical element according to any one of (1) to (16) installed in a lighting unit.
(19) A solar shading device including one or a plurality of solar shading members for shading solar light, in which the solar shading member is provided with an optical element according to any one of (1) to (16).

Reference Signs List

1...optical film
2...optical lawyer
3...reflection layer
4...first optical layer
4a...first substrate
5...second optical layer
5a...second substrate
6...bonding layer
7...separation layer
8...hard coat layer
9... optical layer with reflection layer
S1...incident surface
S2...light-releasing surface

**Claims**

**1.** An optical element comprising:

a first optical layer (4) having a concave-convex surface;
a wavelength-selective reflection layer (3) formed on the concave-convex surface; and
a second optical layer (5) formed on the wavelength-selective reflection layer (3),
wherein the wavelength-selective reflection layer (3) has a five-layer structure in which a high-refractive-index layer and a metal layer are alternately stacked, and in the case when the entire wavelength-selective reflection layer (3) has a geometric film thickness L of 80 nm, a ratio $\alpha = d_b/d_a$ of an optical film thickness $d_b$ of the entire metal layer relative to an optical film thickness $d_a$ of the entire high-refractive-index layer and a ratio $\beta = d_3/d_1$ of an optical film thickness $d_3$ of the third high-refractive-index layer relative to an optical film thickness $d_1$ of the first high-refractive-index layer, when viewed from either the first optical layer side or the second optical layer side, are included in a first region surrounded by the following formulas (1) to (4), whereas in the case when the entire wavelength-selective reflection layer (3) has a geometric film thickness L of 90 nm, the ratio $\alpha$ and the ratio $\beta$ are included in a second region surrounded by the following formulas (5) to (8), and
wherein in the case when the entire wavelength-selective reflection layer (3) has a geometric film thickness L of 80 nm < L < 90 nm,
supposing that each of minute sides formed by dividing a periphery C1 of the first region into n-equal portions, with an intersection between the formula (1) and formula (3) being set as a starting point, is represented as $\Delta$ C1i where i denotes an integer between 0 and n, both inclusive, and that each of minute sides formed by dividing a periphery C2 of the second region into n-equal portions, with an intersection between the formula (5) and formula (7) being set as a starting point, is represented as $\Delta$ C2i, and that each of minute regions having a rectangular shape, with $\Delta$ C1i and $\Delta$ C2i being formed as the two short sides, is defined as $\Delta$ Si, the ratio $\alpha$ and the ratio $\beta$ are surrounded by a circumferential surface S composed of a group of minute regions $\Delta$ Si wherein formulae (1) - (8) are the following equalities

$$\alpha = -0.0004\beta^2+0.0053\beta+0.0065 \quad (1)$$

$$\alpha = -1\times10^{-5}\beta^2+0.0007\beta+0.0066 \quad (2)$$

$$\alpha = -1\times10^{-5}\beta^2+0.0005\beta+0.0119 \quad (3)$$

$$\alpha = 0.012114 \quad (4)$$

$$\alpha = -0.0002\beta^2+0.0039\beta+0.0087 \quad (5)$$

$$\alpha = -3\times10^{-5}\beta^2+0.0014\beta+0.0038 \quad (6)$$

$$\alpha = -2\times10^{-5}\beta^2+0.0006\beta+0.0112 \quad (7)$$

$$\alpha = 0.010589 \quad (8)$$

**2.** An optical element comprising:

a first optical layer having a concave-convex surface;
a wavelength-selective reflection layer formed on the concave-convex surface; and
a second optical layer formed on the wavelength-selective reflection layer,
wherein the wavelength-selective reflection layer has a five-layer structure in which a high-refractive-index layer and a metal layer are alternately stacked, and in the case when the entire wavelength-selective reflection layer has a geometric film thickness L of 90 nm, a ratio $\alpha = d_b/d_a$ of an optical film thickness $d_b$ of the entire metal layer relative to an optical film thickness $d_a$ of the entire high-refractive-index layer and a ratio $\beta = d_3/d_1$ of an optical film thickness $d_3$ of the third high-refractive-index layer relative to an optical film thickness $d_1$ of the first high-refractive-index layer, when viewed from either the first optical layer side or the second optical layer side, are included in a first region surrounded by the following formulas (5) to (8), whereas in the case when the entire wavelength-selective reflection layer has a geometric film thickness L of 100 nm, the ratio $\alpha$ and the ratios $\beta$ are included in a second region surrounded by the following formulas (9) to (12), and
wherein in the case when the entire wavelength-selective reflection layer has a geometric film thickness L of 90 nm < L < 100 nm,
supposing that each of minute sides formed by dividing a periphery C1 of the first region into n-equal portions, with an intersection between the formula (5) and formula (7) being set as a starting point, is represented as $\Delta$ C1i where i denotes an integer between 0 and n, both inclusive, that each of minute sides formed by dividing a periphery C2 of the second region into n-equal portions, with an intersection between the formula (9) and formula (11) being set as a starting point, is represented as $\Delta$ C2i and that each of minute regions having a rectangular shape, with $\Delta$ C1i and $\Delta$ C2i being formed as the two short sides, is defined as $\Delta$ Si, the ratio $\alpha$ and the ratio $\beta$ are surrounded by a circumferential surface S composed of a group of minute regions $\Delta$ Si wherein formulae (5) - (12) are the following equalities

$$\alpha = -0.0002\beta^2+0.0039\beta+0.0087 \quad (5)$$

$$\alpha = -3\times10^{-5}\beta^2+0.0014\beta+0.0038 \quad (6)$$

$$\alpha = -2\times10^{-5}\beta^2+0.0006\beta+0.0112 \quad (7)$$

$$\alpha = 0.010589 \quad (8)$$

$$\alpha = -0.0002\beta^2+0.0055\beta+0.0057 \quad (9)$$

$$\alpha = -0.0002\beta^2+0.0045\beta-0.0067 \quad (10)$$

$$\alpha = -4\times10^{-5}\beta^2+0.001\beta+0.0099 \quad (11)$$

$$\alpha = 0.009403 \quad (12)$$

**3.** An optical element comprising:

a first optical layer having a concave-convex surface;
a wavelength-selective reflection layer formed on the concave-convex surface; and
a second optical layer formed on the wavelength-selective reflection layer,
wherein the wavelength-selective reflection layer has a five-layer structure in which a high-refractive-index layer and a metal layer are alternately stacked, and in the case when the entire wavelength-selective reflection layer has a geometric film thickness L of 100 nm, a ratio $\alpha = d_b/d_a$ of an optical film thickness $d_b$ of the entire metal layer relative to an optical film thickness $d_a$ of the entire high-refractive-index layer and a ratio $\beta = d_3/d_1$ of an optical film thickness $d_3$ of the third high-refractive-index layer relative to an optical film thickness $d_1$ of the first high-refractive-index layer, when viewed from either the first optical layer side or the second optical layer side, are included in a first region surrounded by the following formulas (9) to (12), whereas in the case when the entire wavelength-selective reflection layer has a geometric film thickness L of 120 nm, the ratio $\alpha$ and the ratio $\beta$ are included in a second region surrounded by the following formulas (13) to (16), and
wherein in the case when the entire wavelength-selective reflection layer has a geometric film thickness L of 100 nm < L < 120 nm,
supposing that each of minute sides formed by dividing a periphery C1 of the first region into n-equal portions, with an intersection between the formula (9) and formula (11) being set as a starting point, is represented as Δ C1i where i denotes an integer between 0 and n, both inclusive, that each of minute sides formed by dividing the periphery C2 of the second region into n-equal portions, with an intersection between the formula (13) and formula (15) serving as a starting point, is represented as Δ C2i and that each of minute regions having a rectangular shape, with Δ C1i and Δ C2i being formed as the two short sides, is defined as Δ Si, the ratio $\alpha$ and the ratio $\beta$ are surrounded by a circumferential surface S composed of a group of the minute regions Δ Si wherein formulae (9) - (16) are the following equalities

$$\alpha = -0.0002\beta^2+0.0055\beta+0.0057 \quad (9)$$

$$\alpha = -0.0002\beta^2+0.0045\beta-0.0067 \quad (10)$$

$$\alpha = -4\times10^{-5}\beta^2+0.001\beta+0.0099 \quad (11)$$

$$\alpha = 0.009403 \quad (12)$$

$$\alpha = -0.0003\beta^2+0.0074\beta+0.0033 \quad (13)$$

$$\alpha = -0.0014\beta^2+0.0191\beta-0.0422 \quad (14)$$

$$\alpha = -9\times10^{-5}\beta^2+0.0015\beta+0.0084 \quad (15)$$

$$\alpha = 0.007709 \quad (16)$$

**4.** An optical element comprising:

a first optical layer having a concave-convex surface;
a wavelength-selective reflection layer formed on the concave-convex surface; and
a second optical layer formed on the wavelength-selective reflection layer, wherein the wavelength-selective reflection layer has a five-layer structure in which a high-refractive-index layer and a metal layer are alternately stacked, and in the case when the entire wavelength-selective reflection layer has a geometric film thickness L of 120 nm, a ratio $\alpha = d_b/d_a$ of an optical film thickness $d_b$ of the entire metal layer relative to an optical film thickness $d_a$ of the entire high-refractive-index layer and a ratio $\beta = d_3/d_1$ of an optical film thickness $d_3$ of the third high-refractive-index layer relative to an optical film thickness $d_1$ of the first high-refractive-index layer, when viewed from either the first optical layer side or the second optical layer side, are included in a first region surrounded by the following formulas (13) to (16), whereas in the case when the entire wavelength-selective reflection layer has a geometric film thickness L of 140 nm, the ratio $\alpha$ and the ratio $\beta$ are included in a second region surrounded by the following formulas (17) to (20), and
wherein in the case when the entire wavelength-selective reflection layer has a geometric film thickness L of 120 nm < L < 140 nm,
supposing that each of minute sides formed by dividing a periphery C1 of the first region into n-equal portions, with an intersection between the formula (13) and formula (15) being set as a starting point, is represented as $\Delta$ C1i where i denotes an integer between 0 and n, both inclusive, that each of minute sides formed by dividing the periphery C2 of the second region into n-equal portions, with an intersection between the formula (17) and formula (19) serving as a starting point, is represented as $\Delta$ C2i and that each of minute regions having a rectangular shape, with $\Delta$ C1i and $\Delta$ C2i being formed as the two short sides, is defined as $\Delta$ Si, the ratio $\alpha$ and the ratio $\beta$ are surrounded by a circumferential surface S composed of a group of minute regions $\Delta$ Si wherein formulae (13) - (20) are the following equalities

$$\alpha = -0.0003\beta^2+0.0074\beta+0.0033 \qquad (13)$$

$$\alpha = -0.0014\beta^2+0.0191\beta-0.0422 \qquad (14)$$

$$\alpha = -9\times10^{-5}\beta^2+0.0015\beta+0.0084 \qquad (15)$$

$$\alpha = 0.007709 \qquad (16)$$

$$\alpha = -0.0014\beta^2+0.0136\beta-0.0027 \qquad (17)$$

$$\beta = 10132\alpha^2-241.39\alpha+4.747 \qquad (18)$$

$$\alpha = -0.0001\beta^2+0.002\beta+0.0074 \qquad (19)$$

$$\alpha = 0.006523 \qquad (20)$$

**5.** An optical element comprising:

a first optical layer having a concave-convex surface;
a wavelength-selective reflection layer formed on the concave-convex surface; and
a second optical layer formed on the wavelength-selective reflection layer,
wherein the wavelength-selective reflection layer has a five-layer structure in which a high-refractive-index layer and a metal layer are alternately stacked, and in the case when the entire wavelength-selective reflection layer has a geometric film thickness L of 140 nm, a ratio $\alpha = d_b/d_a$ of an optical film thickness $d_b$ of the entire metal layer relative to an optical film thickness $d_a$ of the entire high-refractive-index layer and a ratio $\beta = d_3/d_1$ of an optical film thickness $d_3$ of the third high-refractive-index layer relative to an optical film thickness $d_1$ of the first high-refractive-index layer, when viewed from either the first optical layer side or the second optical layer side, are included in a first region surrounded by the following formulas (17) to (20), whereas in the case when the entire wavelength-selective reflection layer has a geometric film thickness L of 160 nm, the ratio $\alpha$ and the ratio $\beta$ are included in a second region surrounded by the following formulas (21) to (25), and

wherein in the case when the entire wavelength-selective reflection layer has a geometric film thickness L of 140 nm < L < 160 nm,

supposing that each of minute sides formed by dividing a periphery C1 of the first region into n-equal portions, with an intersection between the formula (17) and formula (19) being set as a starting point, is represented as $\Delta$ C1i where i denotes an integer between 0 and n, both inclusive, that each of minute sides formed by dividing the periphery C2 of the second region into n-equal portions, with an intersection between the formula (21) and formula (24) serving as a starting point, is represented by $\Delta$ C2i and that each of minute regions having a rectangular shape, with $\Delta$ C1i and $\Delta$ C2i being formed as the two short sides, is defined as $\Delta$ Si, the ratio $\alpha$ and the ratio $\beta$ are surrounded by a circumferential surface S composed of a group of minute regions $\Delta$ Si wherein formulae (17) - (25) are the following equalities

$$\alpha = -0.0014\beta^2+0.0136\beta-0.0027 \quad (17)$$

$$\beta = 10132\alpha^2-241.39\alpha+4.747 \quad (18)$$

$$\alpha = -0.0001\beta^2+0.002\beta+0.0074 \quad (19)$$

$$\alpha = 0.006523 \quad (20)$$

$$\alpha = -0.005\beta^2+0.0273\beta-0.0145 \quad (21)$$

$$\alpha = 0.0043\beta^2-0.0332\beta+0.07 \quad (22)$$

$$\beta = 2.875 \quad (23)$$

$$\alpha = -0.0001\beta^2+0.0025\beta+0.0062 \quad (24)$$

$$\alpha = 0.005676 \quad (25)$$

**6.** An optical element comprising:

a first optical layer having a concave-convex surface;
a wavelength-selective reflection layer formed on the concave-convex surface; and
a second optical layer formed on the wavelength-selective reflection layer,
wherein the wavelength-selective reflection layer has a five-layer structure in which a high-refractive-index layer and a metal layer are alternately stacked, and in the case when the entire wavelength-selective reflection layer has a geometric film thickness L of 160 nm, a ratio $\alpha = d_b/d_a$ of an optical film thickness $d_b$ of the entire metal layer relative to an optical film thickness $d_a$ of the entire high-refractive-index layer and a ratio $\beta = d_3/d_1$ of an optical film thickness $d_3$ of the third high-refractive-index layer relative to an optical film thickness $d_1$ of the first high-refractive-index layer, when viewed from either the first optical layer side or the second optical layer side, are included in a first region surrounded by the following formulas (21) to (25), whereas in the case when the entire wavelength-selective reflection layer has a geometric film thickness L of 180 nm, the ratio $\alpha$ and the ratio

$\beta$ are included in a second region surrounded by the following formulas (26) to (29), and
wherein in the case when the entire wavelength-selective reflection layer has a geometric film thickness L of 160 nm < L < 180 nm,
supposing that each of minute sides formed by dividing a periphery C1 of the first region into n-equal portions, with an intersection between the formula (21) and formula (24) being set as a starting point, is represented as $\Delta$ C1i where i denotes an integer between 0 and n, both inclusive, that each of minute sides formed by dividing the periphery C2 of the second region into n-equal portions, with an intersection between the formula (26) and formula (28) serving as a starting point, is represented as $\Delta$ C2i and that each of minute regions having a rectangular shape, with $\Delta$ Cli and $\Delta$ C2i being formed as the two short sides, is defined as $\Delta$ Si, the ratio $\alpha$ and the ratio $\beta$ are surrounded by a circumferential surface S composed of a group of minute regions $\Delta$ Si wherein formulae (21) - (29) are the following equalities

$$\alpha = -0.005\beta^2+0.0273\beta-0.0145 \quad (21)$$

$$\alpha = 0.0043\beta^2-0.0332\beta+0.07 \quad (22)$$

$$\beta = 2.875 \quad (23)$$

$$\alpha = -0.0001\beta^2+0.0025\beta+0.0062 \quad (24)$$

$$\alpha = 0.005676 \quad (25)$$

$$\alpha = -0.0103\beta^2+0.047\beta-0.0322 \quad (26)$$

$$\alpha = 0.0093\beta^2-0.0677\beta+0.1212 \quad (27)$$

$$\alpha = -0.0003\beta^2+0.0036\beta+0.0046 \quad (28)$$

$$\alpha = 0.00498 \quad (29)$$

7. The optical element according to claim 1, wherein in the case when the entire wavelength-selective reflection layer has a geometric film thickness L of 80 nm, the ratio $\alpha$ and the ratio $\beta$ are included in a third region surrounded by the above-mentioned formulas (2) and (3) as well as the following formula (30), and in the case when the entire wavelength-selective reflection layer has a geometric film thickness L of 90 nm, the ratio $\alpha$ and the ratio $\beta$ are included in a fourth region surrounded by the above-mentioned formulas (6) and (7) as well as the following formula (31), and
wherein in the case when the entire wavelength-selective reflection layer has a geometric film thickness L of 80 nm < L < 90 nm,
supposing that each of minute sides formed by dividing a periphery C3 of the third region into n-equal portions, with an intersection between the above-mentioned formula (3) and the following formula (30) being set as a starting point, is represented as $\Delta$ C3i where i denotes an integer between 0 and n, both inclusive, that each of minute sides formed by dividing a periphery C4 of the fourth region into n-equal portions, with an intersection between the above-mentioned formula (7) and the following formula (31) serving as a starting point, is represented as $\Delta$ C4i and that each of minute regions having a rectangular shape, with $\Delta$ C3i and $\Delta$ C4i being formed as the two short sides, is defined as $\Delta$ Si, the ratio $\alpha$ and the ratio $\beta$ are surrounded by a circumferential surface S composed of a group of the minute regions $\Delta$ Si wherein formulae (30) - (31) are the following equalities

$$\alpha = -6\times10^{-6}\beta^2+0.0002\beta+0.0141 \quad (30)$$

$$\alpha = -1\times10^{-5}\beta^2+0.0002\beta+0.0125 \quad (31)$$

**8.** The optical element according to claim 2, wherein in the case when the entire wavelength-selective reflection layer has a geometric film thickness L of 90 nm, the ratio $\alpha$ and the ratio $\beta$ are included in a third region surrounded by the above-mentioned formulas (6) and (7) as well as the following formula (31), and in the case when the entire wavelength-selective reflection layer has a geometric film thickness L of 100 nm, the ratio $\alpha$ and the ratio $\beta$ are included in a fourth region surrounded by the above-mentioned formulas (10) and (11) as well as the following formula (32), and

wherein in the case when the entire wavelength-selective reflection layer has a geometric film thickness L of 90 nm < L < 100 nm,

supposing that each of minute sides formed by dividing a periphery C3 of the third region into n-equal portions, with an intersection between the above-mentioned formula (7) and the following formula (31) being set as a starting point, is represented as $\Delta$ C3i where i denotes an integer between 0 and n, both inclusive, that each of minute sides formed by dividing a periphery C4 of the fourth region into n-equal portions, with an intersection between the above-mentioned formula (11) and the following formula (32) serving as a starting point, is represented as $\Delta$ C4i and that each of minute regions having a rectangular shape, with $\Delta$ C3i and $\Delta$ C4i being formed as the two short sides, is defined as $\Delta$ Si, the ratio $\alpha$ and the ratio $\beta$ are surrounded by a circumferential surface S composed of a group of the minute regions $\Delta$ Si wherein formulae (31) - (32) are the following equalities

$$\alpha = -1\times10^{-5}\beta^2+0.0002\beta+0.0125 \quad (31)$$

$$\alpha = -3\times10^{-5}\beta^2+0.0004\beta+0.0113 \quad (32)$$

**9.** The optical element according to claim 3, wherein in the case when the entire wavelength-selective reflection layer has a geometric film thickness L of 100 nm, the ratio $\alpha$ and the ratio $\beta$ are included in a third region surrounded by the above-mentioned formulas (10) and (11) as well as the following formula (32), and in the case when the entire wavelength-selective reflection layer has a geometric film thickness L of 120 nm, the ratio $\alpha$ and the ratio $\beta$ are included in a fourth region surrounded by the above-mentioned formulas (14) and (15) as well as the following formula (33), and

wherein in the case when the entire wavelength-selective reflection layer has a geometric film thickness L of 100 nm < L < 120 nm,

supposing that each of minute sides formed by dividing a periphery C3 of the third region into n-equal portions, with an intersection between the above-mentioned formula (11) and the following formula (32) being set as a starting point, is represented as $\Delta$ C3i where i denotes an integer between 0 and n, both inclusive, that each of minute sides formed by dividing a periphery C4 of the fourth region into n-equal portions, with an intersection between the above-mentioned formula (15) and the following formula (33) serving as a starting point, is represented as $\Delta$ C4i and that each of minute regions having a rectangular shape, with $\Delta$ C3i and $\Delta$ C4i being formed as the two short sides, is defined as $\Delta$ Si, the optical element is designed such that the ratio $\alpha$ and the ratio $\beta$ are surrounded by a circumferential surface S composed of a group of the minute regions $\Delta$ Si wherein formulae (32) - (33) are the following equalities

$$\alpha = -3\times10^{-5}\beta^2+0.0004\beta+0.0113 \quad (32)$$

$$\alpha = -7\times10^{-5}\beta^2+0.0007\beta+0.0097 \quad (33)$$

**10.** The optical element according to claim 4, wherein in the case when the entire wavelength-selective reflection layer has a geometric film thickness L of 120 nm, the ratio $\alpha$ and the ratio $\beta$ are included in a third region surrounded by the above-mentioned formulas (14) and (15) as well as the following formula (33), and in the case when the entire wavelength-selective reflection layer has a geometric film thickness L of 140 nm, the ratio $\alpha$ and the ratio $\beta$ are included in a fourth region surrounded by the above-mentioned formulas (18) and (19) as well as the following formula (34), and
wherein in the case when the entire wavelength-selective reflection layer has a geometric film thickness L of 120 nm < L < 140 nm,
supposing that each of minute sides formed by dividing a periphery C3 of the third region into n-equal portions, with an intersection between the above-mentioned formula (15) and the following formula (33) being set as a starting point, is represented as Δ C3i where i denotes an integer between 0 and n, both inclusive, that each of minute sides formed by dividing a periphery C4 of the fourth region into n-equal portions, with an intersection between the above-mentioned formula (19) and the following formula (34) serving as a starting point, is represented as Δ C4i and that each of minute regions having a rectangular shape, with Δ C3i and Δ C4i being formed as the two short sides, is defined as Δ Si, the ratio α and the ratio β are surrounded by a circumferential surface S composed of a group of the minute regions Δ Si wherein formulae (33) - (34) are the following equalities

$$\alpha = -7\times10^{-5}\beta^2+0.0007\beta+0.0097 \quad (33)$$

$$\alpha = -0.0001\beta^2+0.0011\beta+0.0083 \quad (34)$$

**11.** The optical element according to claim 5, wherein in the case when the entire wavelength-selective reflection layer has a geometric film thickness L of 140 nm, the ratio α and the ratio β are included in a third region surrounded by the above-mentioned formulas (18) and (19) as well as the following formula (34), and in the case when the entire wavelength-selective reflection layer has a geometric film thickness L of 160 nm, the ratio α and the ratio β are included in a fourth region surrounded by the above-mentioned formulas (21) to (24) as well as the following formula (35), and
wherein in the case when the entire wavelength-selective reflection layer has a geometric film thickness L of 140 nm < L < 160 nm,
supposing that each of minute sides formed by dividing a periphery C3 of the third region into n-equal portions, with an intersection between the above-mentioned formula (19) and the following formula (34) being set as a starting point, is represented as Δ C3i where i denotes an integer between 0 and n, both inclusive, that each of minute sides formed by dividing a periphery C4 of the fourth region into n-equal portions, with an intersection between the above-mentioned formula (21) and the following formula (35) serving as a starting point, is represented as Δ C4i and that each of minute regions having a rectangular shape, with Δ C3i and Δ C4i being formed as the two short sides, is defined as Δ Si, the ratio α and the ratio β are surrounded by a circumferential surface S composed of a group of the minute regions Δ Si wherein formulae (34) - (35) are the following equalities

$$\alpha = -0.0001\beta^2+0.0011\beta+0.0083 \quad (34)$$

$$\alpha = -0.0002\beta^2+0.0016\beta+0.0067 \quad (35)$$

**12.** The optical element according to claim 6, wherein in the case when the entire wavelength-selective reflection layer has a geometric film thickness L of 160 nm, the ratio α and the ratio β are included in a third region surrounded by the above-mentioned formulas (21) to (24) as well as the following formula (35), and in the case when the entire wavelength-selective reflection layer has a geometric film thickness L of 180 nm, the ratio α and the ratio β are included in a fourth region surrounded by the above-mentioned formulas (26) to (28) as well as the following formula (36), and
wherein in the case when the entire wavelength-selective reflection layer has a geometric film thickness L of 160 nm < L < 180 nm,
supposing that each of minute sides formed by dividing a periphery C3 of the third region into n-equal portions, with an intersection between the above-mentioned formula (21) and the following formula (35) being set as a starting point, is represented as Δ C3i where i denotes an integer between 0 and n, both inclusive, that each of minute sides formed by dividing a periphery C4 of the fourth region into n-equal portions, with an intersection between the above-mentioned formula (26) and the following formula (36) serving as a starting point, is represented as Δ C4i and that each of minute regions having a rectangular shape, with Δ C3i and Δ C4i being formed as the two short sides, is defined as Δ Si, the ratio α and the ratio β are surrounded by a circumferential surface S composed of a group of the minute regions Δ Si wherein formulae (35) - (36) are the following equalities

$$\alpha = -0.0002\beta^2+0.0016\beta+0.0067 \quad (35)$$

$$\alpha = -0.0003\beta^2+0.0021\beta+0.0055 \quad (36)$$

**13.** The optical element according to any one of claims 1 to 6, wherein, when viewed from either the first optical layer side or the second optical layer side, the film thicknesses of the first and fifth high-refractive-index layers are virtually the same, and the film thicknesses of the second and fourth metal layers are virtually the same.

**14.** The optical element according to any one of claims 1 to 6, wherein the high-refractive-index layer has a refractive index higher than that of the metal layer.

**15.** The optical element according to any one of claims 1 to 6, wherein the high-refractive-index layer has a refractive index of 1.7 or more to 2.6 or less.

**16.** The optical element according to any one of claims 1 to 6, wherein the high-refractive-index layer contains at least one element selected from the group consisting of niobium oxide, zinc oxide, titanium oxide and tantalum oxide, and the metal layer contains an Ag alloy.

**17.** A window material comprising: an optical element according to any one of claims 1 to 6.

**18.** A fitting comprising: an optical element according to any one of claims 1 to 6 installed in a lighting unit.

**19.** A solar shading device comprising: one or a plurality of solar shading members for shading solar light, wherein the solar shading member is provided with an optical element according to any one of claims 1 to 6.

**Patentansprüche**

**1.** Optisches Element, mit:

einer ersten optischen Schicht (4) mit einer konkav-konvexen Oberfläche;
einer wellenlängenselektiven Reflexionsschicht (3), die auf der konkav-konvexen Oberfläche ausgebildet ist; und
einer zweiten optischen Schicht (5), die auf der wellenlängenselektiven Reflexionsschicht (3) ausgebildet ist;
wobei die wellenlängenselektive Reflexionsschicht (3) eine Fünfschichtenstruktur aufweist, in welcher eine Schicht mit hohem Brechungsindex und eine Metallschicht abwechselnd gestapelt sind, und, falls die gesamte wellenlängenselektive Reflexionsschicht (3) eine geometrische Filmdicke L von 80 nm aufweist, ein Verhältnis $\alpha = d_b/d_a$ einer optischen Filmdicke $d_b$ der gesamten Metallschicht in Bezug auf eine optische Filmdicke $d_a$ der gesamten Schicht mit hohem Brechungsindex und ein Verhältnis $\beta = d_3/d_1$ einer optischen Filmdicke $d_3$ der dritten Schicht mit hohem Brechungsindex in Bezug auf eine optische Filmdicke $d_1$ der ersten Schicht mit hohem Brechungsindex, wenn von entweder der Seite der ersten optischen Schicht oder der Seite der zweiten optischen Schicht aus betrachtet, in einer ersten Region enthalten sind, die durch die folgenden Formeln (1) bis (4) umschrieben wird, wohingegen, falls die gesamte wellenlängenselektive Reflexionsschicht (3) eine geometrische Filmdicke L von 90 nm aufweist, das Verhältnis $\alpha$ und das Verhältnis $\beta$ in einer zweiten Region enthalten sind, die durch die folgenden Formeln (5) bis (8) umschrieben wird, und
wobei, falls die gesamte wellenlängenselektive Reflexionsschicht (3) eine geometrische Filmdicke L von 80 nm $< L <$ 90 nm hat,
unter der Annahme, dass jede von winzigen Seiten, die durch Teilen eines Umfangs C1 der ersten Region in n gleiche Abschnitte gebildet werden, wobei ein Schnittpunkt zwischen der Formel (1) und Formel (3) als ein Startpunkt angesetzt wird, als $\Delta$ C1i repräsentiert wird, wo i eine ganze Zahl zwischen 0 und n, beide eingeschlossen, bezeichnet, und dass jede von winzigen Seiten, die durch Teilen eines Umfangs C2 der zweiten Region in n gleiche Abschnitte gebildet werden, wobei ein Schnittpunkt zwischen der Formel (5) und Formel (7) als ein Startpunkt angesetzt wird, als $\Delta$ C2i repräsentiert wird und dass jede von winzigen Regionen mit einer rechtwinkeligen Form, wobei $\Delta$C1i und $\Delta$C2i als die beiden kurzen Seiten ausgebildet sind, als $\Delta$Si definiert wird, das Verhältnis $\alpha$ und das Verhältnis $\beta$ durch eine Umfangsfläche S umgeben sind, die aus einer Gruppe winziger Regionen $\Delta$Si besteht, wobei Formeln (1) - (8) die folgenden Gleichung sind

$$\alpha = -0{,}0004\beta^2 + 0{,}0053\beta + 0{,}0065 \quad (1)$$

$$\alpha = -1x10^{-5}\ \beta^2 + 0{,}0007\beta + 0{,}0066 \quad (2)$$

$$\alpha = -1x10^{-5}\ \beta^2 + 0{,}0005\beta + 0{,}0119 \quad (3)$$

$$\alpha = 0{,}012114 \quad (4)$$

$$\alpha = -0{,}0002\beta^2 + 0{,}0039\beta + 0{,}0087 \quad (5)$$

$$\alpha = -3x10^{-5}\ \beta^2 + 0{,}0014\beta + 0{,}0038 \quad (6)$$

$$\alpha = -2x10^{-5}\ \beta^2 + 0{,}0006\beta + 0{,}0112 \quad (7)$$

$$\alpha = 0{,}010589 \quad (8)$$

**2.** Optisches Element, mit:

einer ersten optischen Schicht mit einer konkav-konvexen Oberfläche;
einer wellenlängenselektiven Reflexionsschicht, die auf der konkav-konvexen Oberfläche ausgebildet ist; und einer zweiten optischen Schicht, die auf der wellenlängenselektiven Reflexionsschicht ausgebildet ist;
wobei die wellenlängenselektive Reflexionsschicht eine Fünfschichtenstruktur aufweist, in welcher eine Schicht mit hohem Brechungsindex und eine Metallschicht abwechselnd gestapelt sind, und, falls die gesamte wellenlängenselektive Reflexionsschicht eine geometrische Filmdicke L von 90 nm aufweist, ein Verhältnis $\alpha = d_b/d_a$ einer optischen Filmdicke $d_b$ der gesamten Metallschicht in Bezug auf eine optische Filmdicke $d_a$ der gesamten Schicht mit hohem Brechungsindex und ein Verhältnis $\beta = d_3/d_1$ einer optischen Filmdicke $d_3$ der dritten Schicht mit hohem Brechungsindex in Bezug auf eine optische Filmdicke $d_1$ der ersten Schicht mit hohem Brechungsindex, wenn von entweder der Seite der ersten optischen Schicht oder der Seite der zweiten optischen Schicht aus betrachtet, in einer ersten Region enthalten sind, die durch die folgenden Formeln (5) bis (8) umschrieben wird, wohingegen, falls die gesamte wellenlängenselektive Reflexionsschicht eine geometrische Filmdicke L von 100 nm aufweist, das Verhältnis $\alpha$ und das Verhältnis $\beta$ in einer zweiten Region enthalten sind, die durch die folgenden Formeln (9) bis (12) umschrieben wird, und
wobei, falls die gesamte wellenlängenselektive Reflexionsschicht eine geometrische Filmdicke L von 90 nm < L < 100 nm hat,
unter der Annahme, dass jede von winzigen Seiten, die durch Teilen eines Umfangs C1 der ersten Region in n gleiche Abschnitte gebildet werden, wobei ein Schnittpunkt zwischen der Formel (5) und Formel (7) als ein Startpunkt angesetzt wird, als $\Delta C1i$ repräsentiert wird, wo i eine ganze Zahl zwischen 0 und n, beide eingeschlossen, bezeichnet, dass jede von winzigen Seiten, die durch Teilen eines Umfangs C2 der zweiten Region in n gleiche Abschnitte gebildet werden, wobei ein Schnittpunkt zwischen der Formel (9) und Formel (11) als ein Startpunkt angesetzt wird, als $\Delta C2i$ repräsentiert wird und dass jede von winzigen Regionen mit einer rechtwinkeligen Form, wobei $\Delta C1i$ und $\Delta C2i$ als die beiden kurzen Seiten ausgebildet sind, als $\Delta Si$ definiert wird, das Verhältnis $\alpha$ und das Verhältnis $\beta$ durch eine Umfangsfläche S umgeben sind, die aus einer. Gruppe winziger Regionen $\Delta Si$ besteht, wobei Formeln (5) - (12) die folgenden Gleichungen sind

$$\alpha = -0{,}0002\beta^2 + 0{,}0039\beta + 0{,}0087 \quad (5)$$

$$\alpha = -3x10^{-5}\ \beta^2 + 0{,}0014\beta + 0{,}0038 \quad (6)$$

$$\alpha = -2x10^{-5}\,\beta^2 + 0{,}0006\beta + 0{,}0112 \quad (7)$$

$$\alpha = 0{,}010589 \quad (8)$$

$$\alpha = -0{,}0002\beta^2 + 0{,}0055\beta + 0{,}0057 \quad (9)$$

$$\alpha = -0{,}0002\beta^2 + 0{,}0045\beta - 0{,}0067 \quad (10)$$

$$\alpha = -4x10^{-5}\,\beta^2 + 0{,}001\beta + 0{,}0099 \quad (11)$$

$$\alpha = 0{,}009403 \quad (12)$$

**3.** Optisches Element, mit:

einer ersten optischen Schicht mit einer konkav-konvexen Oberfläche;
einer wellenlängenselektiven Reflexionsschicht, die auf der konkav-konvexen Oberfläche ausgebildet ist; und
einer zweiten optischen Schicht, die auf der wellenlängenselektiven Reflexionsschicht ausgebildet ist;
wobei die wellenlängenselektive Reflexionsschicht eine Fünfschichtenstruktur aufweist, in welcher eine Schicht mit hohem Brechungsindex und eine Metallschicht abwechselnd gestapelt sind, und, falls die gesamte wellenlängenselektive Reflexionsschicht eine geometrische Filmdicke L von 100 nm aufweist, ein Verhältnis $\alpha = d_b/d_a$ einer optischen Filmdicke $d_b$ der gesamten Metallschicht in Bezug auf eine optische Filmdicke $d_a$ der gesamten Schicht mit hohem Brechungsindex und ein Verhältnis $\beta = d_3/d_1$ einer optischen Filmdicke $d_3$ der dritten Schicht mit hohem Brechungsindex in Bezug auf eine optische Filmdicke $d_1$ der ersten Schicht mit hohem Brechungsindex, wenn von entweder der Seite der ersten optischen Schicht oder der Seite der zweiten optischen Schicht aus betrachtet, in einer ersten Region enthalten sind, die durch die folgenden Formeln (9) bis (12) umschrieben wird, wohingegen, falls die gesamte wellenlängenselektive Reflexionsschicht eine geometrische Filmdicke L von 120 nm aufweist, das Verhältnis $\alpha$ und das Verhältnis $\beta$ in einer zweiten Region enthalten sind, die durch die folgenden Formeln (13) bis (16) umschrieben wird, und
wobei, falls die gesamte wellenlängenselektive Reflexionsschicht eine geometrische Filmdicke L von 100 nm < L < 120 nm hat,
unter der Annahme, dass jede von winzigen Seiten, die durch Teilen eines Umfangs C1 der ersten Region in n gleiche Abschnitte gebildet werden, wobei ein Schnittpunkt zwischen der Formel (9) und Formel (11) als ein Startpunkt angesetzt wird, als $\Delta$C1i repräsentiert wird, wo i eine ganze Zahl zwischen 0 und n, beide eingeschlossen, bezeichnet, dass jede von winzigen Seiten, die durch Teilen des Umfangs C2 der zweiten Region in n gleiche Abschnitte gebildet werden, wobei ein Schnittpunkt zwischen der Formel (13) und Formel (15) als ein Startpunkt dient, als $\Delta$C2i repräsentiert wird und dass jede von winzigen Regionen mit einer rechtwinkeligen Form, wobei $\Delta$C1i und $\Delta$C2i als die beiden kurzen Seiten ausgebildet sind, als $\Delta$Si definiert wird, das Verhältnis $\alpha$ und das Verhältnis $\beta$ durch eine Umfangsfläche S umgeben sind, die aus einer Gruppe der winzigen Regionen $\Delta$Si besteht, wobei Formeln (9) - (16) die folgenden Gleichungen sind

$$\alpha = -0{,}0002\beta^2 + 0{,}0055\beta + 0{,}0057 \quad (9)$$

$$\alpha = -0{,}0002\beta^2 + 0{,}0045\beta - 0{,}0067 \quad (10)$$

$$\alpha = -4x10^{-5}\,\beta^2 + 0{,}001\beta + 0{,}0099 \quad (11)$$

$$\alpha = 0{,}009403 \quad (12)$$

$$\alpha = -0{,}0003\beta^2 + 0{,}0074\beta + 0{,}0033 \quad (13)$$

$$\alpha = -0{,}0014\beta^2 + 0{,}0191\beta - 0{,}0422 \quad (14)$$

$$\alpha = -9x10^{-5}\ \beta^2 + 0{,}0015\beta + 0{,}0084 \quad (15)$$

$$\alpha = 0{,}007709 \quad (16)$$

**4.** Optisches Element, mit:

einer ersten optischen Schicht mit einer konkav-konvexen Oberfläche;
einer wellenlängenselektiven Reflexionsschicht, die auf der konkav-konvexen Oberfläche ausgebildet ist; und
einer zweiten optischen Schicht, die auf der wellenlängenselektiven Reflexionsschicht ausgebildet ist, wobei die wellenlängenselektive Reflexionsschicht eine Fünfschichtenstruktur aufweist, in welcher eine Schicht mit hohem Brechungsindex und eine Metallschicht abwechselnd gestapelt sind, und, falls die gesamte wellenlängenselektive Reflexionsschicht eine geometrische Filmdicke L von 120 nm aufweist, ein Verhältnis $\alpha = d_b/d_a$ einer optischen Filmdicke $d_b$ der gesamten Metallschicht in Bezug auf eine optische Filmdicke $d_a$ der gesamten Schicht mit hohem Brechungsindex und ein Verhältnis $\beta = d_3/d_1$ einer optischen Filmdicke $d_3$ der dritten Schicht mit hohem Brechungsindex in Bezug auf eine optische Filmdicke $d_1$ der ersten Schicht mit hohem Brechungsindex, wenn von entweder der Seite der ersten optischen Schicht oder der Seite der zweiten optischen Schicht aus betrachtet, in einer ersten Region enthalten sind, die durch die folgenden Formeln (13) bis (16) umschrieben wird, wohingegen, falls die gesamte wellenlängenselektive Reflexionsschicht eine geometrische Filmdicke L von 140 nm aufweist, das Verhältnis $\alpha$ und das Verhältnis $\beta$ in einer zweiten Region enthalten sind, die durch die folgenden Formeln (17) bis (20) umschrieben wird, und
wobei, falls die gesamte wellenlängenselektive Reflexionsschicht eine geometrische Filmdicke L von 120 nm < L < 140 nm hat,
unter der Annahme, dass jede von winzigen Seiten, die durch Teilen eines Umfangs C1 der ersten Region in n gleiche Abschnitte gebildet werden, wobei ein Schnittpunkt zwischen der Formel (13) und Formel (15) als ein Startpunkt angesetzt wird, als $\Delta C1i$ repräsentiert wird, wo i eine ganze Zahl zwischen 0 und n, beide eingeschlossen, bezeichnet, dass jede von winzigen Seiten, die durch Teilen des Umfangs C2 der zweiten Region in n gleiche Abschnitte gebildet werden, wobei ein Schnittpunkt zwischen der Formel (17) und Formel (19) als ein Startpunkt dient, als $\Delta C2i$ repräsentiert wird und dass jede von winzigen Regionen mit einer rechtwinkeligen Form, wobei $\Delta C1i$ und $\Delta C2i$ als die beiden kurzen Seiten ausgebildet sind, als $\Delta Si$ definiert wird, das Verhältnis $\alpha$ und das Verhältnis $\beta$ durch eine Umfangsfläche S umgeben sind, die aus einer Gruppe winziger Regionen $\Delta Si$ besteht, wobei Formeln (13) - (20) die folgenden Gleichungen sind

$$\alpha = -0{,}0003\beta^2 + 0{,}0074\beta + 0{,}0033 \quad (13)$$

$$\alpha = -0{,}0014\beta^2 + 0{,}0191\beta - 0{,}0422 \quad (14)$$

$$\alpha = -9x10^{-5}\ \beta^2 + 0{,}0015\beta + 0{,}0084 \quad (15)$$

$$\alpha = 0{,}007709 \quad (16)$$

$$\alpha = -0{,}0014\beta^2 + 0{,}0136\beta - 0{,}0027 \quad (17)$$

$$\beta = 10132\alpha^2 - 241{,}39\alpha + 4{,}747 \quad (18)$$

$$\alpha = -0{,}0001\beta^2 + 0{,}002\beta + 0{,}0074 \quad (19)$$

$$\alpha = 0{,}006523 \quad (20)$$

**5.** Optisches Element, mit:

einer ersten optischen Schicht mit einer konkav-konvexen Oberfläche;
einer wellenlängenselektiven Reflexionsschicht, die auf der konkav-konvexen Oberfläche ausgebildet ist; und
einer zweiten optischen Schicht, die auf der wellenlängenselektiven Reflexionsschicht ausgebildet ist;
wobei die wellenlängenselektive Reflexionsschicht eine Fünfschichtenstruktur aufweist, in welcher eine Schicht mit hohem Brechungsindex und eine Metallschicht abwechselnd gestapelt sind, und, falls die gesamte wellenlängenselektive Reflexionsschicht eine geometrische Filmdicke L von 140 nm aufweist, ein Verhältnis $\alpha = d_b/d_a$ einer optischen Filmdicke $d_b$ der gesamten Metallschicht in Bezug auf eine optische Filmdicke $d_a$ der gesamten Schicht mit hohem Brechungsindex und ein Verhältnis $\beta = d_3/d_1$ einer optischen Filmdicke $d_3$ der dritten Schicht mit hohem Brechungsindex in Bezug auf eine optische Filmdicke $d_1$ der ersten Schicht mit hohem Brechungsindex, wenn von entweder der Seite der ersten optischen Schicht oder der Seite der zweiten optischen Schicht aus betrachtet, in einer ersten Region enthalten sind, die durch die folgenden Formeln (17) bis (20) umschrieben wird, wohingegen, falls die gesamte wellenlängenselektive Reflexionsschicht eine geometrische Filmdicke L von 160 nm aufweist, das Verhältnis $\alpha$ und das Verhältnis $\beta$ in einer zweiten Region enthalten sind, die durch die folgenden Formeln (21) bis (25) umschrieben wird, und
wobei, falls die gesamte wellenlängenselektive Reflexionsschicht eine geometrische Filmdicke L von $140 \text{ nm} < L < 160 \text{ nm}$ hat,
unter der Annahme, dass jede von winzigen Seiten, die durch Teilen eines Umfangs C1 der ersten Region in n gleiche Abschnitte gebildet werden, wobei ein Schnittpunkt zwischen der Formel (17) und Formel (19) als ein Startpunkt angesetzt wird, als $\Delta C1i$ repräsentiert wird, wo i eine ganze Zahl zwischen 0 und n, beide eingeschlossen, bezeichnet, dass jede von winzigen Seiten, die durch Teilen des Umfangs C2 der zweiten Region in n gleiche Abschnitte gebildet werden, wobei ein Schnittpunkt zwischen der Formel (21) und Formel (24) als ein Startpunkt dient, als $\Delta C2i$ repräsentiert wird und dass jede von winzigen Regionen mit einer rechtwinkeligen Form, wobei $\Delta C1i$ und $\Delta C2i$ als die beiden kurzen Seiten ausgebildet sind, als $\Delta Si$ definiert wird, das Verhältnis $\alpha$ und das Verhältnis $\beta$ durch eine Umfangsfläche S umgeben sind, die aus einer Gruppe winziger Regionen $\Delta Si$ besteht, wobei Formeln (17) - (25) die folgenden Gleichungen sind

$$\alpha = -0{,}0014\beta^2 + 0{,}0136\beta - 0{,}0027 \quad (17)$$

$$\beta = 10132\alpha^2 - 241{,}39\alpha + 4{,}747 \quad (18)$$

$$\alpha = -0{,}0001\beta^2 + 0{,}002\beta + 0{,}0074 \quad (19)$$

$$\alpha = 0{,}006523 \quad (20)$$

$$\alpha = -0{,}005\beta^2 + 0{,}0273\beta - 0{,}0145 \quad (21)$$

$$\alpha = 0{,}0043\beta^2 - 0{,}0332\beta + 0{,}07 \quad (22)$$

$$\beta = 2{,}875 \quad (23)$$

$$\alpha = -0{,}0001\beta^2 + 0{,}0025\beta + 0{,}0062 \quad (24)$$

$$\alpha = 0{,}005676 \quad (25)$$

**6.** Optisches Element, mit:

einer ersten optischen Schicht mit einer konkav-konvexen Oberfläche;
einer wellenlängenselektiven Reflexionsschicht, die auf der konkav-konvexen Oberfläche ausgebildet ist; und
einer zweiten optischen Schicht, die auf der wellenlängenselektiven Reflexionsschicht ausgebildet ist;
wobei die wellenlängenselektive Reflexionsschicht eine Fünfschichtenstruktur aufweist, in welcher eine Schicht mit hohem Brechungsindex und eine Metallschicht abwechselnd gestapelt sind, und, falls die gesamte wellenlängenselektive Reflexionsschicht eine geometrische Filmdicke L von 160 nm aufweist, ein Verhältnis $\alpha = d_b/d_a$ einer optischen Filmdicke $d_b$ der gesamten Metallschicht in Bezug auf eine optische Filmdicke $d_a$ der gesamten Schicht mit hohem Brechungsindex und ein Verhältnis $\beta = d_3/d_1$ einer optischen Filmdicke $d_3$ der dritten Schicht mit hohem Brechungsindex in Bezug auf eine optische Filmdicke $d_1$ der ersten Schicht mit hohem Brechungsindex, wenn von entweder der Seite der ersten optischen Schicht oder der Seite der zweiten optischen Schicht aus betrachtet, in einer ersten Region enthalten sind, die durch die folgenden Formeln (21) bis (25) umschrieben wird, wohingegen, falls die gesamte wellenlängenselektive Reflexionsschicht eine geometrische Filmdicke L von 180 nm aufweist, das Verhältnis $\alpha$ und das Verhältnis $\beta$ in einer zweiten Region enthalten sind, die durch die folgenden Formeln (26) bis (29) umschrieben wird, und
wobei, falls die gesamte wellenlängenselektive Reflexionsschicht eine geometrische Filmdicke L von 160 nm < L < 180 nm hat,
unter der Annahme, dass jede von winzigen Seiten, die durch Teilen eines Umfangs C1 der ersten Region in n gleiche Abschnitte gebildet werden, wobei ein Schnittpunkt zwischen der Formel (21) und Formel (24) als ein Startpunkt angesetzt wird, als $\Delta$C1i repräsentiert wird, wo i eine ganze Zahl zwischen 0 und n, beide eingeschlossen, bezeichnet, dass jede von winzigen Seiten, die durch Teilen des Umfangs C2 der zweiten Region in n gleiche Abschnitte gebildet werden, wobei ein Schnittpunkt zwischen der Formel (26) und Formel (28) als ein Startpunkt dient, als $\Delta$C2i repräsentiert wird und dass jede von winzigen Regionen mit einer rechtwinkeligen Form, wobei $\Delta$C1i und $\Delta$C2i als die beiden kurzen Seiten ausgebildet sind, als $\Delta$Si definiert wird, das Verhältnis $\alpha$ und das Verhältnis $\beta$ durch eine Umfangsfläche S umgeben sind, die aus einer Gruppe winziger Regionen $\Delta$Si besteht, wobei Formeln (21) - (29) die folgenden Gleichungen sind

$$\alpha = -0{,}005\beta^2 + 0{,}0273\beta - 0{,}0145 \quad (21)$$

$$\alpha = 0{,}0043\beta^2 - 0{,}0332\beta + 0{,}07 \quad (22)$$

$$\beta = 2{,}875 \quad (23)$$

$$\alpha = -0{,}0001\beta^2 + 0{,}0025\beta + 0{,}0062 \quad (24)$$

$$\alpha = 0{,}005676 \quad (25)$$

$$\alpha = -0{,}0103\beta^2 + 0{,}047\beta - 0{,}0322 \quad (26)$$

$$\alpha = 0{,}0093\beta^2 - 0{,}0677\beta + 0{,}1212 \quad (27)$$

$$\alpha = -0{,}0003\beta^2 + 0{,}0036\beta + 0{,}0046 \quad (28)$$

$$\alpha = 0{,}00498 \qquad (29)$$

**7.** Optisches Element nach Anspruch 1, wobei
falls die gesamte wellenlängenselektive Reflexionsschicht eine geometrische Filmdicke L von 80 nm aufweist, das Verhältnis $\alpha$ und das Verhältnis $\beta$ in einer dritten Region enthalten sind, die durch die oben erwähnten Formeln (2) und (3) sowie die folgende Formel (30) umschrieben wird, und, falls die gesamte wellenlängenselektive Reflexionsschicht eine geometrische Filmdicke L von 90 nm aufweist, das Verhältnis $\alpha$ und das Verhältnis $\beta$ in einer vierten Region enthalten sind, die durch die oben erwähnten Formeln (6) und (7) sowie die folgende Formel (31) umschrieben wird, und
wobei, falls die gesamte wellenlängenselektive Reflexionsschicht eine geometrische Filmdicke L von 80 nm < L < 90 nm hat,
unter der Annahme, dass jede von winzigen Seiten, die durch Teilen eines Umfangs C3 der dritten Region in n gleiche Abschnitte gebildet werden, wobei ein Schnittpunkt zwischen der oben erwähnten Formel (3) und der folgenden Formel (30) als ein Startpunkt angesetzt wird, als $\Delta C3i$ repräsentiert wird, wo i eine ganze Zahl zwischen 0 und n, beide eingeschlossen, bezeichnet, dass jede von winzigen Seiten, die durch Teilen eines Umfangs C4 der vierten Region in n gleiche Abschnitte gebildet werden, wobei ein Schnittpunkt zwischen der oben erwähnten Formel (7) und der folgenden Formel (31) als ein Startpunkt dient, als $\Delta C4i$ repräsentiert wird und dass jede von winzigen Regionen mit einer rechtwinkeligen Form, wobei $\Delta C3i$ und $\Delta C4i$ als die beiden kurzen Seiten ausgebildet sind, als $\Delta Si$ definiert wird, das Verhältnis $\alpha$ und das Verhältnis $\beta$ durch eine Umfangsfläche S umgeben sind, die aus einer Gruppe der winzigen Regionen $\Delta Si$ besteht, wobei Formeln (30) - (31) die folgenden Gleichungen sind

$$\alpha = -6x10^{-6}\,\beta^2 + 0{,}0002\beta + 0{,}0141 \qquad (30)$$

$$\alpha = -1x10^{-5}\,\beta^2 + 0{,}0002\beta + 0{,}0125 \qquad (31)$$

**8.** Optisches Element nach Anspruch 2, wobei
falls die gesamte wellenlängenselektive Reflexionsschicht eine geometrische Filmdicke L von 90 nm aufweist, das Verhältnis $\alpha$ und das Verhältnis $\beta$ in einer dritten Region enthalten sind, die durch die oben erwähnten Formeln (6) und (7) sowie die folgende Formel (31) umschrieben wird, und, falls die gesamte wellenlängenselektive Reflexionsschicht eine geometrische Filmdicke L von 100 nm aufweist, das Verhältnis $\alpha$ und das Verhältnis $\beta$ in einer vierten Region enthalten sind, die durch die oben erwähnten Formeln (10) und (11) sowie die folgende Formel (32) umschrieben wird, und
wobei, falls die gesamte wellenlängenselektive Reflexionsschicht eine geometrische Filmdicke L von 90 nm < L < 100 nm hat,
unter der Annahme, dass jede von winzigen Seiten, die durch Teilen eines Umfangs C3 der dritten Region in n gleiche Abschnitte gebildet werden, wobei ein Schnittpunkt zwischen der oben erwähnten Formel (7) und der folgenden Formel (31) als ein Startpunkt angesetzt wird, als $\Delta C3i$ repräsentiert wird, wo i eine ganze Zahl zwischen 0 und n, beide eingeschlossen, bezeichnet, dass jede von winzigen Seiten, die durch Teilen eines Umfangs C4 der vierten Region in n gleiche Abschnitte gebildet werden, wobei ein Schnittpunkt zwischen der oben erwähnten Formel (11) und der folgenden Formel (32) als ein Startpunkt dient, als $\Delta C4i$ repräsentiert wird und dass jede von winzigen Regionen mit einer rechtwinkeligen Form, wobei $\Delta C3i$ und $\Delta C4i$ als die beiden kurzen Seiten ausgebildet sind, als $\Delta Si$ definiert wird, das Verhältnis $\alpha$ und das Verhältnis $\beta$ durch eine Umfangsfläche S umgeben sind, die aus einer Gruppe der winzigen Regionen $\Delta Si$ besteht, wobei Formeln (31) - (32) die folgenden Gleichungen sind

$$\alpha = -1x10^{-5}\,\beta^2 + 0{,}0002\beta + 0{,}0125 \qquad (31)$$

$$\alpha = -3x10^{-5}\,\beta^2 + 0{,}0004\beta + 0{,}0113 \qquad (32)$$

**9.** Optisches Element nach Anspruch 3, wobei
falls die gesamte wellenlängenselektive Reflexionsschicht eine geometrische Filmdicke L von 100 nm aufweist, das Verhältnis $\alpha$ und das Verhältnis $\beta$ in einer dritten Region enthalten sind, die durch die oben erwähnten Formeln (10) und (11) sowie die folgende Formel (32) umschrieben wird, und, falls die gesamte wellenlängenselektive Reflexionsschicht eine geometrische Filmdicke L von 120 nm aufweist, das Verhältnis $\alpha$ und das Verhältnis $\beta$ in einer vierten Region enthalten sind, die durch die oben erwähnten Formeln (14) und (15) sowie die folgende Formel (33) umschrieben wird, und

wobei, falls die gesamte wellenlängenselektive Reflexionsschicht eine geometrische Filmdicke L von 100 nm < L < 120 nm hat,

unter der Annahme, dass jede von winzigen Seiten, die durch Teilen eines Umfangs C3 der dritten Region in n gleiche Abschnitte gebildet werden, wobei ein Schnittpunkt zwischen der oben erwähnten Formel (11) und der folgenden Formel (32) als ein Startpunkt angesetzt wird, als $\Delta$C3i repräsentiert wird, wo i eine ganze Zahl zwischen 0 und n, beide eingeschlossen, bezeichnet, dass jede von winzigen Seiten, die durch Teilen eines Umfangs C4 der vierten Region in n gleiche Abschnitte gebildet werden, wobei ein Schnittpunkt zwischen der oben erwähnten Formel (15) und der folgenden Formel (33) als ein Startpunkt dient, als $\Delta$C4i repräsentiert wird und dass jede von winzigen Regionen mit einer rechtwinkeligen Form, wobei $\Delta$C3i und $\Delta$C4i als die beiden kurzen Seiten ausgebildet sind, als $\Delta$Si definiert wird, das optische Element so entworfen ist, dass das Verhältnis $\alpha$ und das Verhältnis $\beta$ durch eine Umfangsfläche S umgeben sind, die aus einer Gruppe der winzigen Regionen $\Delta$Si besteht, wobei Formeln (32) - (33) die folgenden Gleichungen sind

$$\alpha = -3x10^{-5}\,\beta^2 + 0{,}0004\beta + 0{,}0113 \qquad (32)$$

$$\alpha = -7x10^{-5}\,\beta^2 + 0{,}0007\beta + 0{,}0097 \qquad (33)$$

**10.** Optisches Element nach Anspruch 4, wobei

falls die gesamte wellenlängenselektive Reflexionsschicht eine geometrische Filmdicke L von 120 nm aufweist, das Verhältnis $\alpha$ und das Verhältnis $\beta$ in einer dritten Region enthalten sind, die durch die oben erwähnten Formeln (14) und (15) sowie die folgende Formel (33) umschrieben wird, und, falls die gesamte wellenlängenselektive Reflexionsschicht eine geometrische Filmdicke L von 140 nm aufweist, das Verhältnis $\alpha$ und das Verhältnis $\beta$ in einer vierten Region enthalten sind, die durch die oben erwähnten Formeln (18) und (19) sowie die folgende Formel (34) umschrieben wird, und

wobei, falls die gesamte wellenlängenselektive Reflexionsschicht eine geometrische Filmdicke L von 120 nm < L < 140 nm hat,

unter der Annahme, dass jede von winzigen Seiten, die durch Teilen eines Umfangs C3 der dritten Region in n gleiche Abschnitte gebildet werden, wobei ein Schnittpunkt zwischen der oben erwähnten Formel (15) und der folgenden Formel (33) als ein Startpunkt angesetzt wird, als $\Delta$C3i repräsentiert wird, wo i eine ganze Zahl zwischen 0 und n, beide eingeschlossen, bezeichnet, dass jede von winzigen Seiten, die durch Teilen eines Umfangs C4 der vierten Region in n gleiche Abschnitte gebildet werden, wobei ein Schnittpunkt zwischen der oben erwähnten Formel (19) und der folgenden Formel (34) als ein Startpunkt dient, als $\Delta$C4i repräsentiert wird und dass jede von winzigen Regionen mit einer rechtwinkeligen Form, wobei $\Delta$C3i und $\Delta$C4i als die beiden kurzen Seiten ausgebildet sind, als $\Delta$Si definiert wird, das Verhältnis $\alpha$ und das Verhältnis $\beta$ durch eine Umfangsfläche S umgeben sind, die aus einer Gruppe der winzigen Regionen $\Delta$Si besteht, wobei Formeln (33) - (34) die folgenden Gleichungen sind

$$\alpha = -7x10^{-5}\,\beta^2 + 0{,}0007\beta + 0{,}0097 \qquad (33)$$

$$\alpha = -0{,}0001\beta^2 + 0{,}0011\beta + 0{,}0083 \qquad (34)$$

**11.** Optisches Element nach Anspruch 5, wobei

falls die gesamte wellenlängenselektive Reflexionsschicht eine geometrische Filmdicke L von 140 nm aufweist, das Verhältnis $\alpha$ und das Verhältnis $\beta$ in einer dritten Region enthalten sind, die durch die oben erwähnten Formeln (18) und (19) sowie die folgende Formel (34) umschrieben wird, und, falls die gesamte wellenlängenselektive Reflexionsschicht eine geometrische Filmdicke L von 160 nm aufweist, das Verhältnis $\alpha$ und das Verhältnis $\beta$ in einer vierten Region enthalten sind, die durch die oben erwähnten Formeln (21) bis (24) sowie die folgende Formel (35) umschrieben wird, und

wobei, falls die gesamte wellenlängenselektive Reflexionsschicht eine geometrische Filmdicke L von 140 nm < L < 160 nm hat,

unter der Annahme, dass jede von winzigen Seiten, die durch Teilen eines Umfangs C3 der dritten Region in n gleiche Abschnitte gebildet werden, wobei ein Schnittpunkt zwischen der oben erwähnten Formel (19) und der folgenden Formel (34) als ein Startpunkt angesetzt wird, als ΔC3i repräsentiert wird, wo i eine ganze Zahl zwischen 0 und n, beide eingeschlossen, bezeichnet, dass jede von winzigen Seiten, die durch Teilen eines Umfangs C4 der vierten Region in n gleiche Abschnitte gebildet werden, wobei ein Schnittpunkt zwischen der oben erwähnten Formel (21) und der folgenden Formel (35) als ein Startpunkt dient, als ΔC4i repräsentiert wird und dass jede von winzigen Regionen mit einer rechtwinkeligen Form, wobei ΔC3i und ΔC4i als die beiden kurzen Seiten ausgebildet sind, als ΔSi definiert wird, das Verhältnis α und das Verhältnis β durch eine Umfangsfläche S umgeben sind, die aus einer Gruppe der winzigen Regionen ΔSi besteht, wobei Formeln (34) - (35) die folgenden Gleichungen sind

$$\alpha = -0{,}0001\beta^2 + 0{,}0011\beta + 0{,}0083 \quad (34)$$

$$\alpha = -0{,}0002\beta^2 + 0{,}0016\beta + 0{,}0067 \quad (35)$$

**12.** Optisches Element nach Anspruch 6, wobei
falls die gesamte wellenlängenselektive Reflexionsschicht eine geometrische Filmdicke L von 160 nm aufweist, das Verhältnis α und das Verhältnis β in einer dritten Region enthalten sind, die durch die oben erwähnten Formeln (21) bis (24) sowie die folgende Formel (35) umschrieben wird, und, falls die gesamte wellenlängenselektive Reflexionsschicht eine geometrische Filmdicke L von 180 nm aufweist, das Verhältnis α und das Verhältnis β in einer vierten Region enthalten sind, die durch die oben erwähnten Formeln (26) bis (28) sowie die folgende Formel (36) umschrieben wird, und
wobei, falls die gesamte wellenlängenselektive Reflexionsschicht eine geometrische Filmdicke L von 160 nm < L < 180 nm hat,
unter der Annahme, dass jede von winzigen Seiten, die durch Teilen eines Umfangs C3 der dritten Region in n gleiche Abschnitte gebildet werden, wobei ein Schnittpunkt zwischen der oben erwähnten Formel (21) und der folgenden Formel (35) als ein Startpunkt angesetzt wird, als ΔC3i repräsentiert wird, wo i eine ganze Zahl zwischen 0 und n, beide eingeschlossen, bezeichnet, dass jede von winzigen Seiten, die durch Teilen eines Umfangs C4 der vierten Region in n gleiche Abschnitte gebildet werden, wobei ein Schnittpunkt zwischen der oben erwähnten Formel (26) und der folgenden Formel (36) als ein Startpunkt dient, als ΔC4i repräsentiert wird und dass jede von winzigen Regionen mit einer rechtwinkeligen Form, wobei ΔC3i und ΔC4i als die beiden kurzen Seiten ausgebildet sind, als ΔSi definiert wird, das Verhältnis α und das Verhältnis β durch eine Umfangsfläche S umgeben sind, die aus einer Gruppe der winzigen Regionen ΔSi besteht, wobei Formeln (35) - (36) die folgenden Gleichungen sind

$$\alpha = -0{,}0002\beta^2 + 0{,}0016\beta + 0{,}0067 \quad (35)$$

$$\alpha = -0{,}0003\beta^2 + 0{,}0021\beta + 0{,}0055 \quad (36)$$

**13.** Optisches Element nach einem der Ansprüche 1 bis 6, wobei
wenn von entweder der Seite der ersten optischen Schicht oder der Seite der zweiten optischen Schicht aus betrachtet, die Filmdicken der ersten und fünften Schichten mit hohem Brechungsindex praktisch die gleichen sind und die Filmdicken der zweiten und vierten Metallschichten praktisch die gleichen sind.

**14.** Optisches Element nach einem der Ansprüche 1 bis 6, wobei
die Schicht mit hohem Brechungsindex einen höheren Brechungsindex als denjenigen der Metallschicht hat.

**15.** Optisches Element nach einem der Ansprüche 1 bis 6, wobei
die Schicht mit hohem Brechungsindex einen Brechungsindex von 1,7 oder höher bis 2,6 oder geringer aufweist.

**16.** Optisches Element nach einem der Ansprüche 1 bis 6, wobei
die Schicht mit hohem Brechungsindex zumindest ein Element enthält, das aus der aus Nioboxid, Zinkoxid, Titanoxid und Tantaloxid bestehenden Gruppe ausgewählt wird, und die Metallschicht eine Ag-Legierung enthält.

**17.** Fenstermaterial, mit:

einem optischen Element nach einem der Ansprüche 1 bis 6.

**18.** Beschlag, mit:

einem optischen Element nach einem der Ansprüche 1 bis 6, installiert in einer Beleuchtungseinheit.

**19.** Sonnenschutzvorrichtung, mit:

einem oder einer Mehrzahl an Sonnenschutzelementen zum Abschatten von Sonnenlicht, wobei das Sonnenschutzelement mit einem optischen Element nach einem der Ansprüche 1 bis 6 versehen ist.

## Revendications

**1.** Elément optique comprenant :

une première couche optique (4) qui présente une surface concave-convexe ;
une couche réfléchissante sélective en longueur d'onde (3) qui est formée sur la surface concave-convexe ; et
une deuxième couche optique (5) qui est formée sur la couche réfléchissante sélective en longueur d'onde (3),
étant précisé que la couche réfléchissante sélective en longueur d'onde (3) présente une structure à cinq couches dans laquelle une couche à indice de réfraction élevé et une couche de métal sont superposées en alternance, et que dans le cas où toute la couche réfléchissante sélective en longueur d'onde (3) a une épaisseur de film géométrique L de 80 nm, un rapport $\alpha=d_b/d_a$ d'une épaisseur de film optique $d_b$ de toute la couche de métal par rapport à une épaisseur de film optique $d_a$ de toute la couche à indice de réfraction élevé et un rapport $\beta=d_3/d_1$ d'une épaisseur de film optique $d_3$ de la troisième couche à indice de réfraction élevé par rapport à une épaisseur de film optique $d_1$ de la première couche à indice de réfraction élevé, vue à partir du côté de la première couche optique ou du côté de la deuxième couche optique, sont compris dans une première zone entourée par les formules (1) à (4) suivantes, tandis que dans le cas où toute la couche réfléchissante sélective en longueur d'onde (3) a une épaisseur de film géométrique L de 90 nm, le rapport $\alpha$ et le rapport $\beta$ sont compris dans une deuxième zone entourée par les formules (5) à (8) suivantes, et
que dans le cas où toute la couche réfléchissante sélective en longueur d'onde (3) a une épaisseur de film géométrique L de 80 nm < L < 90 nm,
en supposant que chacun des côtés de minute formés en divisant une périphérie C1 de la première zone en n parties égales - une intersection entre la formule (1) et la formule (3) étant fixée comme point de départ - soit représenté comme $\Delta$C1i, i désignant un nombre entier entre 0 inclus et n inclus, et que chacun des côtés de minute formés en divisant une périphérie C2 de la deuxième zone en n parties égales - une intersection entre la formule (5) et la formule (7) étant fixée comme point de départ - soit représenté comme $\Delta$C2i, et que chacune des zones de minute présentant une forme rectangulaire - $\Delta$C1i et $\Delta$C2i étant formés comme les deux côtés courts - soit définie comme $\Delta$Si, le rapport $\alpha$ et le rapport $\beta$ sont entourés par une surface circonférentielle S composée d'un groupe de zones de minute $\Delta$Si, étant précisé que les formules (1)-(8) sont les équations suivantes

$$\alpha = -0{,}0004\beta^2+0{,}0053\beta+0{,}0065 \quad (1)$$

$$\alpha = -1\times10^{-5}\beta^2+0{,}0007\beta+0{,}0066 \quad (2)$$

$$\alpha = -1\times10^{-5}\beta^2+0{,}0005\beta+0{,}0119 \quad (3)$$

$$\alpha = 0{,}012114 \quad (4)$$

$$\alpha = -0{,}0002\beta^2+0{,}0039\beta+0{,}0087 \quad (5)$$

$$\alpha = -3\times10^{-5}\beta^2+0,0014\beta+0,0038 \quad (6)$$

$$\alpha = -2\times10^{-5}\beta^2+0,0006\beta+0,0112 \quad (7)$$

$$\alpha = 0,010589 \quad (8)$$

**2.** Elément optique comprenant :

une première couche optique qui présente une surface concave-convexe ;
une couche réfléchissante sélective en longueur d'onde qui est formée sur la surface concave-convexe ; et
une deuxième couche optique qui est formée sur la couche réfléchissante sélective en longueur d'onde,
étant précisé que la couche réfléchissante sélective en longueur d'onde présente une structure à cinq couches dans laquelle une couche à indice de réfraction élevé et une couche de métal sont superposées en alternance, et que dans le cas où toute la couche réfléchissante sélective en longueur d'onde a une épaisseur de film géométrique L de 90 nm, un rapport $\alpha=d_b/d_a$ d'une épaisseur de film optique $d_b$ de toute la couche de métal par rapport à une épaisseur de film optique $d_a$ de toute la couche à indice de réfraction élevé et un rapport $\beta=d_3/d_1$ d'une épaisseur de film optique $d_3$ de la troisième couche à indice de réfraction élevé par rapport à une épaisseur de film optique $d_1$ de la première couche à indice de réfraction élevé, vue à partir du côté de la première couche optique ou du côté de la deuxième couche optique, sont compris dans une première zone entourée par les formules (5) à (8) suivantes, tandis que dans le cas où toute la couche réfléchissante sélective en longueur d'onde a une épaisseur de film géométrique L de 90 nm, le rapport $\alpha$ et le rapport $\beta$ sont compris dans une deuxième zone entourée par les formules (9) à (12) suivantes, et
que dans le cas où toute la couche réfléchissante sélective en longueur d'onde a une épaisseur de film géométrique L de 90 nm < L < 100 nm,
en supposant que chacun des côtés de minute formés en divisant une périphérie C1 de la première zone en n parties égales - une intersection entre la formule (5) et la formule (7) étant fixée comme point de départ - soit représenté comme $\Delta$C1i, i désignant un nombre entier entre 0 inclus et n inclus, et que chacun des côtés de minute formés en divisant une périphérie C2 de la deuxième zone en n parties égales - une intersection entre la formule (9) et la formule (11) étant fixée comme point de départ - soit représenté comme $\Delta$C2i, et que chacune des zones de minute présentant une forme rectangulaire - $\Delta$C1i et $\Delta$C2i étant formés comme les deux côtés courts - soit définie comme $\Delta$Si, le rapport $\alpha$ et le rapport sont entourés par une surface circonférentielle S composée d'un groupe de zones de minute $\Delta$Si, étant précisé que les formules (5)-(12) sont les équations suivantes

$$\alpha = -0,0002\beta^2+0,0039\beta+0,0087 \quad (5)$$

$$\alpha = -3\times10^{-5}\beta^2+0,0014\beta+0,0038 \quad (6)$$

$$\alpha = -2\times10^{-5}\beta^2+0,0006\beta+0,0112 \quad (7)$$

$$\alpha = 0,010589 \quad (8)$$

$$\alpha = -0,0002\beta^2+0,0055\beta+0,0057 \quad (9)$$

$$\alpha = -0,0002\beta^2+0,0045\beta+0,0067 \quad (10)$$

$$\alpha = -4\times10^{-5}\beta^2+0,001\beta+0,0099 \quad (11)$$

$$\alpha = 0{,}009403 \quad (12)$$

**3.** Elément optique comprenant :

une première couche optique qui présente une surface concave-convexe ;
une couche réfléchissante sélective en longueur d'onde qui est formée sur la surface concave-convexe ; et
une deuxième couche optique qui est formée sur la couche réfléchissante sélective en longueur d'onde,
étant précisé que la couche réfléchissante sélective en longueur d'onde présente une structure à cinq couches dans laquelle une couche à indice de réfraction élevé et une couche de métal sont superposées en alternance, et que dans le cas où toute la couche réfléchissante sélective en longueur d'onde a une épaisseur de film géométrique L de 100 nm, un rapport $\alpha=d_b/d_a$ d'une épaisseur de film optique $d_b$ de toute la couche de métal par rapport à une épaisseur de film optique $d_a$ de toute la couche à indice de réfraction élevé et un rapport $\beta=d_3/d_1$ d'une épaisseur de film optique $d_3$ de la troisième couche à indice de réfraction élevé par rapport à une épaisseur de film optique $d_1$ de la première couche à indice de réfraction élevé, vue à partir du côté de la première couche optique ou du côté de la deuxième couche optique, sont compris dans une première zone entourée par les formules (9) à (12) suivantes, tandis que dans le cas où toute la couche réfléchissante sélective en longueur d'onde (3) a une épaisseur de film géométrique L de 120 nm, le rapport $\alpha$ et le rapport $\beta$ sont compris dans une deuxième zone entourée par les formules (13) à (16) suivantes, et
que dans le cas où toute la couche réfléchissante sélective en longueur d'onde a une épaisseur de film géométrique L de 100 nm < L < 120 nm,
en supposant que chacun des côtés de minute formés en divisant une périphérie C1 de la première zone en n parties égales - une intersection entre la formule (9) et la formule (11) étant fixée comme point de départ - soit représenté comme $\Delta$C1i, i désignant un nombre entier entre 0 inclus et n inclus, et que chacun des côtés de minute formés en divisant la périphérie C2 de la deuxième zone en n parties égales - une intersection entre la formule (13) et la formule (15) servant de point de départ - soit représenté comme $\Delta$C2i, et que chacune des zones de minute présentant une forme rectangulaire - $\Delta$C1i et $\Delta$C2i étant formés comme les deux côtés courts - soit définie comme $\Delta$Si, le rapport $\alpha$ et le rapport $\beta$ sont entourés par une surface circonférentielle S composée d'un groupe de zones de minute $\Delta$Si, étant précisé que les formules (9)-(16) sont les équations suivantes

$$\alpha = -0{,}0002\beta^2+0{,}0055\beta+0{,}0057 \quad (9)$$

$$\alpha = -0{,}0002\beta^2+0{,}0045\beta+0{,}0067 \quad (10)$$

$$\alpha = -4\times10^{-5}\beta^2+0{,}001\beta+0{,}0099 \quad (11)$$

$$\alpha = 0{,}009403 \quad (12)$$

$$\alpha = -0{,}0003\beta^2+0{,}0074\beta+0{,}0033 \quad (13)$$

$$\alpha = -0{,}0014\beta^2+0{,}0191\beta+0{,}0422 \quad (14)$$

$$\alpha = -9\times10^{-5}\beta^2+0{,}0015\beta+0{,}0084 \quad (15)$$

$$\alpha = 0{,}007709 \quad (16)$$

**4.** Elément optique comprenant :

une première couche optique qui présente une surface concave-convexe ;

une couche réfléchissante sélective en longueur d'onde qui est formée sur la surface concave-convexe ; et
une deuxième couche optique qui est formée sur la couche réfléchissante sélective en longueur d'onde,
étant précisé que la couche réfléchissante sélective en longueur d'onde présente une structure à cinq couches dans laquelle une couche à indice de réfraction élevé et une couche de métal sont superposées en alternance, et que dans le cas où toute la couche réfléchissante sélective en longueur d'onde a une épaisseur de film géométrique L de 140 nm, un rapport $\alpha=d_b/d_a$ d'une épaisseur de film optique $d_b$ de toute la couche de métal par rapport à une épaisseur de film optique $d_a$ de toute la couche à indice de réfraction élevé et un rapport $\beta=d_3/d_1$ d'une épaisseur de film optique $d_3$ de la troisième couche à indice de réfraction élevé par rapport à une épaisseur de film optique $d_1$ de la première couche à indice de réfraction élevé, vue à partir du côté de la première couche optique ou du côté de la deuxième couche optique, sont compris dans une première zone entourée par les formules (13) à (16) suivantes, tandis que dans le cas où toute la couche réfléchissante sélective en longueur d'onde a une épaisseur de film géométrique L de 140 nm, le rapport $\alpha$ et le rapport $\beta$ sont compris dans une deuxième zone entourée par les formules (17) à (20) suivantes, et
que dans le cas où toute la couche réfléchissante sélective en longueur d'onde a une épaisseur de film géométrique L de 120 nm < L < 140 nm,
en supposant que chacun des côtés de minute formés en divisant une périphérie C1 de la première zone en n parties égales - une intersection entre la formule (13) et la formule (15) étant fixée comme point de départ - soit représenté comme $\Delta$C1i, i désignant un nombre entier entre 0 inclus et n inclus, et que chacun des côtés de minute formés en divisant la périphérie C2 de la deuxième zone en n parties égales - une intersection entre la formule (17) et la formule (19) servant de point de départ - soit représenté comme $\Delta$C2i, et que chacune des zones de minute présentant une forme rectangulaire - $\Delta$C1i et $\Delta$C2i étant formés comme les deux côtés courts - soit définie comme $\Delta$Si, le rapport $\alpha$ et le rapport $\beta$ sont entourés par une surface circonférentielle S composée d'un groupe de zones de minute $\Delta$Si, étant précisé que les formules (13)-(20) sont les équations suivantes

$$\alpha = -0,0003\beta^2+0,0074\beta+0,0033 \quad (13)$$

$$\alpha = -0,0014\beta^2+0,0191\beta+0,0422 \quad (14)$$

$$\alpha = -9\times10^{-5}\beta^2+0,0015\beta+0,0084 \quad (15)$$

$$\alpha = 0,007709 \quad (16)$$

$$\alpha = -0,0014\beta^2+0,0136\beta+0,0027 \quad (17)$$

$$\beta = 10132\alpha^2-241,39\alpha+4,747 \quad (18)$$

$$\alpha = -0,0001\beta^2+0,002\beta+0,0074 \quad (19)$$

$$\alpha = 0,006523 \quad (20)$$

**5.** Elément optique comprenant :

une première couche optique qui présente une surface concave-convexe ;
une couche réfléchissante sélective en longueur d'onde qui est formée sur la surface concave-convexe ; et
une deuxième couche optique qui est formée sur la couche réfléchissante sélective en longueur d'onde,
étant précisé que la couche réfléchissante sélective en longueur d'onde présente une structure à cinq couches dans laquelle une couche à indice de réfraction élevé et une couche de métal sont superposées en alternance, et que dans le cas où toute la couche réfléchissante sélective en longueur d'onde a une épaisseur de film géométrique L de 140 nm, un rapport $\alpha=d_b/d_a$ d'une épaisseur de film optique $d_b$ de toute la couche de métal par rapport à une épaisseur de film optique $d_a$ de toute la couche à indice de réfraction élevé et un rapport $\beta=d_3/d_1$ d'une épaisseur de film optique $d_3$ de la troisième couche à indice de réfraction élevé par rapport à une épaisseur de film optique $d_1$ de la première couche à indice de réfraction élevé, vue à partir du côté de la première couche optique ou du côté de la deuxième couche optique, sont compris dans une première zone entourée par les formules (17) à (20) suivantes, tandis que dans le cas où toute la couche réfléchissante sélective en longueur d'onde a une épaisseur de film géométrique L de 160 nm, le rapport $\alpha$ et le rapport $\beta$ sont compris dans une deuxième zone entourée par les formules (21) à (25) suivantes, et

que dans le cas où toute la couche réfléchissante sélective en longueur d'onde a une épaisseur de film géométrique L de 140 nm < L < 160 nm,

en supposant que chacun des côtés de minute formés en divisant une périphérie C1 de la première zone en n parties égales - une intersection entre la formule (17) et la formule (19) étant fixée comme point de départ - soit représenté comme $\Delta$C1i, i désignant un nombre entier entre 0 inclus et n inclus, et que chacun des côtés de minute formés en divisant la périphérie C2 de la deuxième zone en n parties égales - une intersection entre la formule (21) et la formule (24) servant de point de départ - soit représenté par $\Delta$C2i, et que chacune des zones de minute présentant une forme rectangulaire - $\Delta$C1i et $\Delta$C2i étant formés comme les deux côtés courts - soit définie comme $\Delta$Si, le rapport $\alpha$ et le rapport $\beta$ sont entourés par une surface circonférentielle S composée d'un groupe de zones de minute $\Delta$Si, étant précisé que les formules (17)-(25) sont les équations suivantes

$$\alpha = -0{,}0014\beta^2+0{,}0136\beta+0{,}0027 \qquad (17)$$

$$\beta = 10132\alpha^2-241{,}39\alpha+4{,}747 \qquad (18)$$

$$\alpha = -0{,}0001\beta^2+0{,}002\beta+0{,}0074 \qquad (19)$$

$$\alpha = 0{,}006523 \qquad (20)$$

$$\alpha = -0{,}005\beta^2+0{,}0273\beta+0{,}0145 \qquad (21)$$

$$\alpha = 0{,}0043\beta^2-0{,}0332\beta+0{,}07 \qquad (22)$$

$$\beta = 2{,}875 \qquad (23)$$

$$\alpha = -0{,}001\beta^2+0{,}0025\beta+0{,}0062 \qquad (24)$$

$$\alpha = 0{,}005676 \qquad (25)$$

**6.** Elément optique comprenant :

une première couche optique qui présente une surface concave-convexe ;

une couche réfléchissante sélective en longueur d'onde qui est formée sur la surface concave-convexe ; et

une deuxième couche optique qui est formée sur la couche réfléchissante sélective en longueur d'onde,

étant précisé que la couche réfléchissante sélective en longueur d'onde présente une structure à cinq couches dans laquelle une couche à indice de réfraction élevé et une couche de métal sont superposées en alternance, et que dans le cas où toute la couche réfléchissante sélective en longueur d'onde a une épaisseur de film géométrique L de 160 nm, un rapport $\alpha=d_b/d_a$ d'une épaisseur de film optique $d_b$ de toute la couche de métal par rapport à une épaisseur de film optique $d_a$ de toute la couche à indice de réfraction élevé et un rapport $\beta=d_3/d_1$ d'une épaisseur de film optique $d_3$ de la troisième couche à indice de réfraction élevé par rapport à une épaisseur de film optique $d_1$ de la première couche à indice de réfraction élevé, vue à partir du côté de la première couche optique ou du côté de la deuxième couche optique, sont compris dans une première zone entourée par les formules (21) à (25) suivantes, tandis que dans le cas où toute la couche réfléchissante sélective en longueur d'onde a une épaisseur de film géométrique L de 180 nm, le rapport α et le rapport β sont compris dans une deuxième zone entourée par les formules (26) à (29) suivantes, et

que dans le cas où toute la couche réfléchissante sélective en longueur d'onde a une épaisseur de film géométrique L de 160 nm < L < 180 nm,

en supposant que chacun des côtés de minute formés en divisant une périphérie C1 de la première zone en n parties égales - une intersection entre la formule (21) et la formule (24) étant fixée comme point de départ - soit représenté comme ΔC1i, i désignant un nombre entier entre 0 inclus et n inclus, et que chacun des côtés de minute formés en divisant la périphérie C2 de la deuxième zone en n parties égales - une intersection entre la formule (26) et la formule (28) servant de point de départ - soit représenté comme ΔC2i, et que chacune des zones de minute présentant une forme rectangulaire - ΔC1i et ΔC2i étant formés comme les deux côtés courts - soit définie comme ΔSi, le rapport α et le rapport β sont entourés par une surface circonférentielle S composée d'un groupe de zones de minute ΔSi, étant précisé que les formules (21)-(29) sont les équations suivantes

$$\alpha = -0{,}005\beta^2+0{,}0273\beta+0{,}0145 \quad (21)$$

$$\alpha = 0{,}0043\beta^2-0{,}0332\beta+0{,}07 \quad (22)$$

$$\beta = 2{,}875 \quad (23)$$

$$\alpha = -0{,}001\beta^2+0{,}0025\beta+0{,}0062 \quad (24)$$

$$\alpha = 0{,}005676 \quad (25)$$

$$\alpha = -0{,}0103\beta^2+0{,}047\beta+0{,}0322 \quad (26)$$

$$\alpha = 0{,}0093\beta^2-0{,}0677\beta+0{,}1212 \quad (27)$$

$$\alpha = -0{,}0003\beta^2+0{,}0036\beta+0{,}0046 \quad (28)$$

$$\alpha = 0{,}00498 \quad (29)$$

**7.** Elément optique selon la revendication 1, étant précisé que dans le cas où toute la couche réfléchissante sélective en longueur d'onde a une épaisseur de film géométrique L de 80 nm, le rapport α et le rapport β sont compris dans une troisième zone entourée par les formules (2) et (3) mentionnées précédemment ainsi que par la formule (30) suivante, et que dans le cas où toute la couche réfléchissante sélective en longueur d'onde a une épaisseur de film géométrique L de 90 nm, le rapport α et le rapport β sont compris dans une quatrième zone entourée par les formules (6) et (7) mentionnées précédemment ainsi que par la formule (31) suivante, et

que dans le cas où toute la couche réfléchissante sélective en longueur d'onde a une épaisseur de film géométrique L de 80 nm < L < 90 nm,

en supposant que chacun des côtés de minute formés en divisant une périphérie C3 de la troisième zone en n parties égales - une intersection entre la formule (3) mentionnée précédemment et la formule (30) suivante étant fixée comme point de départ - soit représenté comme ΔC3i, i désignant un nombre entier entre 0 inclus et n inclus, et que chacun des côtés de minute formés en divisant une périphérie C4 de la quatrième zone en n parties égales - une intersection entre la formule (7) mentionnée précédemment et la formule (31) suivante servant de point de départ - soit représenté comme ΔC4i, et que chacune des zones de minute présentant une forme rectangulaire - ΔC3i et ΔC4i étant formés comme les deux côtés courts - soit définie comme ΔSi, le rapport α et le rapport β sont entourés par une surface circonférentielle S composée d'un groupe de zones de minute ΔSi, étant précisé que les formules (30)-(31) sont les équations suivantes

$$\alpha = -6\times10^{-6}\beta^2+0{,}0002\beta+0{,}0141 \qquad (30)$$

$$\alpha = -1\times10^{-5}\beta^2+0{,}0002\beta+0{,}0125 \qquad (31)$$

**8.** Elément optique selon la revendication 2, étant précisé que dans le cas où toute la couche réfléchissante sélective en longueur d'onde a une épaisseur de film géométrique L de 90 nm, le rapport α et le rapport β sont compris dans une troisième zone entourée par les formules (6) et (7) mentionnées précédemment ainsi que par la formule (31) suivante, et que dans le cas où toute la couche réfléchissante sélective en longueur d'onde a une épaisseur de film géométrique L de 100 nm, le rapport α et le rapport β sont compris dans une quatrième zone entourée par les formules (10) et (11) mentionnées précédemment ainsi que par la formule (32) suivante, et
que dans le cas où toute la couche réfléchissante sélective en longueur d'onde a une épaisseur de film géométrique L de 90 nm < L < 100 nm,
en supposant que chacun des côtés de minute formés en divisant une périphérie C3 de la troisième zone en n parties égales - une intersection entre la formule (7) mentionnée précédemment et la formule (31) suivante étant fixée comme point de départ - soit représenté comme ΔC3i, i désignant un nombre entier entre 0 inclus et n inclus, et que chacun des côtés de minute formés en divisant une périphérie C4 de la quatrième zone en n parties égales - une intersection entre la formule (11) mentionnée précédemment et la formule (32) suivante servant de point de départ - soit représenté comme ΔC4i, et que chacune des zones de minute présentant une forme rectangulaire - ΔC3i et ΔC4i étant formés comme les deux côtés courts - soit définie comme ΔSi, le rapport α et le rapport β sont entourés par une surface circonférentielle S composée d'un groupe de zones de minute ΔSi, étant précisé que les formules (31)-(32) sont les équations suivantes

$$\alpha = -1\times10^{-5}\beta^2+0{,}0002\beta+0{,}0125 \qquad (31)$$

$$\alpha = -3\times10^{-5}\beta^2+0{,}0004\beta+0{,}0113 \qquad (32)$$

**9.** Elément optique selon la revendication 3, étant précisé que dans le cas où toute la couche réfléchissante sélective en longueur d'onde a une épaisseur de film géométrique L de 100 nm, le rapport α et le rapport β sont compris dans une troisième zone entourée par les formules (10) et (11) mentionnées précédemment ainsi que par la formule (32) suivante, et que dans le cas où toute la couche réfléchissante sélective en longueur d'onde a une épaisseur de film géométrique L de 120 nm, le rapport α et le rapport β sont compris dans une quatrième zone entourée par les formules (14) et (15) mentionnées précédemment ainsi que par la formule (33) suivante, et
que dans le cas où toute la couche réfléchissante sélective en longueur d'onde a une épaisseur de film géométrique L de 100 nm < L < 120 nm,
en supposant que chacun des côtés de minute formés en divisant une périphérie C3 de la troisième zone en n parties égales - une intersection entre la formule (11) mentionnée précédemment et la formule (32) suivante étant fixée comme point de départ - soit représenté comme ΔC3i, i désignant un nombre entier entre 0 inclus et n inclus, et que chacun des côtés de minute formés en divisant une périphérie C4 de la quatrième zone en n parties égales - une intersection entre la formule (15) mentionnée précédemment et la formule (33) suivante servant de point de départ - soit représenté comme ΔC4i, et que chacune des zones de minute présentant une forme rectangulaire - ΔC3i et ΔC4i étant formés comme les deux côtés courts - soit définie comme ΔSi, l'élément optique est conçu de telle sorte que le rapport α et le rapport β sont entourés par une surface circonférentielle S composée d'un groupe de zones de minute ΔSi, étant précisé que les formules (32)-(33) sont les équations suivantes

$$\alpha = -3\times10^{-5}\beta^2+0{,}0004\beta+0{,}0113 \qquad (32)$$

$$\alpha = -7\times10^{-5}\beta^2+0{,}0007\beta+0{,}0097 \qquad (33)$$

**10.** Elément optique selon la revendication 4, étant précisé que dans le cas où toute la couche réfléchissante sélective en longueur d'onde a une épaisseur de film géométrique L de 120 nm, le rapport $\alpha$ et le rapport $\beta$ sont compris dans une troisième zone entourée par les formules (14) et (15) mentionnées précédemment ainsi que par la formule (33) suivante, et que dans le cas où toute la couche réfléchissante sélective en longueur d'onde a une épaisseur de film géométrique L de 140 nm, le rapport $\alpha$ et le rapport $\beta$ sont compris dans une quatrième zone entourée par les formules (18) et (19) mentionnées précédemment ainsi que par la formule (34) suivante, et
que dans le cas où toute la couche réfléchissante sélective en longueur d'onde a une épaisseur de film géométrique L de 120 nm < L < 140 nm,
en supposant que chacun des côtés de minute formés en divisant une périphérie C3 de la troisième zone en n parties égales - une intersection entre la formule (15) mentionnée précédemment et la formule (33) suivante étant fixée comme point de départ - soit représenté comme $\Delta$C3i, i désignant un nombre entier entre 0 inclus et n inclus, et que chacun des côtés de minute formés en divisant une périphérie C4 de la quatrième zone en n parties égales - une intersection entre la formule (19) mentionnée précédemment et la formule (34) suivante servant de point de départ - soit représenté comme $\Delta$C4i, et que chacune des zones de minute présentant une forme rectangulaire - $\Delta$C3i et $\Delta$C4i étant formés comme les deux côtés courts - soit définie comme $\Delta$Si, le rapport $\alpha$ et le rapport $\beta$ sont entourés par une surface circonférentielle S composée d'un groupe de zones de minute $\Delta$Si, étant précisé que les formules (33)-(34) sont les équations suivantes

$$\alpha = -7\times10^{-5}\beta^2+0,0007\beta+0,0097 \quad (33)$$

$$\alpha = -0,0001\beta^2+0,0011\beta+0,0083 \quad (34)$$

**11.** Elément optique selon la revendication 5, étant précisé que dans le cas où toute la couche réfléchissante sélective en longueur d'onde a une épaisseur de film géométrique L de 140 nm, le rapport $\alpha$ et le rapport $\beta$ sont compris dans une troisième zone entourée par les formules (18) et (19) mentionnées précédemment ainsi que par la formule (34) suivante, et que dans le cas où toute la couche réfléchissante sélective en longueur d'onde a une épaisseur de film géométrique L de 160 nm, le rapport $\alpha$ et le rapport $\beta$ sont compris dans une quatrième zone entourée par les formules (21) à (24) mentionnées précédemment ainsi que par la formule (35) suivante, et
que dans le cas où toute la couche réfléchissante sélective en longueur d'onde a une épaisseur de film géométrique L de 140 nm < L < 160 nm,
en supposant que chacun des côtés de minute formés en divisant une périphérie C3 de la troisième zone en n parties égales - une intersection entre la formule (19) mentionnée précédemment et la formule (34) suivante étant fixée comme point de départ - soit représenté comme $\Delta$C3i, i désignant un nombre entier entre 0 inclus et n inclus, et que chacun des côtés de minute formés en divisant une périphérie C4 de la quatrième zone en n parties égales - une intersection entre la formule (21) mentionnée précédemment et la formule (35) suivante servant de point de départ - soit représenté comme $\Delta$C4i, et que chacune des zones de minute présentant une forme rectangulaire - $\Delta$C3i et $\Delta$C4i étant formés comme les deux côtés courts - soit définie comme $\Delta$Si, le rapport $\alpha$ et le rapport $\beta$ sont entourés par une surface circonférentielle S composée d'un groupe de zones de minute $\Delta$Si, étant précisé que les formules (34)-(35) sont les équations suivantes

$$\alpha = -0,0001\beta^2+0,0011\beta+0,0083 \quad (34)$$

$$\alpha = -0,0002\beta^2+0,0016\beta+0,0067 \quad (35)$$

**12.** Elément optique selon la revendication 6, étant précisé que dans le cas où toute la couche réfléchissante sélective en longueur d'onde a une épaisseur de film géométrique L de 160 nm, le rapport $\alpha$ et le rapport $\beta$ sont compris dans une troisième zone entourée par les formules (21) à (24) mentionnées précédemment ainsi que par la formule (35) suivante, et que dans le cas où toute la couche réfléchissante sélective en longueur d'onde a une épaisseur de film géométrique L de 180 nm, le rapport $\alpha$ et le rapport $\beta$ sont compris dans une quatrième zone entourée par les formules (26) à (28) mentionnées précédemment ainsi que par la formule (36) suivante, et
que dans le cas où toute la couche réfléchissante sélective en longueur d'onde a une épaisseur de film géométrique L de 160 nm < L < 180 nm,
en supposant que chacun des côtés de minute formés en divisant une périphérie C3 de la troisième zone en n parties égales - une intersection entre la formule (21) mentionnée précédemment et la formule (35) suivante étant fixée comme point de départ - soit représenté comme ΔC3i, i désignant un nombre entier entre 0 inclus et n inclus, et que chacun des côtés de minute formés en divisant une périphérie C4 de la quatrième zone en n parties égales - une intersection entre la formule (26) mentionnée précédemment et la formule (36) suivante servant de point de départ - soit représenté comme ΔC4i, et que chacune des zones de minute présentant une forme rectangulaire - ΔC3i et ΔC4i étant formés comme les deux côtés courts - soit définie comme ΔSi, le rapport $\alpha$ et le rapport $\beta$ sont entourés par une surface circonférentielle S composée d'un groupe de zones de minute ΔSi, étant précisé que les formules (35)-(36) sont les équations suivantes

$$\alpha = -0,0002\beta^2+0,0016\beta+0,0067 \qquad (35)$$

$$\alpha = -0,0003\beta^2+0,0021\beta+0,0055 \qquad (36)$$

**13.** Elément optique selon l'une quelconque des revendications 1 à 6, étant précisé que vues du côté première couche optique ou du côté deuxième couche optique, les épaisseurs de film des première et cinquième couches à indice de réfraction élevé sont globalement les mêmes, et les épaisseurs des deuxième et quatrième couches de métal sont globalement les mêmes.

**14.** Elément optique selon l'une quelconque des revendications 1 à 6, étant précisé que la couche à indice de réfraction élevé présente un indice de réfraction supérieur à celui de la couche de métal.

**15.** Elément optique selon l'une quelconque des revendications 1 à 6, étant précisé que la couche à indice de réfraction élevé présente un indice de réfraction de 1,7 ou plus à 2,6 ou moins.

**16.** Elément optique selon l'une quelconque des revendications 1 à 6, étant précisé que la couche à indice de réfraction élevé contient au moins un élément sélectionné dans le groupe constitué par l'oxyde de niobium, l'oxyde de zinc, l'oxyde de titane et l'oxyde de tantale, et que la couche de métal contient un alliage de Ag.

**17.** Matériau de fenêtre comprenant : un élément optique selon l'une quelconque des revendications 1 à 6.

**18.** Equipement comprenant : un élément optique selon l'une quelconque des revendications 1 à 6 installé dans une unité d'éclairage.

**19.** Dispositif pare-soleil comprenant : un ou plusieurs éléments pare-soleil pour atténuer la lumière solaire, étant précisé que l'élément pare-soleil est pourvu d'un élément optique selon l'une quelconque des revendications 1 à 6.

FIG.1A

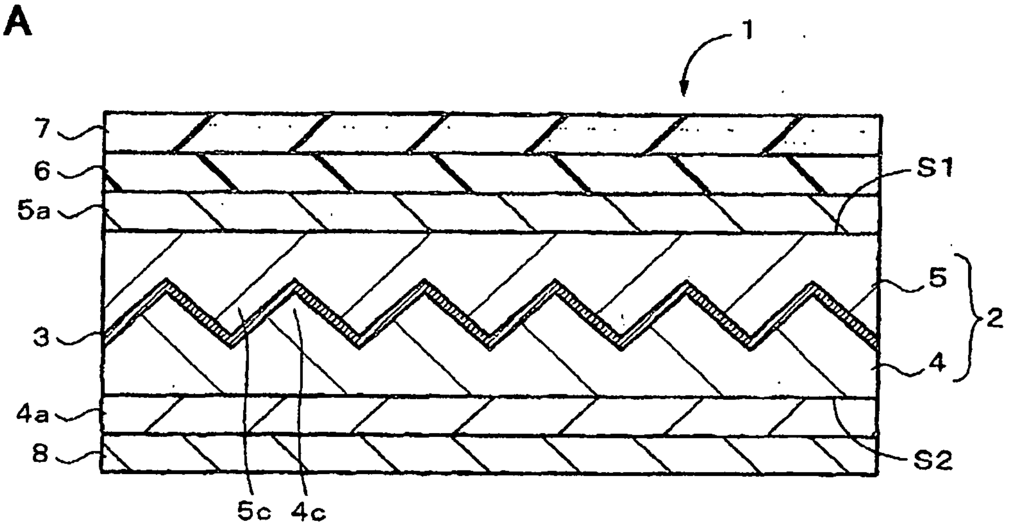


FIG.1B

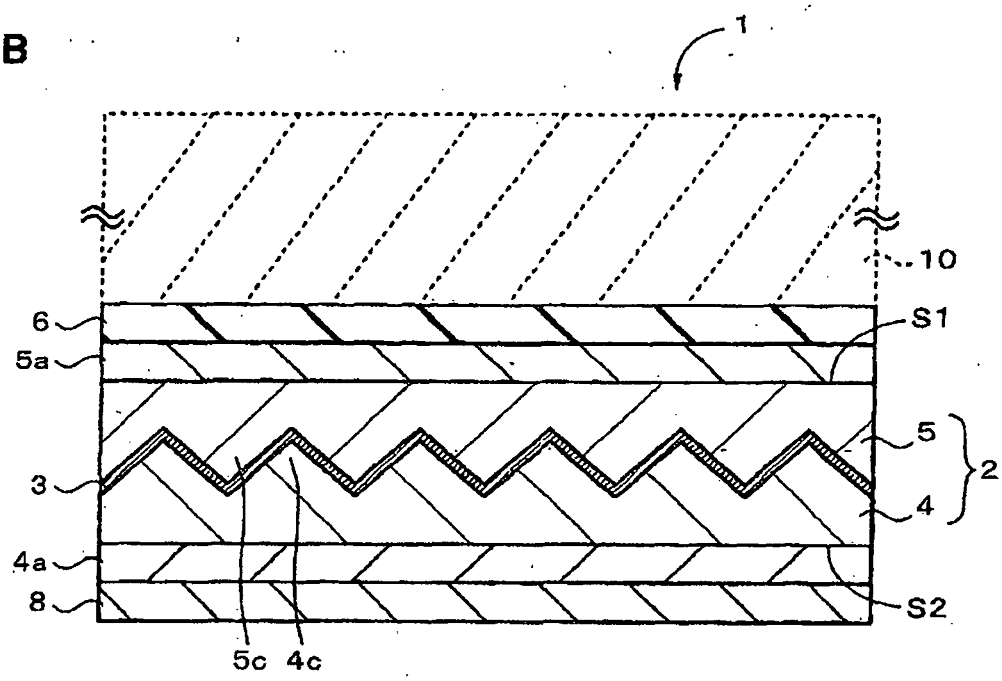

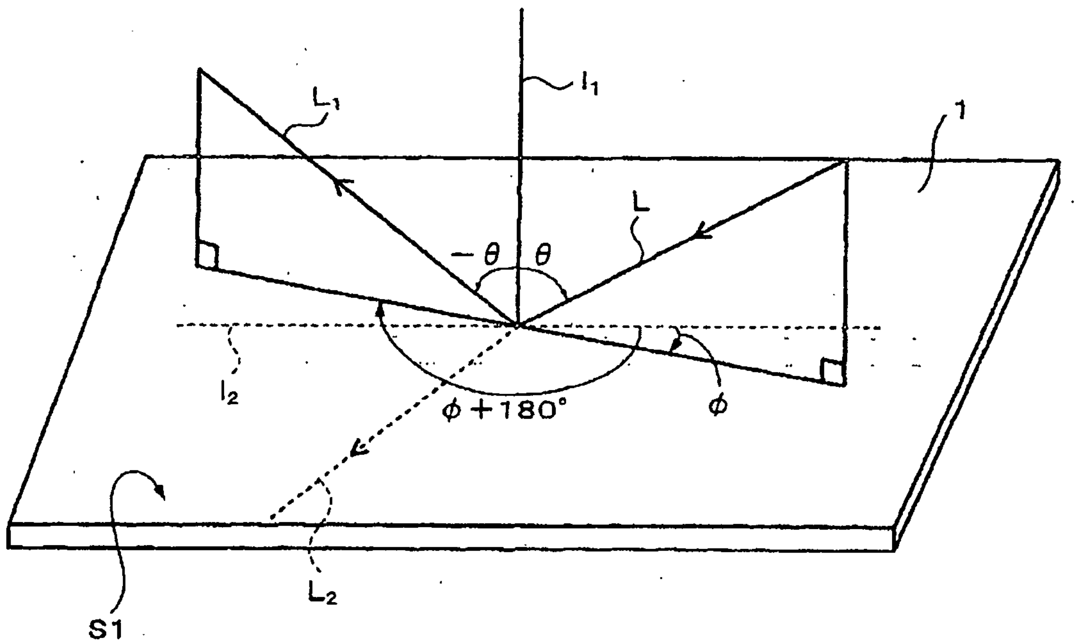


FIG.2

FIG.3A

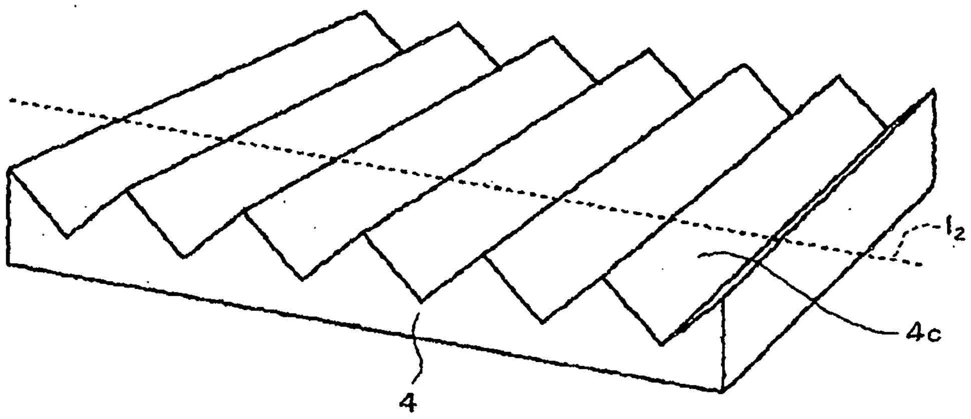


FIG.3B

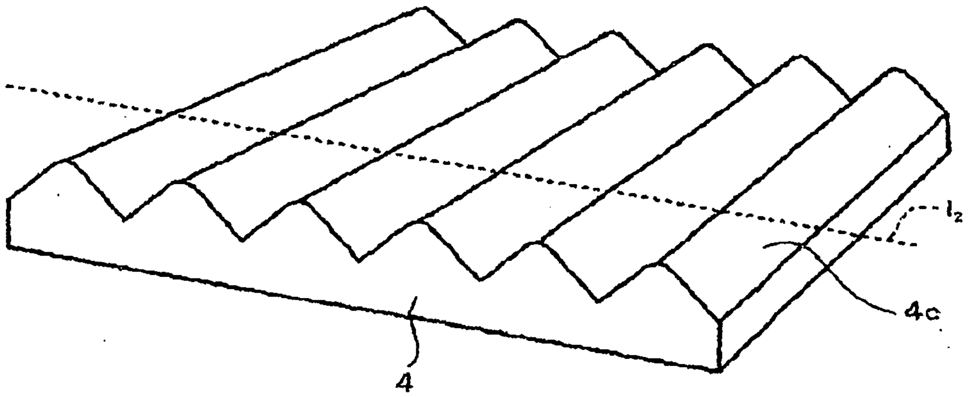


FIG.3C

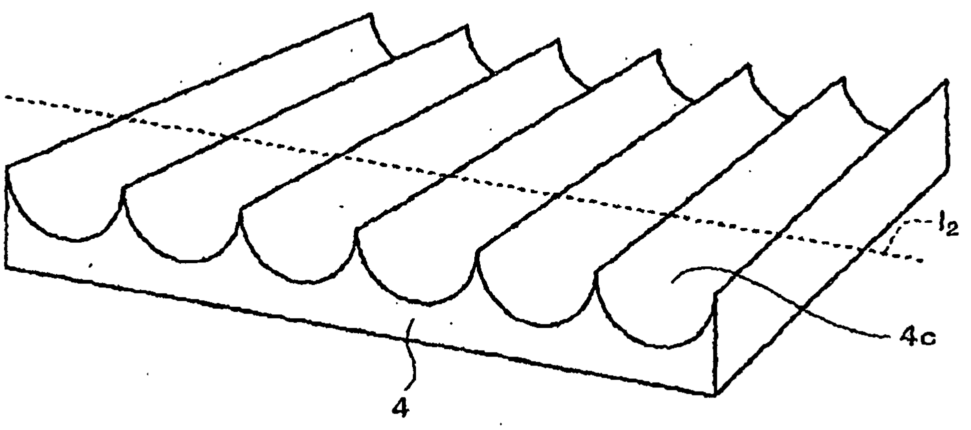

FIG.4A

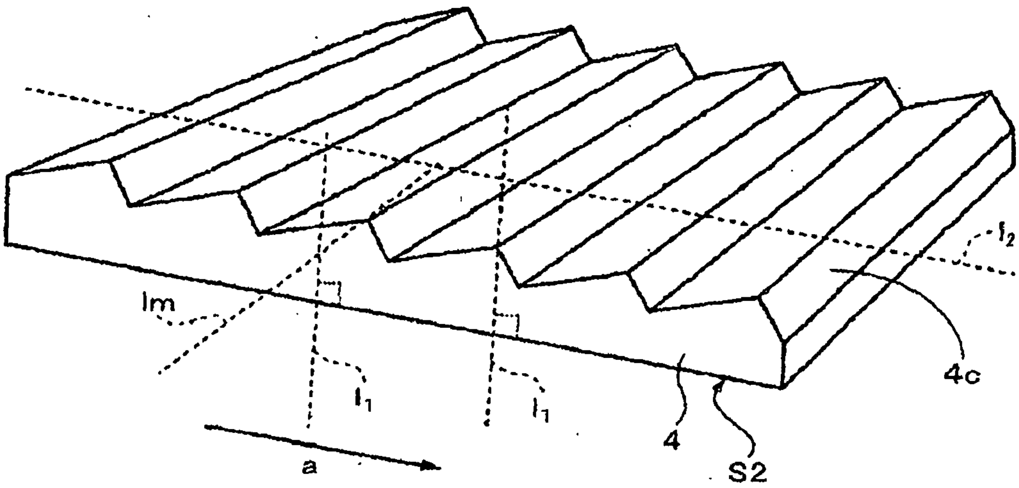


FIG.4B

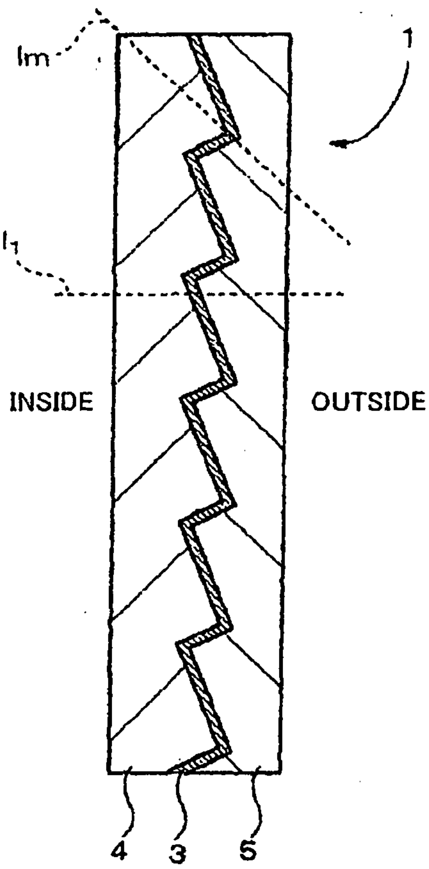

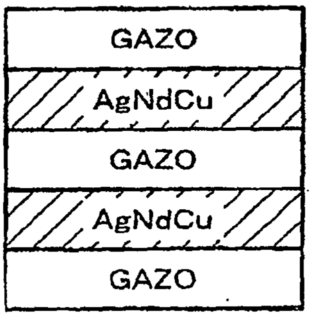


FIG.5

FIG.6A

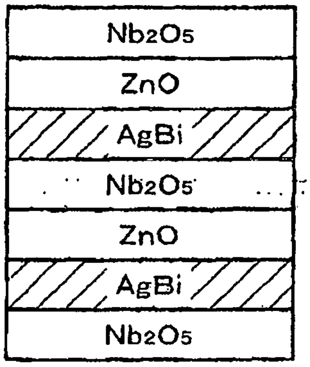


FIG.6B

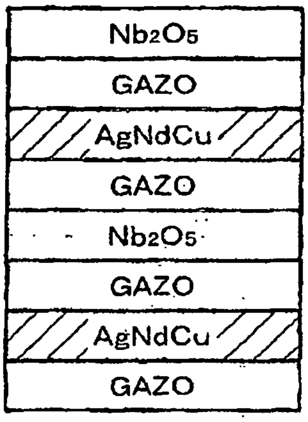


FIG.6C

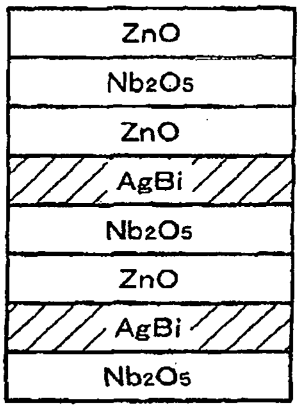


FIG.6D

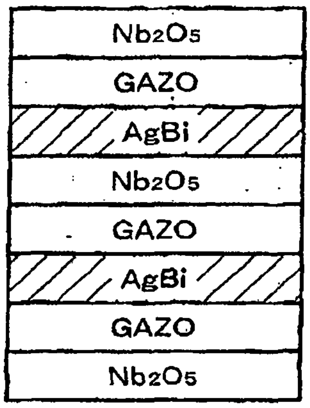


FIG.6E

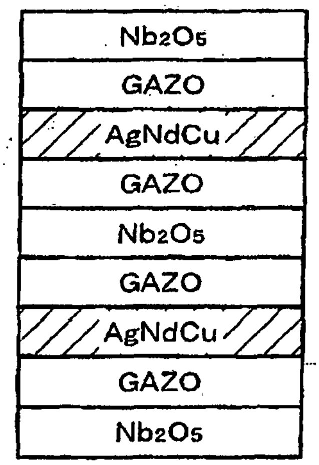


FIG.6F

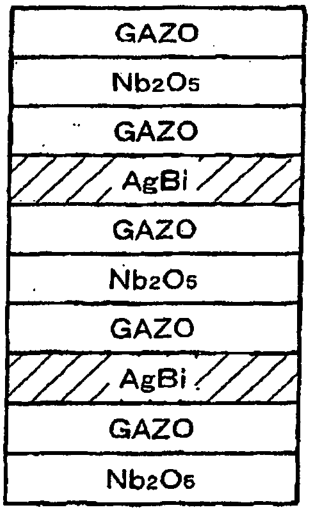

FIG.7A

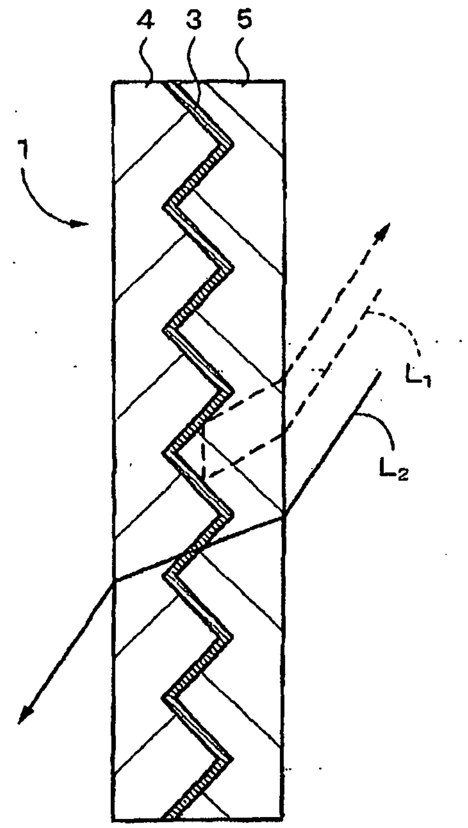


FIG.7B

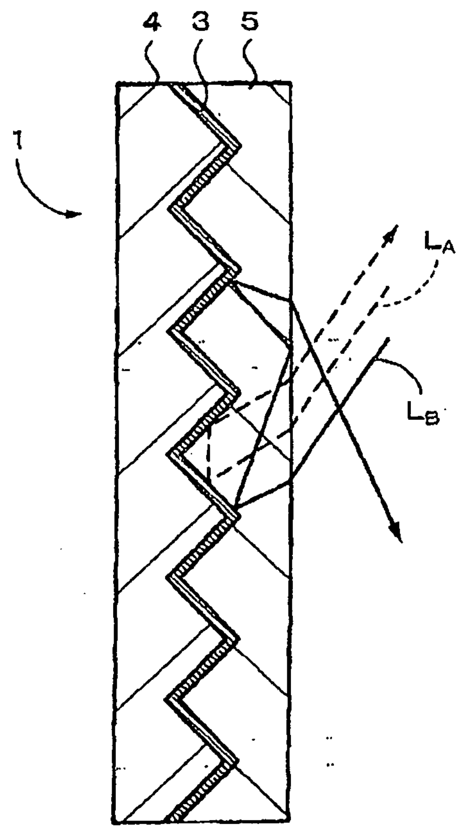

FIG.8A

FIG.8B

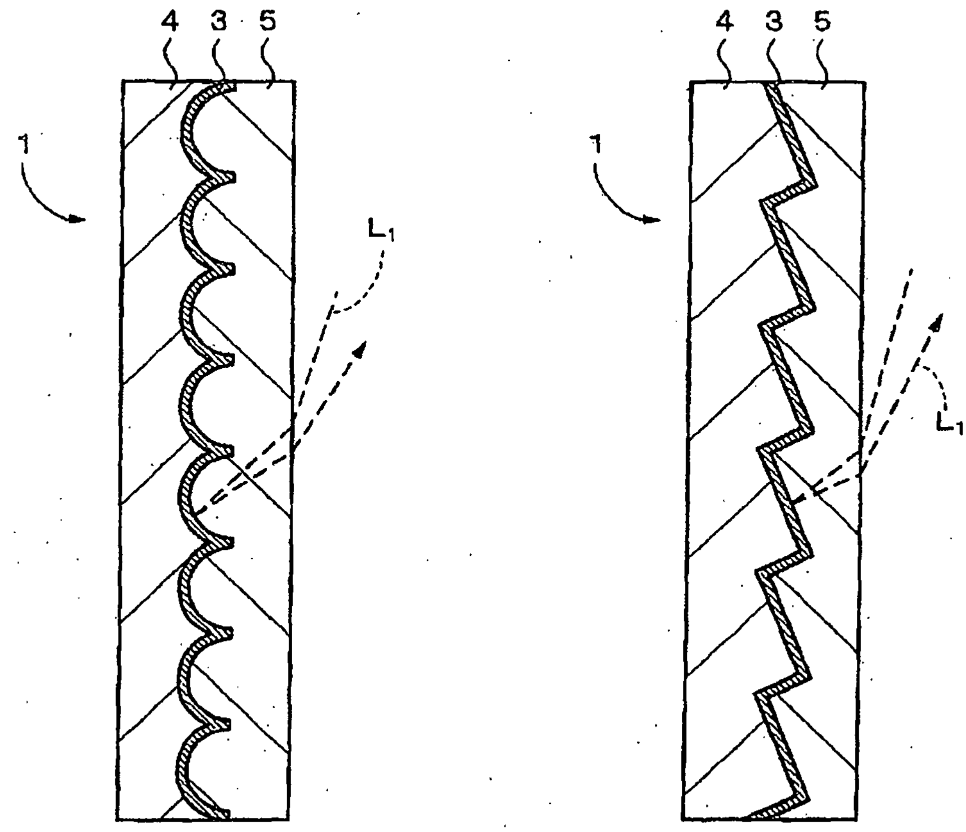

FIG.9A

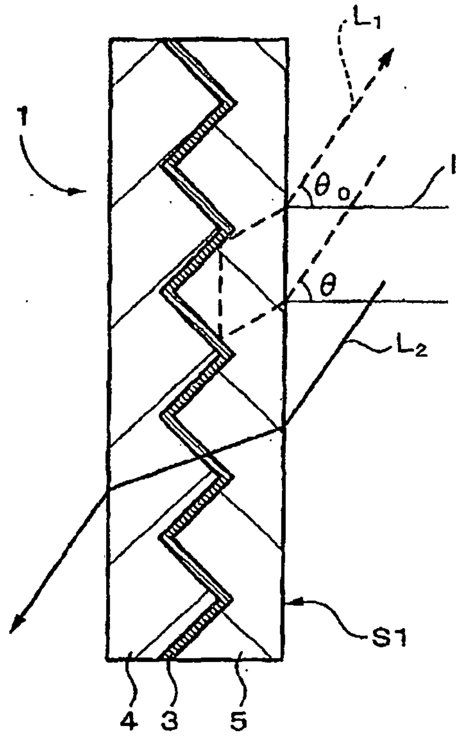


FIG.9B

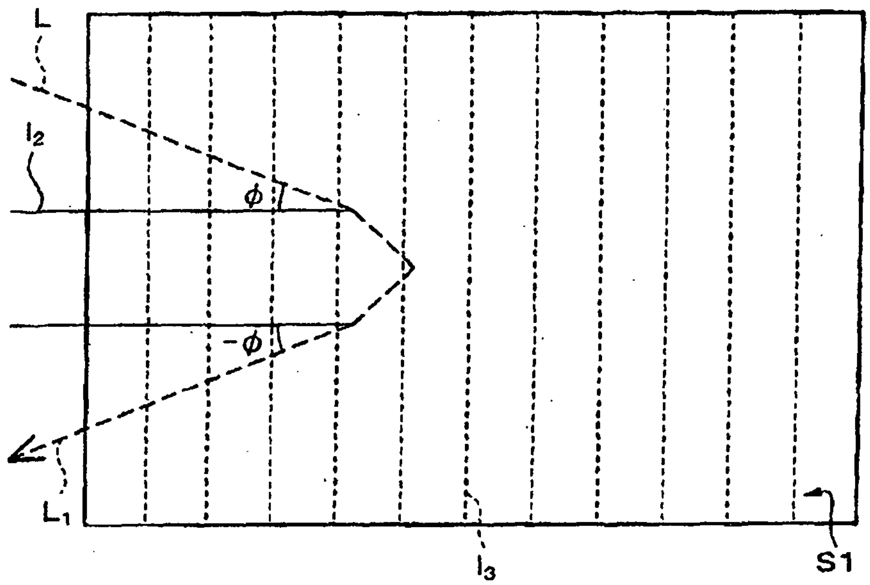

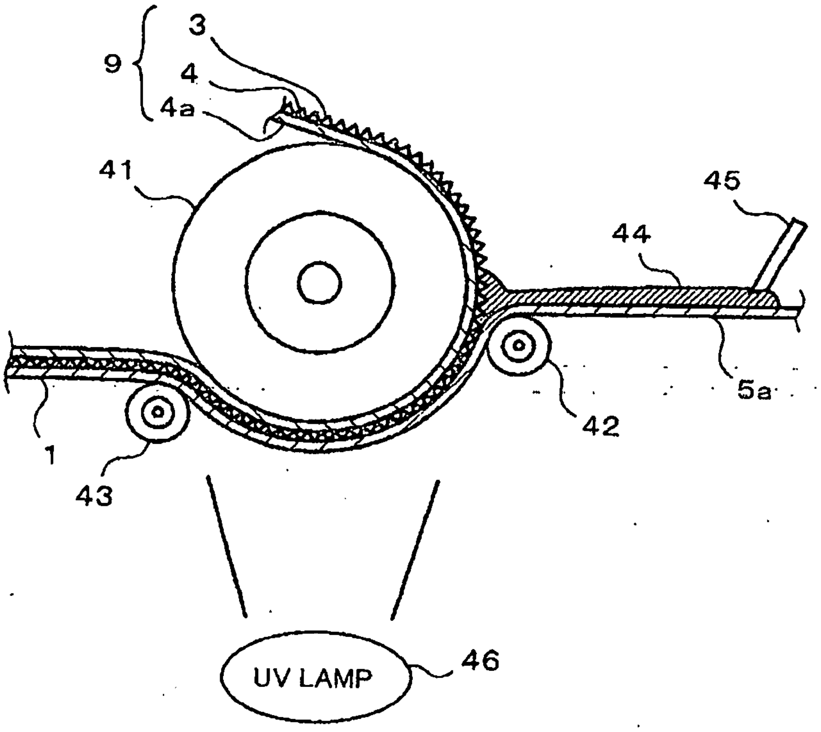


FIG.10

FIG.11A

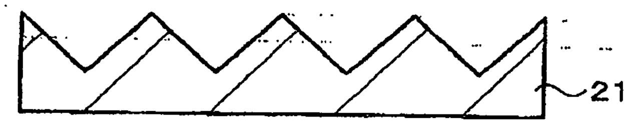


FIG.11B

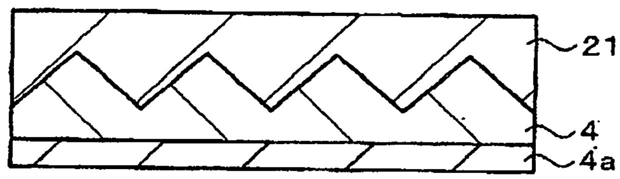


FIG.11C

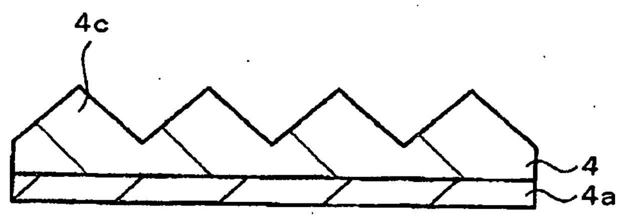

FIG.12A

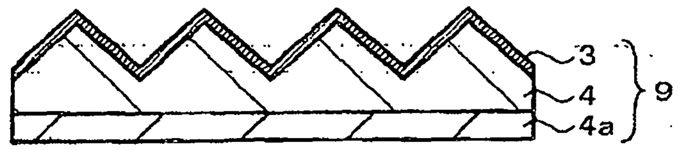


FIG.12B

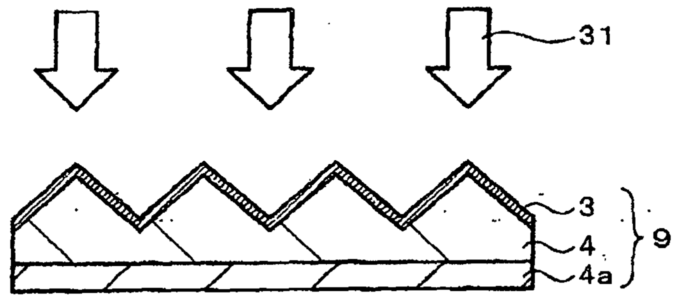


FIG.12C

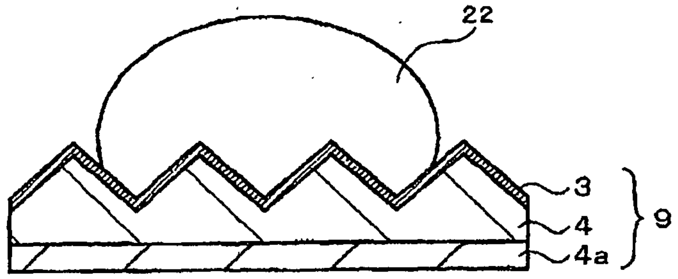

FIG.13A

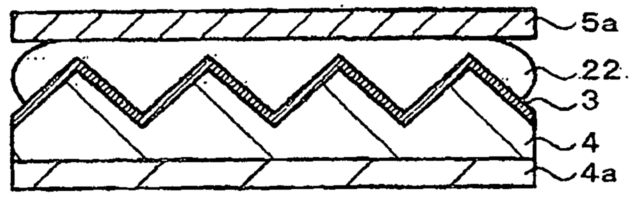


FIG.13B

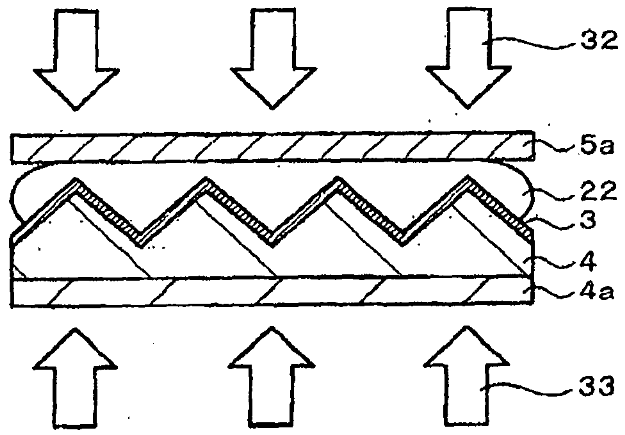


FIG.13C

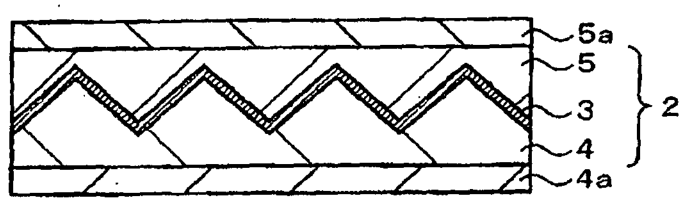

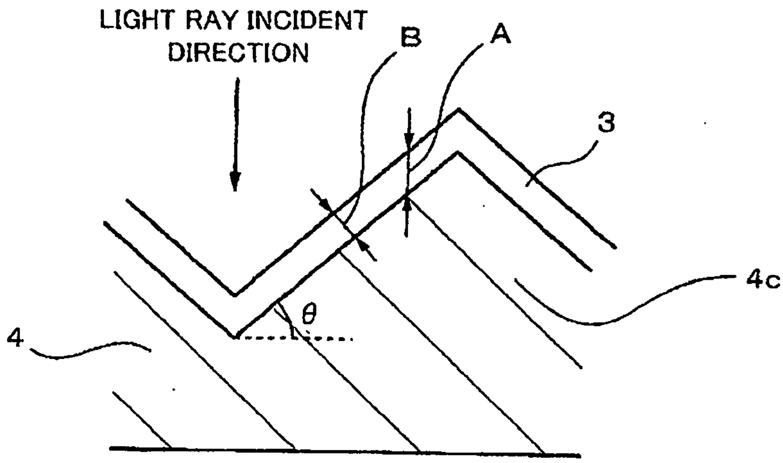


FIG.14

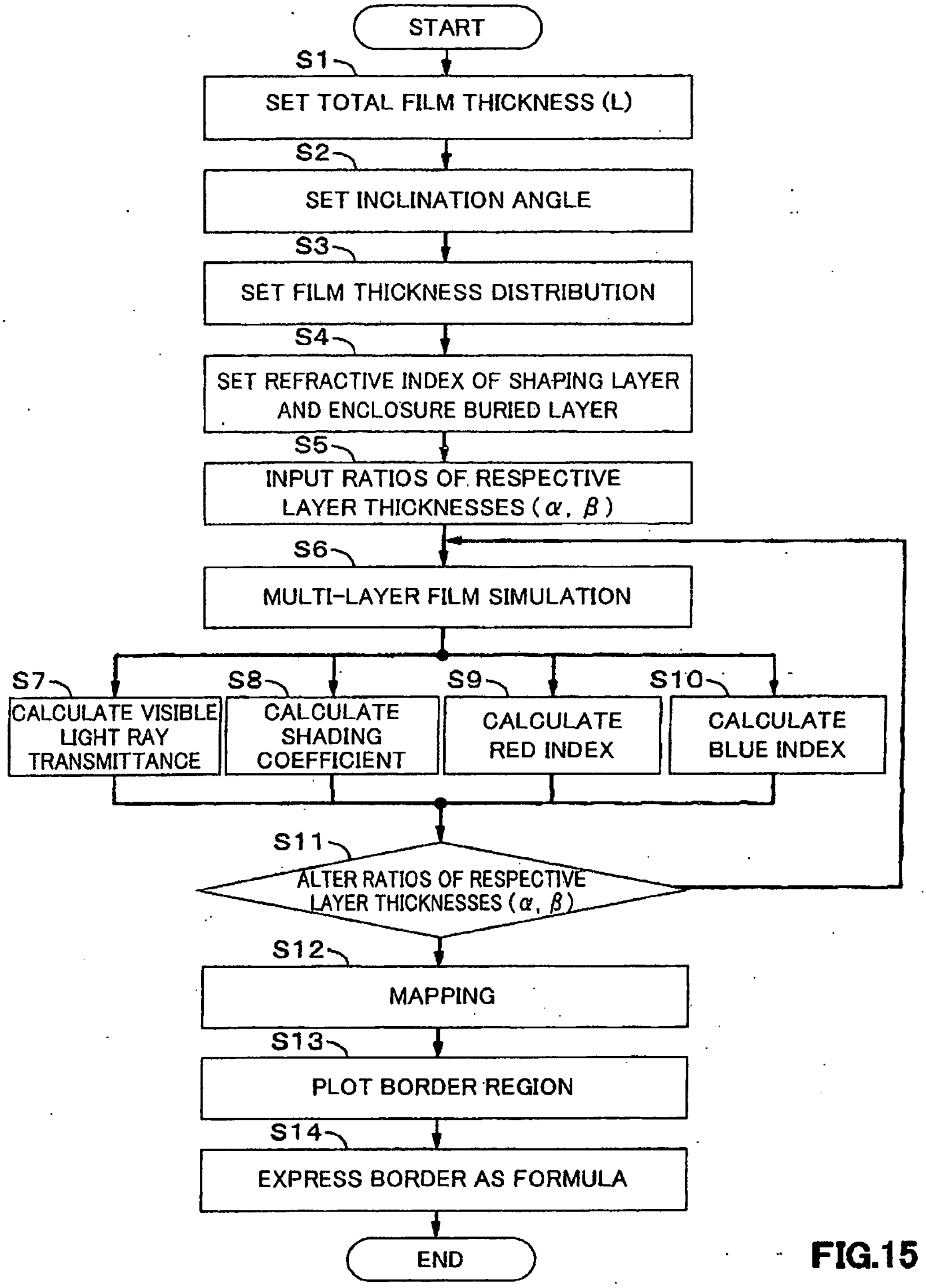
START
S1
SET TOTAL FILM THICKNESS (L)
S2
SET INCLINATION ANGLE
S3
SET FILM THICKNESS DISTRIBUTION
S4
SET REFRACTIVE INDEX OF SHAPING LAYER AND ENCLOSURE BURIED LAYER
S5
INPUT RATIOS OF RESPECTIVE LAYER THICKNESSES (α, β)
S6
MULTI-LAYER FILM SIMULATION
S7
CALCULATE VISIBLE LIGHT RAY TRANSMITTANCE
S8
CALCULATE SHADING COEFFICIENT
S9
CALCULATE RED INDEX
S10
CALCULATE BLUE INDEX
S11
ALTER RATIOS OF RESPECTIVE LAYER THICKNESSES (α, β)
S12
MAPPING
S13
PLOT BORDER REGION
S14
EXPRESS BORDER AS FORMULA
END

FIG.15

FIG.16A

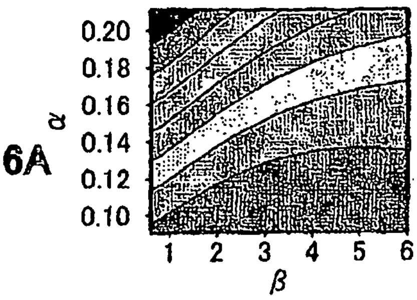


FIG.16D

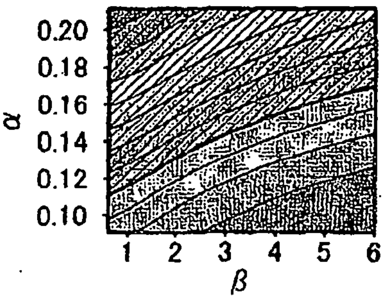


FIG.16B

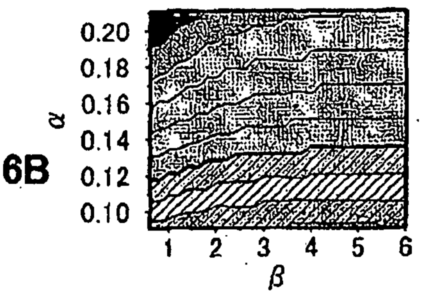


FIG.16E

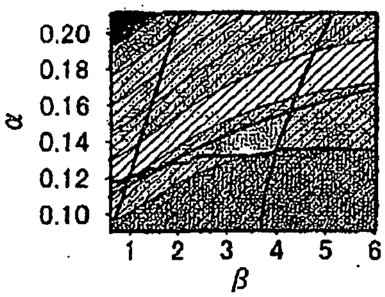


FIG.16C

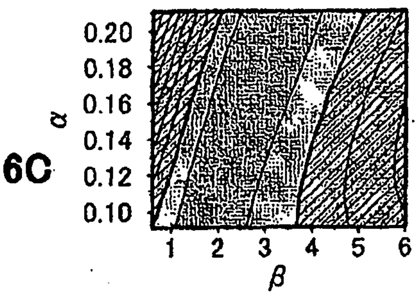

FIG.17A

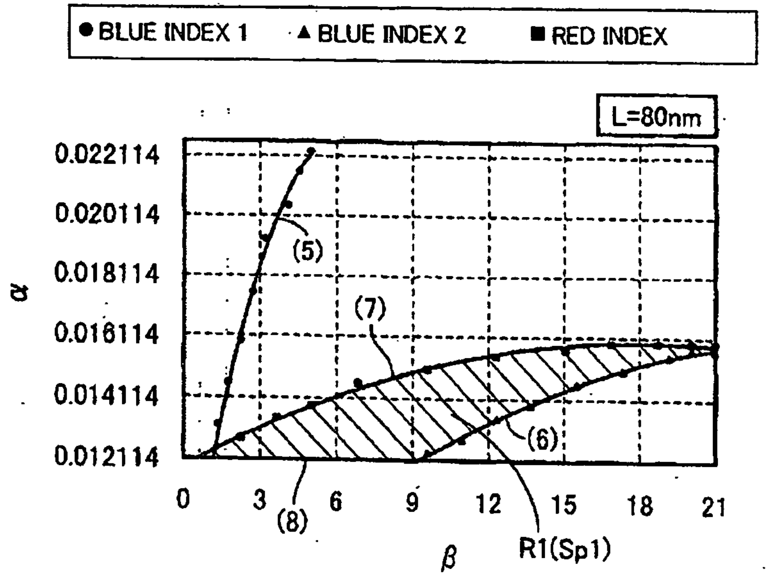


(5) $\alpha = -0.0004\beta^2 + 0.0053\beta + 0.0065$

(6) $\alpha = -1 \times 10^{-5}\beta^2 + 0.0007\beta + 0.0066$

(7) $\alpha = -1 \times 10^{-5}\beta^2 + 0.0005\beta + 0.0119$

(8) $\alpha = 0.012114$

FIG.17B

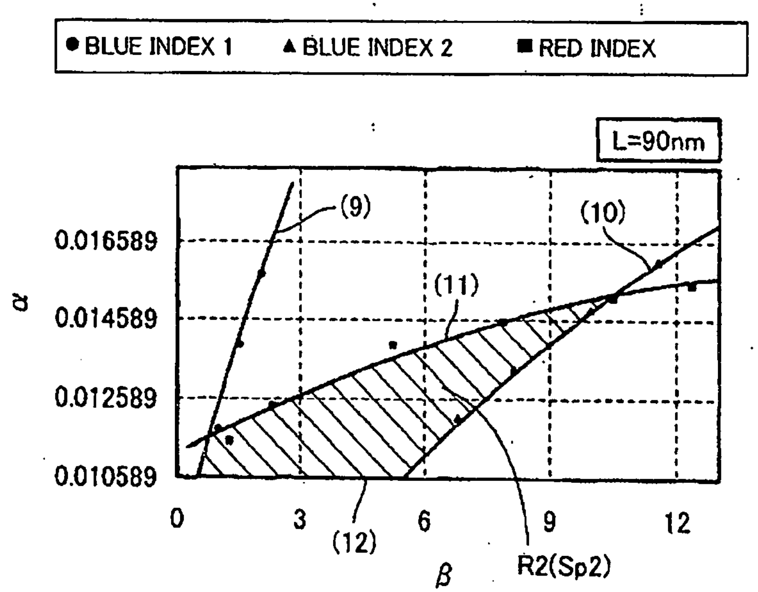


(9) $\alpha = -0.0002\beta^2 + 0.0039\beta + 0.0087$

(10) $\alpha = -3 \times 10^{-5}\beta^2 + 0.0014\beta + 0.0038$

(11) $\alpha = -2 \times 10^{-5}\beta^2 + 0.0006\beta + 0.0112$

(12) $\alpha = 0.010589$

FIG.18B

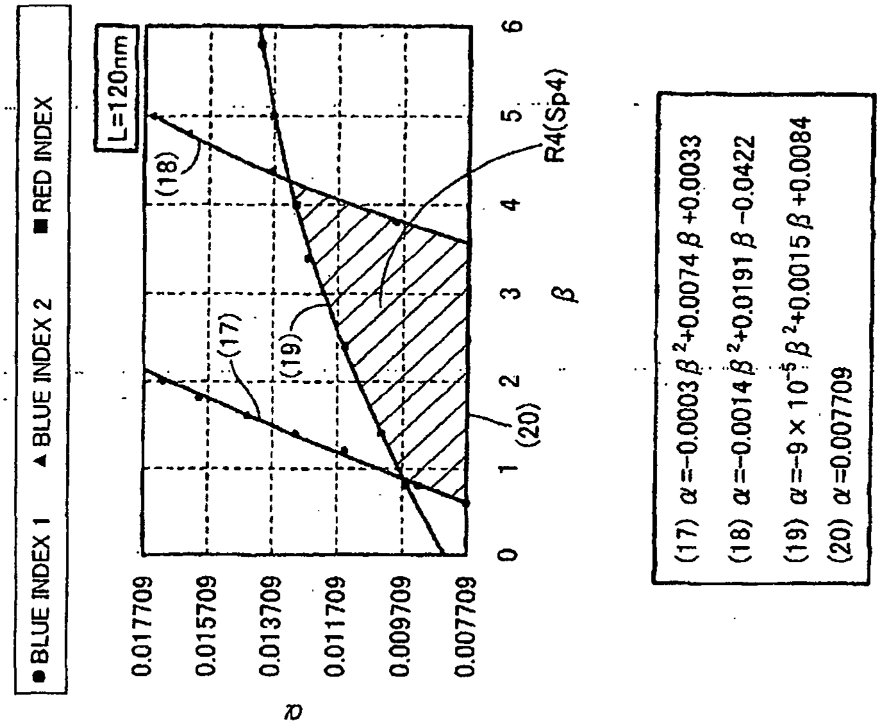


FIG.18A

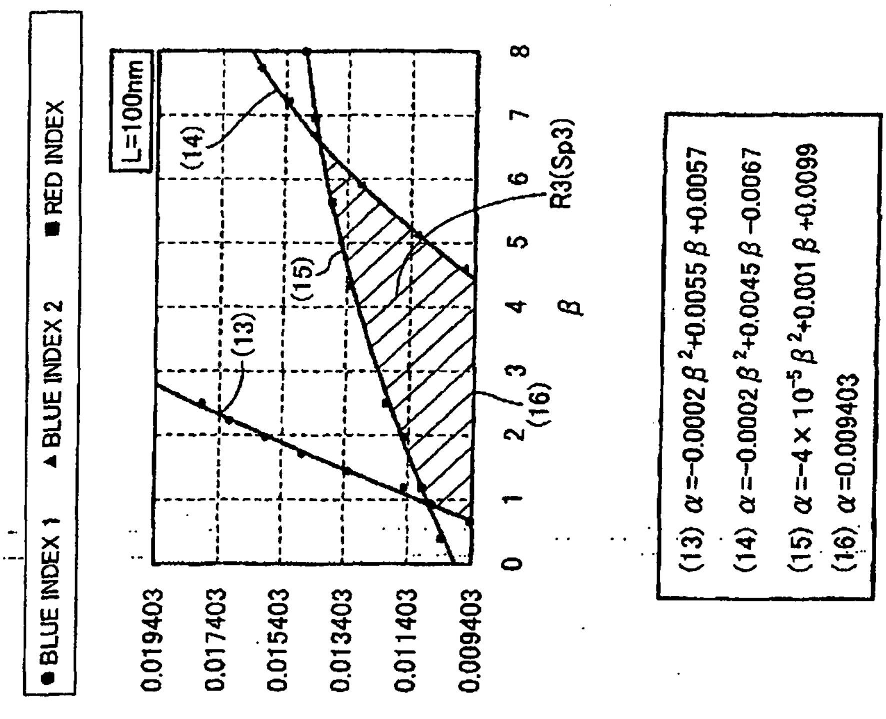

FIG.19A

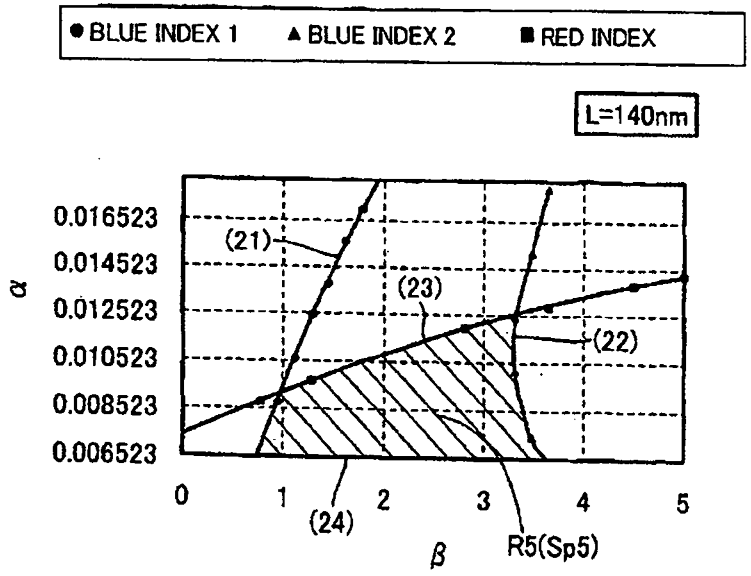


(21) $\alpha = -0.0014\beta^2 + 0.0136\beta - 0.0027$

(22) $\beta = 10132\alpha^2 - 241.39\alpha + 4.747$

(23) $\alpha = -0.0001\beta^2 + 0.002\beta + 0.0074$

(24) $\alpha = 0.006523$

FIG.19B

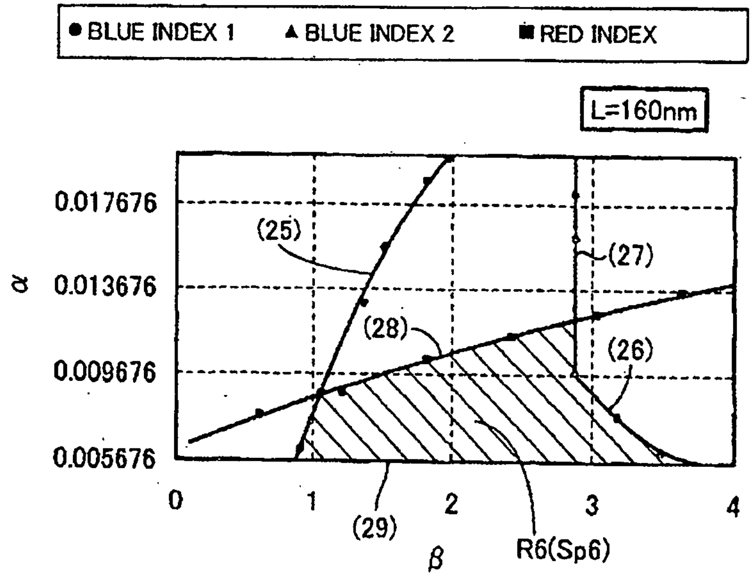


(25) $\alpha = -0.005\beta^2 + 0.0273\beta - 0.0145$

(26) $\alpha = 0.0043\beta^2 - 0.0332\beta + 0.07$

(27) $\beta = 2.875$

(28) $\alpha = -0.0001\beta^2 + 0.0025\beta + 0.0062$

(29) $\alpha = 0.005676$

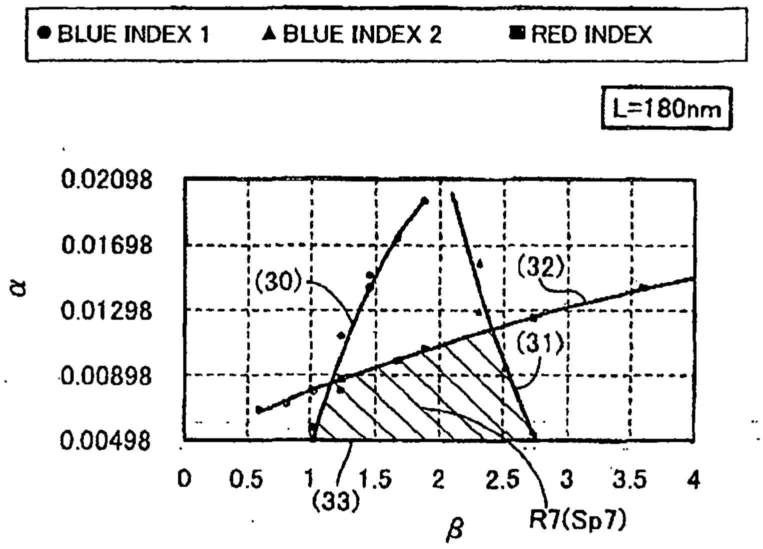


(31) $\alpha = 0.0093\beta^2 - 0.0677\beta + 0.1212$

(32) $\alpha = -0.0003\beta^2 + 0.0036\beta + 0.0046$

(33) $\alpha = 0.00498$

(30) $\alpha = -0.0103\beta^2 + 0.047\beta - 0.0322$

**FIG.20**

FIG.21A

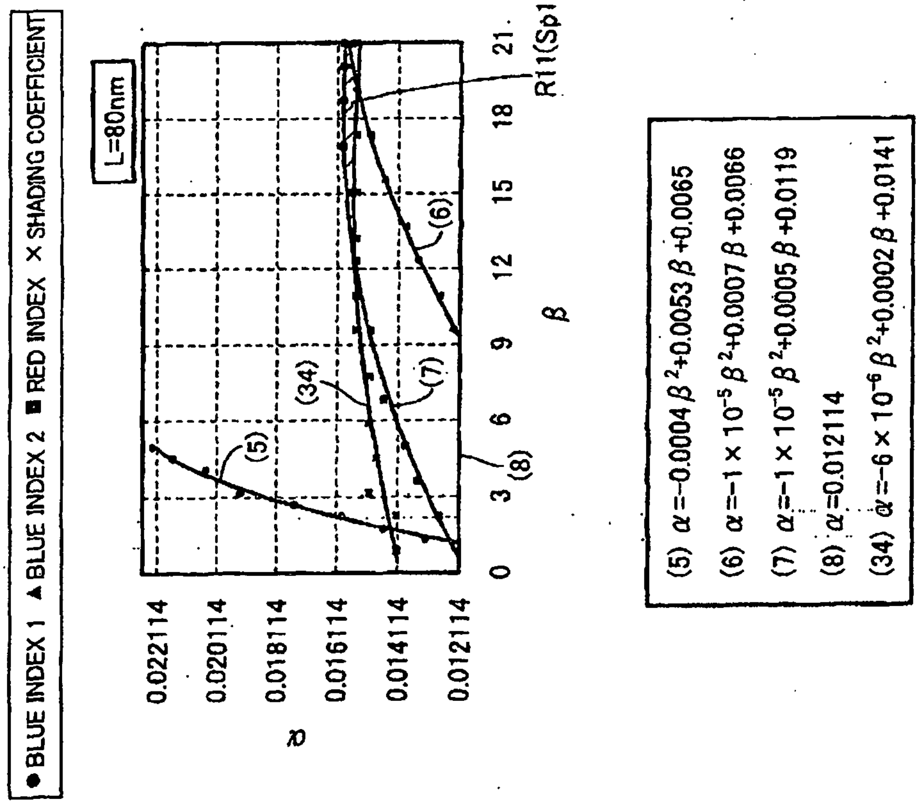


FIG.21B

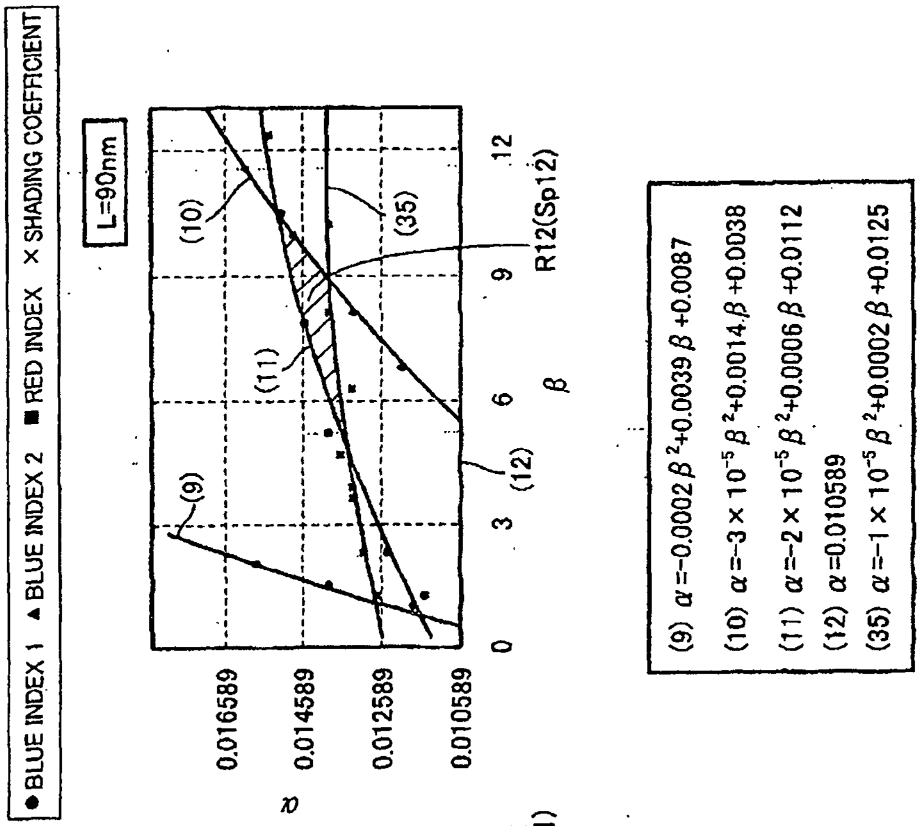

FIG.22A

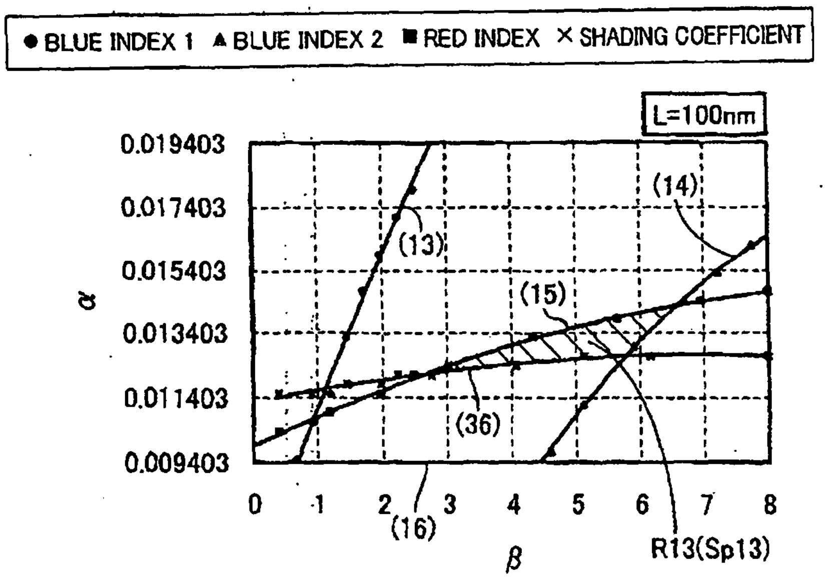


(13) $\alpha = -0.0002\beta^2 + 0.0055\beta + 0.0057$

(14) $\alpha = -0.0002\beta^2 + 0.0045\beta - 0.0067$

(15) $\alpha = -4 \times 10^{-5}\beta^2 + 0.001\beta + 0.0099$

(16) $\alpha = 0.009403$

(36) $\alpha = -3 \times 10^{-5}\beta^2 + 0.0004\beta + 0.0113$

FIG.22B

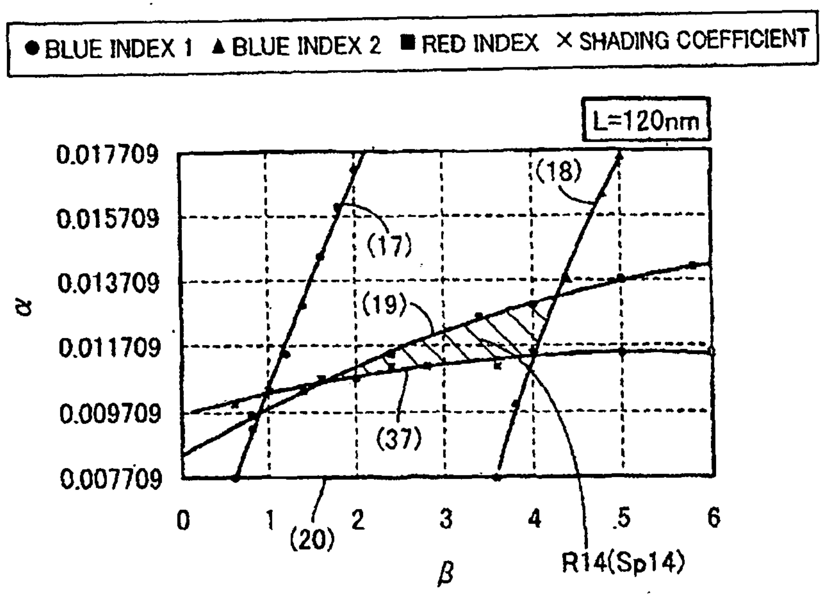


(17) $\alpha = -0.0003\beta^2 + 0.0074\beta + 0.0033$

(18) $\alpha = -0.0014\beta^2 + 0.0191\beta - 0.0422$

(19) $\alpha = -9 \times 10^{-5}\beta^2 + 0.0015\beta + 0.0084$

(20) $\alpha = 0.007709$

(37) $\alpha = -7 \times 10^{-5}\beta^2 + 0.0007\beta + 0.0097$

FIG.23A

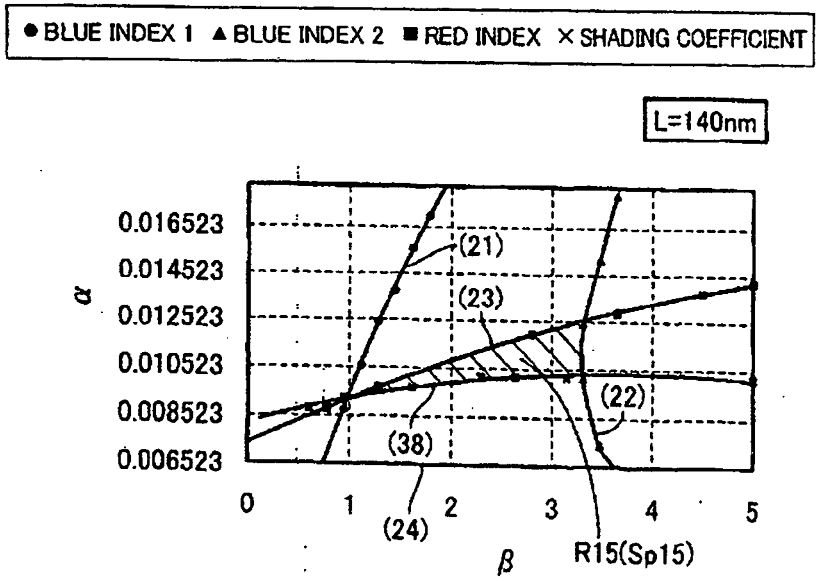


(21) $\alpha=-0.0014\beta^2+0.0136\beta-0.0027$

(22) $\beta=10132\alpha^2-241.39\alpha+4.747$

(23) $\alpha=-0.0001\beta^2+0.002\beta+0.0074$

(24) $\alpha=0.06523$

(38) $\alpha=-0.0001\beta^2+0.0011\beta+0.0083$

FIG.23B

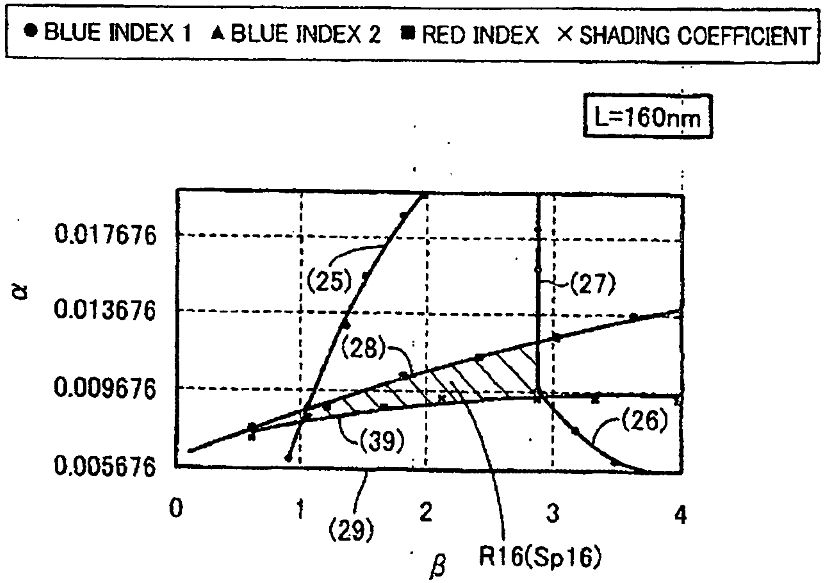


(25) $\alpha=-0.005\beta^2+0.0273\beta-0.0145$

(26) $\alpha=0.0043\beta^2-0.0332\beta+0.07$

(27) $\beta=2.875$

(28) $\alpha=-0.0001\beta^2+0.0025\beta+0.0062$

(29) $\alpha=0.005676$

(39) $\alpha=-0.0002\beta^2+0.0016\beta+0.0067$

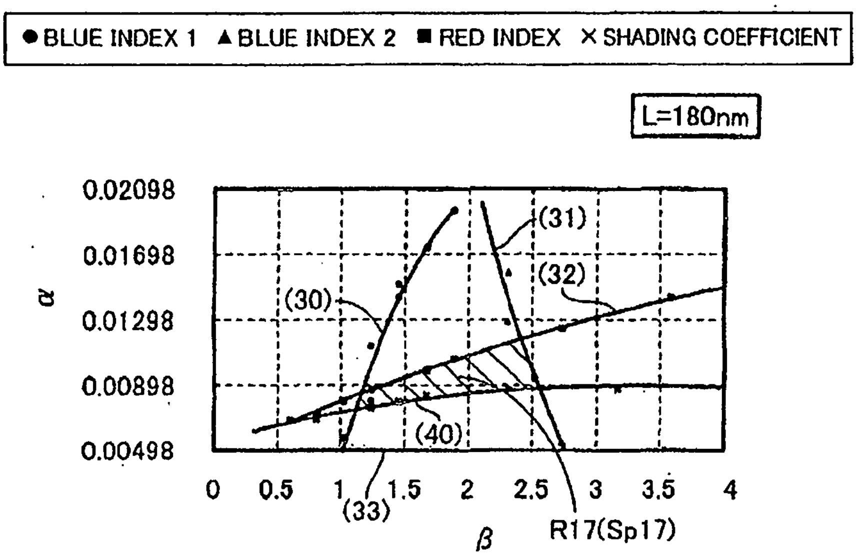


(30) $\alpha=-0.0103\beta^2+0.047\beta-0.0322$

(31) $\alpha=0.0093\beta^2-0.0677\beta+0.1212$

(32) $\alpha=-0.0003\beta^2+0.0036\beta+0.0046$

(33) $\alpha=0.00498$

(40) $\alpha=-0.0003\beta^2+0.0021\beta+0.0055$

**FIG.24**

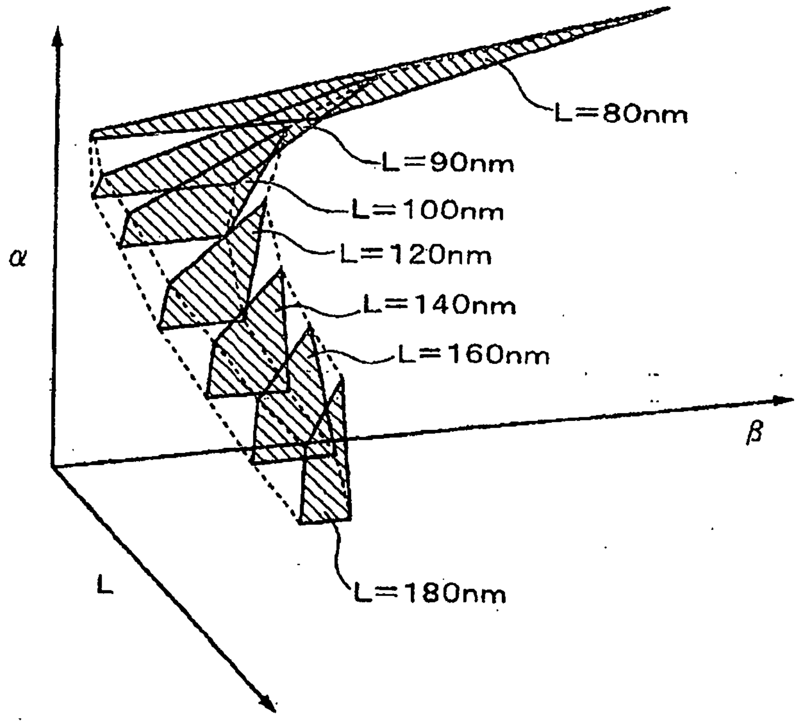


FIG.25

**FIG.26A**

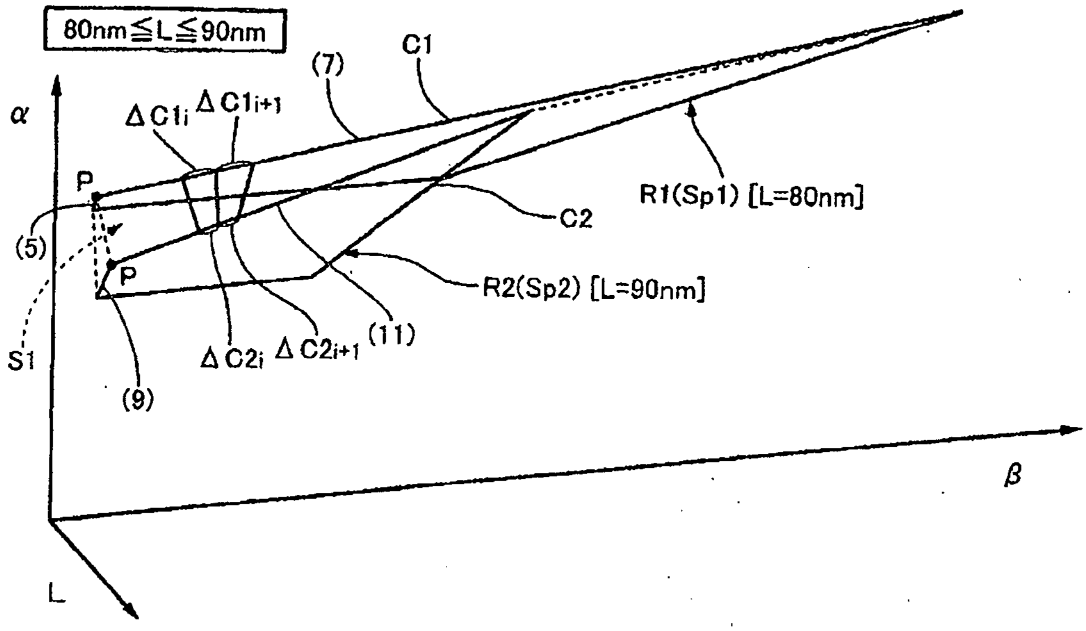


**FIG.26B**

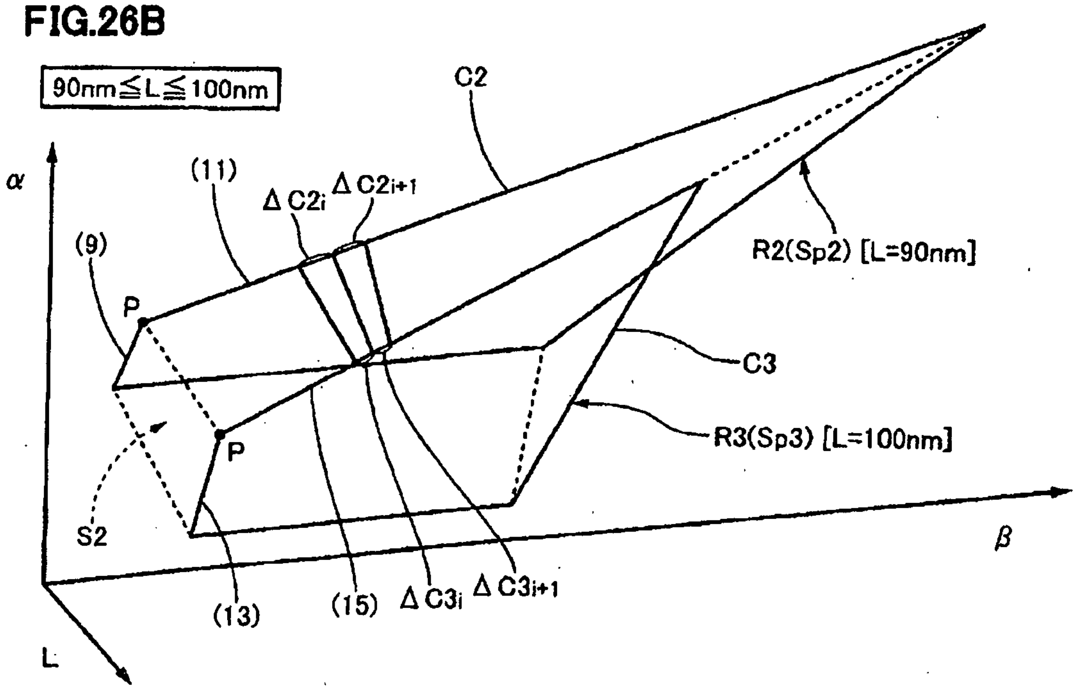

FIG.27A

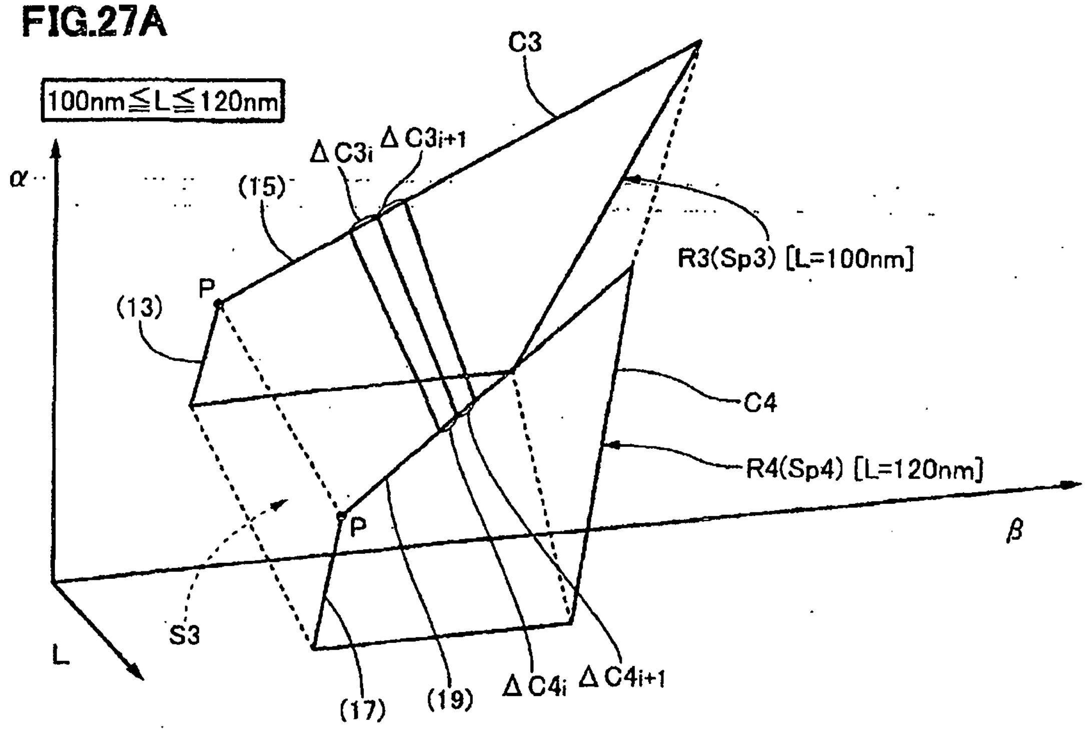


FIG.27B

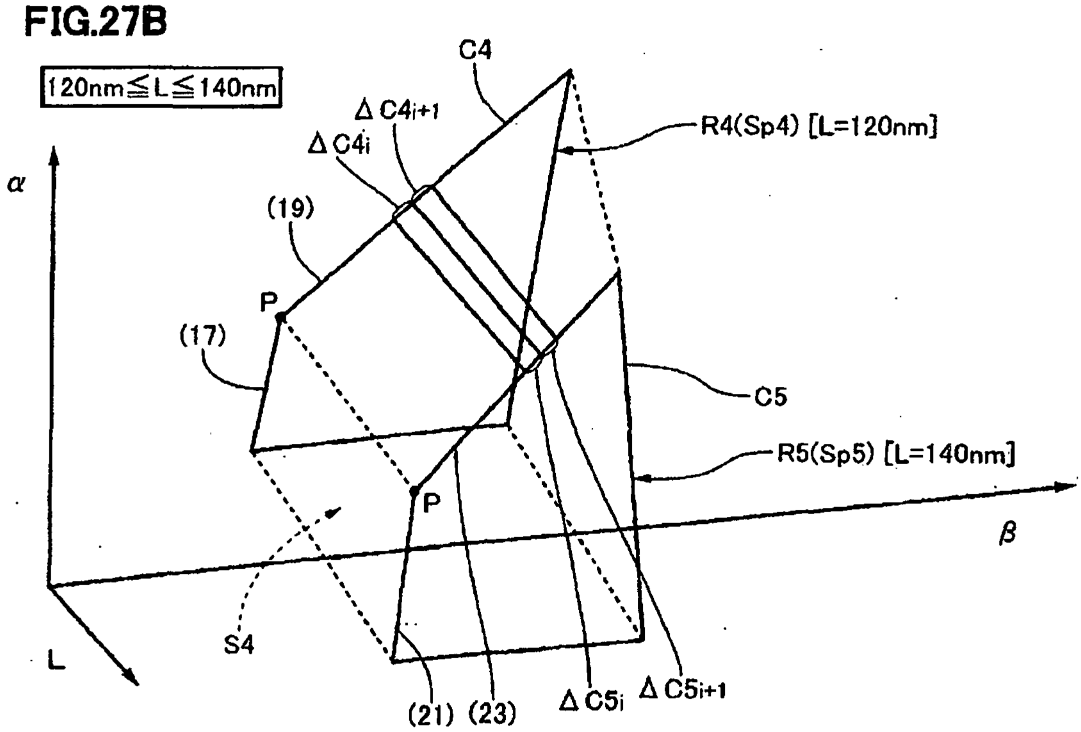

**FIG.28A**

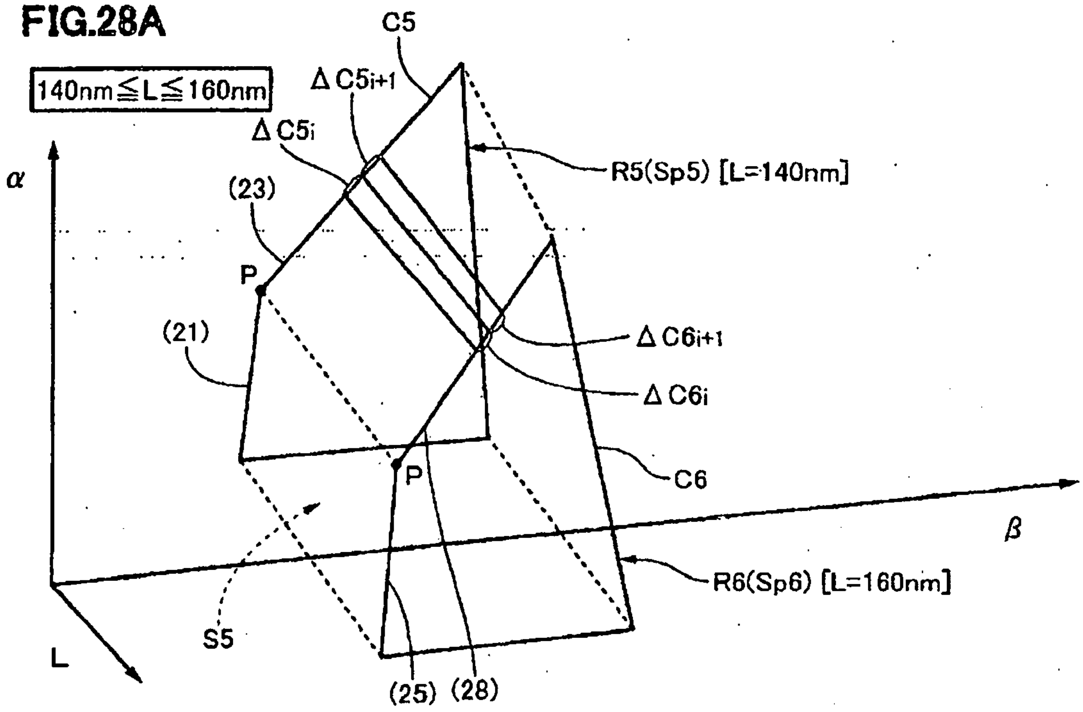


**FIG.28B**

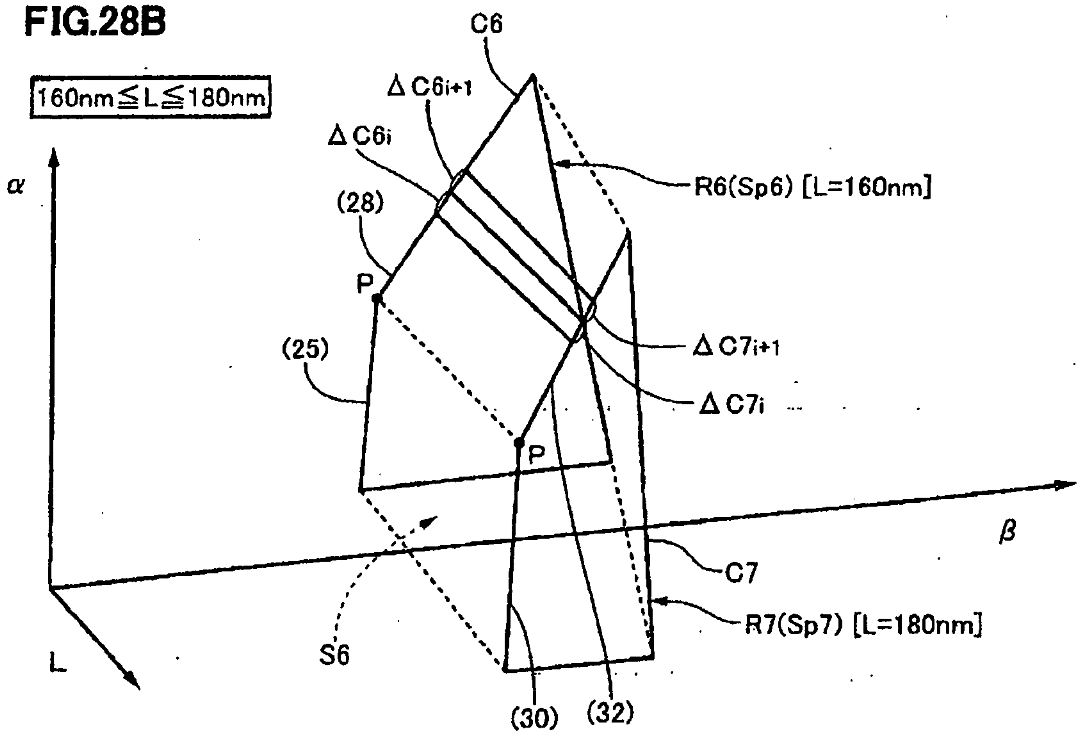

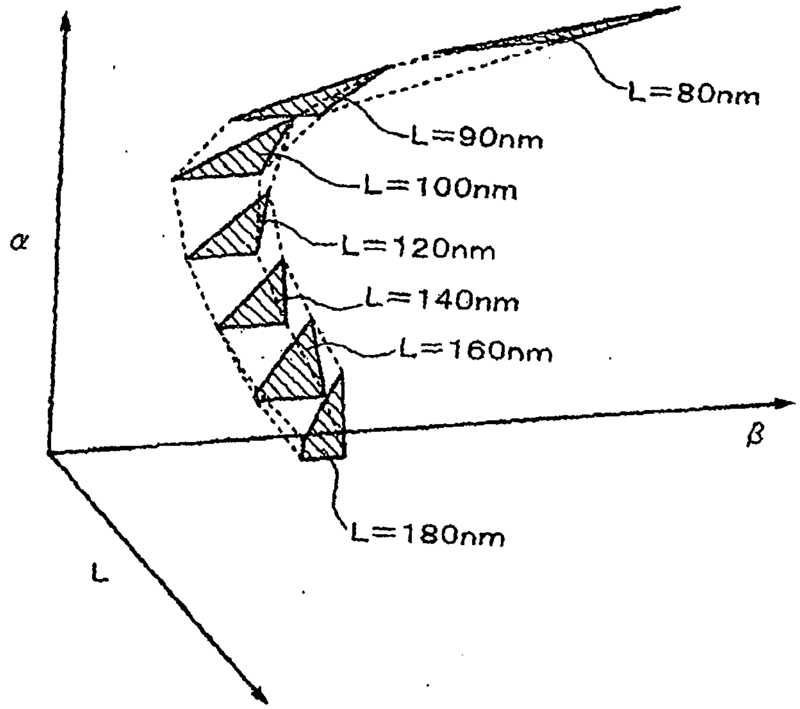


FIG.29

FIG.30A

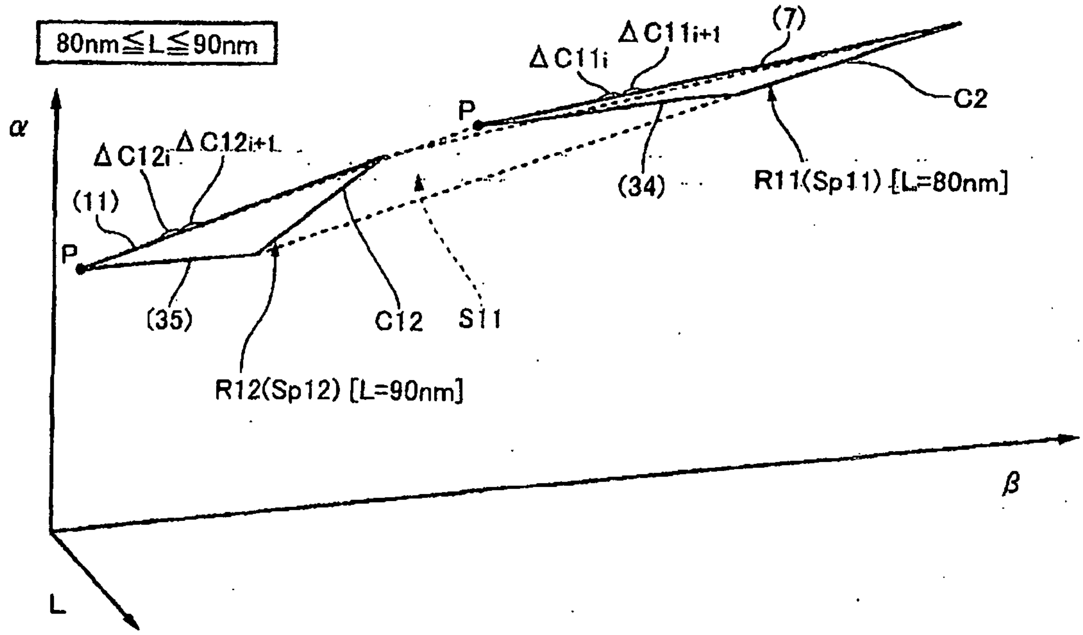


FIG.30B

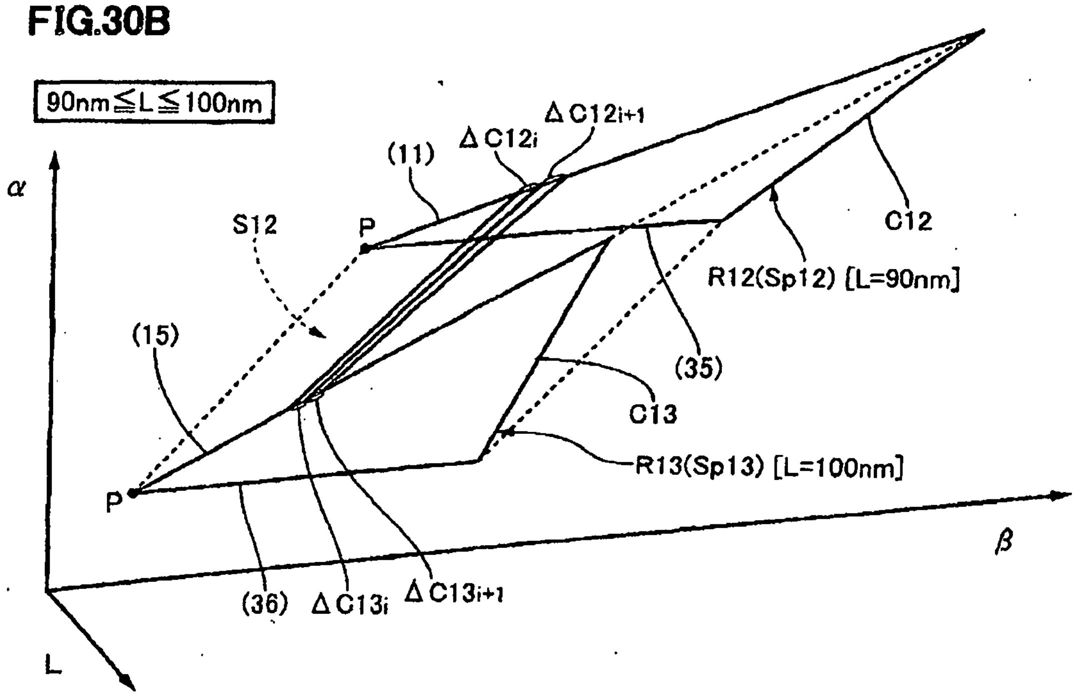

FIG.31A

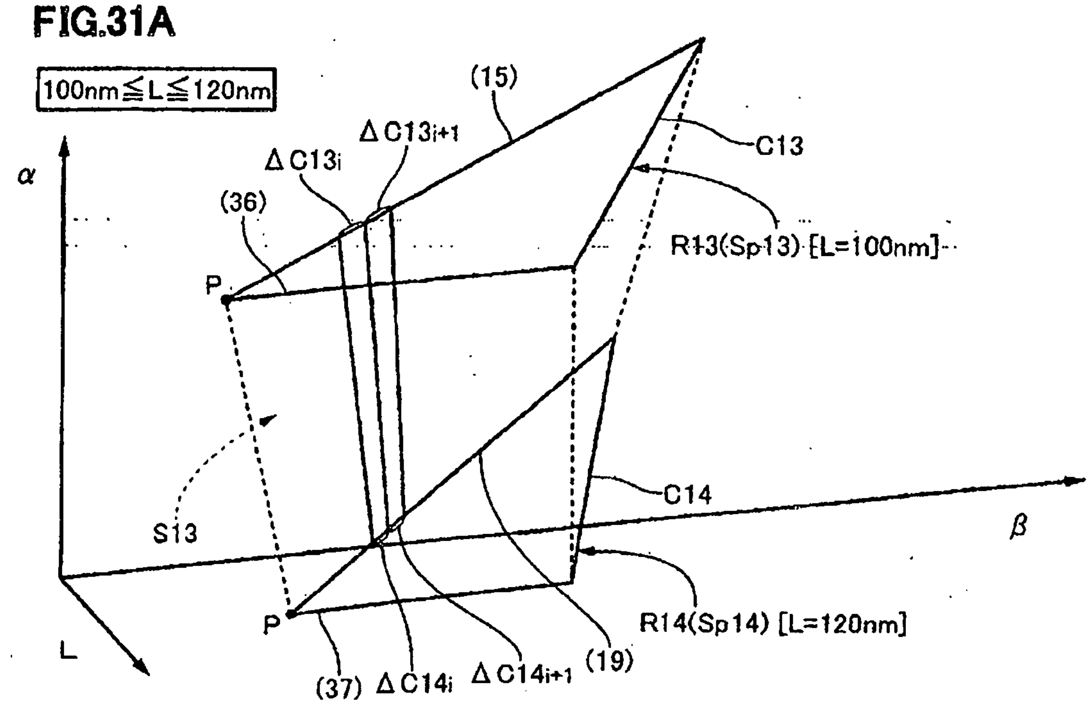


FIG.31B

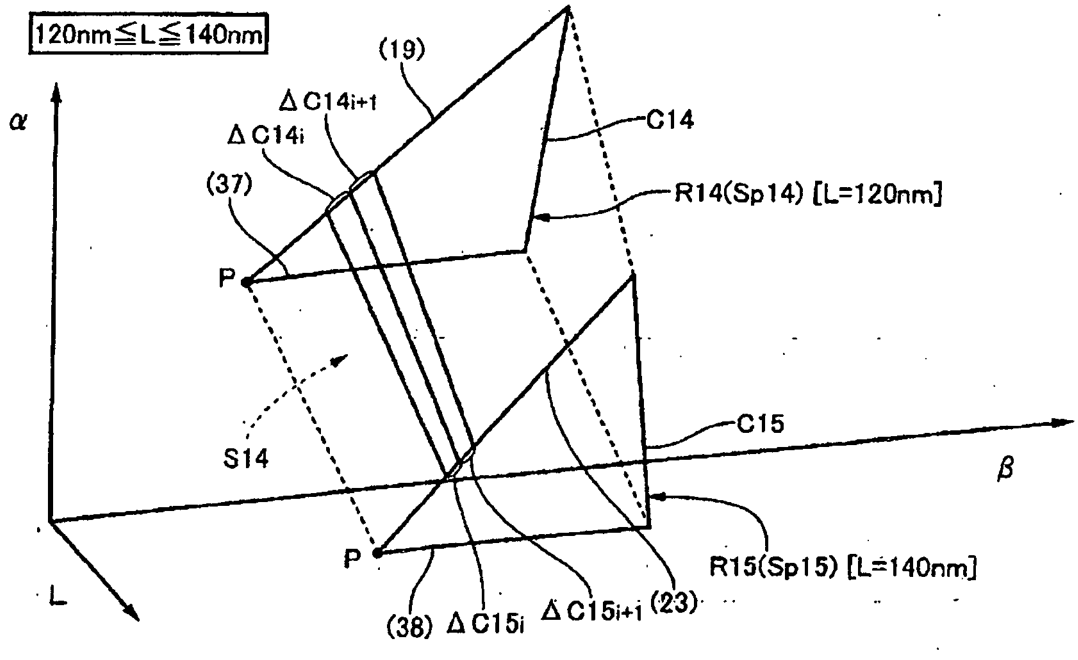

FIG.32A

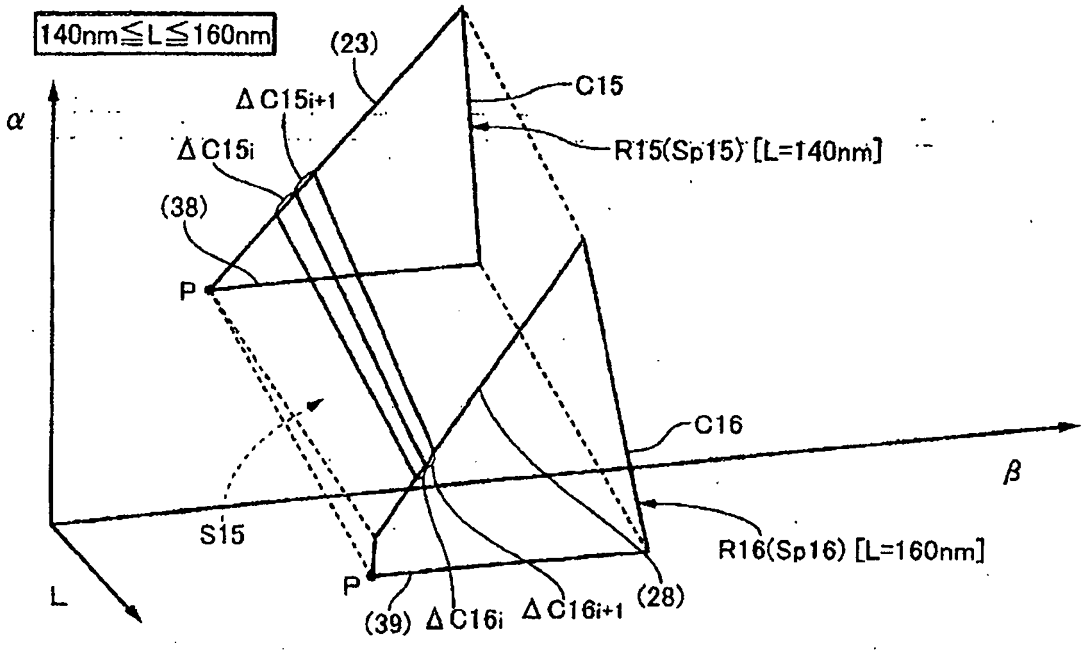


FIG.32B

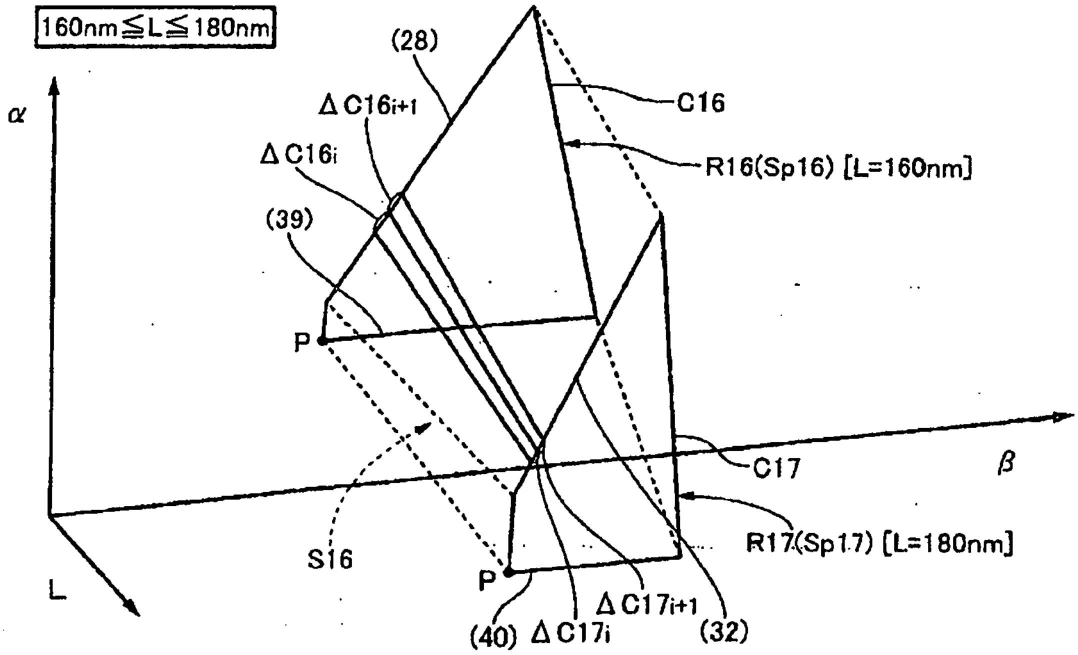

FIG.33A

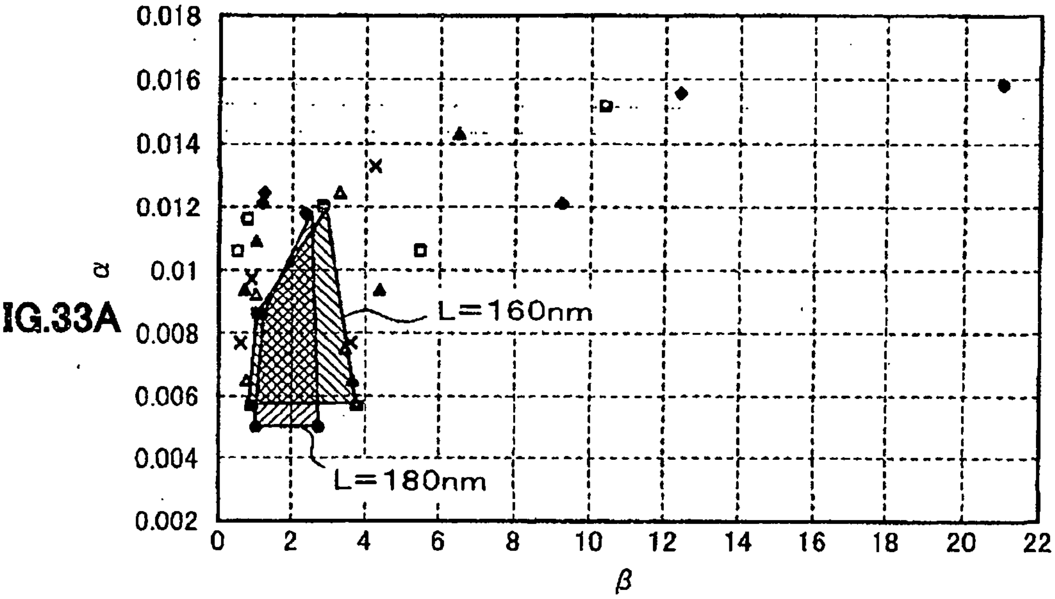


FIG.33B

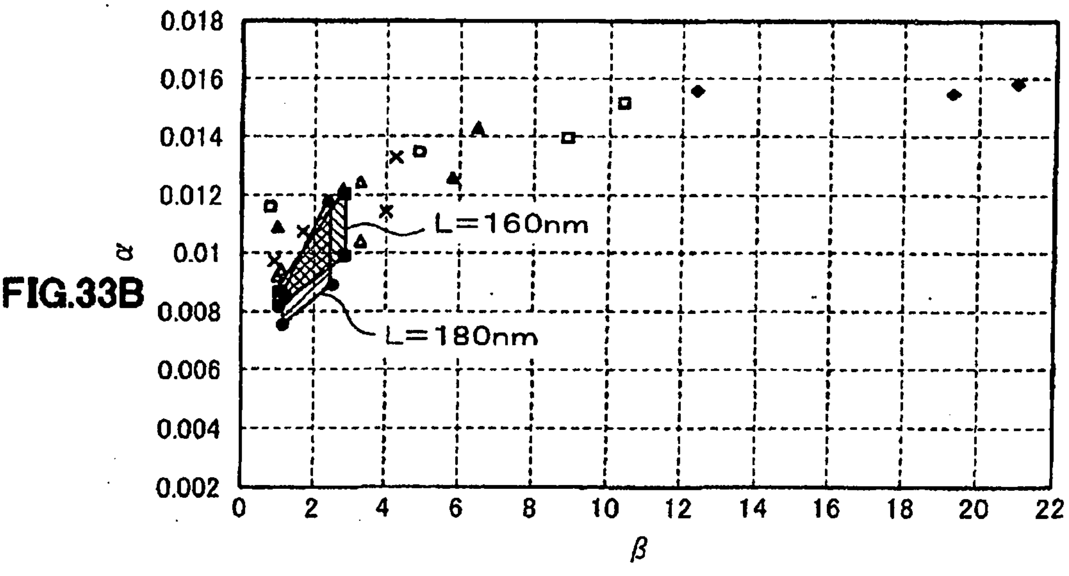

FIG.34A

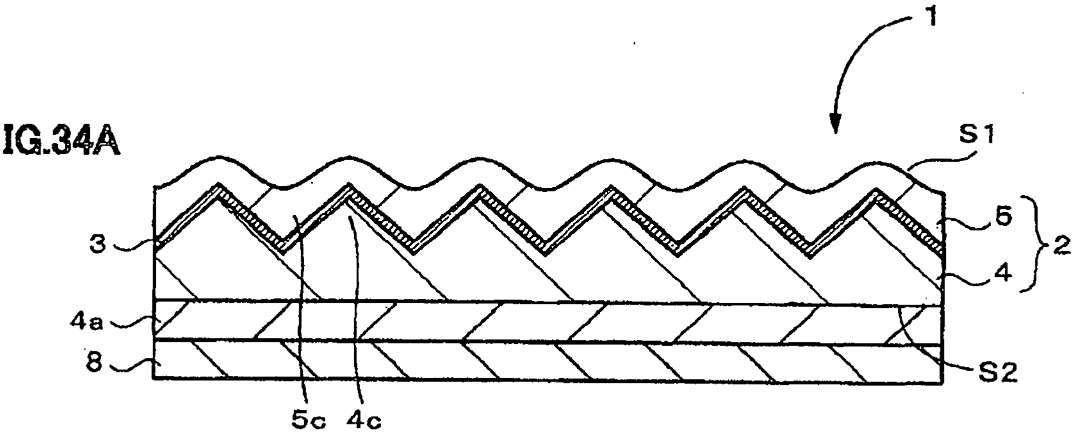


FIG.34B

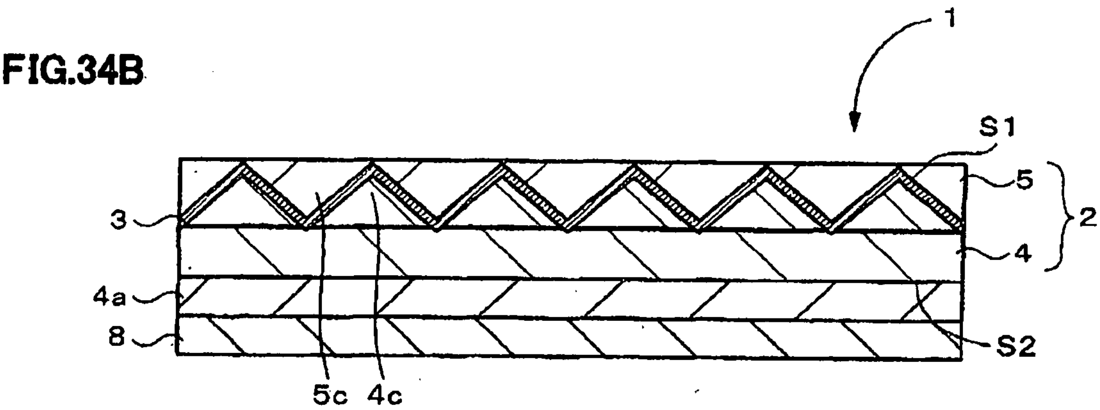

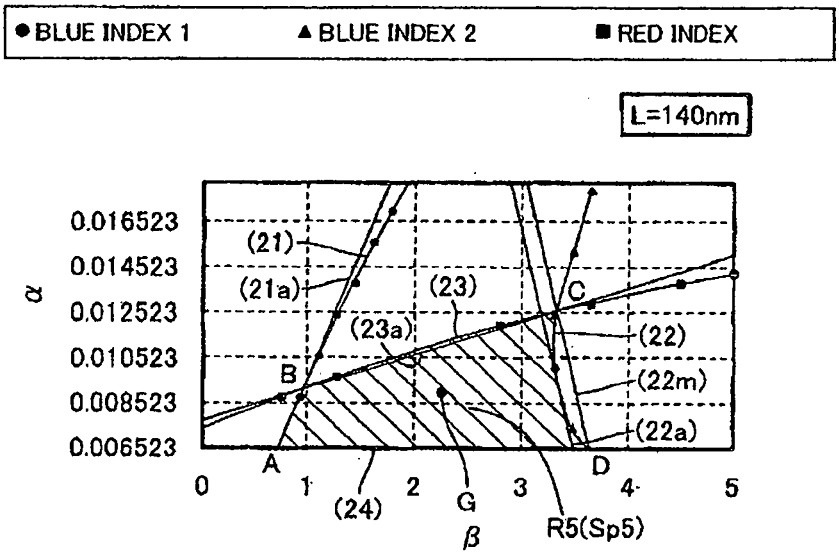


(21) $\alpha=-0.0014\beta^2+0.0136\beta-0.0027$

(21a) $\alpha=0.010843\beta-0.00161$

(22) $\beta=10132\alpha^2-241.39\alpha+4.747$

(22a) $\alpha=-0.01414\beta+0.056433$

(23) $\alpha=-0.0001\beta^2+0.002\beta+0.0074$

(23a) $\alpha=0.001603\beta+0.00763$

(24) $\alpha=0.006523$

**FIG.35**

FIG.36B

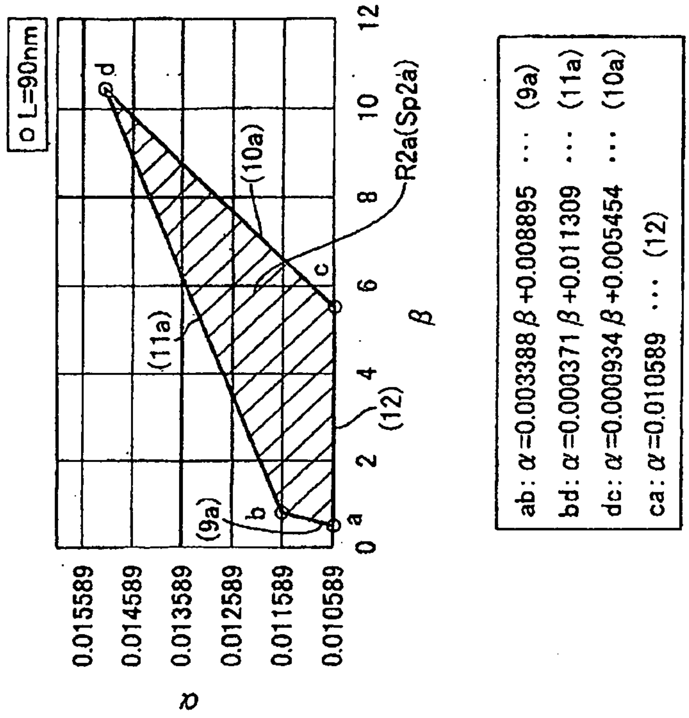


FIG.36A

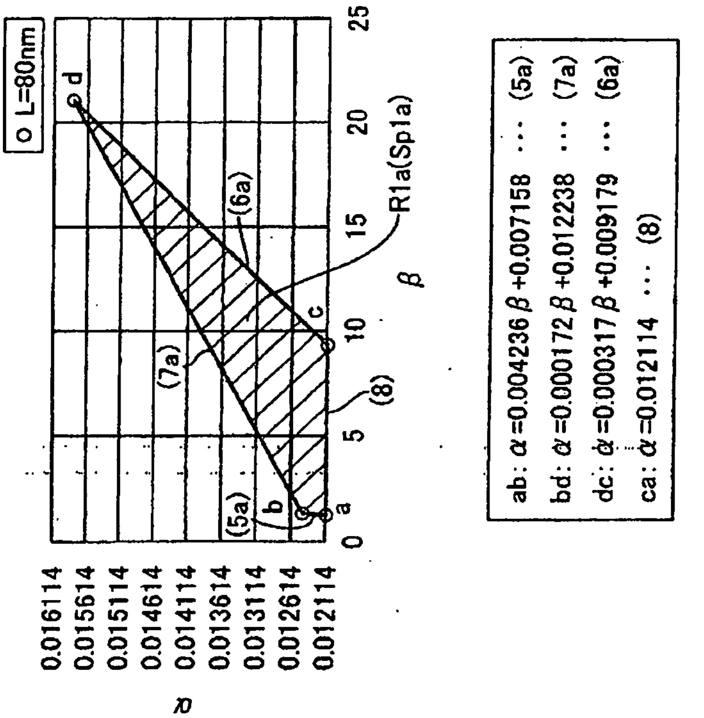

## FIG.37A

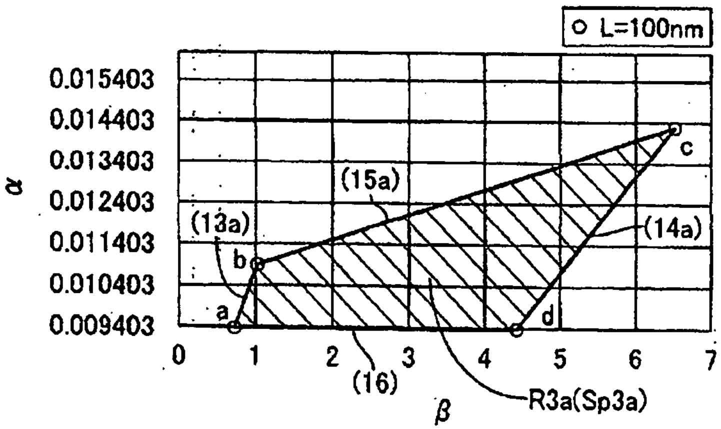


ab: $\alpha = 0.005083\beta + 0.005845$ ··· (13a)
bc: $\alpha = 0.000616\beta + 0.010312$ ··· (15a)
cd: $\alpha = 0.00234\beta - 0.00089$ ··· (14a)
da: $\alpha = 0.009403$ ··· (16)

## FIG.37B

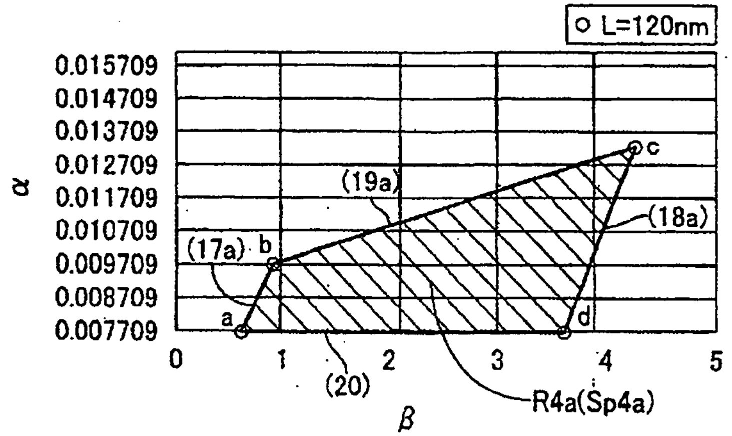


ab: $\alpha = 0.006777\beta + 0.003643$ ··· (17a)
bc: $\alpha = 0.001062\beta + 0.008786$ ··· (19a)
cd: $\alpha = 0.008601\beta - 0.02326$ ··· (18a)
da: $\alpha = 0.007709$ ··· (20)

# FIG.38A

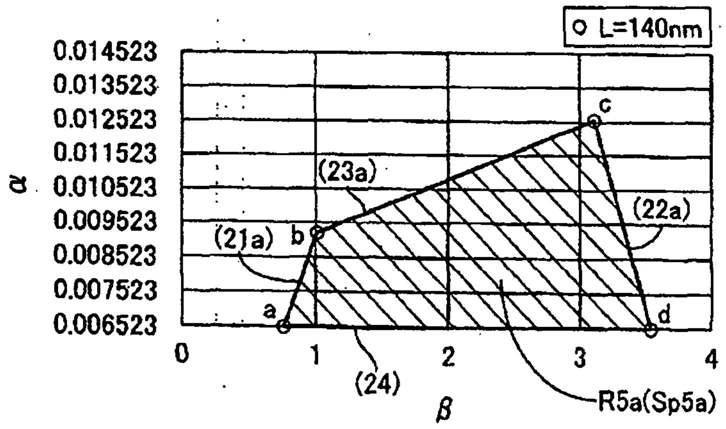


ab: $\alpha = 0.010843\beta - 0.00161$ ··· (21a)

bc: $\alpha = 0.001603\beta + 0.00763$ ··· (23a)

cd: $\alpha = -0.01414\beta + 0.056433$ ··· (22a)

da: $\alpha = 0.006523$ ··· (24)

# FIG.38B

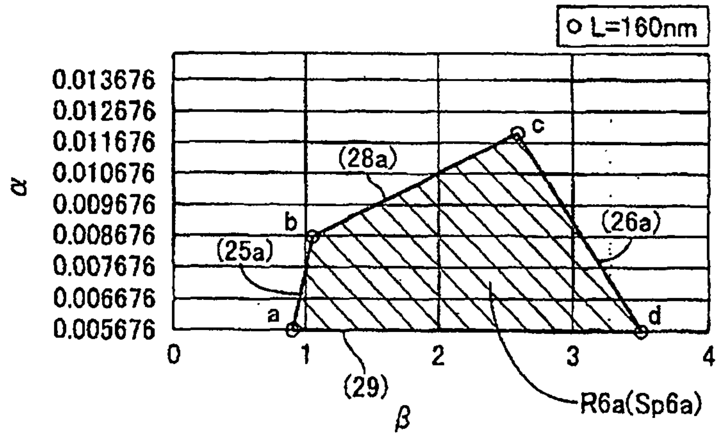


ab: $\alpha = 0.019766\beta - 0.01211$ ··· (25a)

bc: $\alpha = 0.002186\beta + 0.006345$ ··· (26a)

cd: $\alpha = -0.00691\beta + 0.029828$ ··· (28a)

da: $\alpha = 0.005676$ ··· (29)

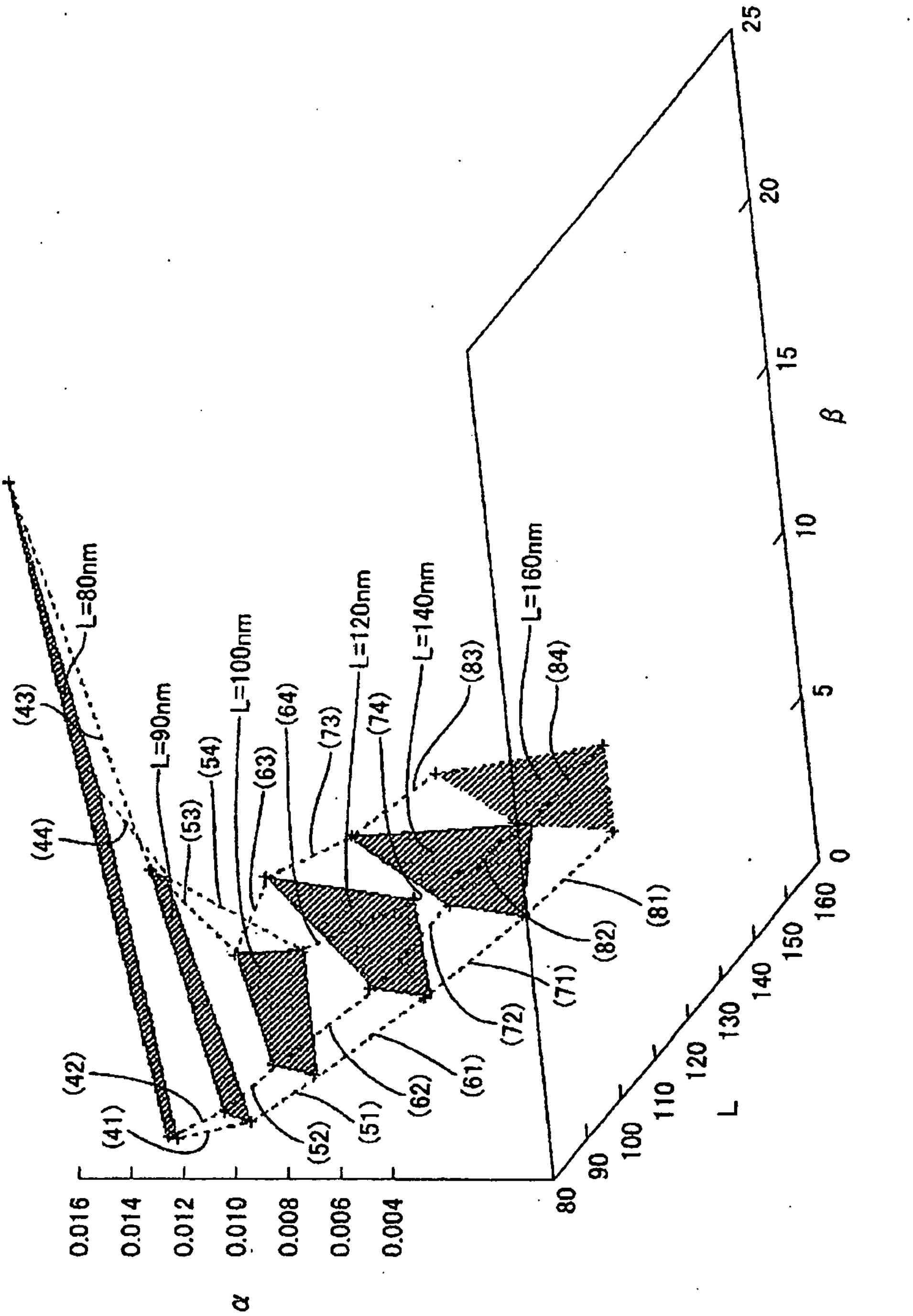
α
0.016
0.014
0.012
0.010
0.008
0.006
0.004
L
80
90
100
110
120
130
140
150
160
β
0
5
10
15
20
25
L=80nm
L=90nm
L=100nm
L=120nm
L=140nm
L=160nm
(41)
(42)
(43)
(44)
(51)
(52)
(53)
(54)
(61)
(62)
(63)
(64)
(71)
(72)
(73)
(74)
(81)
(82)
(83)
(84)

FIG.39

FIG.40B

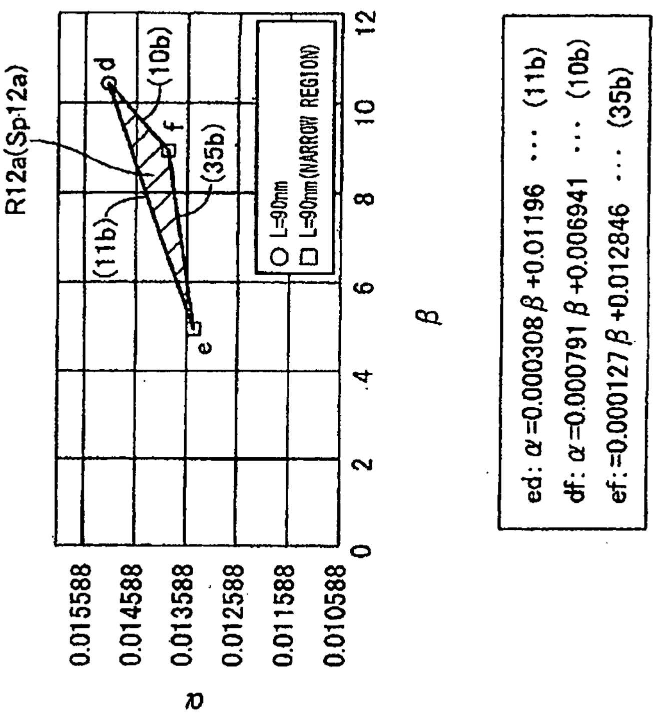


FIG.40A

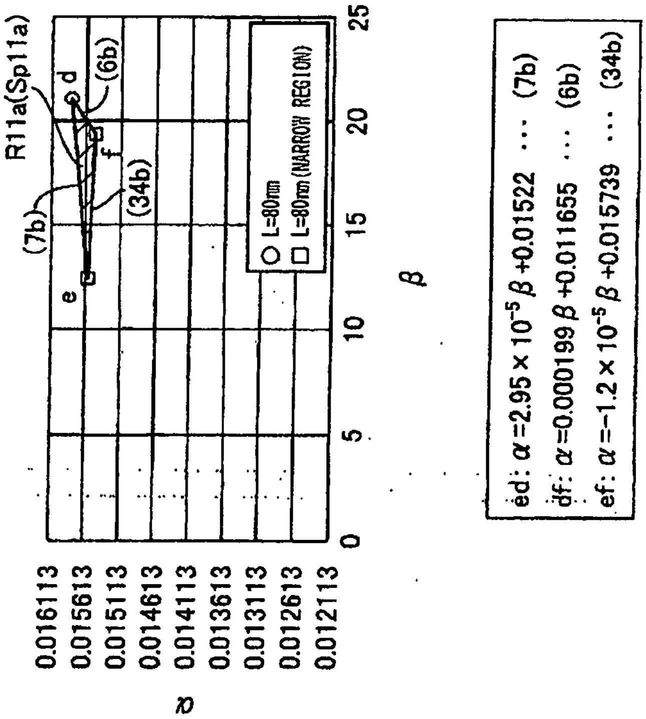

FIG.41A

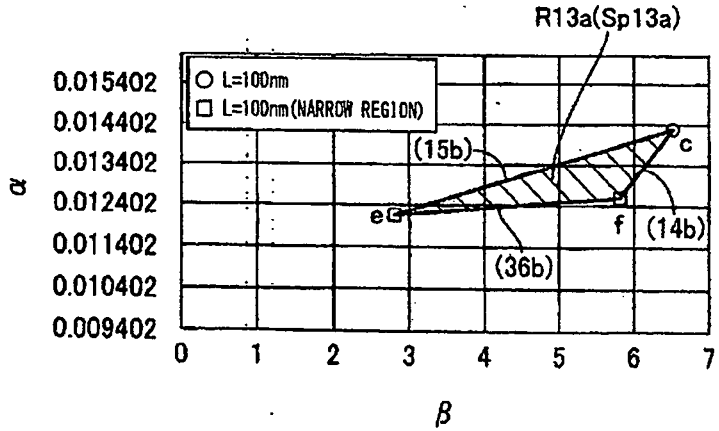


ec: $\alpha = 0.000572\beta + 0.010596$ ··· (15b)

cf: $\alpha = 0.00242\beta - 0.00142$ ··· (14b)

ef: $\alpha = 0.000141\beta + 0.011803$ ··· (36b)

FIG.41B

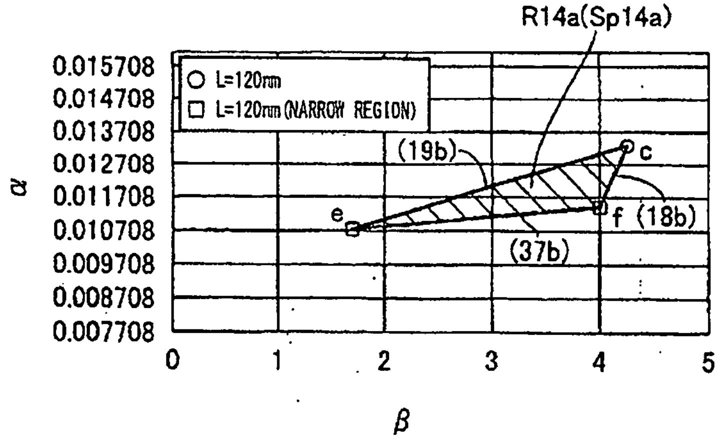


ec: $\alpha = 0.000997\beta + 0.009064$ ··· (19b)

cf: $\alpha = 0.007454\beta - 0.01838$ ··· (18b)

ef: $\alpha = 0.000295\beta + 0.010257$ ··· (37b)

## FIG.42A

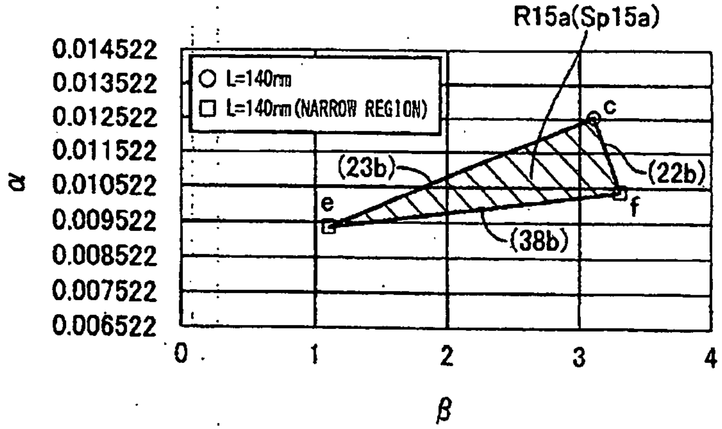


ec: $\alpha = 0.001599\beta + 0.007644$ ··· (23b)

cf: $\alpha = -0.0109\beta + 0.0464$ ··· (22b)

ef: $\alpha = 0.000462\beta + 0.008895$ ··· (38b)

## FIG.42B

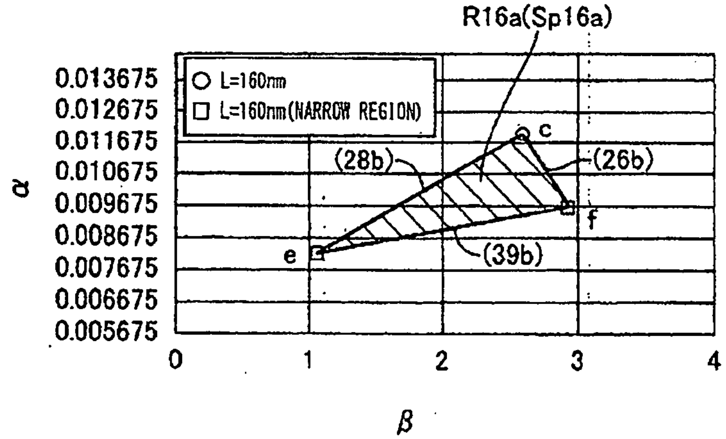


ec: $\alpha = 0.002463\beta + 0.005631$ ··· (28b)

cf: $\alpha = -0.00693\beta + 0.029895$ ··· (26b)

ef: $\alpha = 0.000773\beta + 0.007406$ ··· (39b)

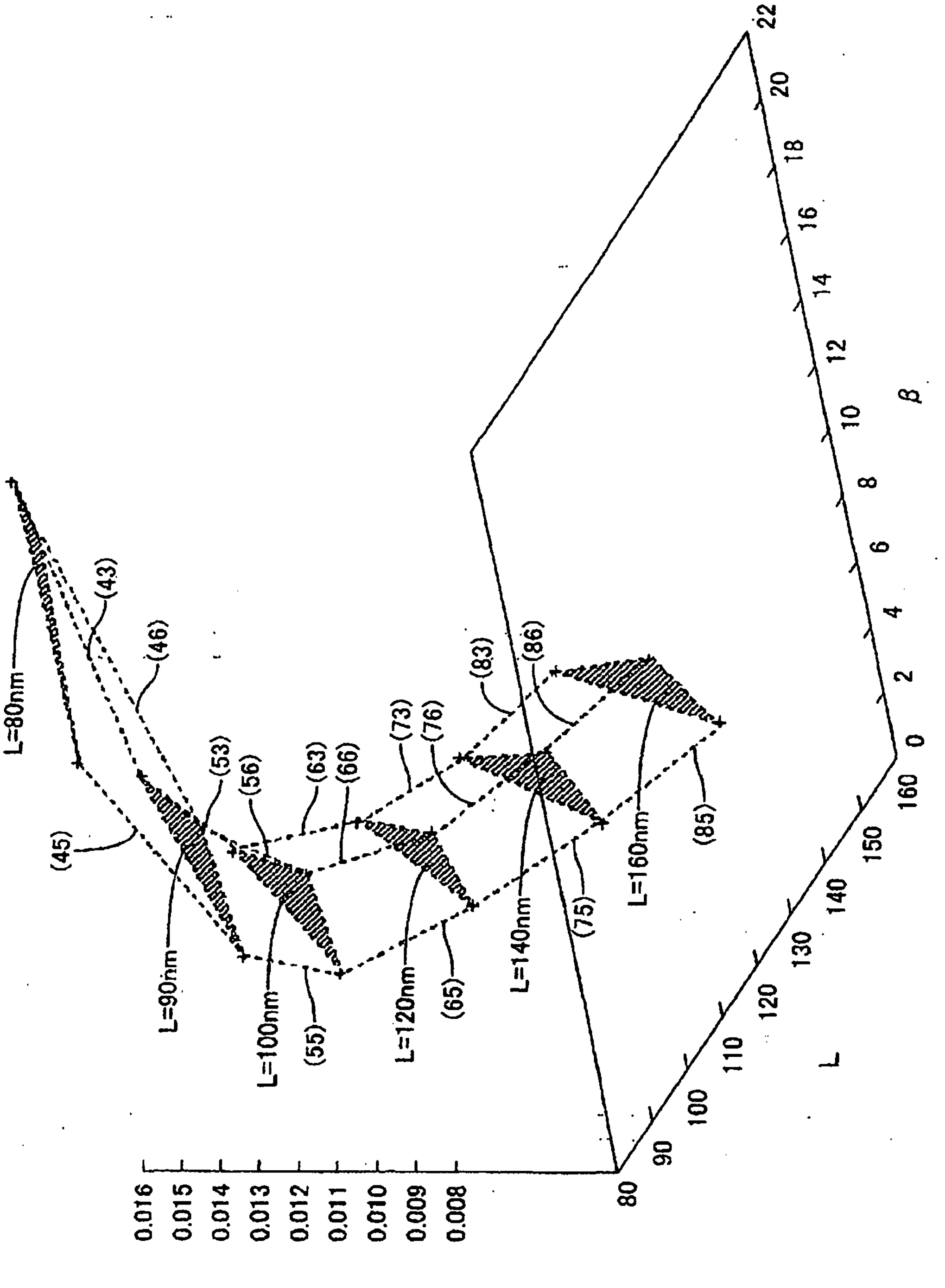
α
0.016
0.015
0.014
0.013
0.012
0.011
0.010
0.009
0.008
L
80
90
100
110
120
130
140
150
160
β
0
2
4
6
8
10
12
14
16
18
20
22
L=80nm
L=90nm
L=100nm
L=120nm
L=140nm
L=160nm
(43)
(45)
(46)
(53)
(55)
(56)
(63)
(65)
(66)
(73)
(75)
(76)
(83)
(85)
(86)

FIG.43

FIG.44A

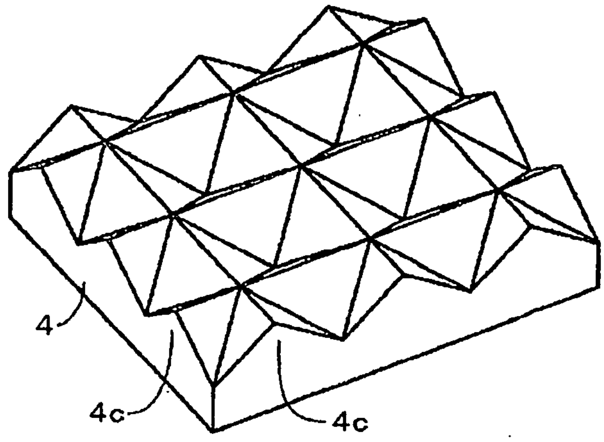


FIG.44B

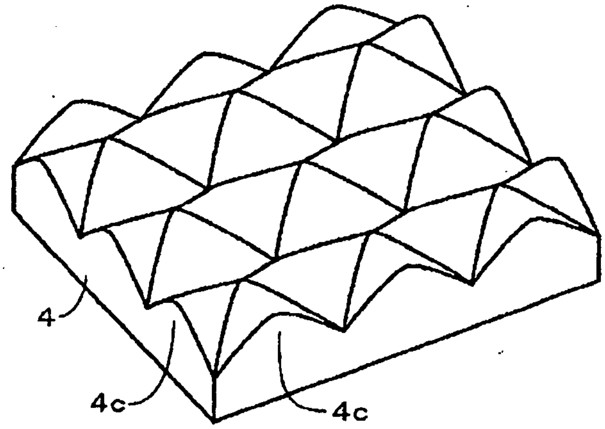


FIG.44C

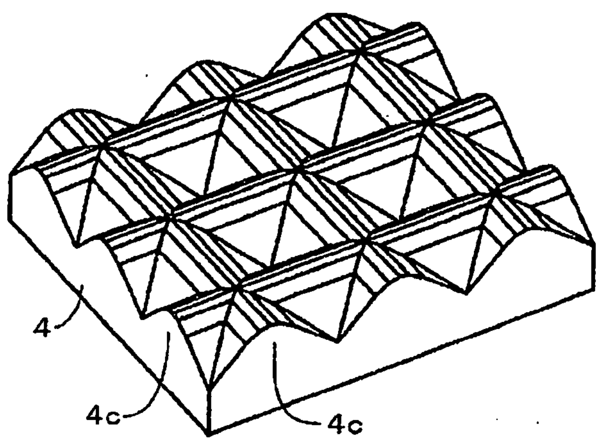

FIG.45A

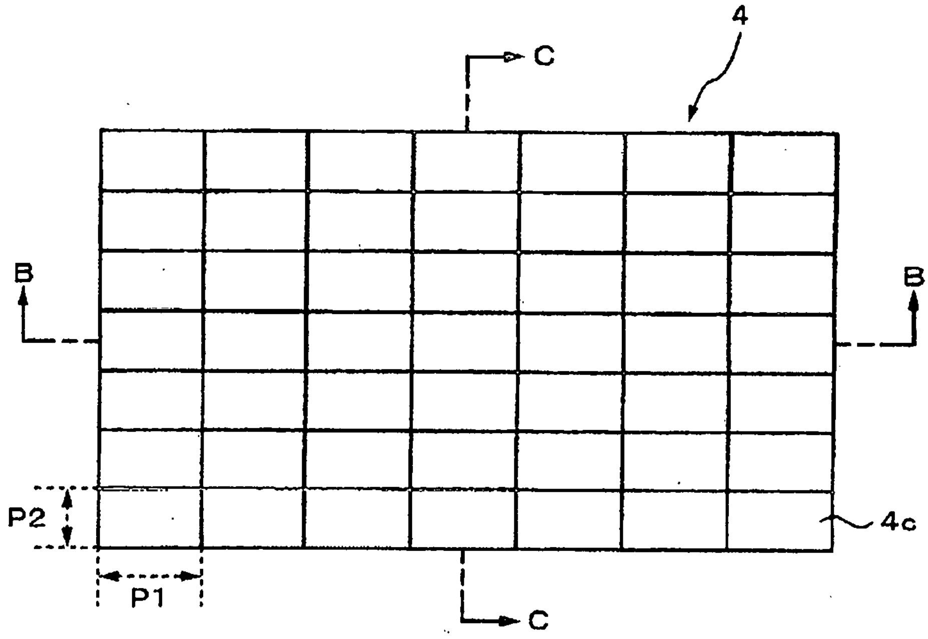


FIG.45B

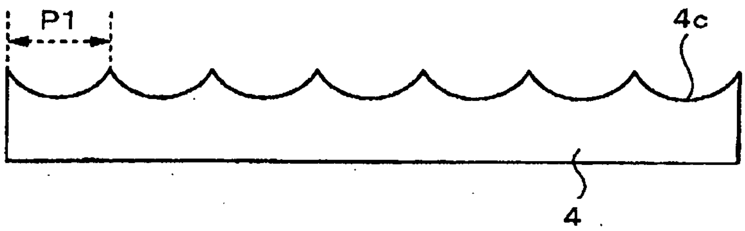


FIG.45C

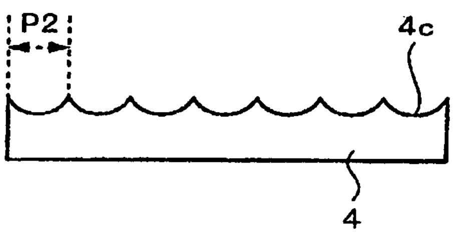

FIG.46A

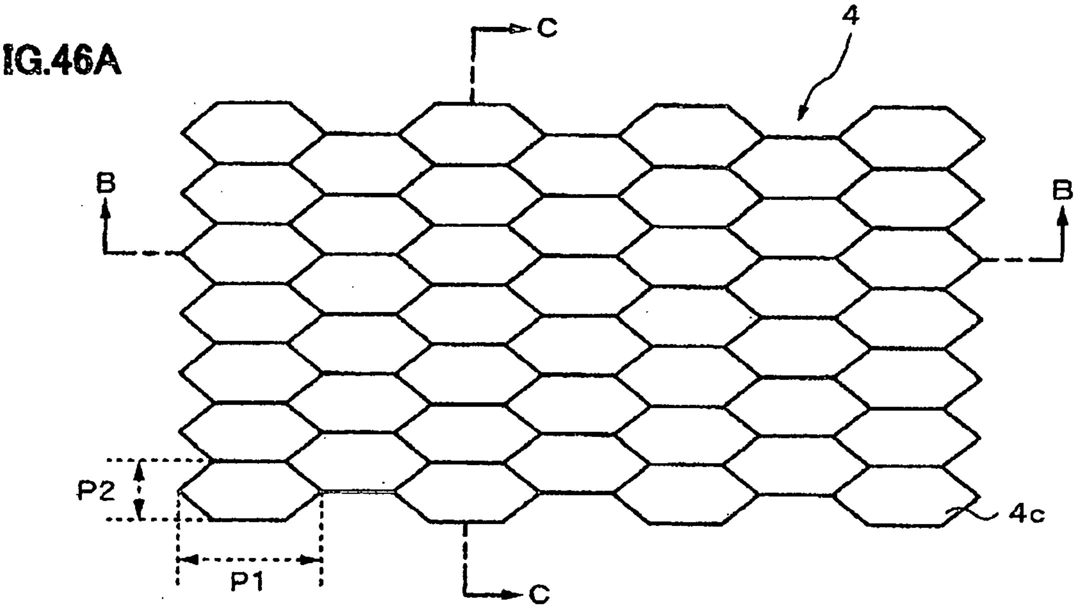


FIG.46B

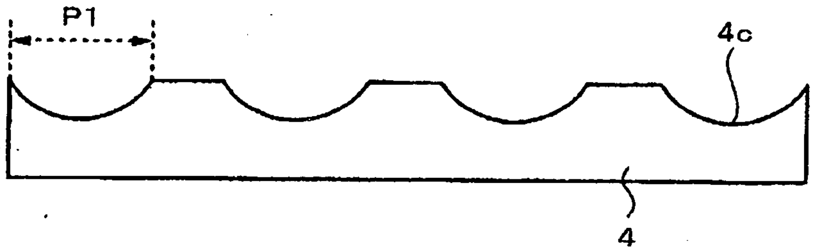


FIG.46C

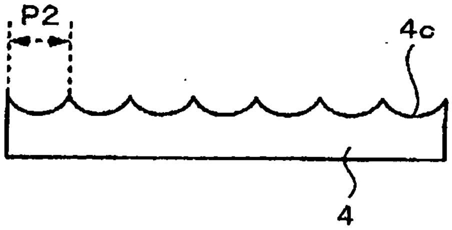

FIG.47A

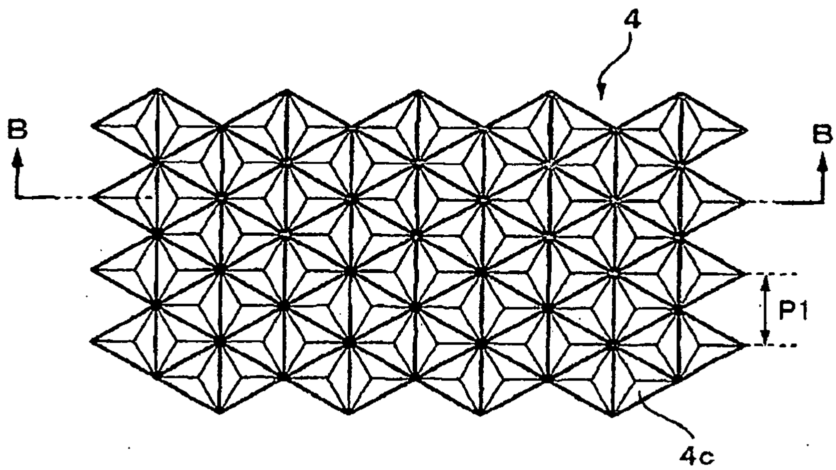


FIG.47B

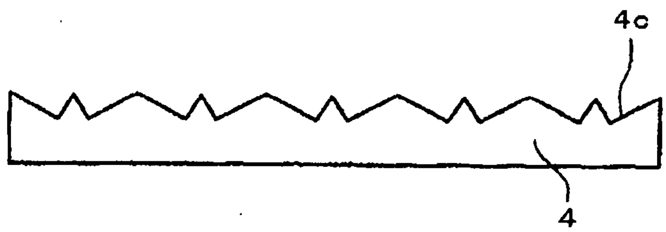

FIG.48A

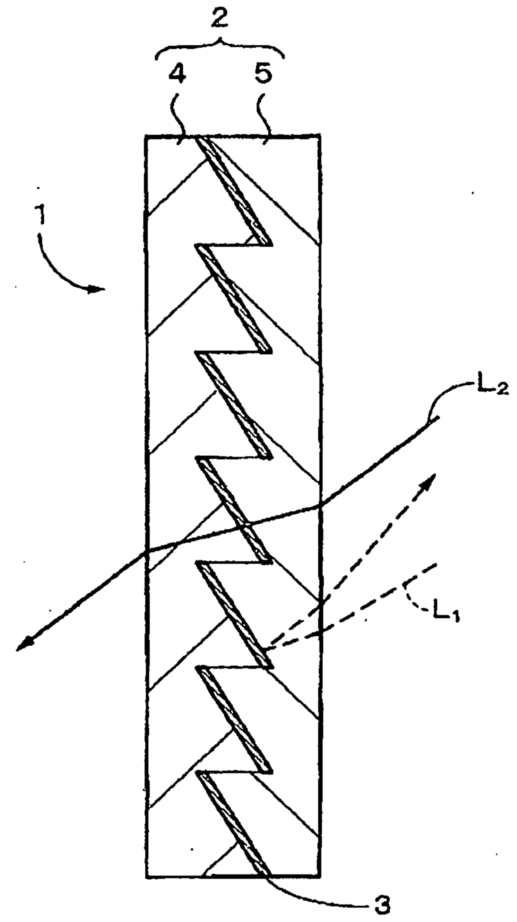


FIG.48B

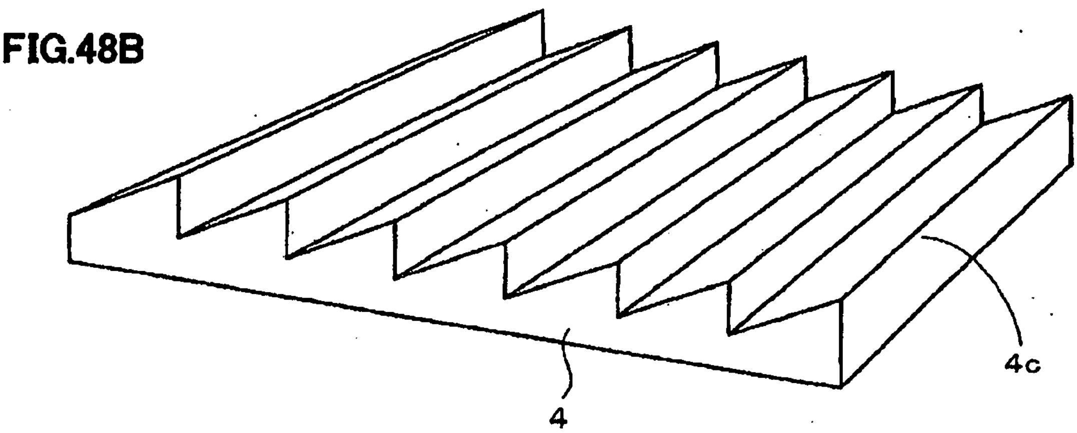

FIG.49A

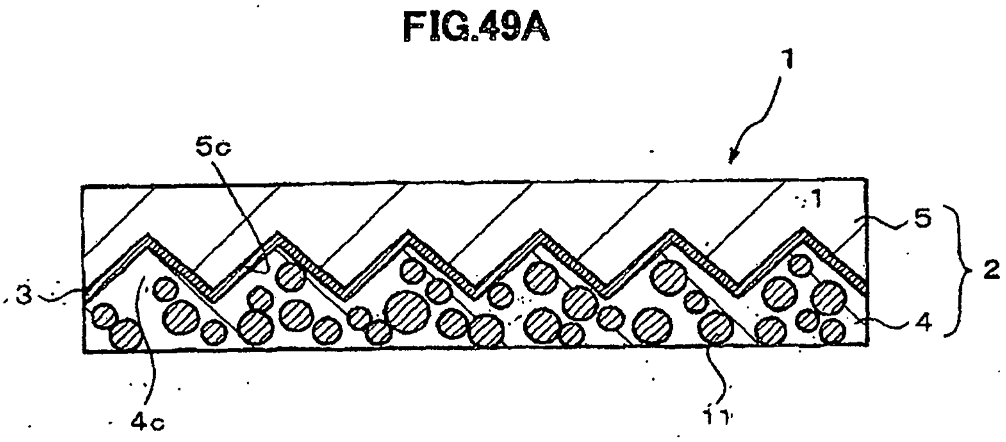


FIG.49B

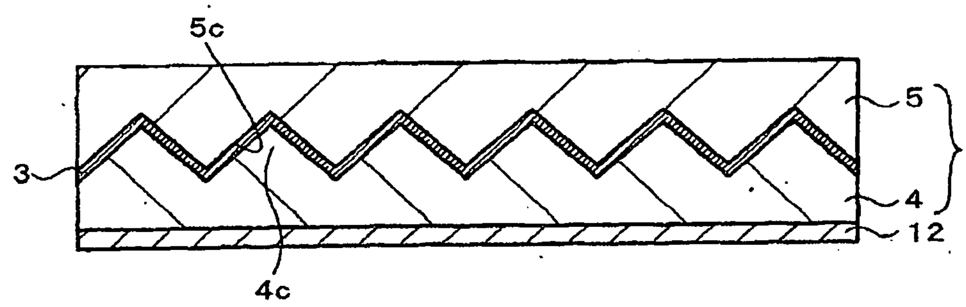


FIG.49C

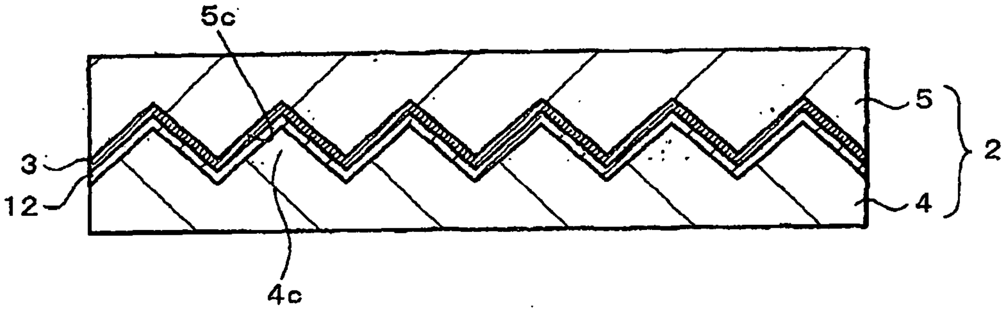

FIG.50A

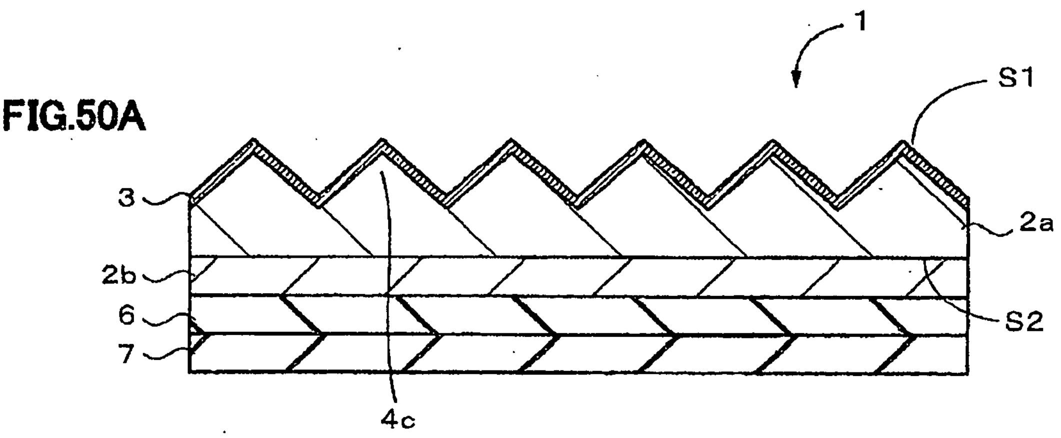


FIG.50B

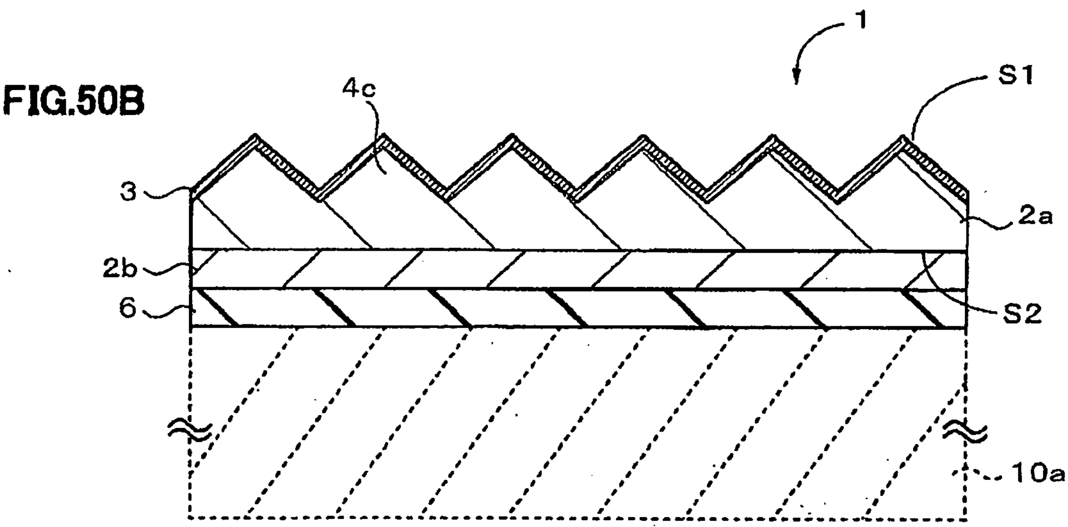

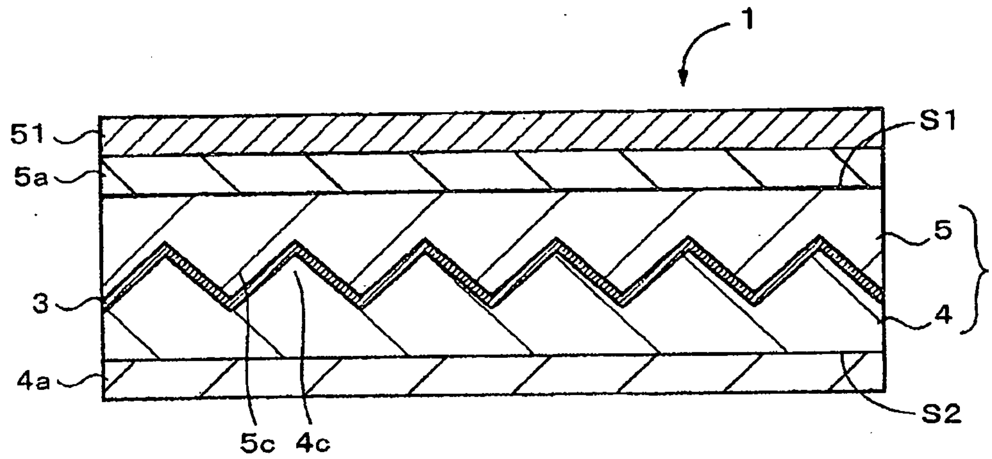


FIG.51

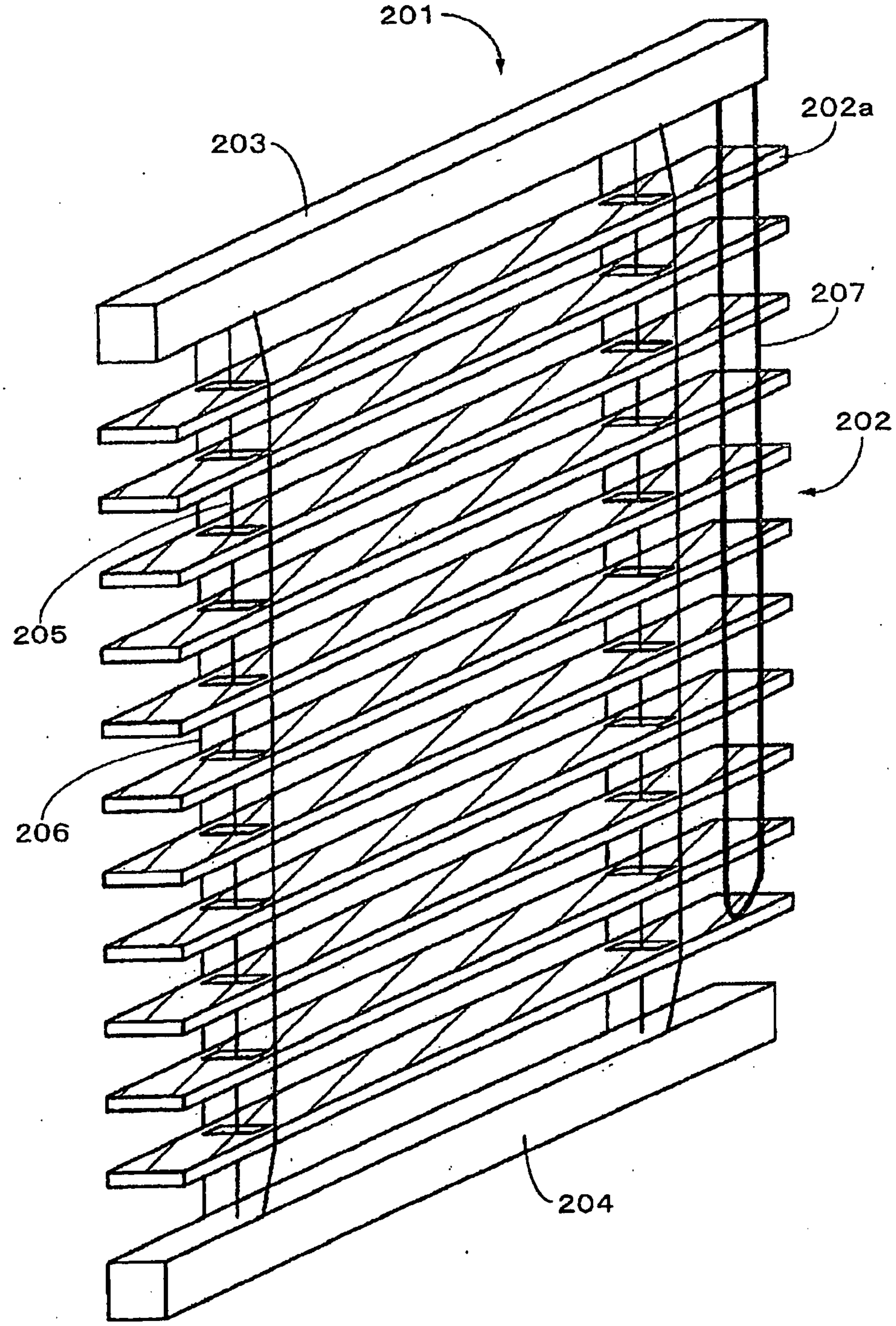


FIG.52

FIG.53A

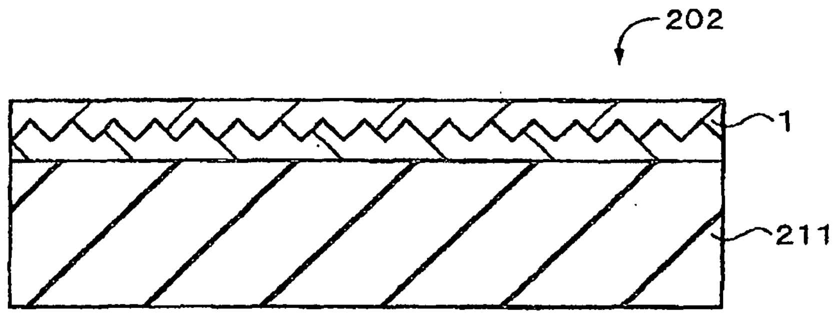


FIG.53B

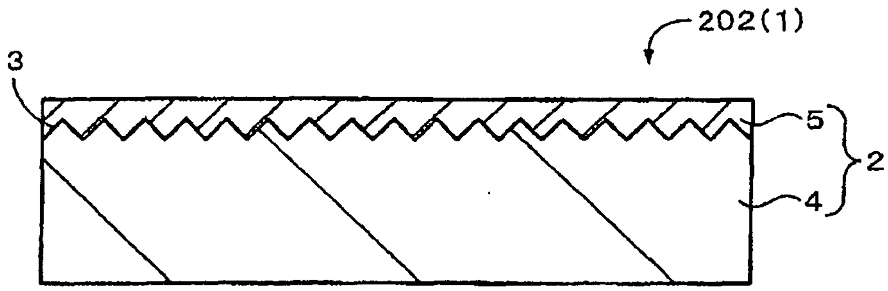

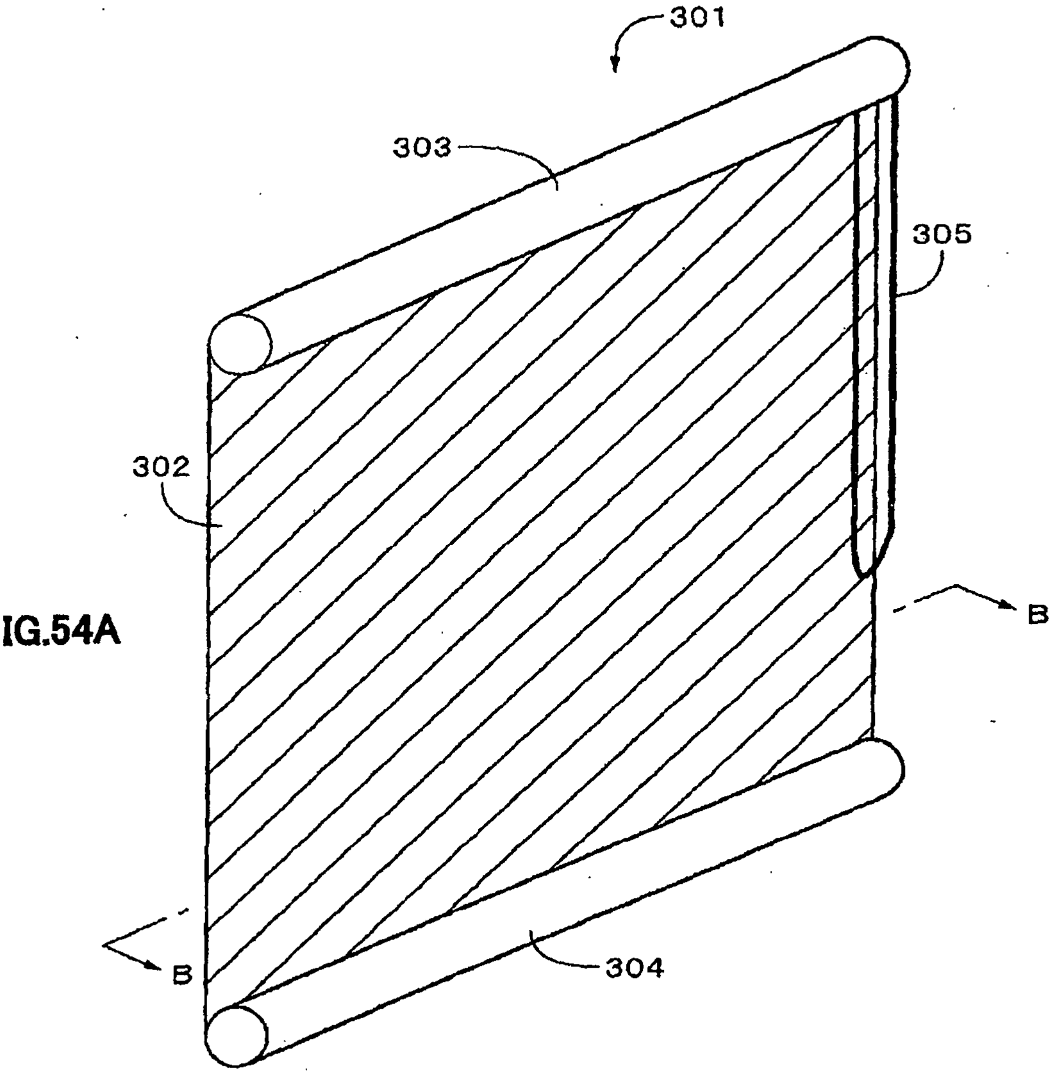


FIG.54A

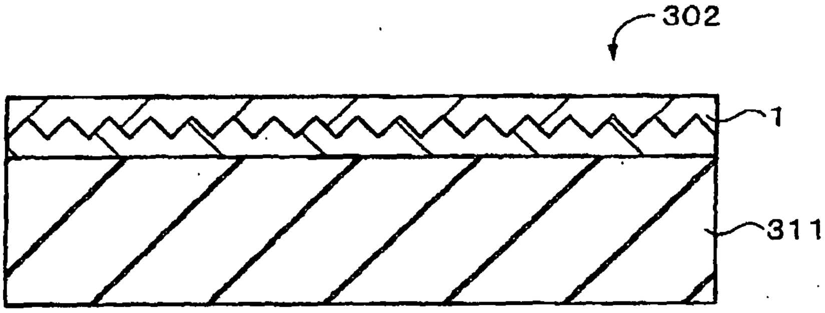


FIG.54B

FIG.55A

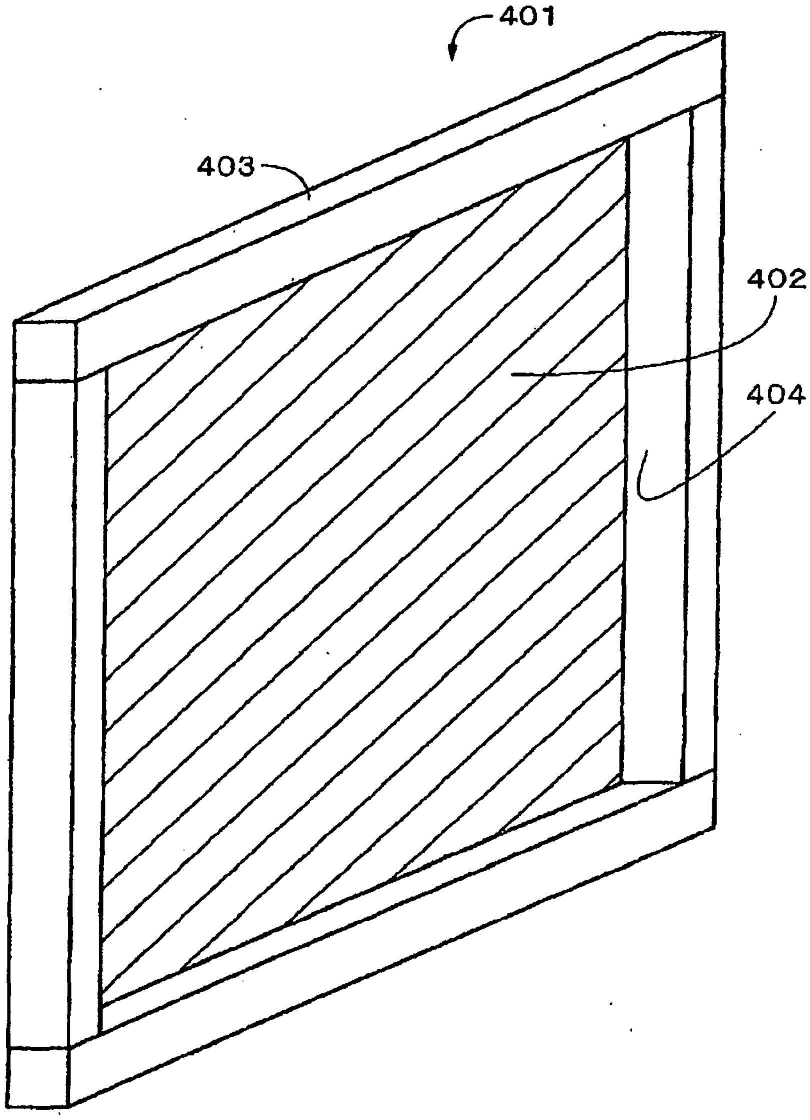


FIG.55B

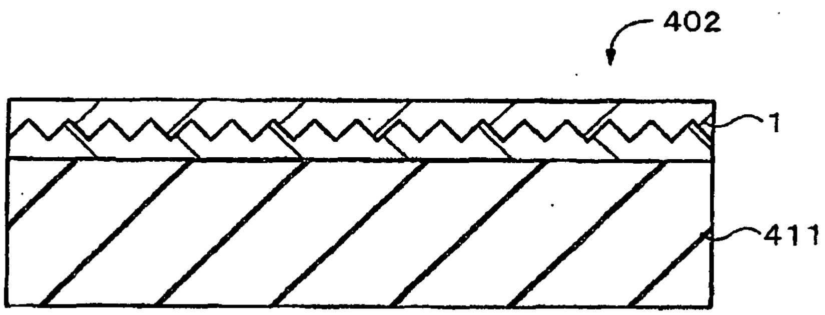

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007152773 A
- JP 2011175249 A